(19) Europäisches Patentamt
European Patent Office
Office européen des brevets

(11) EP 4 299 694 B1

(12) EUROPEAN PATENT SPECIFICATION

(45) Date of publication and mention of the grant of the patent:
**10.09.2025 Bulletin 2025/37**

(21) Application number: **23181945.9**

(22) Date of filing: **28.06.2023**

(51) International Patent Classification (IPC):
***C09K 19/30*** *(2006.01)* ***C09K 19/34*** *(2006.01)*
***C09K 19/12*** *(2006.01)* ***C09K 19/04*** *(2006.01)*

(52) Cooperative Patent Classification (CPC):
**C09K 19/3098;** C09K 19/3491; C09K 2019/0466; C09K 2019/122; C09K 2019/123; C09K 2019/124; C09K 2019/3004; C09K 2019/3422

# (54) LIQUID-CRYSTAL MEDIUM

FLÜSSIGKRISTALLINES MEDIUM

MILIEU À CRISTAUX LIQUIDES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.07.2022 EP 22182596**

(43) Date of publication of application:
**03.01.2024 Bulletin 2024/01**

(73) Proprietor: **Merck Patent GmbH**
**64293 Darmstadt (DE)**

(72) Inventors:
- **Hirschmann, Harald**
  **64293 DARMSTADT (DE)**
- **Schoen, Sabine**
  **64293 DARMSTADT (DE)**
- **Wucher, Philipp**
  **64293 DARMSTADT (DE)**

(74) Representative: **Merck Patent Association**
**Merck Patent GmbH**
**64271 Darmstadt (DE)**

(56) References cited:
**EP-A2- 3 892 706** **DE-A1- 102016 009 412**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 299 694 B1

## Description

The present invention relates to a liquid-crystal (LC) medium based on a mixture of polar compounds, to its use for optical, electro-optical and electronic purposes, in particular in LC displays, to an LC display comprising the LC medium, especially an energy-saving LC display, and to a process of manufacturing the LC medium.

LCDs are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which is substantially perpendicular to the substrates or the LC layer. Besides these modes, there are also electro-optical modes that utilise an electric field which is substantially parallel to the substrates or the LC layer, such as, for example, the in-plane switching (IPS) mode (as disclosed, for example, in DE 40 00 451 and EP 0 588 568) and the fringe field switching (FFS) mode, in which a strong "fringe field" is present, i.e. a strong electric field close to the edge of the electrodes and, throughout the cell, an electric field which has both a strong vertical component and a strong horizontal component. These latter two electro-optical modes in particular are used for LCDs in modern desktop monitors and displays for TV sets and multimedia applications. The liquid crystals according to the present invention are preferably used in displays of this type. In general, dielectrically positive LC media having rather lower values of the dielectric anisotropy are used in FFS displays, but in some cases LC media having a dielectric anisotropy of only about 3 or even less are also used in IPS displays. A further improvement has been achieved by the so-called HB-FFS mode. One of the unique features of the HB-FFS mode in contrast to the traditional FFS technology is that it enables higher transmittance which allows operation of the panel with less energy consumption.

A further development are displays of the so-called PS ("polymer sustained") or PSA ("polymer sustained alignment") type, for which the term "polymer

stabilised" is also occasionally used. In these, a small amount (for example 0.3% by weight, typically < 1% by weight) of one or more polymerisable, compound(s), preferably polymerisable monomeric compound(s), is added to the LC medium and, after filling the LC medium into the display, is polymerised or crosslinked in situ, usually by UV photopolymerisation, optionally while a voltage is applied to the electrodes of the display. The polymerisation is carried out at a temperature where the LC medium exhibits an LC phase, usually at room temperature. The addition of polymerisable mesogenic or LC compounds, also known as reactive mesogens or "RMs", to the LC mixture has proven particularly suitable.

For these displays, novel LC media having improved properties are required.

The addressing times in particular have to be improved for many types of application. Thus, LC media having lower viscosities ($\eta$), especially having lower rotational viscosities ($\gamma_1$), are required. Besides these viscosity parameters, the media must have a nematic phase range of suitable width and position and an appropriate birefringence ($\Delta n$), and the dielectric anisotropy ($\Delta\varepsilon$) should be sufficiently high to allow a reasonably low operating voltage.

The displays according to the present invention are preferably addressed by an active matrix (active matrix LCDs, AMDs for short), preferably by a matrix of thin film transistors (TFTs). However, the liquid crystals according to the invention can also advantageously be used in displays having other known addressing means.

LC media which are suitable for LCDs and especially for IPS displays are known, for example, from DE 10 2016 009412 A1, EP 3 892 706 A2, JP 07-181 439 (A), EP 0 667 555, EP 0 673 986.

DE 195 09 410, DE 195 28 106, DE 195 28 107, WO 96/23 851 and WO 96/28 521. However, these LC media have certain disadvantages. Amongst other deficiencies, most of them result in disadvantageously long addressing times, have inadequate values of the resistivity and/or require excessively high operating voltages. Both an improvement in the operating properties and also in the shelf life are necessary here.

Especially in case of LC media for use in the expanding market of public information displays (PIDs) and automotive displays a high reliability and a wide operating range are highly important factors. For these applications LC media with high clearing temperature (Tni), good LTS (Low Temperature Stability) and high reliability are therefore desired. For the IPS-, FFS- and HB-FFS mode fast switching and high contrast ratio is a strong market requirement together with achieving excellent display reliability.

The invention has the object of providing media, in particular for FFS, IPS, HB-FFS, TN or STN displays of this type, in particular for active matrix displays like those of the TFT (thin film transistor) type, which do not exhibit the disadvantages indicated above or only do so to a lesser extent and preferably exhibit one or more of a wide operating range, a high clearing temperature, a high reliability, a low threshold voltage, a high dielectric anisotropy, a good low temperature stability (LTS), a low rotational viscosity and fast response times.

This object was achieved by providing an LC medium as described and claimed hereinafter.

The invention relates to an LC medium with positive dielectric anisotropy, characterised in that it contains one or more compounds of formula I

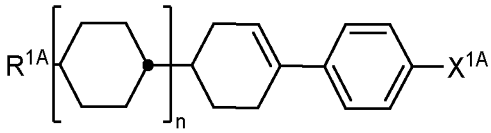

I

in which the individual radicals, on each occurrence identically or differently,

and each, independently of one another, have the following meaning:

$R^{1A}$ an alkyl or alkoxy group having 1 to 12, preferably 1 to 6 C atoms, wherein one or more non-adjacent $CH_2$-groups are replaced by cyclopropyl or cyclopentyl,

$X^{1A}$ F, Cl, a halogenated alkyl radical, a halogenated alkenyl radical, a halogenated alkoxy radical or a halogenated alkenyloxy radical having up to 6 C atoms,

n 0 or 1.

The invention further relates to the use of the LC medium as described above and below for electro-optical purposes, in particular for the use in LC displays, shutter glasses and for 3D applications, preferably in LC displays of the IPS, FFS, HB-FFS, U-IPS, TN, STN, TN-TFT, PS-IPS, PS-FFS or PS-TN mode.

The invention furthermore relates to an LC display comprising an LC medium according to the invention as described above and below, preferably an LC display of the IPS, FFS, HB-FFS, U-IPS, TN, STN, TN-TFT, PS-IPS, PS-FFS, PS-HB-FFS or PS-TN mode.

The invention furthermore relates to a process for preparing an LC medium as described above and below, comprising the steps of mixing one or more compounds of formula I with one or more compounds of formula II or other compounds as described below and optionally with further LC compounds and/or additives.

The invention furthermore relates to a process for manufacturing an LC display as described above and below, comprising the steps of filling or otherwise providing an LC medium as described above and below between the substrates of the display.

The LC media according to the present invention show one or more of the following advantageous properties when used in LC displays:

- high transmittance,
- high contrast ratio,
- reduced image sticking,
- reduced ODF mura,
- reduced rotational viscosity,
- high reliability and high VHR value after UV exposure and/or heat treatment,
- fast response times,
- a favourably low ratio of rotational viscosity to the splay elastic constant $\gamma_1$ / $K_1$, which contributes to improved switching behaviour especially at low driving voltages and is useful to enable energy-saving displays
- a low threshold voltage which is useful to enable energy-saving displays.

It was surprisingly found that the LC media according to the present invention show a favourable combination of low rotational viscosity, high birefringence and high average elastic constant $K_{avg}$. A low rotational viscosity and high birefringence enable to achieve fast LC media mixtures suitable for very small cell gaps. On the other hand an increased $K_{avg}$ enables the realisation of a low scattering parameter and thereby a high contrast ratio. Moreover, in terms of reliability the LC media according to the present invention show high VHR values and less or no undesired mura effects such as edge mura.

An alkenyl group in the compounds of the LC medium as disclosed below is not considered to be within the meaning of the term "polymerizable group" as used herein. The conditions for the polymerization of the polymerizable

compounds of the LC medium are preferably selected such that alkenyl substituents do not participate in the polymerization reaction. Preferably the LC media disclosed and claimed in the present application do not contain an additive that initiates or enhances the participation of the alkenyl group in a polymerization reaction.

Unless stated otherwise, the compounds as disclosed above and below, except for the chiral dopants, are preferably selected from achiral compounds.

As used herein, the expression "UV light having a wavelength of" followed by a given range of wavelengths (in nm), or by a given lower or upper wavelength limit (in nm), means that the UV emission spectrum of the respective radiation source has an emission peak, which is preferably the

highest peak in the respective spectrum, in the given wavelength range or above the given lower wavelength limit or below the given upper wavelength limit and/or that the UV absorption spectrum of the respective chemical compound has a long or short wavelength tail that extends into the given wavelength range or above the given lower wavelength limit or below the given upper wavelength limit.

As used herein, the term "substantially transmissive" means that the filter transmits a substantial part, preferably at least 50% of the intensity, of incident light of the desired wavelength(s). As used herein, the term "substantially blocking" means that the filter does not transmit a substantial part, preferably at least 50% of the intensity, of incident light of the undesired wavelengths. As used herein, the term "desired (undesired) wavelength" e.g. in case of a band pass filter means the wavelengths inside (outside) the given range of $\lambda$, and in case of a cut-off filter means the wavelengths above (below) the given value of $\lambda$.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

As used herein, the terms "tilt" and "tilt angle" will be understood to mean a tilted alignment of the LC molecules of an LC medium relative to the surfaces of the cell in an LC display (here preferably a PSA display), and will be understood to be inclusive of "pretilt" and "pretilt angle". The tilt angle here denotes the average angle (< 90°) between the longitudinal molecular axes of the LC molecules (LC director) and the surface of the plane-parallel outer plates which form the LC cell. A low absolute value for the tilt angle (i.e. a large deviation from the 90° angle) corresponds to a large tilt here. A suitable method for measurement of the tilt angle is given in the examples. Unless indicated otherwise, tilt angle values disclosed above and below relate to this measurement method.

As used herein, the terms "reactive mesogen" and "RM" will be understood to mean a compound containing a mesogenic or liquid crystalline skeleton, and one or more functional groups attached thereto which are suitable for polymerization and are also referred to as "polymerizable group" or "P".

Unless stated otherwise, the term "polymerizable compound" as used herein will be understood to mean a polymerizable monomeric compound.

An SA-VA display according to the present invention will be of the polymer stabilised mode as it contains, or is manufactured by use of, an LC medium containing RMs like those described below. Consequently as used herein, the term "SA-VA display" when referring to a display according to the present invention will be understood to refer to a polymer stabilised SA-VA display even if not explicitly mentioned.

As used herein, the term "low-molecular-weight compound" will be understood to mean to a compound that is monomeric and/or is not prepared by a polymerization reaction, as opposed to a "polymeric compound" or a "polymer".

As used herein, the term "unpolymerizable compound" will be understood to mean a compound that does not contain a functional group that is suitable for polymerization under the conditions usually applied for the polymerization of the RMs.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerization. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S.

Diele, Angew. Chem. 2004, 116, 6340-6368.

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerizable group(s) in a polymerizable mesogenic compound.

Above and below,

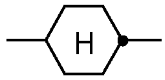

denotes a trans-1,4-cyclohexylene ring, and

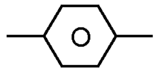

denotes a 1,4-phenylene ring.

In a group

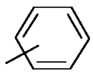

the single bond shown between the two ring atoms can be attached to any free position of the benzene ring.

If in the formulae shown above and below a terminal group like R, $R^0$, $R^1$, $R^2$, $R^3$, $R^4$, $R^{11}$, $R^{12}$, $R^S$, $R^{S1,S2,S3,S4}$, $R^{ST}$, $R^a$, $R^b$ or L denotes an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

If one of the aforementioned terminal groups denotes an alkyl radical wherein one or more $CH_2$ groups are replaced by S, this may be straight-chain or branched. It is preferably straight-chain, has 1, 2, 3, 4, 5, 6 or 7 C atoms and accordingly preferably denotes thiomethyl, thioethyl, thiopropyl, thiobutyl, thiopentyl, thiohexyl or thioheptyl.

Oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl,

2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxa-decyl.

If one of the aforementioned terminal groups denotes an alkoxy or oxaalkyl group it may also contain one or more additional oxygen atoms, provided that oxygen atoms are not linked directly to one another.

If one of the aforementioned terminal groups denotes an alkyl radical in which one $CH_2$ group has been replaced by -CH=CH-, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, - 2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

If one of the aforementioned terminal groups denotes an alkyl or alkenyl radical which is at least monosubstituted by halogen, this radical is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the ω-position.

In another preferred embodiment, one or more of the aforementioned terminal groups, like $R^{1A, 2A}$, $R^1$, $R^2$, $R^{11,12,13}$, $R^{31,32}$, $R^{41,42}$, $R^{51,52}$, $R^{61,62}$, $R^{71,72}$, $R^{81,82,83}$, $R^Q$, $R^0$, R, $R^M$, $R^S$, $R^{S1,S2,S3,S4}$ or L are selected from the group consisting of

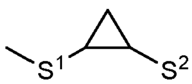 , 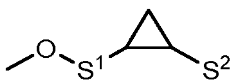 , 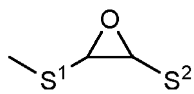 , 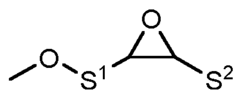 ,

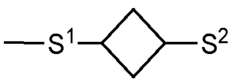 , 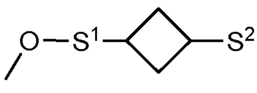 , 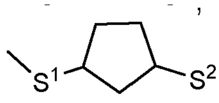 , 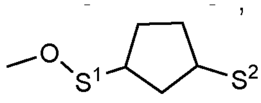 ,

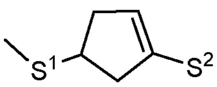 , 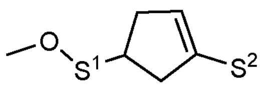 , 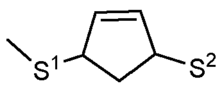 , 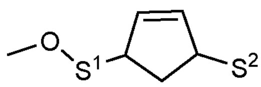 ,

$-S^1-F$, -O-S'-F, $-O-S_1-O-S_2$, wherein $S^1$ is $C_{1-12}$-alkylene or $C_{2-12}$-alkenylene and $S^2$ is H, $C_{1-12}$-alkyl or $C_{2-12}$-alkenyl, and

very preferably are selected from the group consisting of

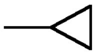 , 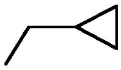 , 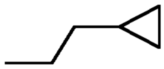 , 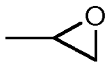 , 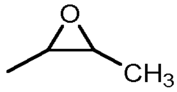 ,

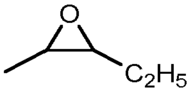 , 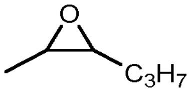 , 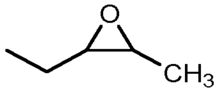 , 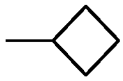 , 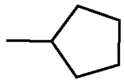 ,

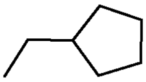 , 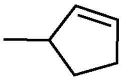 , 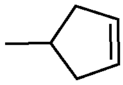 , 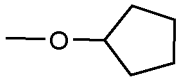 , 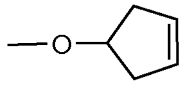 ,

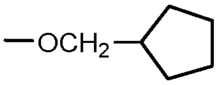 , 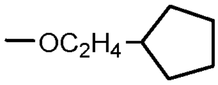 , 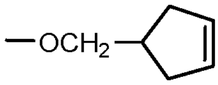 , 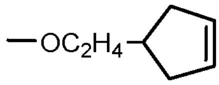

$-OCH_2OCH_3$, , $-O(CH_2)_3OCH_3$, $-O(CH_2)_4OCH_3$, $-O(CH_2)_2F$, $-O(CH_2)_3F$, $-O(CH_2)_4F$.

Halogen is preferably F or Cl, very preferably F.

The group $-CR^0=CR^{00}-$ is preferably -CH=CH-.

-CO-, -C(=O)- and -C(O)- denote a carbonyl group, i.e.

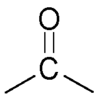 .

Preferred substituents L, are, for example, F, Cl, Br, I, -CN, $-NO_2$, -NCO, - NCS, -OCN, -SCN, $-C(=O)N(R^x)_2$, $-C(=O)Y^1$, $-C(=O)R^x$, $-N(R^x)_2$, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or Cl, optionally substituted silyl having 1 to 20 Si atoms, or optionally substituted aryl having 6 to 25, preferably 6 to 15, C atoms,

wherein $R^x$ denotes H, F, Cl, CN, or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, Cl, P- or P-Sp-, and

$Y^1$ denotes halogen.

Particularly preferred substituents L are, for example, F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, furthermore phenyl.

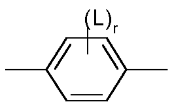

is preferably

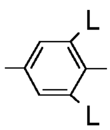 , 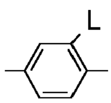 , 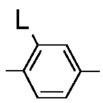 or 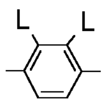 ,

in which L has one of the meanings indicated above.

In the compounds of formula I and its subformulae, $R^{2A}$ preferably denotes alkoxy with 1, 2, 3, 4, 5 or 6 C atoms,

very preferably ethoxy.

In the compounds of formula I $R^{1A}$ is preferably selected from the following groups:

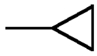, 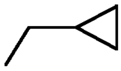, 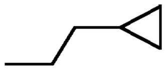, 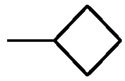, 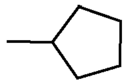,

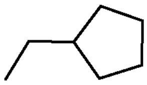, 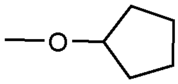, 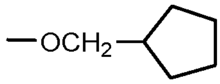.

In the compounds of formula I $X^{1A}$ is preferably selected from F, $CF_3$, $OCF_3$, $OCF_2H$, $OCHF_2$, $OCHFCF_3$, $OCF_2CHFCF_3$, very preferably from F, $CF_3$ and $OCF_3$, most preferably $CF_3$.

Preferred compounds of formula I are those selected from the group consisting of the following subformulae:

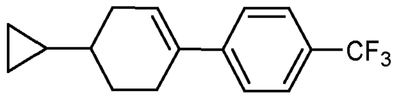

I1

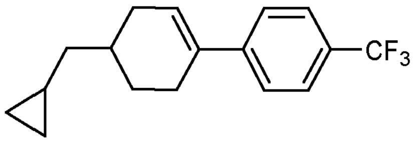

I2

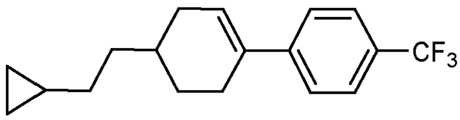

I3

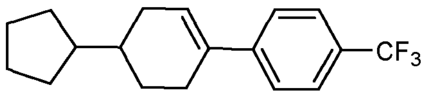

I5

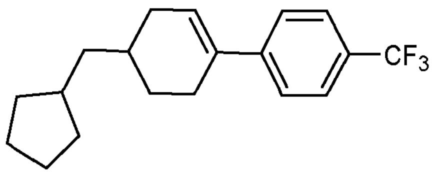

I6

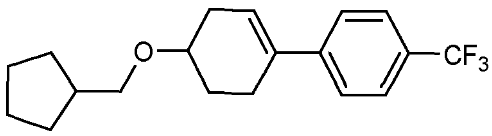

I7

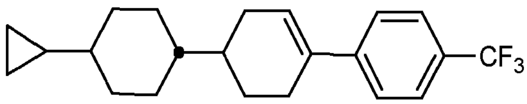

I8

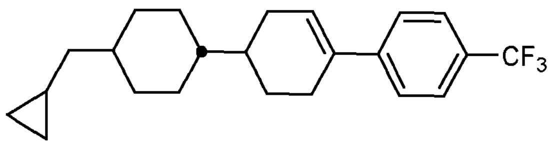

I9

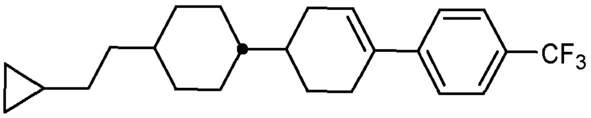

I10

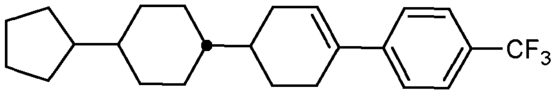

I12

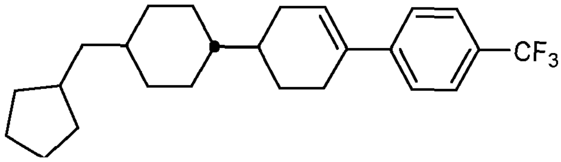

I13

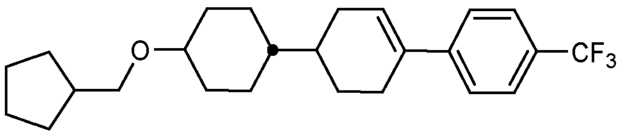

I14

Very preferred are the compounds of formula I2, I5, I6, I7, I9, I12, I13 and I14, most preferred the compounds of formula I5 and I12.

Preferably the total proportion of the compounds of formula I or its subformulae in the LC medium is from 1 to 50%, very preferably from 2 to 30%, most preferably from 2 to 15% by weight.

Further preferred embodiments of the LC medium according to the present invention are listed below, including any combination thereof:

a) The LC medium comprises one or more compounds selected from the following formulae:

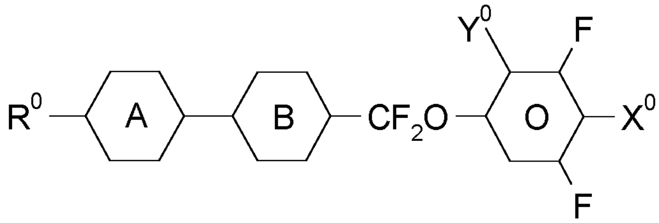

II

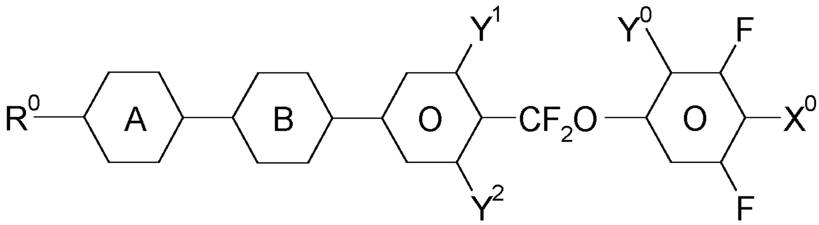

III

wherein the individual radicals, independently of each other and on each occurrence identically or differently, have the following meanings

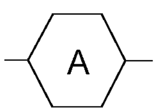 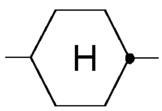 , 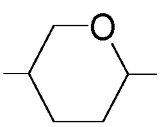 , 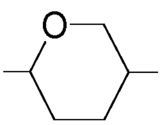 ,

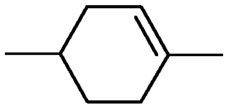, 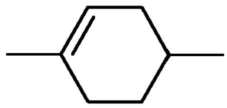,

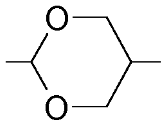, 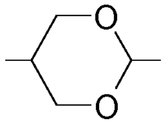 or 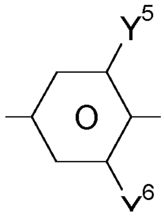,

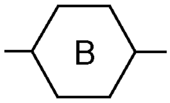 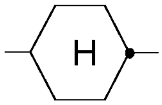, 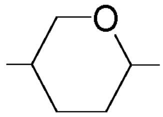, 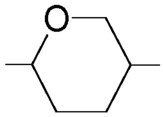,

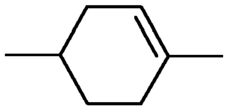, 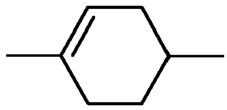,

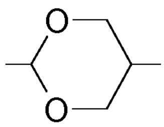, 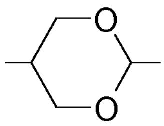 or 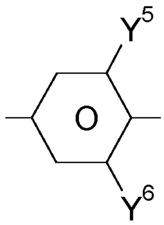,

$R^0$ H, an alkyl, alkoxy or alkenyl radical having up to 15 C atoms which is unsubstituted or monosubstituted by F, Cl, CN or $CF_3$ and where, in addition, one or more $CH_2$ groups in these radicals may be replaced by -O-, -S-,-C≡C-, $-CF_2O-$, $-OCF_2-$, -OC-O-, -O-CO-

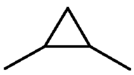, 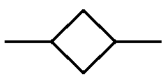, 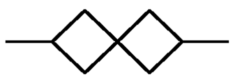, 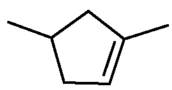, 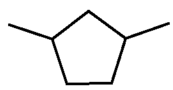

in such a way that O- and/or S-atoms are not linked directly to one another,

$X^0$ F, Cl, CN, $SF_5$, SCN, NCS, a halogenated alkyl radical, a halogenated alkenyl radical, a halogenated alkoxy radical or a halogenated alkenyloxy radical having up to 6 C atoms,

$Y^{1,2,5,6}$ H or F,

$Y^0$ H or $CH_3$.

Preferred compounds of formula II and III are those wherein $Y^0$ is H.

Further preferred compounds of formula II and III are those wherein $R^0$ denotes alkyl having 1 to 6 C atoms, very preferably ethyl or propyl, and $X^0$ denotes F or $OCF_3$, very preferably F.

Further preferred compounds of the formulae II, III and their subformulae are those wherein $R^0$ denotes or contains a cycloalkyl or cycloalkoxy radical, preferably selected from the group consisting of

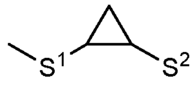, 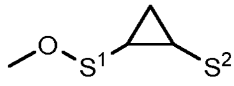, 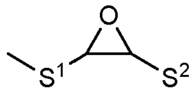, 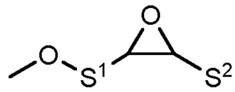,

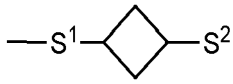, 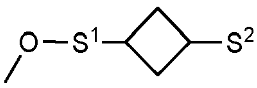, 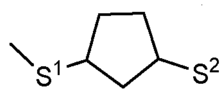, 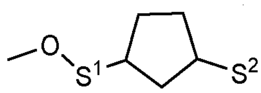,

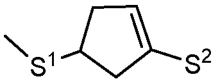, 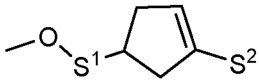, 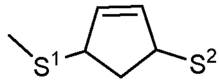, 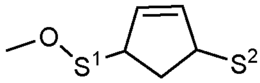,

wherein $S^1$ is $C_{1-12}$-alkylene or $C_{2-12}$-alkenylene and $S^2$ is H, $C_{1-12}$-alkyl or $C_{2-12}$-alkenyl, very preferably are selected from the group consisting of

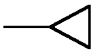, 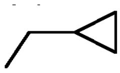, 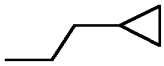, 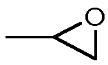, 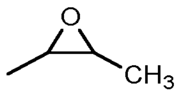,

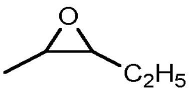, 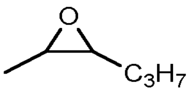, 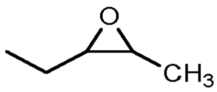, 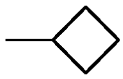, 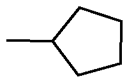,

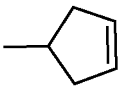, 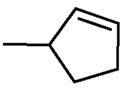, 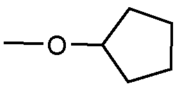, 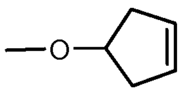, 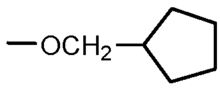,

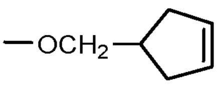, 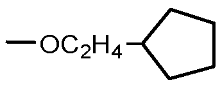, 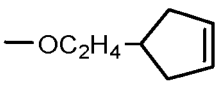. 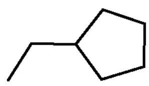.

The LC medium preferably comprises one or more compounds of formula II selected from the following subformulae:

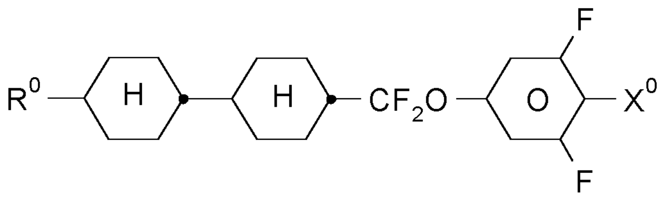 II1

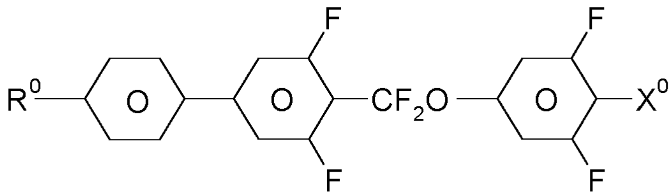 II2

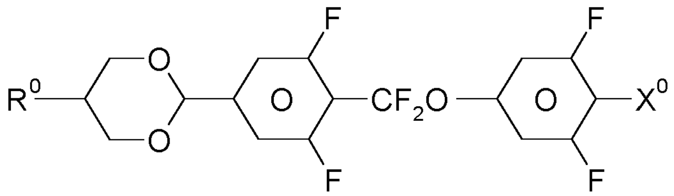

II3

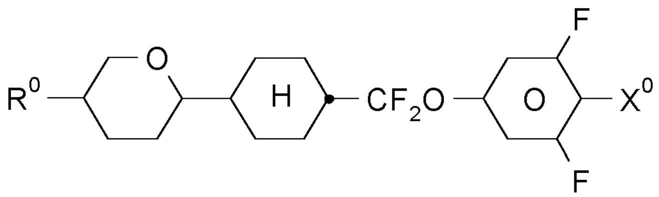

II4

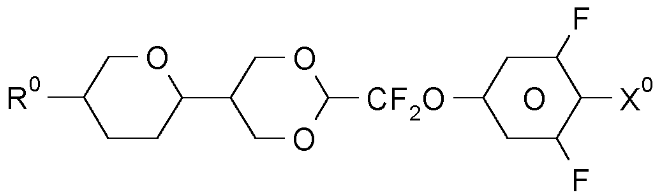

II5

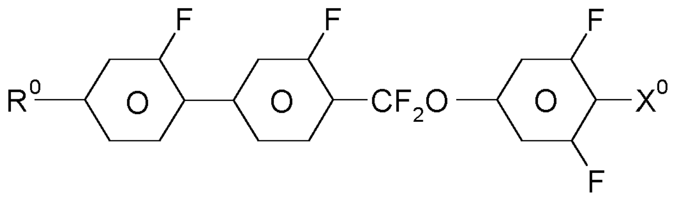

II6

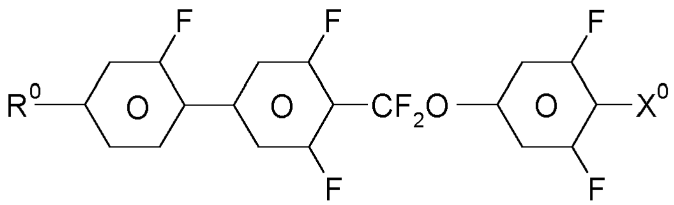

II7

in which $R^0$ and $X^0$ have the meanings given in formula II or one of the preferred meanings given above and below.

Preferred compounds are those of formula II1, II2, II3 and II4, very preferred those of formula II1 and II2.

In the compounds of formulae II1 to II7 $R^0$ preferably denotes alkyl having 1 to 6 C atoms, very preferably ethyl or propyl, and $X^0$ preferably denotes F or $OCF_3$, very preferably F.

The total proportion of compounds of the formula II in the mixture as a whole is preferably from 1 to 25 % by weight. The individual proportion of a compound of formula II or its subformulae in the mixture as a whole is preferably from 1 to 15% by weight.

In a further preferred embodiment, the LC medium contains one or more compounds of formula II or its subformulae as described above and below wherein $Y^0$ is $CH_3$, Very preferably the LC medium according to this preferred embodiment comprises one or more compounds of formula II selected from the following subformulae:

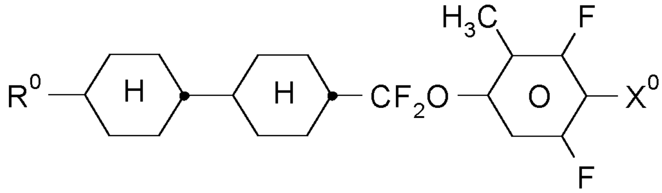

IIA1

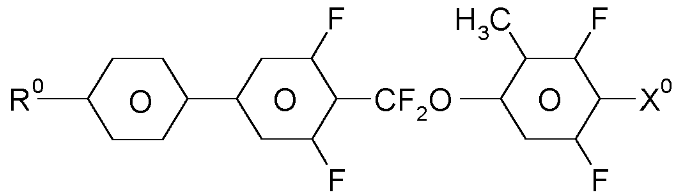

IIA2

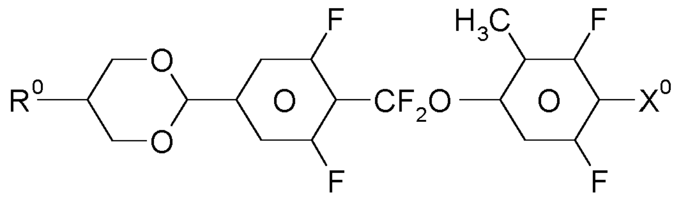

IIA3

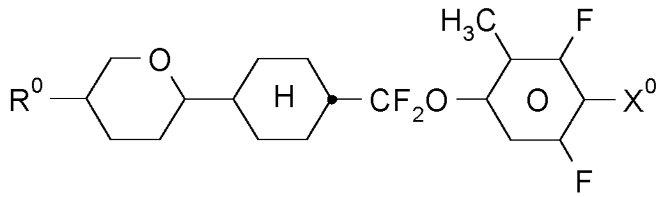

IIA4

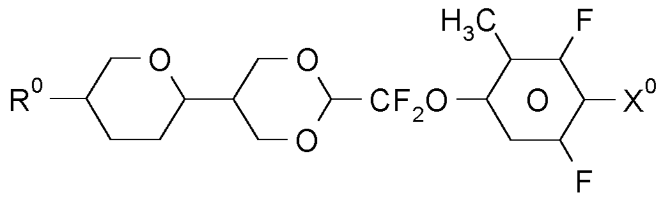

IIA5

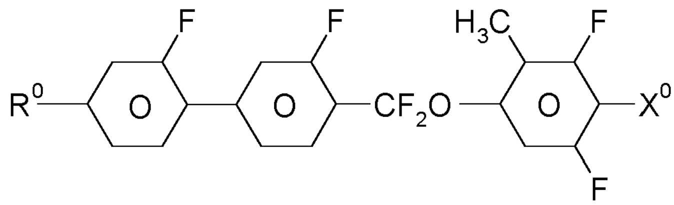

IIA6

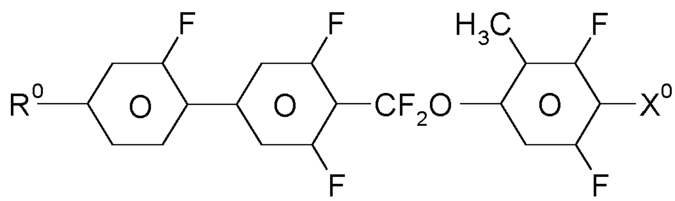

IIA7

in which $R^0$ and $X^0$ have the meanings given in formula II or one of the preferred meanings given above and below.

Preferred compounds are those of formula IIA1, IIA2 and IIA3, very preferred those of formula IIA1 and IIA2.

In the compounds of formulae IIA1 to IIA7 $R^0$ preferably denotes alkyl having 1 to 6 C atoms, very preferably ethyl or propyl, and $X^0$ preferably denotes F or $OCF_3$, very preferably F.

The LC medium preferably comprises one or more compounds of formula III selected from the following subformulae:

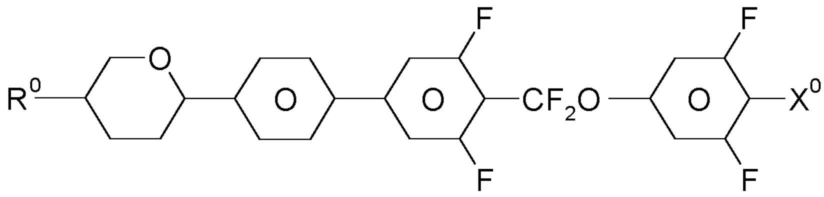

III1

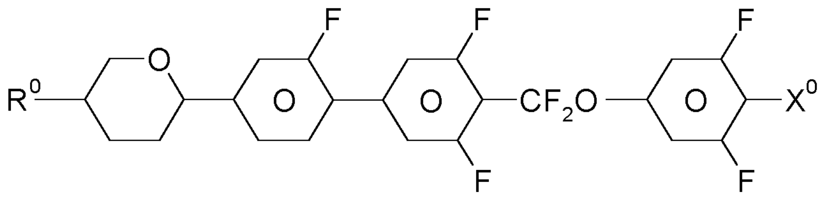

III2

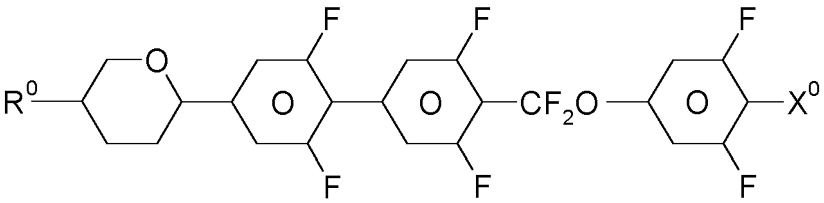

III3

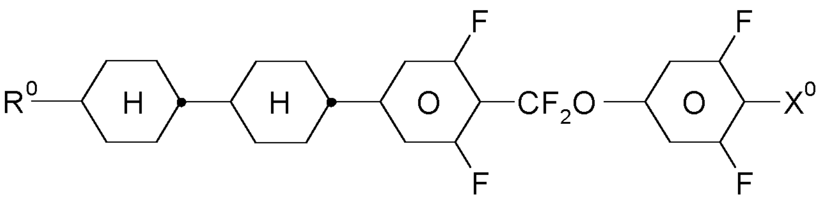

III4

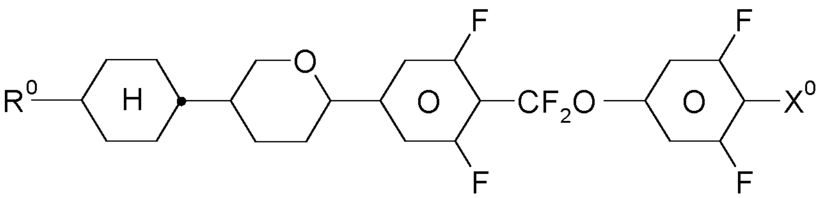

III5

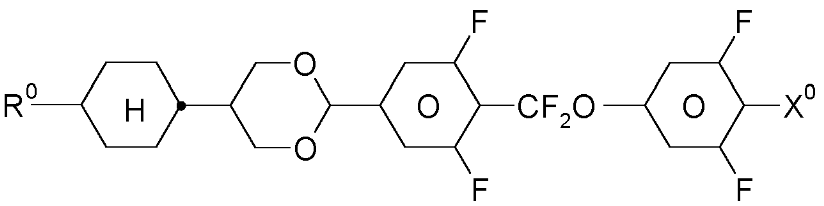

III6

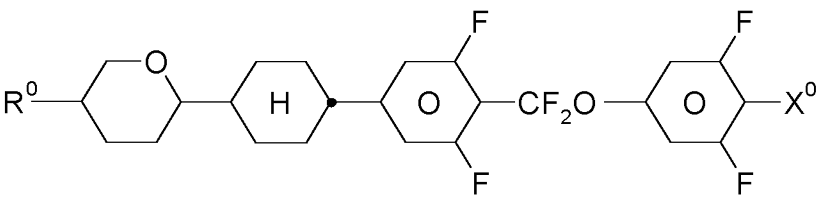

III7

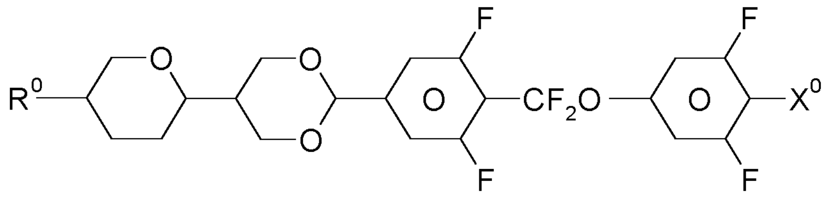

III8

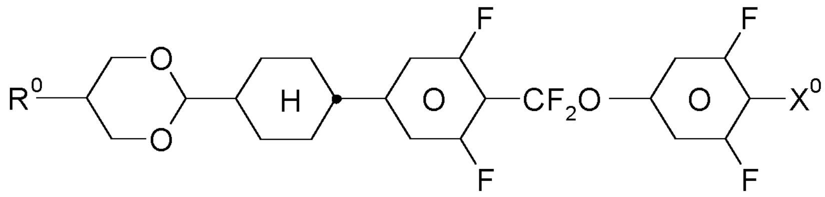

III9

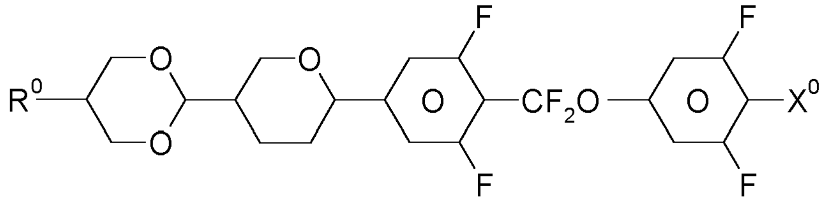

III10

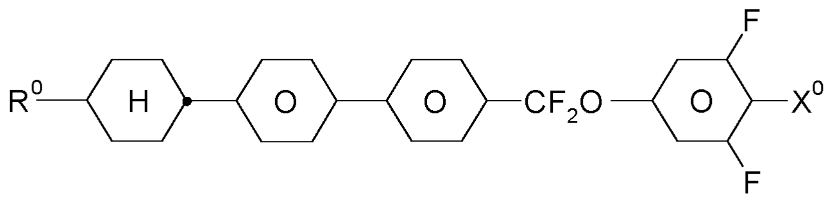

III11

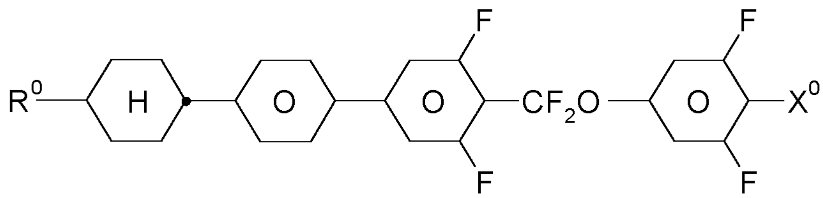

III12

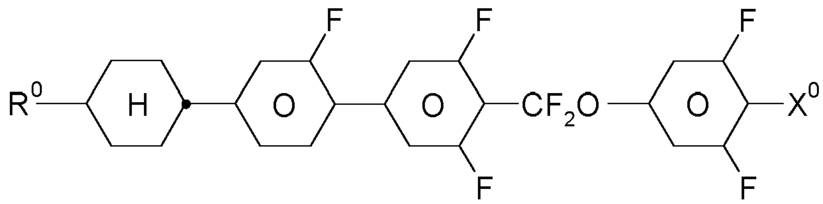

III13

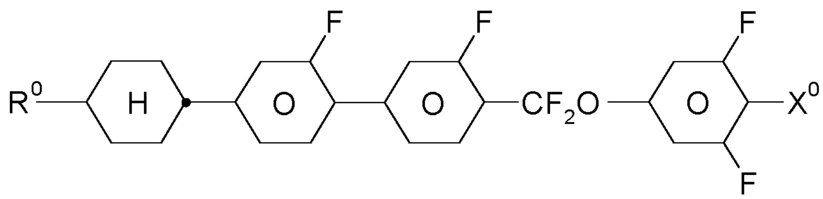

III14

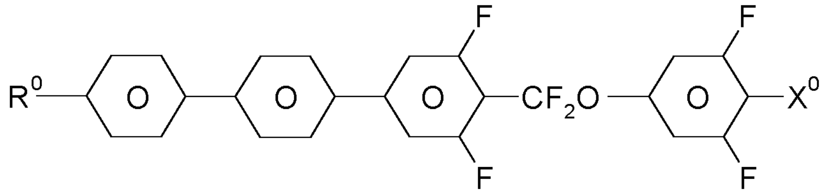

III15

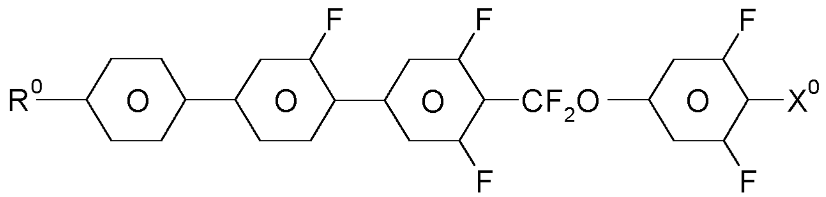

III16

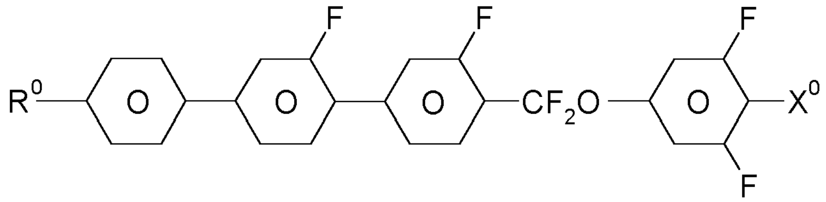

III17

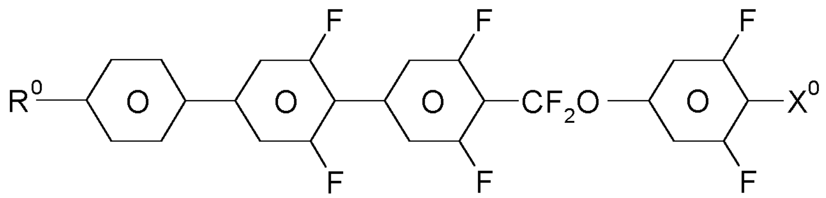

III18

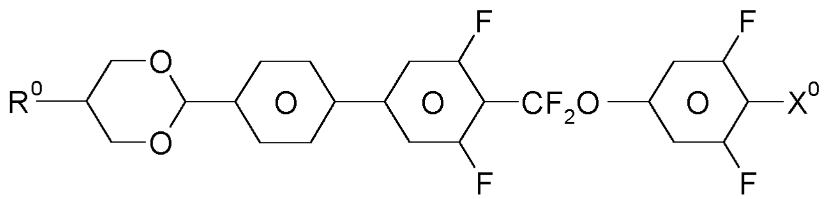

III19

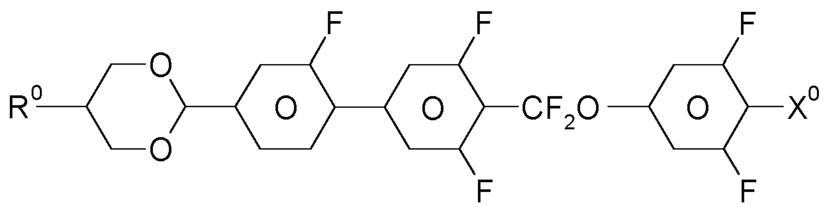

III20

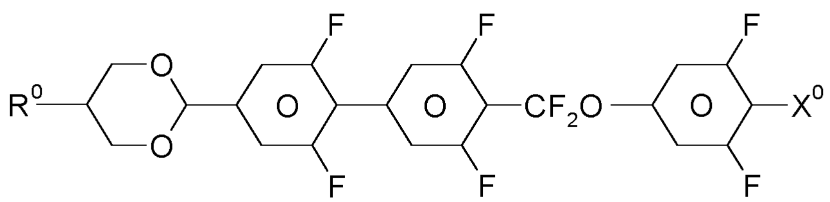

III21

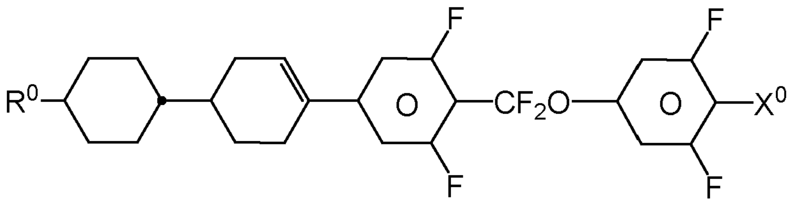

III22

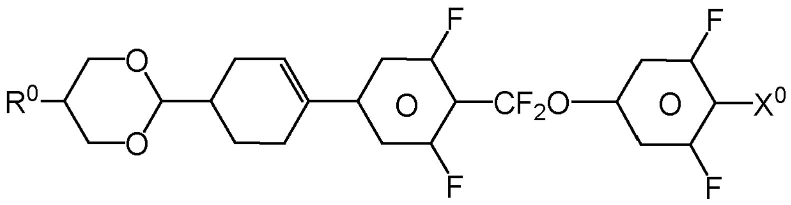

III23

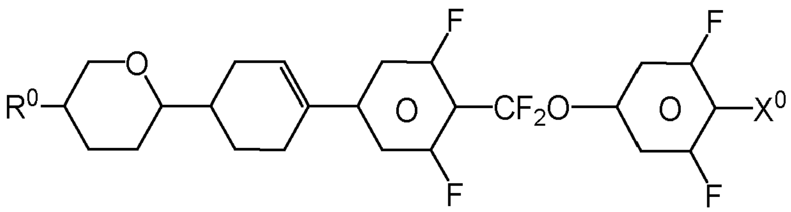

III24

in which $R^0$ and $X^0$ have the meanings given in formula II or one of the preferred meanings given above and below.

Preferred compounds are those of formula III1, III4, III6, III16, III19 and 11120.

In the compounds of formulae III1 to III24 $R^0$ preferably denotes alkyl having 1 to 6 C atoms, very preferably ethyl or propyl, $X^0$ preferably denotes F or $OCF_3$, very preferably F, and $Y^2$ preferably denotes F.

The total proportion of compounds of the formula III in the mixture as a whole is preferably from 1 to 25 % by weight. The individual proportion of a compound of formula II or its subformulae in the mixture as a whole is preferably from 1 to 15% by weight.

In a further preferred embodiment, the LC medium contains one or more compounds of formula III or its subformulae as described above and below wherein $Y^0$ is $CH_3$, Very preferably the LC medium according to this preferred embodiment comprises one or more compounds of formula III selected from the following subformulae:

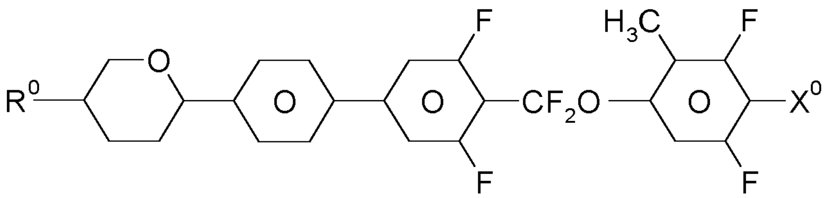

IIIA1

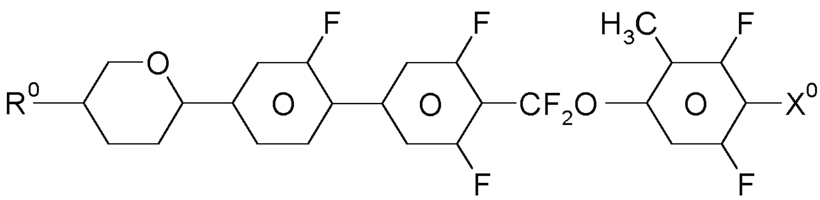

IIIA2

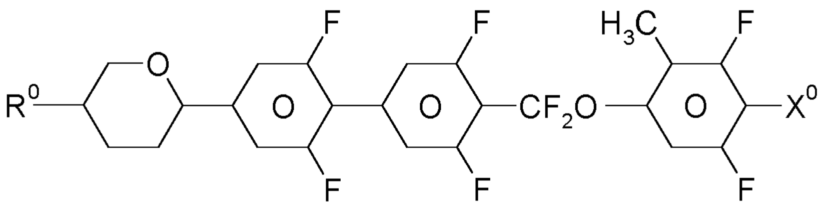

IIIA3

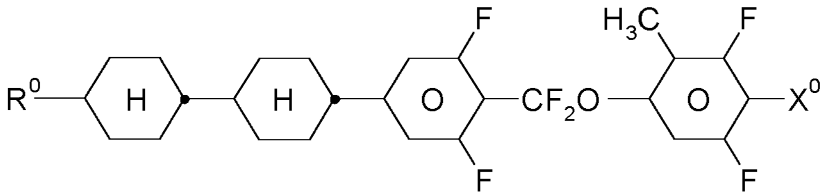

IIIA4

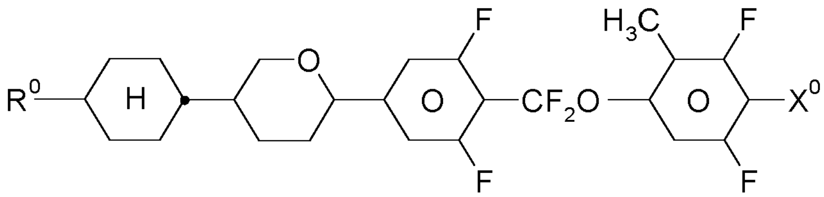

IIIA5

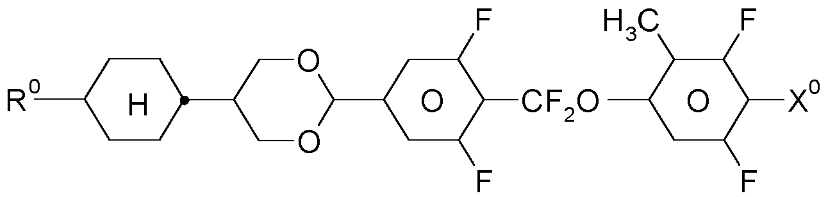

IIIA6

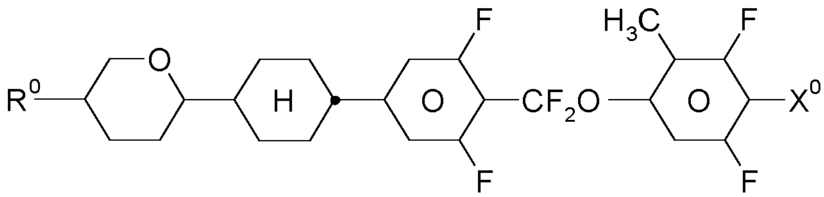

IIIA7

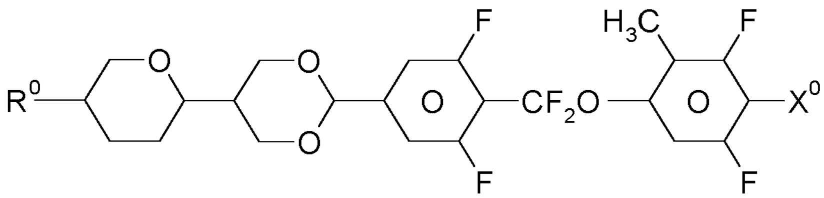

IIIA8

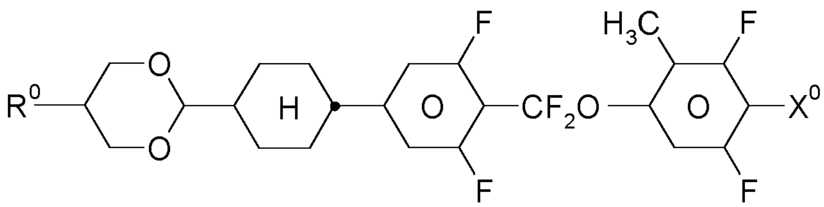

IIIA9

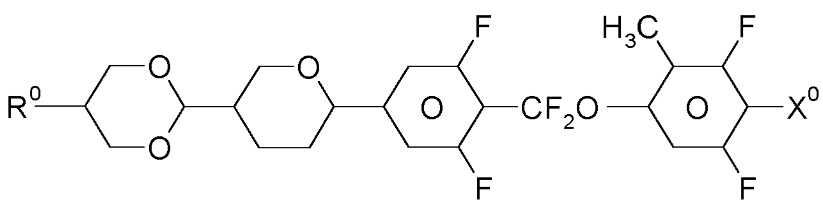

IIIA10

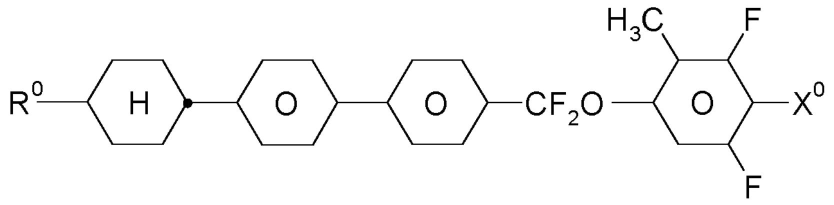

IIIA11

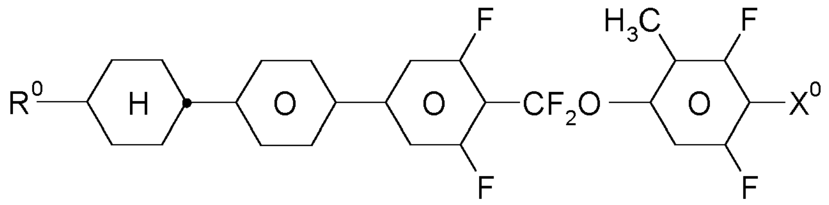

IIIA12

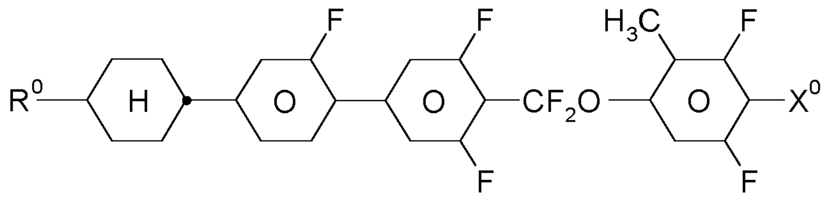

IIIA13

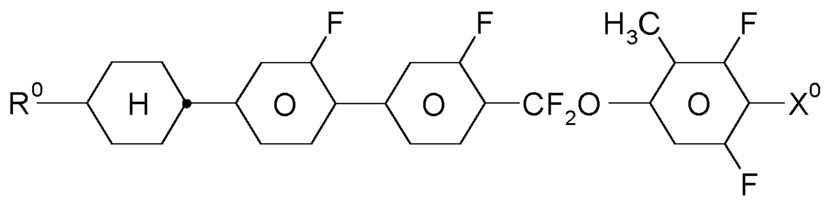

IIIA14

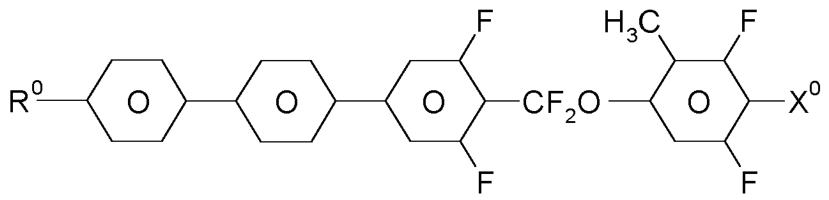

IIIA15

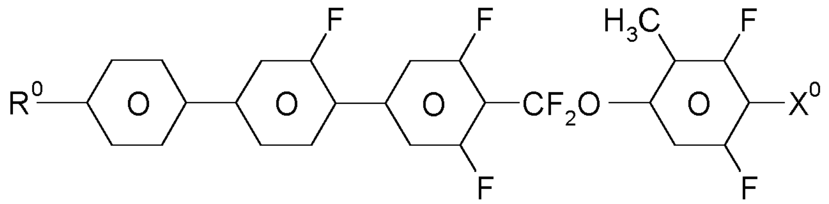

IIIA16

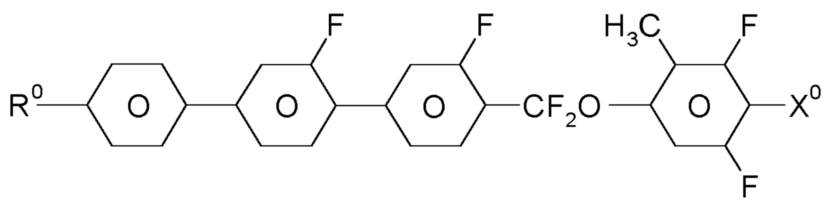

IIIA17

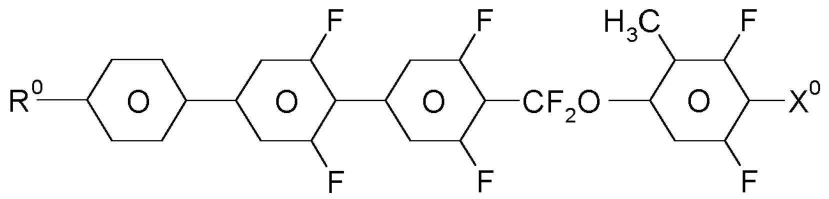

IIIA18

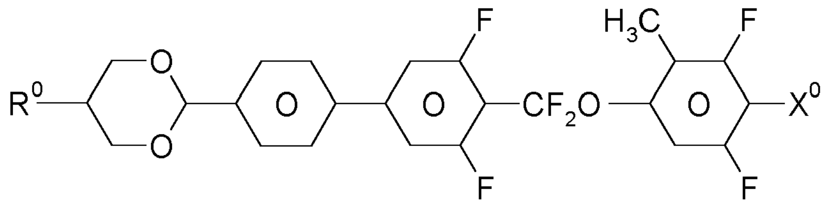

IIIA19

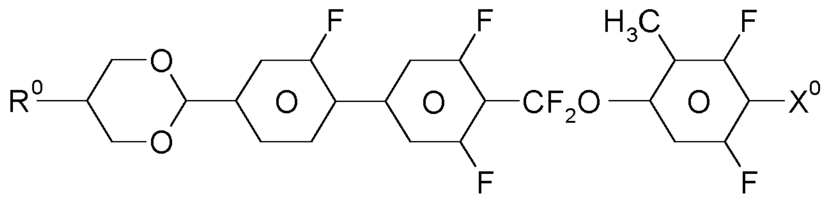

IIIA20

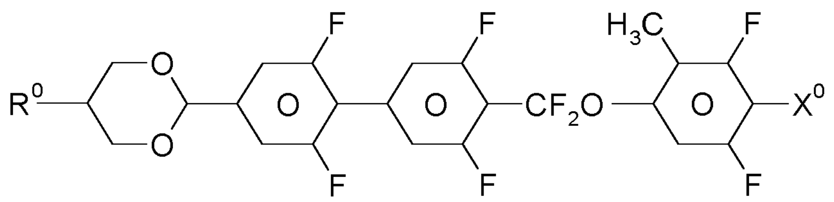

IIIA21

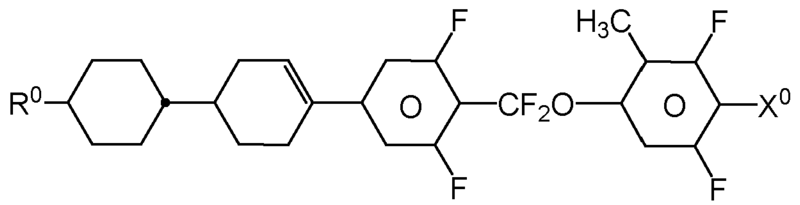

IIIA22

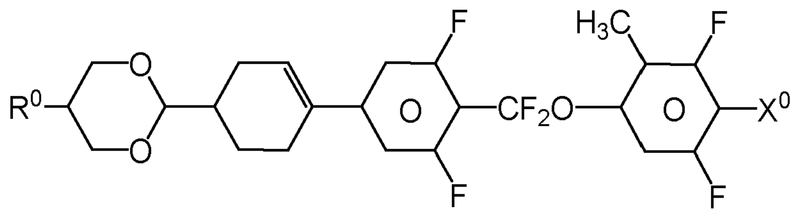

IIIA23

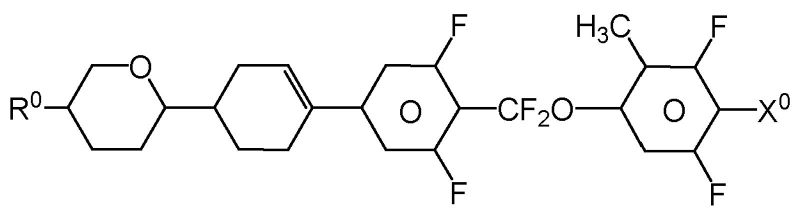

IIIA24

in which $R^0$ and $X^0$ have the meanings given in formula III or one of the preferred meanings given above and below.

Preferred compounds are those of formula IIIA1, IIIA4, IIIA6, IIIA16, IIIA19 and IIIA20.

In the compounds of formulae IIIA1 to IIIA24 $R^0$ preferably denotes alkyl having 1 to 6 C atoms, very preferably ethyl or propyl, $X^0$ preferably denotes F or $OCF_3$, very preferably F, and $Y^2$ preferably denotes F.

b) The LC medium comprises one or more compounds selected from the following formulae:

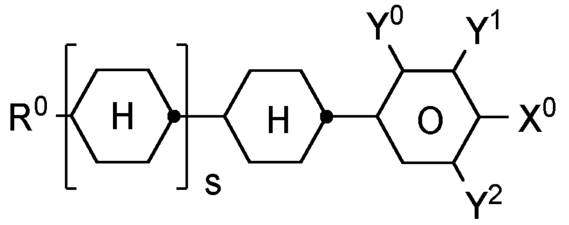

IV

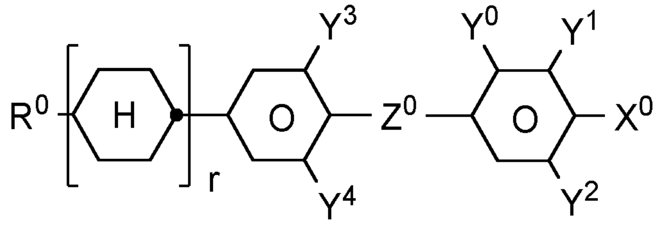

V

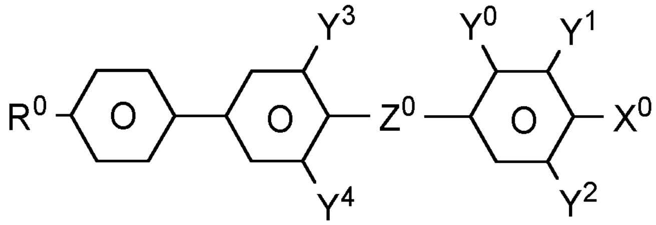

VI

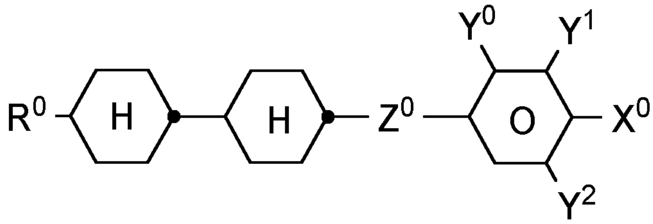

VII

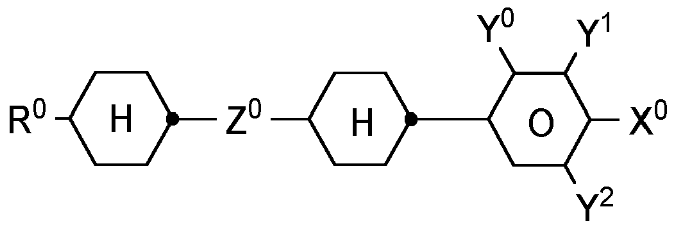

VIII

in which the individual radicals, on each occurrence identically or differently, and each, independently of one another, have the following meaning:

| | |
|---|---|
| $R^0$, $X^0$, $Y^{1,2}$, $Y^0$ | one of the meanings given in formula II and III, |
| $Z^0$ | -CO-O-, -O-CO-, $-CF_2O-$ , $-OCF_2-$, $-CH_2O-$, $-OCH_2-$, $-CH_2-$, - $CH_2CH_2-$, $-(CH_2)_4-$, $-CH=CH-CH_2O-$, $-C_2F_4-$, $-CH_2CF_2-$, $-CF_2CH_2$ -, -CF=CF-, -CH=CF-, -CF=CH-, -CH=CH-, -C≡C- or a single bond, |
| $Y^{3,4}$ | H or F, |
| r | 0 or 1, and |
| s | 0 or 1 . |

Preferred compounds of the formulae IV, V, VI, VII and VIII are those wherein $R^0$ denotes an alkyl or alkoxy radical having up to 15 C atoms, and very preferablydenotes $(O)C_vH_{2v+1}$ wherein (O) is an oxygen atom or a single bond and v is 1, 2, 3, 4, 5 or 6.

Further preferred compounds of the formulae IV, V, VI, VII and VIII and their subformulae are those wherein $R^0$ denotes or contains a cycloalkyl or cycloalkoxy radical, preferably selected from the group consisting of

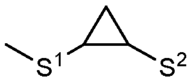, 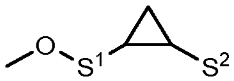, 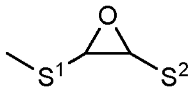, 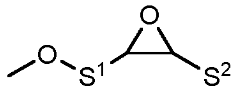,

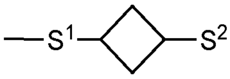, 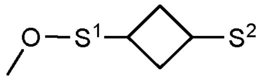, 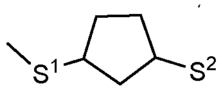, 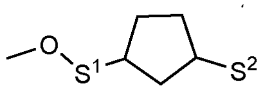,

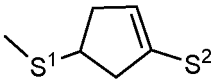, 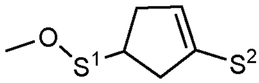, 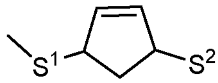, 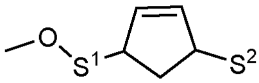,

wherein $S^1$ is $C_{1-12}$-alkylene or $C_{2-12}$-alkenylene and $S^2$ is H, $C_{1-12}$-alkyl or $C_{2-12}$-alkenyl, very preferably are selected from the group consisting of

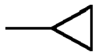, 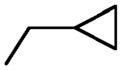, 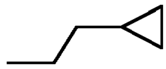, 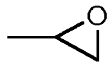, 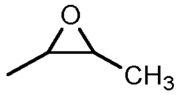,

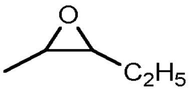, 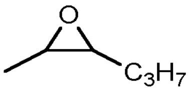, 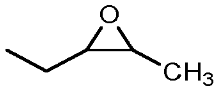, 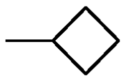, 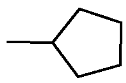,

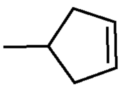, 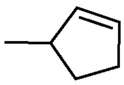, 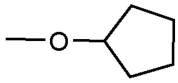, 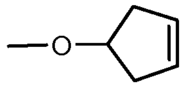, 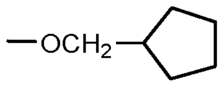,

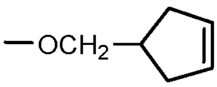, 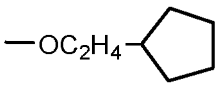, 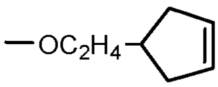. 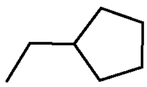.

Preferred compounds of formula IV are selected from the following subformulae:

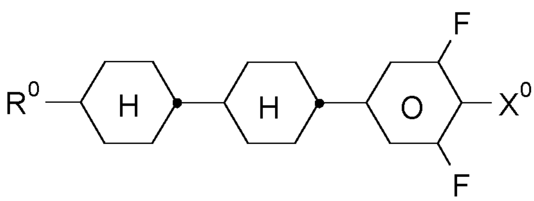 IVa

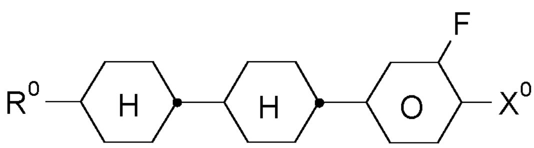 IVb

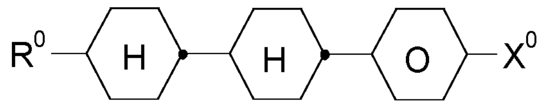

IVc

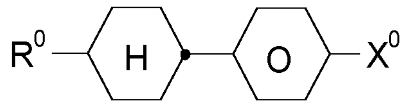

IVd

in which $R^0$ and $X^0$ have the meanings indicated above, and $R^0$ preferably denotes alkyl having 1 to 6 C atoms and $X^0$ preferably denotes F or $OCF_3$, furthermore $OCF=CF_2$ or Cl.

Very preferred compounds of formula IV are selected from the following subformula:

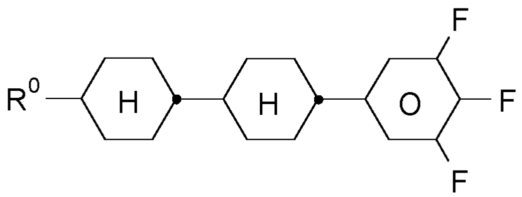

IVa1

in which $R^0$ has the meanings indicated above and is preferably methyl, ethyl, propyl or pentyl.

Further very preferred compounds of formula IV are selected from the following subformula:

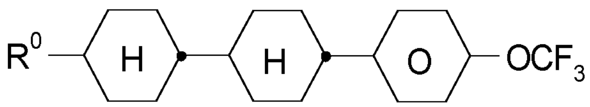

IVc1

in which $R^0$ has the meanings indicated above and is preferably methyl, ethyl, propyl or pentyl.

Preferred compounds of formula V are selected from the following subformulae:

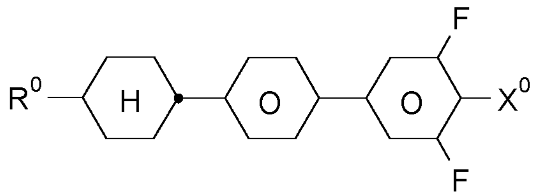

Va

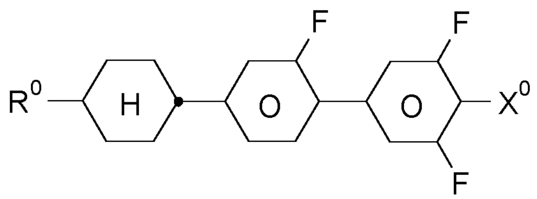

Vb

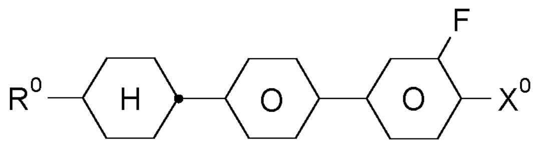

Vc

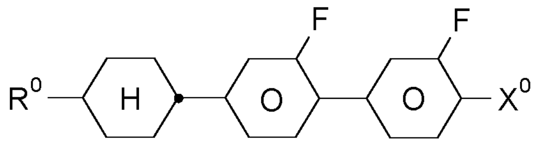

Vd

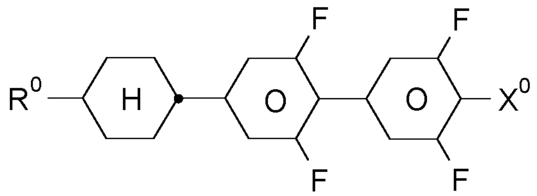

Ve

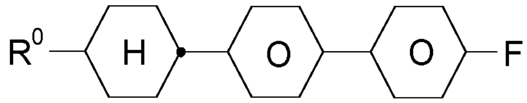

Vf

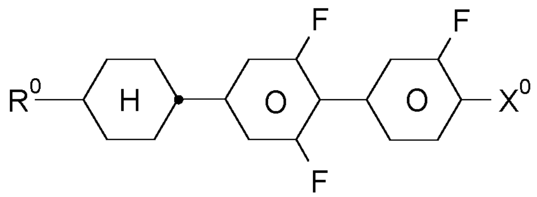

Vg

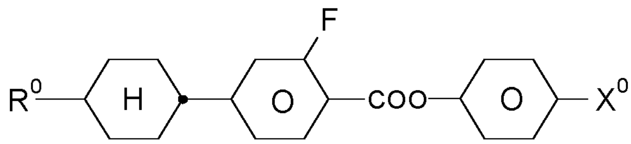

Vh

in which $R^0$ and $X^0$ have the meanings indicated above, and $R^0$ preferably denotes alkyl having 1 to 6 C atoms and $X^0$ preferably denotes F or $OCF_3$, furthermore $OCHF_2$, $CF_3$, $OCF=CF_2$ or $OCH=CF_2$.

Preferred compounds of formula VI are selected from the following subformulae:

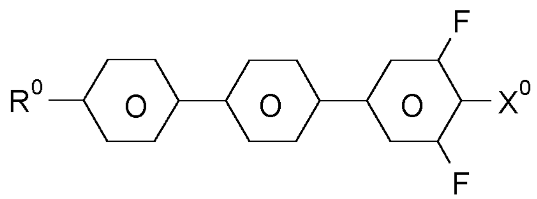

VIa

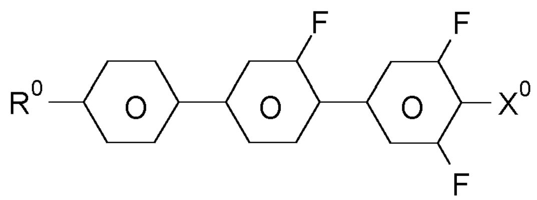

VIb

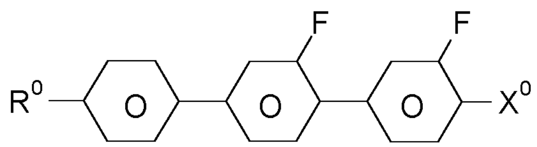

VIc

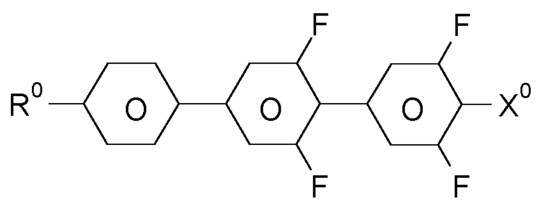

VId

in which $R^0$ and $X^0$ have the meanings indicated above, and $R^0$ preferably denotes alkyl having 1 to 6 C atoms and $X^0$ preferably denotes F, furthermore $OCF_3$, $CF_3$, $CF=CF_2$, $OCHF_2$ or $OCH=CF_2$.

Very preferred compounds of formula VIb are selected from the following subformula:

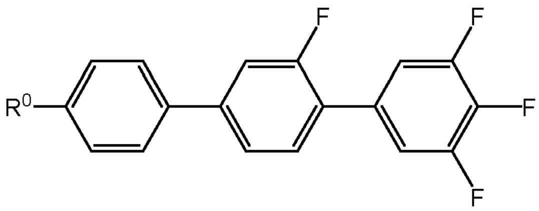

VIb1

in which $R^0$ has the meanings indicated above and is preferably ethyl, propyl or pentyl.

Preferred compounds of formula VII are selected from the following subformulae:

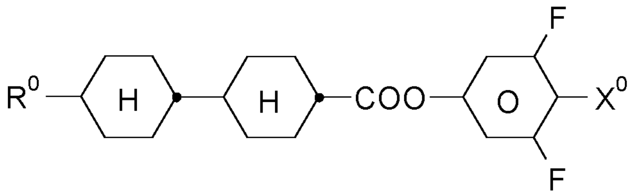

VIIa

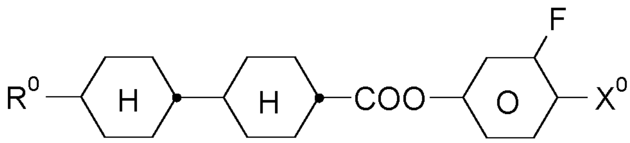

VIIb

in which $R^0$ and $X^0$ have the meanings indicated above, and $R^0$ preferably denotes alkyl having 1 to 6 C atoms and $X^0$ preferably denotes F, furthermore $OCF_3$, $OCHF_2$ or $OCH=CF_2$.

Very preferred compounds of formula VII are selected from the following subformula:

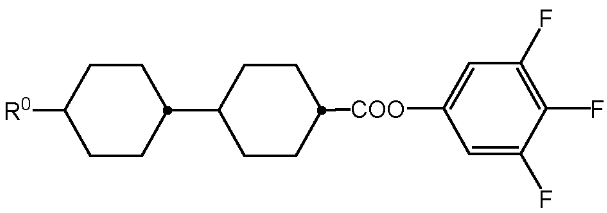

VIIa1

in which $R^0$ has the meanings indicated above and is preferably ethyl, propyl or pentyl.

The total proportion of compounds selected from the formulae IV to VIII in the mixture as a whole is preferably from 1 to 25 % by weight. The individual proportion of a compound selected from the formulae IV to VIII or their subformulae in the mixture as a whole is preferably from 1 to 15% by weight.

c) The LC medium comprises one or more compounds of formula IX:

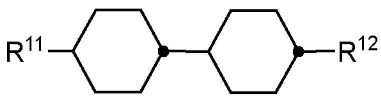

IX

in which the individual radicals, on each occurrence identically or differently, and each, independently of one another, have the following meaning

$R^{11}$ an unsubstituted alkyl radical having 1 to 7 C atoms where, in addition, one or more $CH_2$ groups may be replaced by

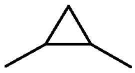 , 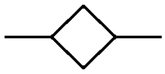 , 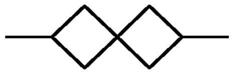 , 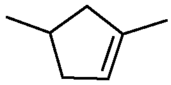 , 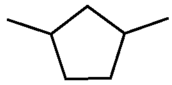

or an unsubstituted alkenyl radical having 2 to 7 C atoms, preferably an n-alkyl radical, particularly preferably having 2, 3, 4 or 5 C atoms,

$R^{12}$ an unsubstituted alkyl radical having 1 to 7 C atoms or an unsubstituted alkoxy radical having 1 to 6 C atoms, both preferably having 2 to 5 C atoms, or an unsubstituted alkenyl radical having 2 to 7 C atoms, preferably having 2, 3 or 4 C atoms, more preferably a vinyl radical or a 1-propenyl radical.

Preferred compounds of formula IX are selected from the following subformulae:

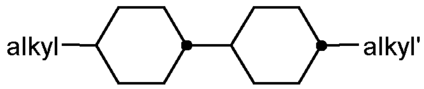 IX-1

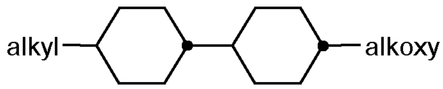 IX-2

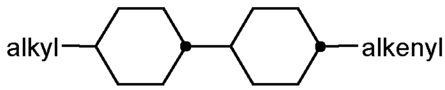 IX-3

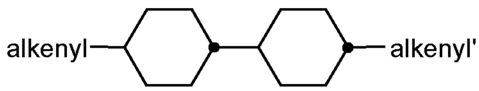 IX-4

in which

alkyl, alkyl', independently of one another, denote alkyl having 1 to 7 C atoms, preferably having 2 to 5 C atoms,

alkenyl denotes an alkenyl radical having 2 to 5 C atoms, preferably having 2 to 4 C atoms, particularly preferably 2 C atoms,

alkenyl' denotes an alkenyl radical having 2 to 5 C atoms, preferably having 2 to 4 C atoms, particularly preferably having 2 to 3 C atoms, and

alkoxy denotes alkoxy having 1 to 5 C atoms, preferably having 2 to 4 C atoms.

Preferably, the LC medium comprises one or more compounds of formula IX1, preferably selected from the following subformulae:

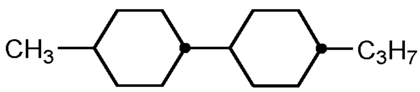 IX-1-1

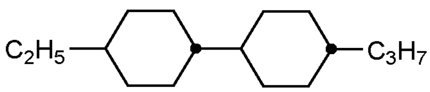 IX-1-2

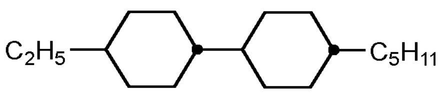 IX-1-3

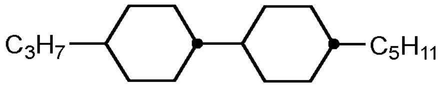

IX-1-4

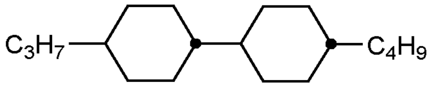

IX-1-5

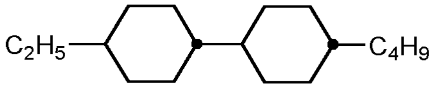

IX-1-6

Further preferably, the LC medium comprises one or more compounds of the subformulae IX-2-1 and/or IX-2-2:

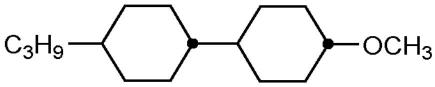

IX-2-1

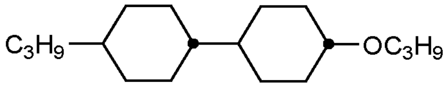

IX-2-2

Further preferably, the LC medium comprises one or more compounds of formula IX-3, in particular selected from the following subformulae:

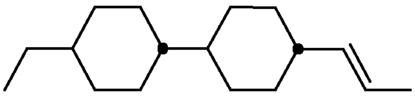

IX-3-1

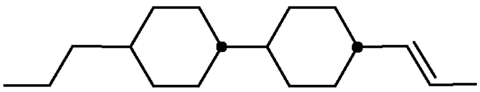

IX-3-2

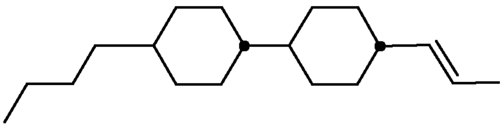

IX-3-3

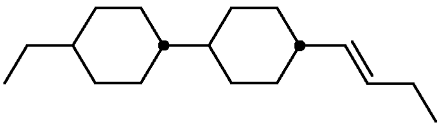

IX-3-4

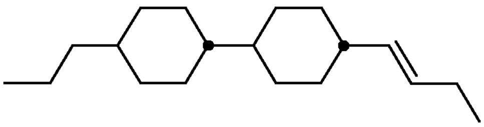

IX-3-5

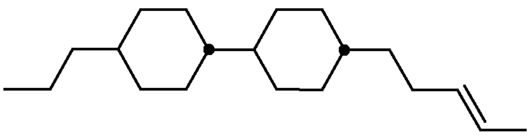

IX-3-6

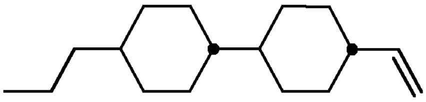

IX-3-7

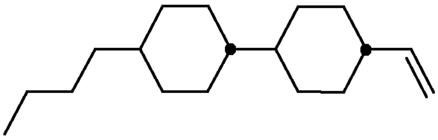

IX-3-8

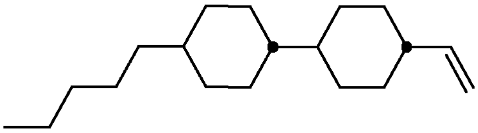

IX-3-9

In another preferred embodiment, the LC medium comprises one or more compounds of formula IX-3 selected from the following subformulae:

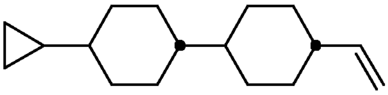

IX-3-10

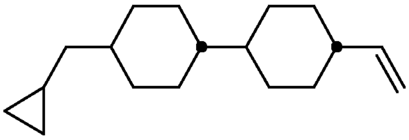

IX-3-11

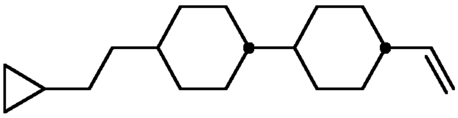

IX-3-12

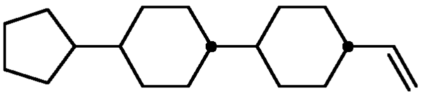

IX-3-13

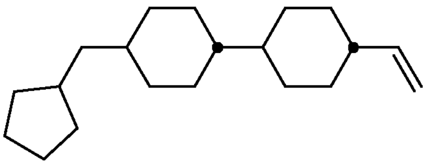

IX-3-14

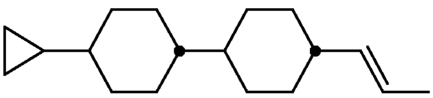

IX-3-15

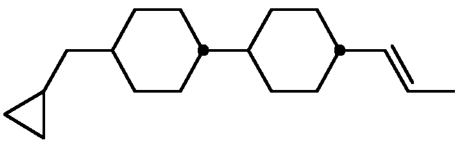

IX-3-16

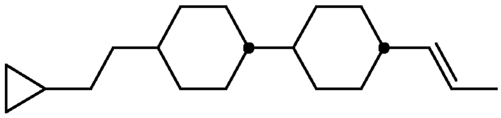

IX-3-17

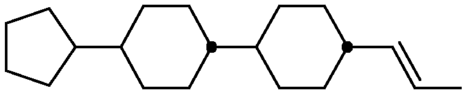

IX-3-18

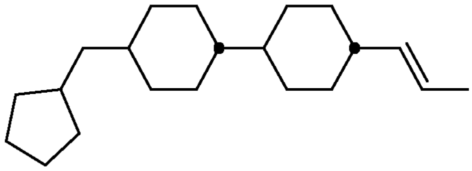

IX-3-19

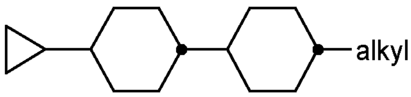

IX-3-20

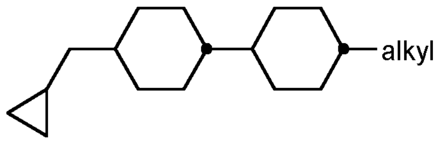

IX-3-21

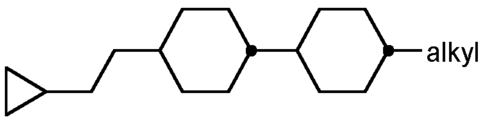

IX-3-22

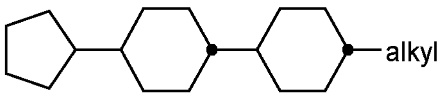

IX-3-23

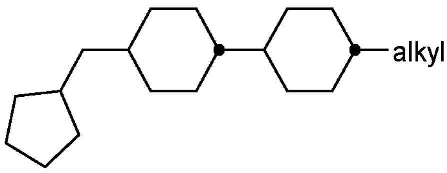

IX-3-24

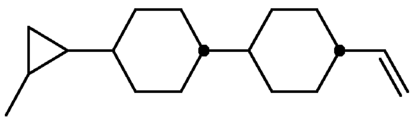

IX-3-25

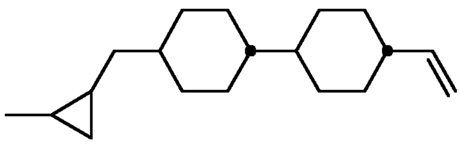

IX-3-26

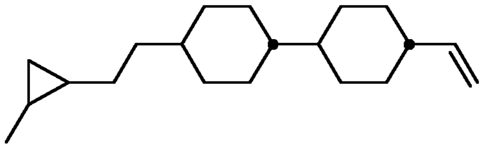

IX-3-27

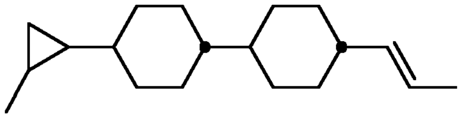

IX-3-28

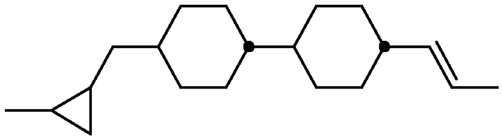

IX-3-29

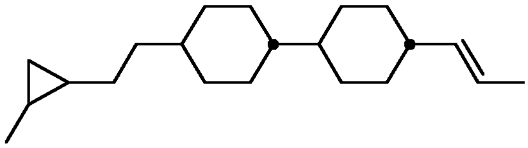

IX-3-30

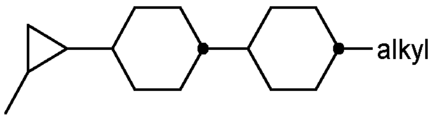

IX-3-31

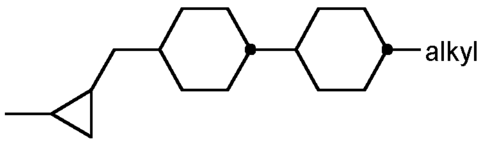

IX-3-32

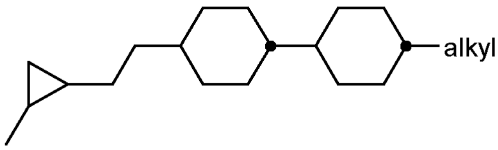

IX-3-33

in which alkyl denotes methyl, ethyl, n-propyl, isopropyl, n-butyl, isobutyl, or n-pentyl.

Further preferably, the LC medium comprises a compound of formula IX-4, in particular selected from the following subformulae:

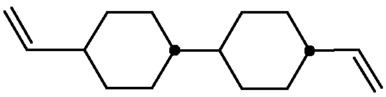

IX-4-1

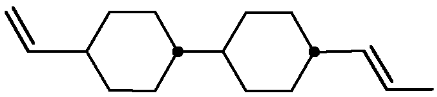

IX-4-2

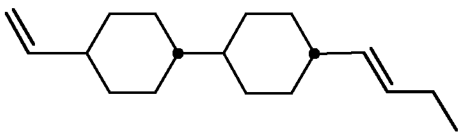

IX-4-3

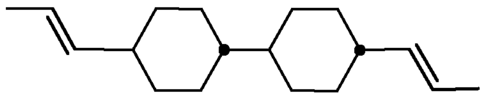

IX-4-4

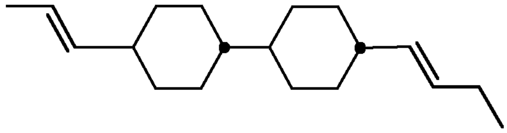

IX-4-5

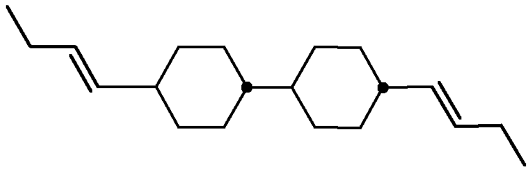

IX-4-6

In another preferred embodiment the LC medium comprises one or more compounds of formula IX-4 and its subformulae in which one or both of "alkenyl" and "alkenyl' " denote

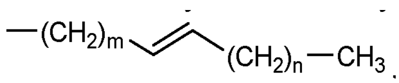

in which m is 0, 1 or 2, and n is 0, 1 or 2, very preferably selected from compounds of formulae IX-4-3 to IX-4-6.

Very preferably, the LC medium comprises one or more compounds of the formula IX-1 or its subformulae and/or one or more compounds of the formula IX-3 or its subformulae and/or one or more compounds of the formula IX-4 or its subformulae, where the total concentration of these compounds is preferably in the range from 25% to 70%.

d) The LC medium comprises one or more compounds selected from the formulae X, XI and XII:

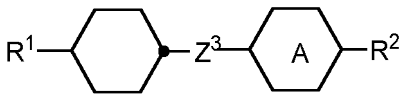

X

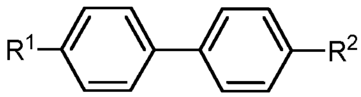

XI

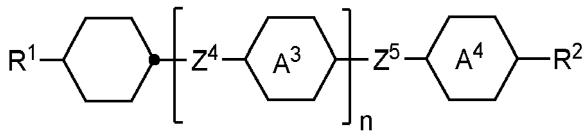

XII

in which the individual radicals, on each occurrence identically or differ- ently, and each, independently of one another, have the following meaning

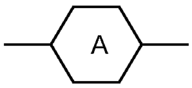

denotes

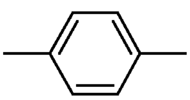 , 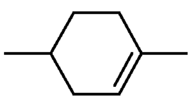 , 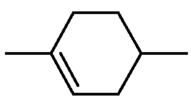 ,

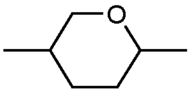 or 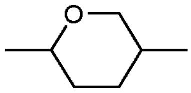,

$Z^4$, $Z^5$ a single bond, $-CH_2CH_2-$, -CH=CH-, $-CF_2O-$, $-OCF_2-$, $-CH_2O-$, $-OCH_2-$, -COO-, -OCO-, $-C_2F_4-$, $-C_4H_8-$ or -CF=CF-, preferably a single bond,

$R^1$, $R^2$ H, an alkyl, alkoxy or alkenyl radical having up to 15 C atoms which is unsubstituted, monosubstituted by F, Cl, CN or $CF_3$ or at least monosubstituted by halogen, where, in addition, one or more $CH_2$ groups in these radicals may be replaced by -O-, -S-,-C≡C-, $-CF_2O-$, $-OCF_2-$, -OC-O-, -O-CO-

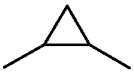, 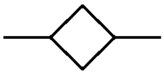, 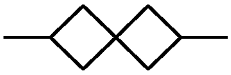, 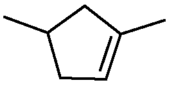, 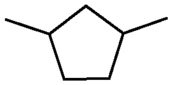

in such a way that O atoms are not linked directly to one another, and preferably denote alkyl having 1 to 7 C atoms, preferably n-alkyl, particularly preferably n-alkyl having 1 to 5 C atoms, alkoxy having 1 to 6 C atoms, preferably n-alkoxy, particularly preferably n-alkoxy having 2 to 5 C atoms, alkoxyalkyl, alkenyl or alkenyloxy having 2 to 7 C atoms, preferably having 2 to 4 C atoms, preferably alkenyloxy

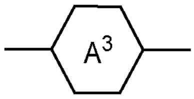, 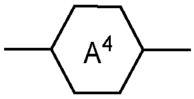,

identically or differently, denote

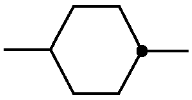, 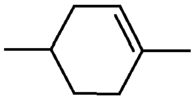, 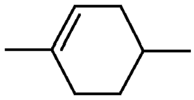,

, 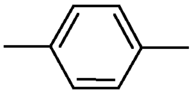, 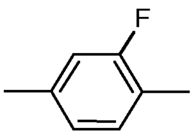 or 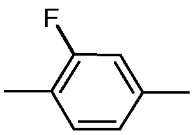

in which

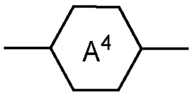

preferably denotes

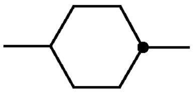 or, 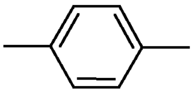,

$Z^4$, $Z^5$ $-CH_2-CH_2-$, $-CH_2-O-$,-CH=CH-, -C≡C-, -COO- or a single bond, preferably $-CH_2-CH_2-$, $-CH_2-O-$ or a single bond, preferably a single bond,

n 1 or 2.

Preferred compounds of formula X are selected from the following subformulae:

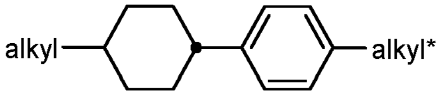

X-1

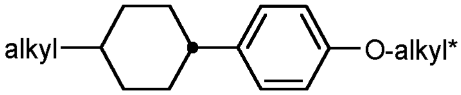

X-2

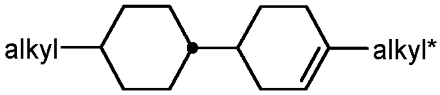

X-3

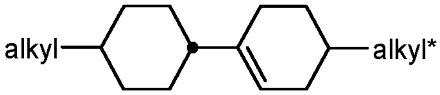

X-4

in which alkyl and alkyl* each, independently of one another, denote a straight-chain alkyl radical having 1 to 6 C atoms.

The LC medium preferably comprises at least one compound of the formula X-1 and/or formula X-2.

The proportion of compounds of the formula X in the mixture as a whole is preferably from 1 to 15 % by weight.

Preferred compounds of formula XI are selected from the following subformulae:

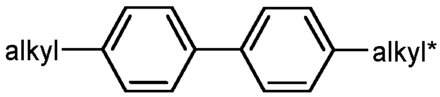

XI-1

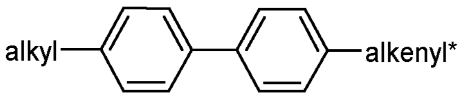

XI-2

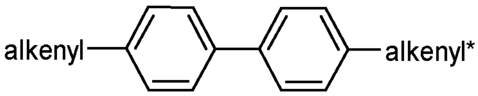

XI-3

in which

| | |
|---|---|
| alkyl, alkyl* | each, independently of one another, denote a straight-chain alkyl radical having 1 to 6 C atoms, and |
| alkenyl, alkenyl* | each, independently of one another, denote a straight-chain alkenyl radical having 2 to 6 C atoms. |

The proportion of the compounds of the formulae XI-1 to XI-3 in the mixture as a whole is preferably from 2 to 20 % by weight, in particular from 3 to 15 % by weight.

Of the compounds of the formulae XI-1 to XI-3, the compounds of the formula XI-2 are particularly preferred.

Preferred compounds of the formulae XI-1 to XI-3 are selected from the group consisting of the following subformulae:

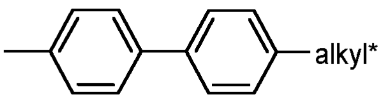

XI-1-1

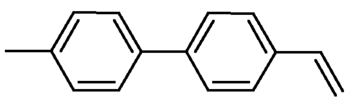

XI-2-1

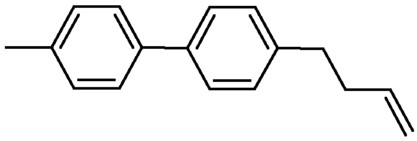

XI-2-2

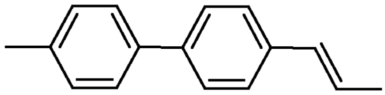

XI-2-3

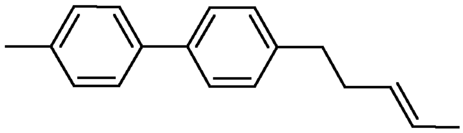

XI-2-4

in which alkyl* denotes an alkyl radical having 1 to 6 C atoms and preferably denotes n-propyl, n-butly or n-pentyl.

Particularly preferred compounds of the formula XI-1 are selected from the group consisting of the following subformulae:

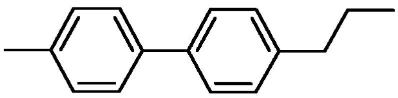

XI-1-1a

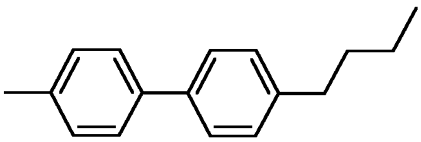

XI-1-1b

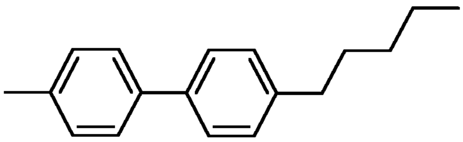

XI-1-1c

The LC medium particularly preferably comprises one or more compounds selected from the formulae XI-1-1a, IX-1-1b and XI-1-1 c.

Preferred compounds of formula XII are selected from the following subformulae:

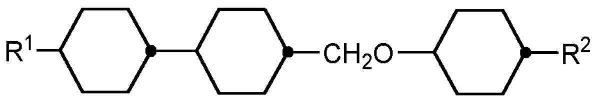

XII-1

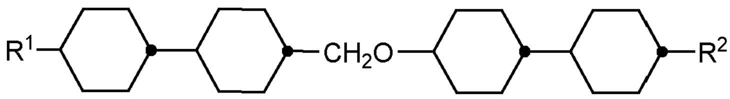

XII-2

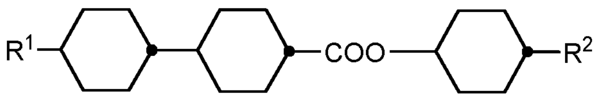

XII-3

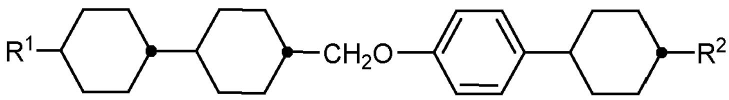

XII-4

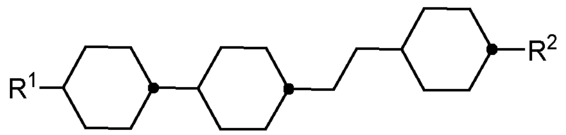
XII-5

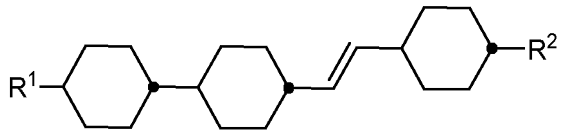
XII-6

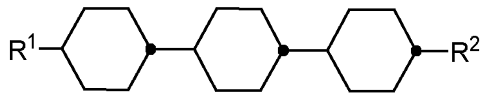
XII-7

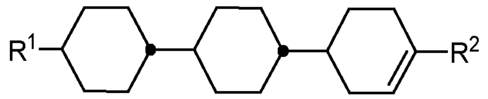
XII-8

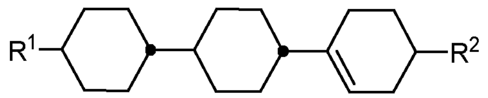
XII-9

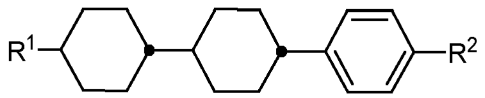
XII-10

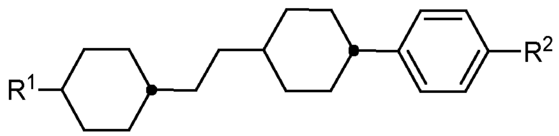
XII-11

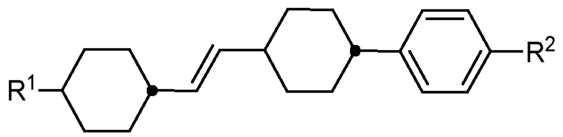
XII-12

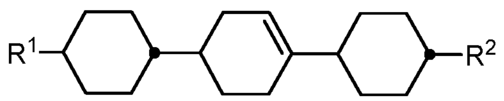
XII-13

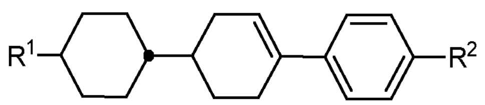
XII-14

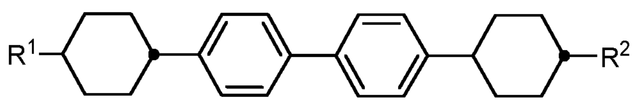
XII-15

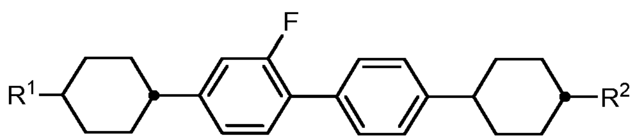
XII-16

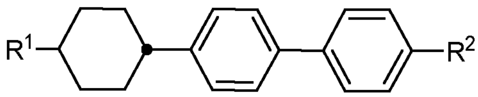

XII-17

in which $R^1$ and $R^2$ have the meanings as given above.

$R^1$ and $R^2$ preferably each, independently of one another, denote straight-chain alkyl or alkenyl.

Preferably the LC medium comprises one or more compounds of the formulae XII-1, XII-3, XII-4, XII-6, XII-7, XII-10, XII-11, XII-12, XII-13, XII-14, XII-15, XII-16 and/or XII-17.

The LC medium preferably comprises one or more compounds selected form the formulae XII-6, XII-10 and IX-13, in particular in amounts from 2 to 30 %.

Preferred compounds of the formula XII-6 and XII-10 and XII-17 are indicated below:

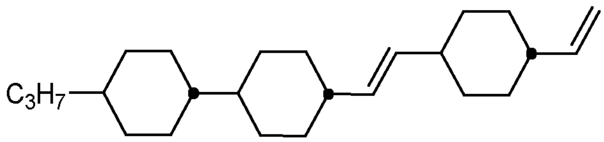

XII-6a

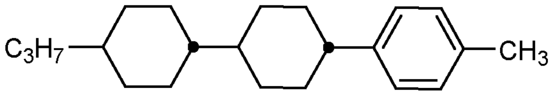

XII-10a

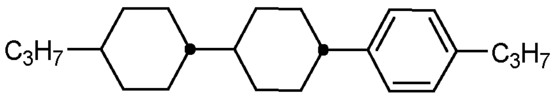

XII-10b

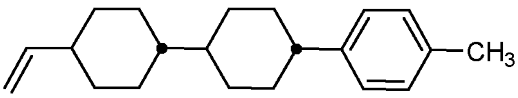

XII-10c

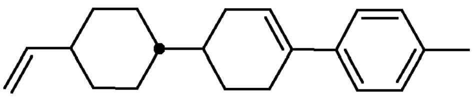

XII-13a

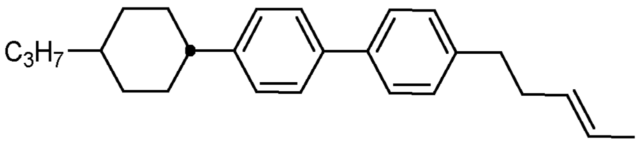

XII-17a

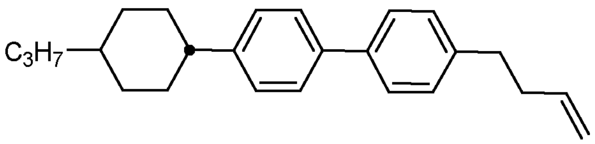

XII-17b

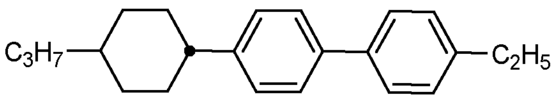

XII-17c

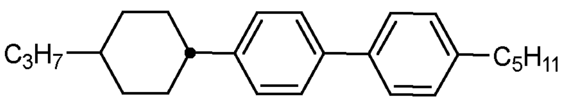

XII-17-d

The LC medium very preferably comprises one or more of the tricyclic compounds of the formula XII-6a and/or XII-10a and/or XII-10b in combination with one or more compounds of the formulae IX-1 The total proportion of the

compounds of the formulae XII-6a and/or XII-10a and/or XII-10b in combination with one or more compounds selected from the formula IX-1 is 1 to 20 %, very particularly preferably 2 to 15 %.

Further preferably the LC medium comprises at least one compound selected from the group of the compounds

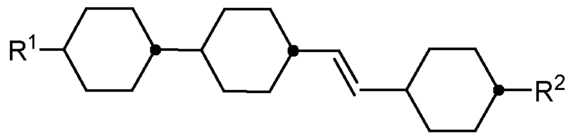

XII-6

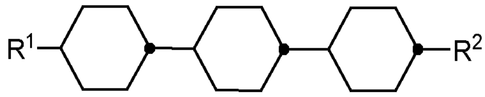

XII-7

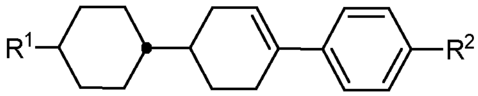

XII-14

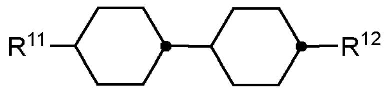

IX

in which $R^1$, $R^2$, $R^{11}$ and $R^{12}$ have the meanings as given above. Preferably in the compounds XII-6, XII-7 and IX, $R^{11}$ and $R^{12}$ denotes alkyl or alkenyl having 1 to 6 or 2 to 6 C atoms, respectively, and $R^2$ and $R^{42}$ denotes alkenyl having 2 to 6 C atoms. Preferably in the compounds XII-14, $R^1$ denotes alkyl or alkenyl having 1 to 6 or 2 to 6 C atoms and $R^2$ denotes alkyl having 1 to 6 C atoms.

In another preferred embodiment the LC medium comprises one or more compounds of the formula XII-7, preferably selected from the compounds of the formulae XII-7a to XII-7e:

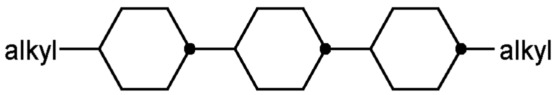

XII-7a

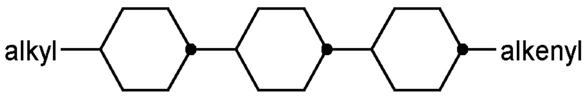

XII-7b

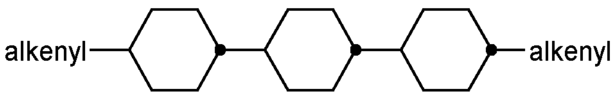

XII-7c

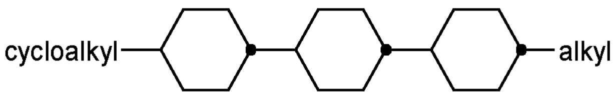

XII-7d

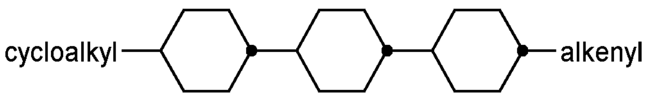

XII-7e

in which alkyl denotes an alkyl group having 1 to 7 C atoms, alkenyl denotes an alkenyl group having 2 to 7 C atoms, and cycloalkyl denotes a cyclic alkyl group having 3 to 12 C atoms, preferably cyclopropyl, cyclobutyl, cyclopentyl, cyclopropylalkyl, cyclobutylalkyl or cyclopentylalkyl.

Very preferred compounds of the formulae XII-7a to XII-7e are selected from the compounds of the formulae XII7-b1 to XII7-b3, XII-7d-1 to XII-7d-8 and XII-7e-1 to XII-7e-12:

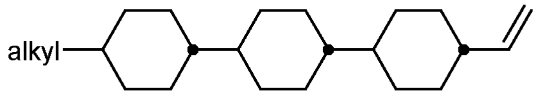

XII-7b-1

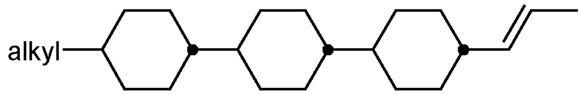

XII-7b-2

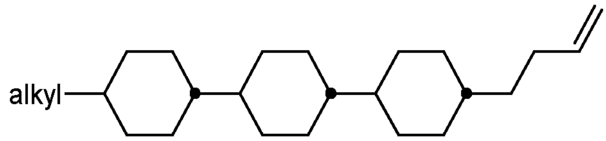

XII-7b-3

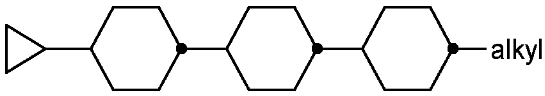

XII-7d-1

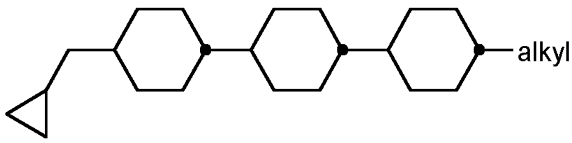

XII-7d-2

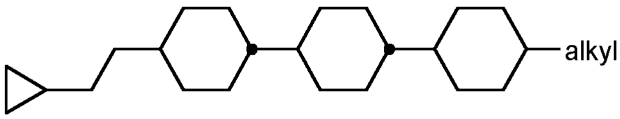

XII-7d-3

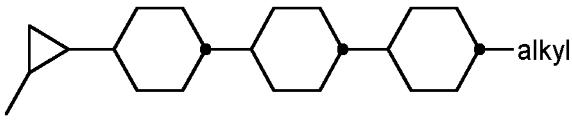

XII-7d-4

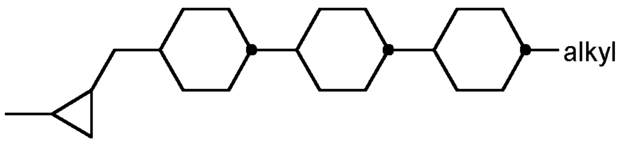

XII-7d-5

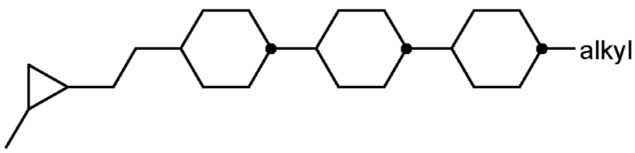

XII-7d-6

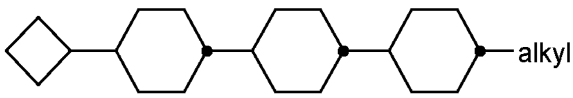

XII-7d-7

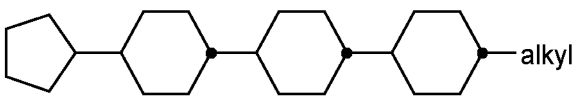

XII-7d-8

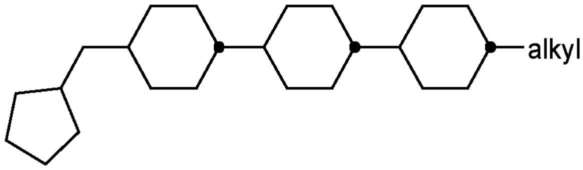

XII-7d-9

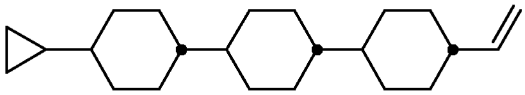

XII-7e-1

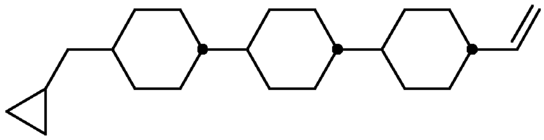

XII-7e-2

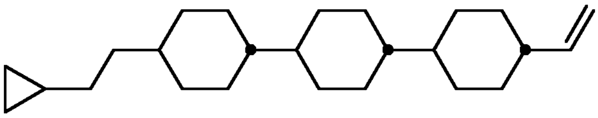

XII-7e-3

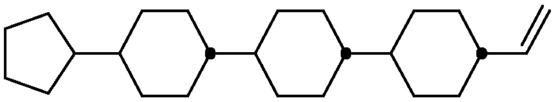

XII-7e-4

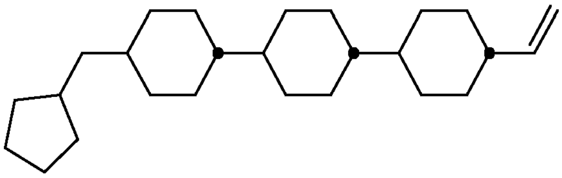

XII-7e-5

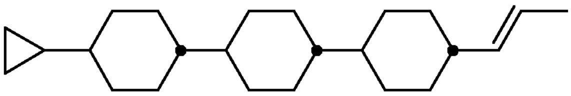

XII-7e-6

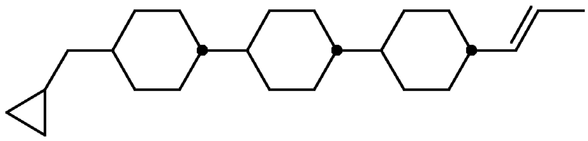

XII-7e-7

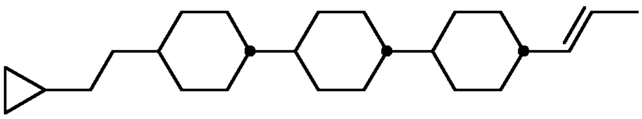

XII-7e-8

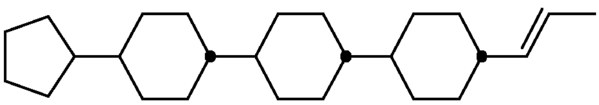

XII-7e-9

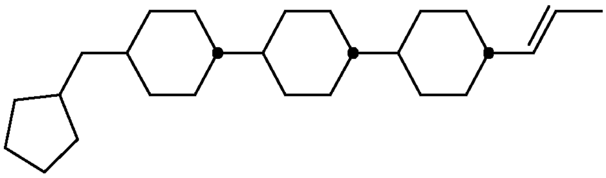

XII-7e-10

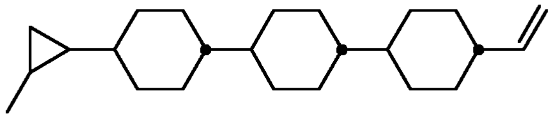

XII-7e-11

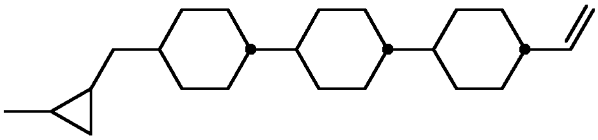

XII-7e-12

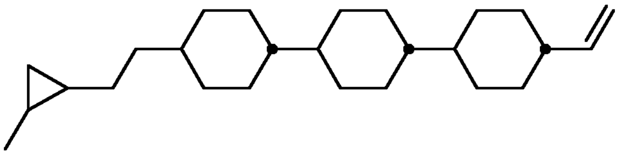

XII-7e-13

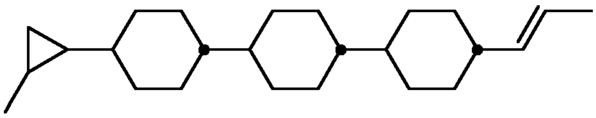

XII-7e-14

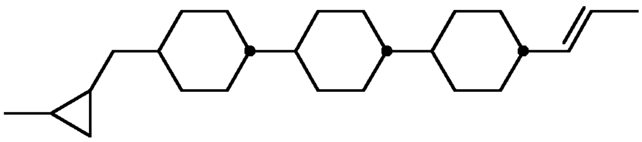

XII-7e-15

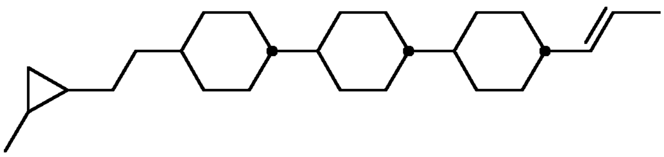

XII-7e-16

in which alkyl denotes ethyl, n-propyl, n-butyl or n-pentyl, preferably n-propyl.

Further preferred are compounds of formula XII, wherein $R^{51}$ and $R^{52}$ independently of one another denote straight-chain alkyl having 1 to 7 C atoms or alkenyl having 2 to 7 C atoms.

The LC medium comprises one or more compounds of the formula XIII,

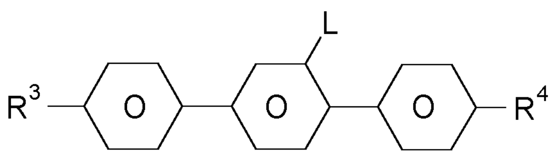

XIII

in which L is H or F, and $R^3$ and $R^4$ have independently of each other one of the meanings given for $R^1$ above and preferably each, independently of one another, denote alkyl having 1 to 6 C atoms.

Particularly preferred compounds of the formula XIII are those of the sub-formulae:

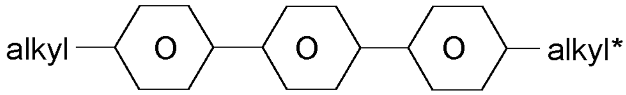

XIIIa

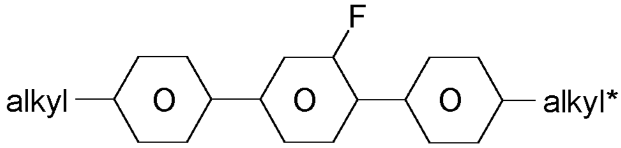

XIIIb

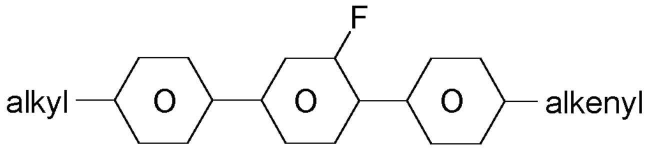

XIIIc

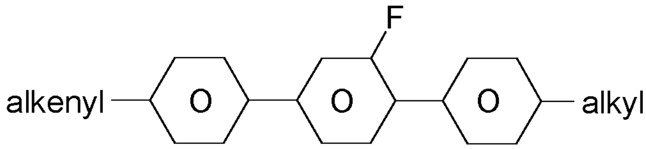

XIIId

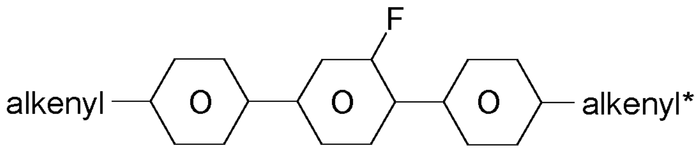

XIIIe

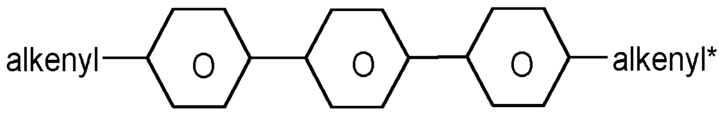

XIIIf

in which

alkyl, alkyl* each, independently of one another, denote a straight-chain alkyl radical having 1-6 C atoms, in particular ethyl, propyl or pentyl,

alkenyl, alkenyl* each, independently of one another, denote a straight-chain alkenyl radical having 2-6 C atoms, in particular $CH_2=CHC_2H_4$, $CH_3CH=CHC_2H_4$, $CH_2=CH$ and $CH_3CH=CH$.

Particular preference is given to the compounds of the formulae XIIIb, XIIIc and XIIIg. Very particular preference is given to the compounds of the formulae:

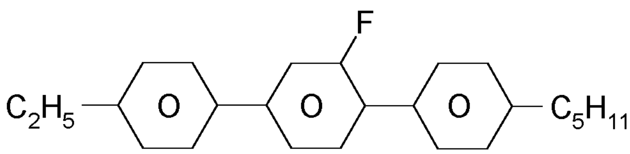

XIIIb1

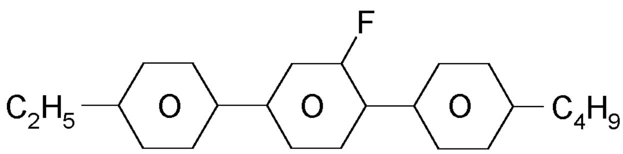

XIIIb2

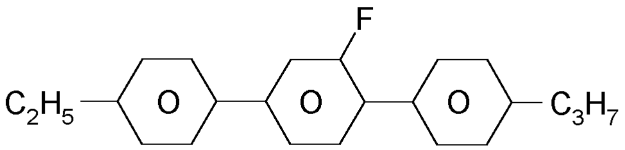

XIIIb3

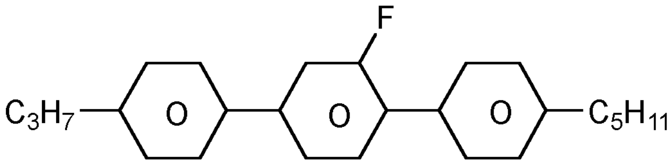

XIIIb4

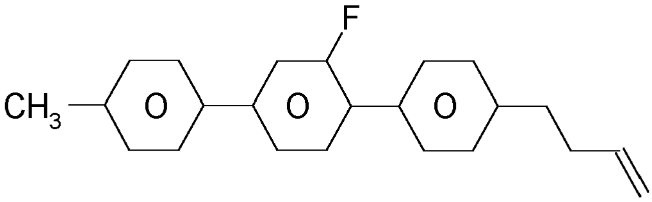

XIIIc1

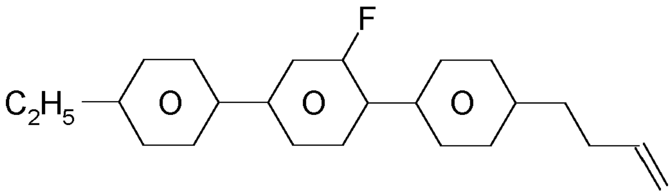

XIIIc2

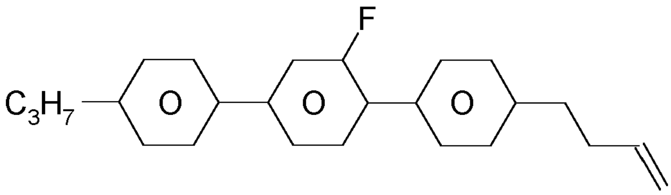

XIIIc3

The total proportion of compounds of formula XIII in the mixture as a whole is preferably from 1 to 25 % by weight. The individual proportion of a compound selected from formula XIII or its subformulae in the mixture as a whole is preferably from 1 to 15% by weight.

g) The LC medium comprises one or more compounds of the following formula:

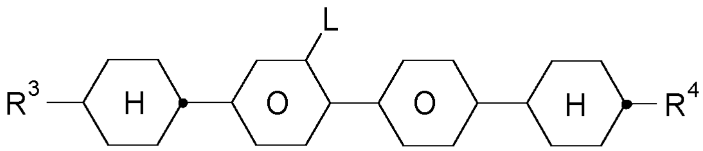

XIV

in which $R^3$ and $R^4$ have independently of each other one of the meanings given for $R^1$ above and preferably each, independently of one another, denote alkyl having 1 to 6 C atoms. L denotes H or F. Preferably the mixture comprises 1 to 10% of one or more compounds of formula XIV.

e) The LC medium comprises one or more compounds of the formula XV,

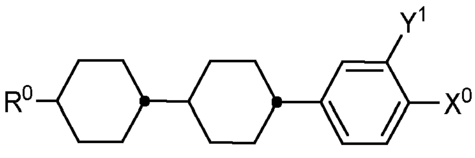

XV

in which $R^0$, $X^0$ and $Y^1$ have the meanings given above. $R^0$ preferably denotes alkenyl with 2 to 7 C atoms, $Y^1$ preferably

denotes F, and $X^0$ preferably denotes F.

Preferred compounds of formula XV are those of formula XVa

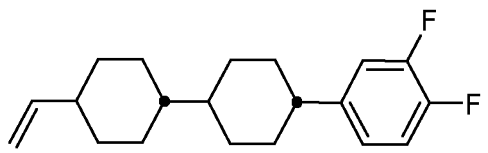

XVa

Preferably the mixture comprises 1 to 10% of one or more compounds of formula XV or its subformulae.

h) The LC medium comprises one or more compounds selected from the following formulae:

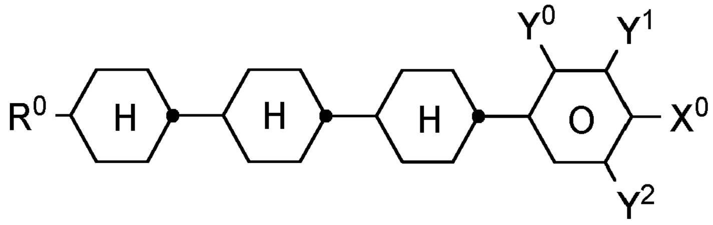

XVI

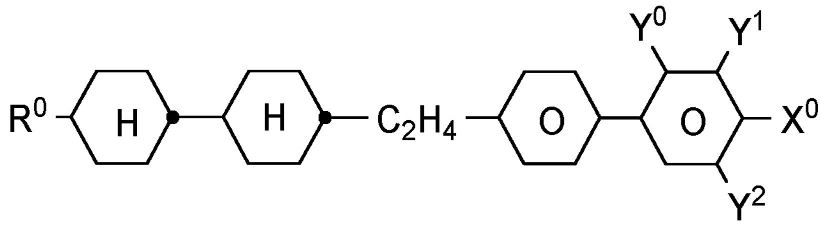

XVII

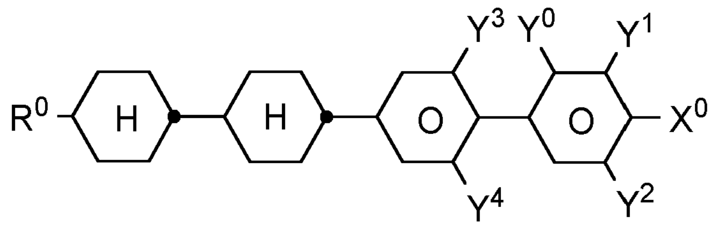

XVIII

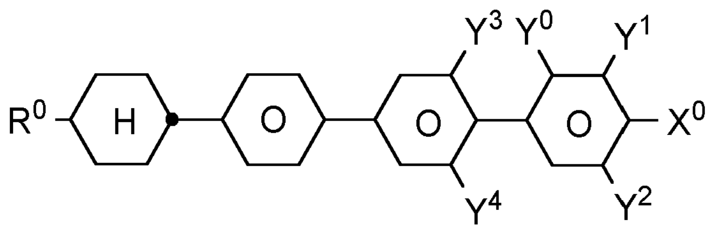

XIX

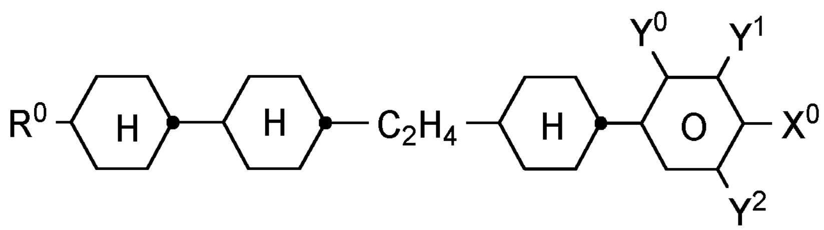

XX

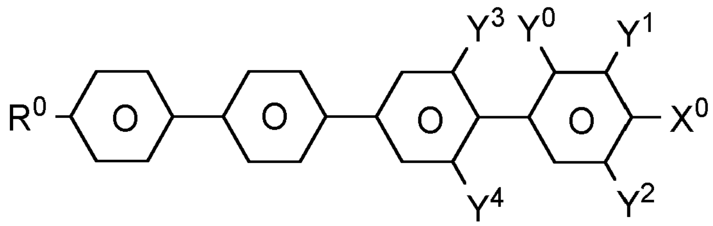

XXI

in which $R^0$, $X^0$ and $Y^0$ each, independently of one another, have one of the meanings indicated above, and $Y^{1-4}$ each, independently of one another, denote H or F. $Y^0$ is preferably H or $CH_3$, very preferably H. X° is preferably F, Cl, $CF_3$, $OCF_3$ or $OCHF_2$. $R^0$ preferably denotes alkyl, alkoxy, oxaalkyl, fluoroalkyl or alkenyl, each having up to 6 C atoms.

The total proportion of compounds selected from the formulae XVI to XIX in the mixture as a whole is preferably from 1 to 25 % by weight. The individual proportion of a compound selected from the formulae IV to VIII or their subformulae in the mixture as a whole is preferably from 1 to 15% by weight.

Very preferably the LC medium comprises one or more compounds of formula XVII selected from subformula XVIIIa,

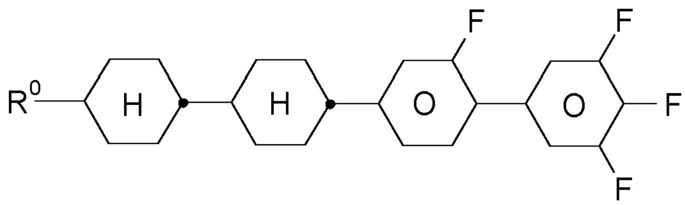

XVIIIa

in which $R^0$ has the meanings indicated above. $R^0$ preferably denotes straight-chain alkyl, in particular ethyl, n-propyl, n-butyl or n-pentyl and very particularly preferably n-propyl.

The compound(s) of the formula XVIII, in particular of the formula XVIIIa, is (are) preferably employed in the mixtures according to the invention in amounts of 1-15% by weight, particularly preferably 2-10% by weight.

Further preferably the LC medium comprises one or more compounds of formula XIX selected from subformula XIXa,

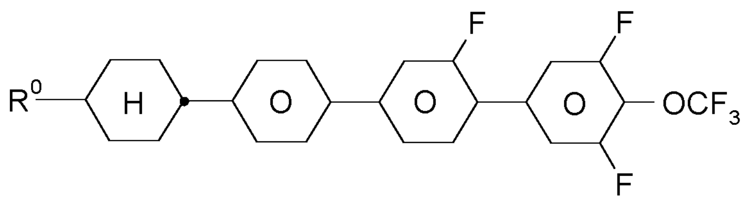

XIXa

in which $R^0$ has the meanings indicated above. $R^0$ preferably denotes straight-chain alkyl, in particular ethyl, n-propyl, n-butyl or n-pentyl and very particularly preferably n-propyl.

The compound(s) of the formula XIX, in particular of the formula XIXa, is (are) preferably employed in the mixtures according to the invention in amounts of 1-15% by weight, particularly preferably 2-10% by weight.

Further preferably the LC medium comprises one or more compounds of formula XX selected from subformula XXIa,

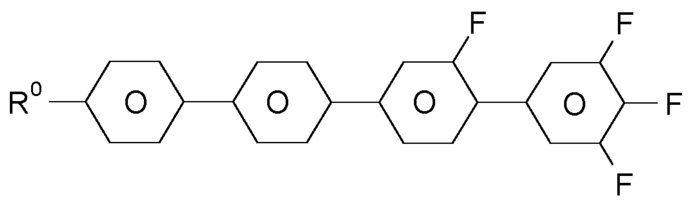

XXIa

in which $R^0$ has the meanings indicated above. $R^0$ preferably denotes straight-chain alkyl, in particular ethyl, n-propyl, n-butyl or n-pentyl and very particularly preferably n-propyl.

The compound(s) of the formula XXI, in particular of the formula XXIa, is (are) preferably employed in the mixtures according to the invention in amounts of 0.5-5% by weight, particularly preferably 0.5-2% by weight.

ik The LC medium comprises one or more compounds of the formula XXII,

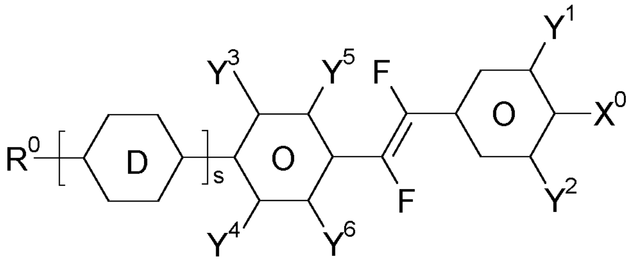

XXII

in which $R^0$, $X^0$ and $Y^{1-6}$ have the meanings indicated in formula I, s denotes 0 or 1, and

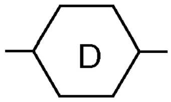

denotes

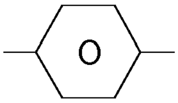 , 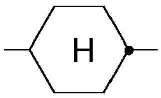 or 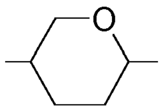 .

In the formula XXII, $X^0$ may also denote an alkyl radical having 1-6 C atoms or an alkoxy radical having 1-6 C atoms. The alkyl or alkoxy radical is preferably straight-chain.

$R^0$ preferably denotes alkyl having 1 to 6 C atoms. $X^0$ preferably denotes F;

The compounds of the formula XXII are preferably selected from the following subformulae:

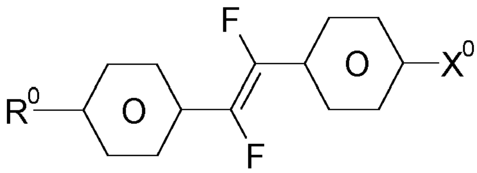

XXIIa

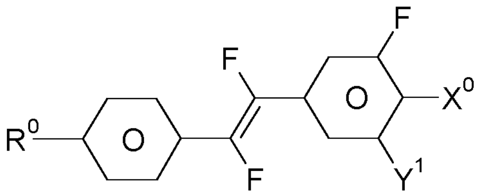

XXIIb

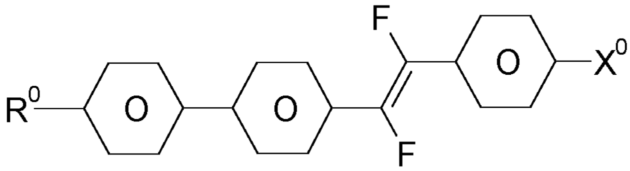

XXIIc

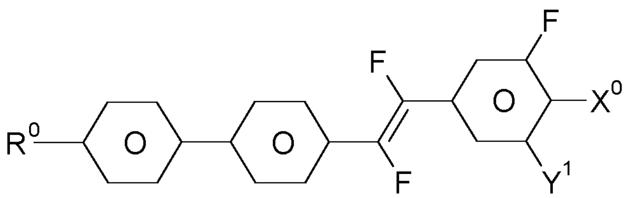

XXIId

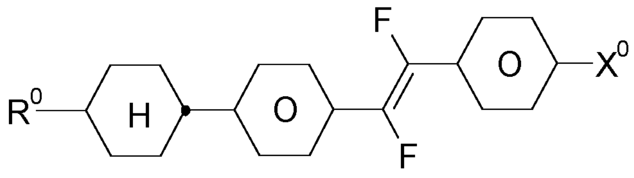

XXIIe

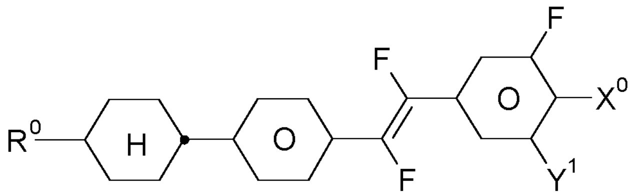

XXIIf

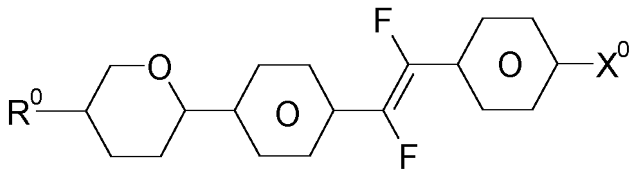

XXIIg

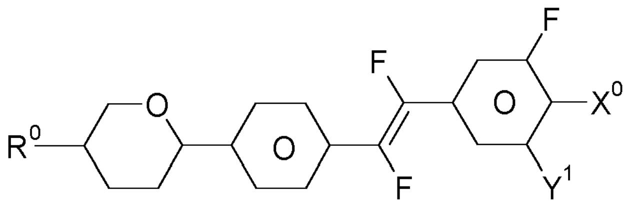

XXIIh

in which $R^0$, $X^0$ and $Y^1$ have the meanings indicated above. $R^0$ preferably denotes alkyl having 1 to 6 C atoms. $X^0$ preferably denotes F, and $Y^1$ is preferably F;

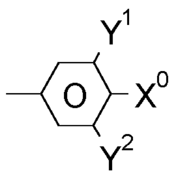

is preferably

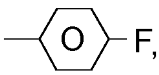, 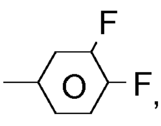, 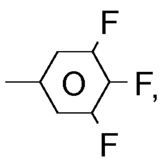,

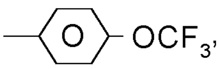, 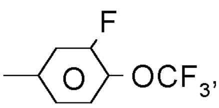, 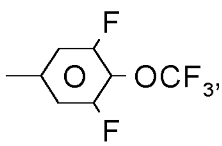, 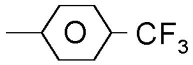,

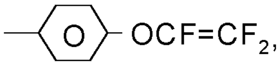, 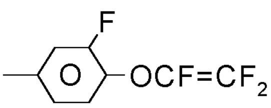, 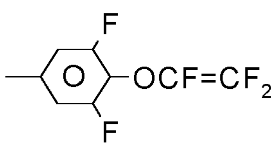,

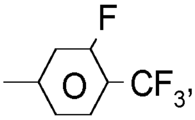, 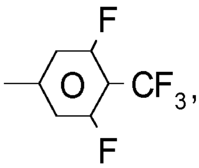, 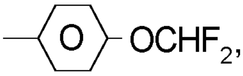, 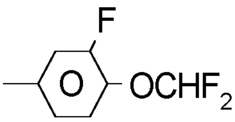,

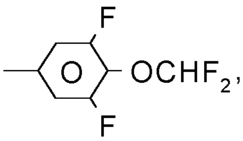, 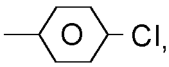, 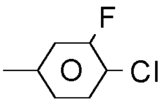 or 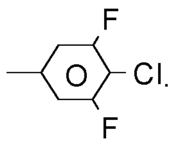.

$R^0$ is straight-chain alkyl or alkenyl having 2 to 6 C atoms;

l) The LC medium comprises one or more compounds selected from the following formulae:

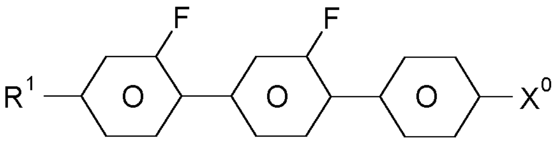

XXIII

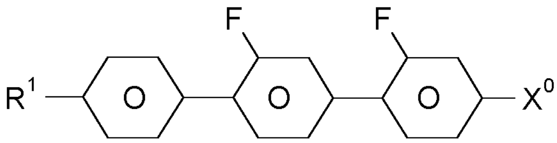

XXIV

in which $R^1$ and $X^0$ have the meanings indicated above. $R^1$ preferably denotes alkyl having 1 to 6 C atoms. $X^0$ preferably denotes F or Cl. In the formula XXIV, $X^0$ very particularly preferably denotes Cl.

l) The LC medium comprises one or more compounds selected from the following formulae:

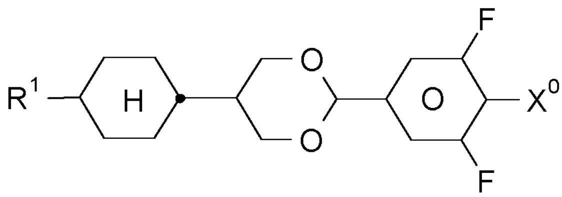

XXV

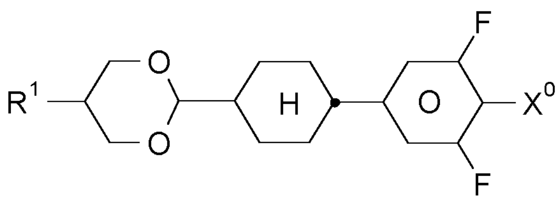

XXVI

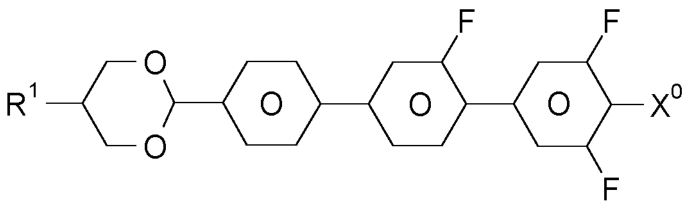

XXVII

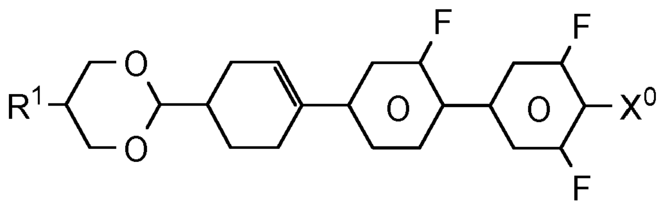

XXVIII

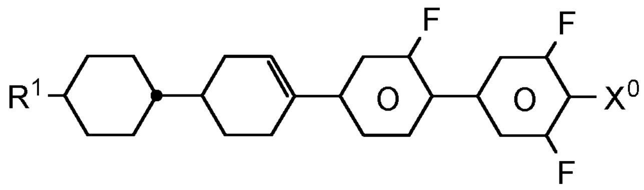

XXIX

in which $R^1$ has one of the meanings given for $R^0$ and $X^0$ has the meanings indicated above. $R^1$ preferably denotes alkyl having 1 to 6 C atoms. $X^0$ preferably denotes F. The medium according to the invention particularly preferably comprises one or more compounds selected from the formula XXVII to XXIX in which $X^0$ preferably denotes F.

The compound(s) of the formulae XXV to XXIVX is (are) preferably employed in the mixtures according to the invention in amounts of 1-20% by weight, particularly preferably 1-15% by weight.

Very preferably the LC medium comprises one or more compounds of selected from the following subformulae,

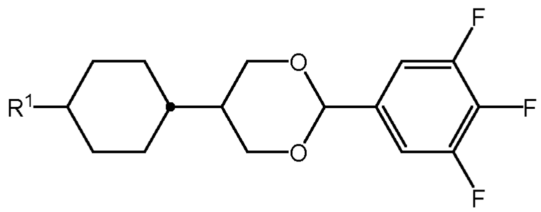

XXVa

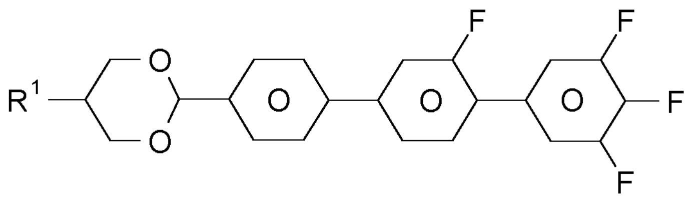

XXVIIa

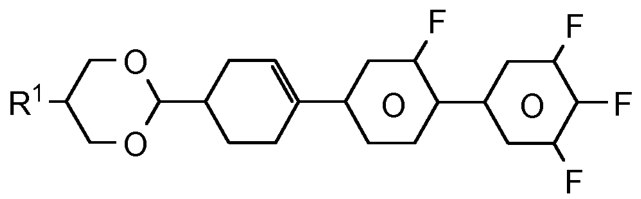

XXVIIIa

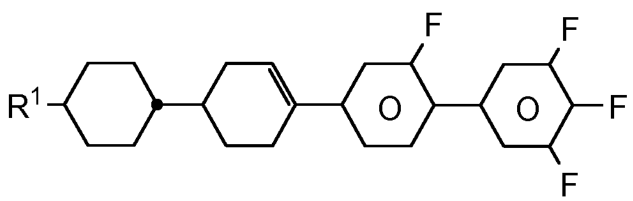

XXIXa

in which $R^1$ has the meanings indicated above, and preferably denotes straight-chain alkyl, in particular ethyl, n-propyl, n-butyl or n-pentyl and very particularly preferably ethyl or n-propyl.

The compound(s) of the formulae XXVa, XXXVIa, XXXVIIa, XXXVIIIa and XIXa is (are) preferably employed in the mixtures according to the invention in amounts of 1-15% by weight, particularly preferably 2-10% by weight.

m) The LC medium comprises one or more compounds selected from the following formulae:

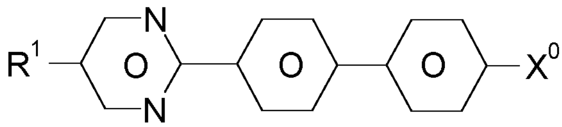

XXX

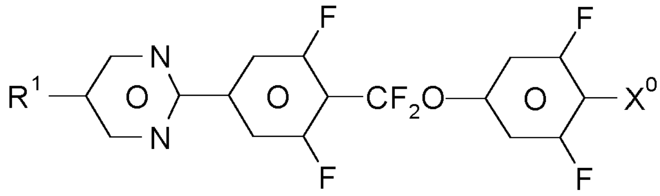

XXXI

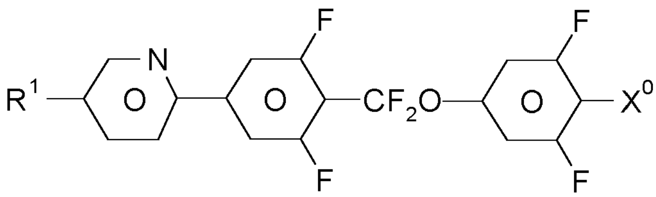

XXXII

in which $R^1$ and $X^0$ have the meanings indicated above. $R^1$ preferably denotes alkyl having 1 to 6 C atoms. $X^0$ preferably denotes F. The medium according to the invention particularly preferably comprises one or more compounds of the formula XXX, in which $X^0$ preferably denotes F. The compound(s) of the formulae XXX to XXXII is (are) preferably employed in the mixtures according to the invention in amounts of 1-20% by weight, particularly preferably 1-15% by weight.

n) The LC medium comprises one or more compounds of the following formula:

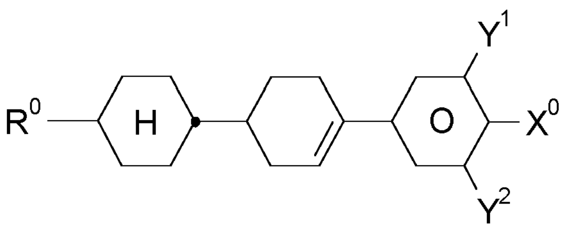

XXXIII

in which $R^0$ and X° and $Y^{1,2}$ have the meanings indicated above.

$X^0$ is preferably F, Cl, $CF_3$, $OCF_3$ or $OCHF_2$. $Y^{1-4}$ each, independently of one another, preferably denote H or F. $R^0$ preferably denotes alkyl, alkoxy, oxaalkyl, fluoroalkyl or alkenyl, each having up to 6 C atoms.

Very preferably the LC medium comprises one or more compounds of formula XXXIII selected from subformula XXXIIIa,

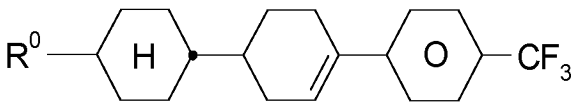

XXXIIIa

in which $R^0$ has the meanings indicated above. $R^0$ preferably denotes straight-chain alkyl, in particular ethyl, n-propyl, n-butyl or n-pentyl and very particularly preferably n-propyl.

The compound(s) of the formula XXXIII, in particular of the formula XXXIIIa, is (are) preferably employed in the mixtures according to the invention in amounts of 1-15% by weight, particularly preferably 2-10% by weight.

o) The LC medium comprises one or more compounds selected from the following formula:

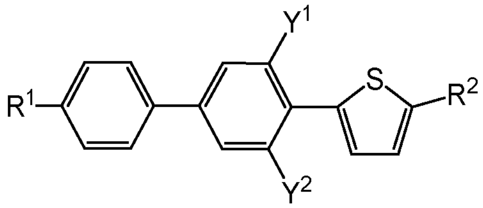

XXXIV

in which $R^1$, $R^2$, $Y^1$ and $Y^2$ have the meanings indicated above. $R^1$ and $R^2$ preferably denote straight-chain or cyclic alkyl with 1 to 7 C atoms. $Y^1$ and $Y^2$ preferably denote F.

Preferred compounds of formula XXXIV are selected from the following formulae:

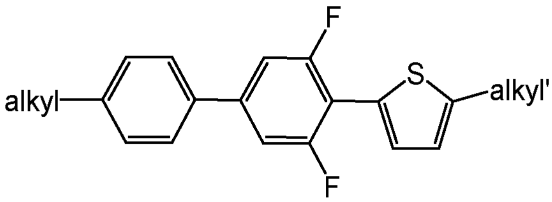

XXXIVa

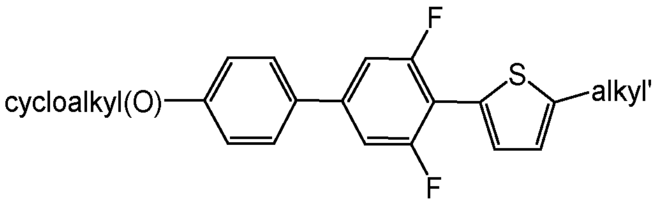

XXXIVb

wherein alkyl and alkyl' denote straight-chain alkyl with 1 to 5 C atoms, and cycloalkyl(O) is selected from the group consisting of

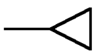, 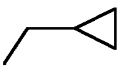, 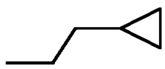, 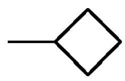, 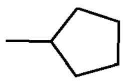,

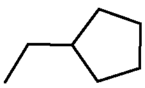, 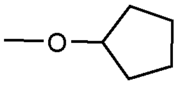, 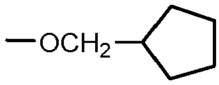.

The compound(s) of the formula XXXIV, preferably of formula XXXIVa and/or XXXIVb, is (are) preferably employed in the mixtures according to the invention in amounts of 1-40 % by weight, particularly preferably 2-25% by weight.

The LC medium according to the invention preferably comprises

- one or more compounds of formula I, preferably selected from subformulae I1 to I14, very preferably from subformulae I5 and I12, preferably in a total concentration from 1 to 50%, very preferably from 2 to 30%, most preferably from 2 to 15% by weight;
  and/or
- one or more compounds selected from formulae II and III or their subformulae, preferably in a total concentration from 1 to 15%, very preferably from 1 to 10%, most preferably from 1 to 5%;
  and/or
- one or more compounds selected from formulae IV to VIII or their subformulae, preferably in a total concentration from 1% to 25%, very preferably from 2% to 15%;
  and/or
- one or more compounds of formula IX or its subformulae, preferably in a total concentration from 15 to 70%, very preferably from 20 to 65%, most preferably from 25 to 50% by weight;
  and/or
- one or more compounds selected from formulae X to XII or their subformulae, preferably in a total concentration from 1% to 25%, very preferably from 2% to 15%;

and/or

- one or more compounds of formula XIII or its subformulae, preferably in a total concentration from 1% to 25%, very preferably from 2% to 20%;
  and/or
- one or more compounds of formula XXVIII or its subformulae, preferably in a total concentration from 1% to 25%, very preferably from 2% to 15%;
  and/or
- one or more compounds of formula XXXIII or its subformulae, preferably in a total concentration from 1% to 25%, very preferably from 2% to 15%;

In particular, the LC medium comprises

- one or more compounds selected from the group consisting of CC-3-V, CC-4-V and CC-5-V, preferably in a total concentration of 5 to 60%, more preferably from 10% to 50% based on the mixture as a whole;
  and/or
- one or more compounds selected from the group consisting of CC-2-V1, CC-3-V1, CC-3-V2, CC-3-2V1, CC-4-V1, preferably in a total concentration of 2 to 30%, more preferably from 3% to 25% based on the mixture as a whole;
  and/or
- one or more compound(s) selected from the group consisting of CC-1-3, CC-2-3, CC-3-4, CC-3-5, CC-3-O1, CC-3-O3 and CC-5-O1, preferably in a total concentration of 3 to 40%, preferably 3 to 25% based on the mixture as a whole;
  and/or
- one or more compound(s) CCP-n-m and/or CCP-Vn-m and/or CPP-n-m, preferably selected from the group consisting of CCP-3-1, CCP-V-1, CCP-V2-1 and CPP-3-2, preferably in a total concentration of 3 to 35%, preferably 4 to 25% based on the mixture as a whole;
  and/or
- one or more compound(s) CP-n-m and/or CP-n-Om, preferably selected from the group consisting of CP-5-3, CP-3-1, CP-3-O1 and CP-5-O3, preferably in a total concentration of 2 to 15%, preferably 3 to 10% based on the mixture as a whole;
  and/or
- one or more compound(s) CLP-n-m and/or CLP-Vn-m, preferably selected from the group consisting of CLP-3-1, CLP-3-2 and CLP-V-1, preferably in a total concentration of 2 to 15%, preferably 2 to 10% based on the mixture as a whole;
  and/or
- one or more compound(s) CCVC-n-m and/or CCVC-n-V, preferably CCVC-3-V, preferably in a total concentration of 2 to 15%, preferably 2 to 10% based on the mixture as a whole;
  and/or
- one or more compounds PGP-n-m and/or PGP-n-2V, preferably selected from the group consisting of PGP-2-3, PGP-2-4, PGP-2-5, PGP-3-5, PGP-1-2V, PGP-2-2V and PGP-3-2V, preferably in a total concentration of 2 to 30%, very preferably 4% to 20%, based on the mixture as a whole;
  and/or
- one or more compound(s) PP-n-m and/or PP-n-nVm, preferably selected from the group consisting of PP-1-3, PP-1-4, PP-1-5, PP-1-2V and PP-1-2V1, preferably in a total concentration of 1 to 15%, preferably 2 to 10% based on the mixture as a whole
  and/or
- one or more compounds CCQU-n-F and/or PUQU-n-F and/or ACQU-n-F, in particular CCQU-3-F and/or PUQU-3-F and/or ACQU-3-F, preferably in a total concentration from 1% to 15%, preferably 1% to 10%, based on the mixture as a whole;
  and/or
- one or more compounds APUQU-n-F and/or DUQU-n-F and/or PGUQU-n-F and/or DGUQU-n-F and/or CDUQU-n-F and/or DLUQU-n-F and/or CLUQU-n-F, in particular APUQU-3-F and/or PGUQU-3-F and/or DGUQU-3-F and/or CDUQU-3-F and/or DLUQU-3-F and/or CLUQU-3-F, preferably in a total concentration from 1% to 15%, preferably 1% to 10%, based on the mixture as a whole;
  and/or
- one or more compounds BCH-3F.F.F, CCP-nF.F.F and/or CCP-n0CF3, in particular CCP-1F.F.F, CCP-2F.F.F, CCP-3F.F.F and/or CCP-30CF3, preferably in a total concentration from 3% to 35%, preferably 4% to 30%, based on the mixture as a whole;
  and/or
- one or more compounds PGU-n-F, in particular PGU-2-F and/or PGU-3-F and/or CLP-3-T, preferably in a total

concentration from 5% to 35%, preferably 10% to 30%, based on the mixture as a whole;
and/or

- one or more compounds CPGU-n-OT and/or DPGU-n-F and/or PPGU-n-F, in particular CPGU-3-OT and/or DPGU-3-F and/or PPGU-3-F, preferably in a total concentration from 1% to 25%, preferably 1% to 15%, based on the mixture as a whole;
  and/or
- one or more compounds DLGU-n-F, in particular DLGU-3-F, preferably in a total concentration from 1% to 25%, preferably 1% to 15%, based on the mixture as a whole;
  and/or
- one or more compounds CLP-3-T and/or CCG-V-F, preferably in a total concentration from 2% to 25%, preferably 3% to 15%, based on the mixture as a whole;
  and/or
- one or more compounds PUS-n-m and/or PUS-(cn)-m and/or PUS-(Cn)m-m, in particular PUS-3-2 and/or PUS-(c5)-2, preferably in a total concentration from 2% to 25%, preferably 3% to 15%, based on the mixture as a whole.

The LC media according to the invention preferably have a nematic phase down to -20°C very preferably down to -30°C, most preferably down to -40°C.

The expression "have a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in bulk for at least 120 hours. If the storage stability at a temperature of -20°C in a corresponding test cell is 1000 h or more, the LC medium is referred to as stable at this temperature. At temperatures of -30°C and -40°C, the corresponding times are 500 h and 250 h respectively. At high temperatures, the clearing point is measured by conventional methods in capillaries.

The LC media according to the invention preferably have a clearing point ≥ 85°C, very preferably ≥ 95°C, most preferably ≥105°C.

The nematic phase range of the LC media according to the invention preferably has a width of at least 100°, more preferably of at least 110 °C, in particular at least 130°. This range preferably extends at least from -25° to +105°C.

The LC media according to the invention preferably have a rotational viscosity $\gamma_1$ of ≤ 130 mPa·s, very preferably ≤ 115 mPa·s, enabling excellent MLC displays having fast response times to be achieved. The rotational viscosities are determined at 20°C.

The dielectric anisotropy $\Delta\varepsilon$ of the LC media according to the invention at 20°C and 1 kHz is preferably ≥ +2, very preferably from +2.5 to +6.

The birefringence $\Delta n$ of the LC media according to the invention at 20°C is preferably in the range of from 0.080 to 0.170, more preferably from 0.090 to 0.160, particularly preferably 0.100 to 0.150.

The rotational viscosity $\gamma_1$ of the LC media according to the invention at 20°C is preferably ≤ 95 mPa·s, more preferably ≤ 85 mPa·s, very preferably ≤ 75 mPa·s.

The LC media according to the invention have relatively low values for the threshold voltage ($V_0$). They are preferably in the range from 1.7 V to 3.0 V, more preferably ≤ 2.7 V and very preferably ≤ 2.5 V.

For the present invention, the term "threshold voltage" relates to the capacitive threshold ($V_0$), also called the Freedericks threshold, unless explicitly indicated otherwise.

In addition, the LC media according to the invention have high values for the voltage holding ratio in LC cells.

In general, LC media having a low addressing voltage or threshold voltage exhibit a lower voltage holding ratio than those having a higher addressing voltage or threshold voltage and vice versa.

Preference is generally given to LC media which have a nematic LC phase, and preferably have no chiral liquid crystal phase.

The LC media according to the invention enable a significant broadening of the available parameter latitude. The achievable combinations of clearing point, viscosity at low temperature, thermal and UV stability and high optical anisotropy are far superior to previous materials from the prior art.

The LC media according to the invention are suitable for mobile applications and TFT applications, such as, for example, mobile telephones and PDAs. Furthermore, the LC media according to the invention are particularly suitably for use in FFS, HB-FFS and IPS displays.

The invention further relates to the use of the LC medium as described above and below for electro-optical purposes, in particular for the use in LC displays, shutter glasses and for 3D applications, preferably in LC displays of the IPS, FFS, HB-FFS, U-IPS, TN, STN, TN-TFT, PS-IPS, PS-FFS or PS-TN mode, and to electrooptical displays, in particular an LC display of one of the aforementioned modes, containing an LC medium according to the present invention as described above and below.

The invention also relates to electro-optical displays, such as, for example, STN or MLC displays, having two plane-parallel outer plates, which, together with a frame, form a cell, integrated non-linear elements for switching individual pixels on the outer plates, and a nematic LC mixture having positive dielectric anisotropy and high specific resistance located in the cell, wherein the a nematic LC mixture is an LC medium according to the present invention as described above and below.

In another preferred embodiment of the present invention the LC medium contains one or more stabilisers.

Preferred stabilisers are selected from the compounds of formula H

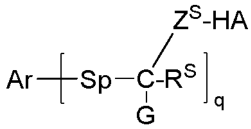

H

in which

| | |
|---|---|
| Ar | denotes an aromatic or heteroaromatic hydrocarbon group having 4 to 40 C atoms, preferably 6 to 30 C atoms; |
| Sp | denotes a spacer group; |
| $R^S$ | denotes H, alkyl having 1 to 12 C atoms or alkenyl having 2 to 12 C atoms; |
| $Z^S$ | denotes -O-, -C(O)O-, $-(CH_2)_z-$ or $-(CH_2)_zO-$, or a single bond; |
| HA | denotes 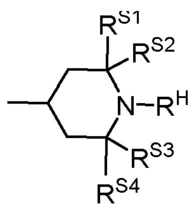 ; |
| $R^H$ | denotes H, O·, $CH_3$, OH or $OR^S$, preferably H or O·; |
| $R^{S1}$ $R^{S2}$, $R^{S3}$ and $R^{S4}$, | identically or differently, denote alkyl having 1 to 6 C atoms, preferably having 1 to 3 C atoms, very preferably $CH_3$; |
| G | denotes H or $R^S$ or a group $Z^S$-HA; |
| z | is an integer from 1 to 6; and |
| q | is 3 or 4. |

The compounds of formula H are described in EP3354710 A1 and EP3354709 A1.

Preferred compounds of formula H are selected from the formulae H-1, H-2 and H-3:

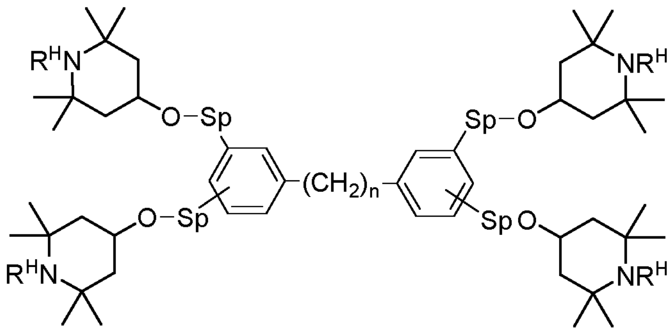

H-1

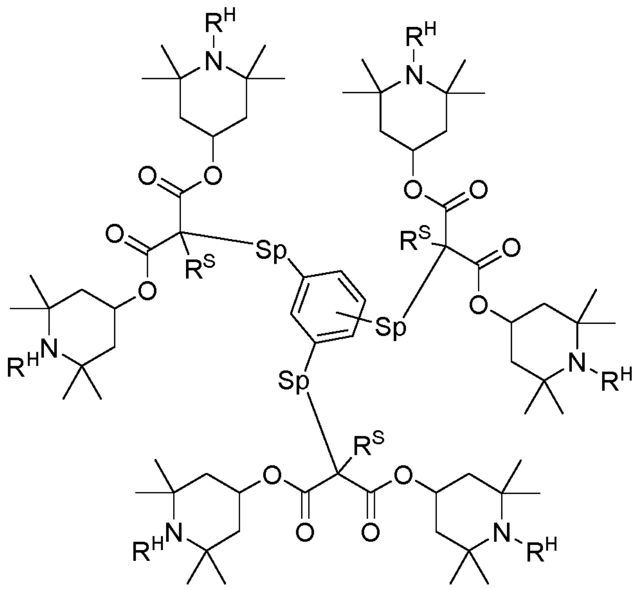

H-2

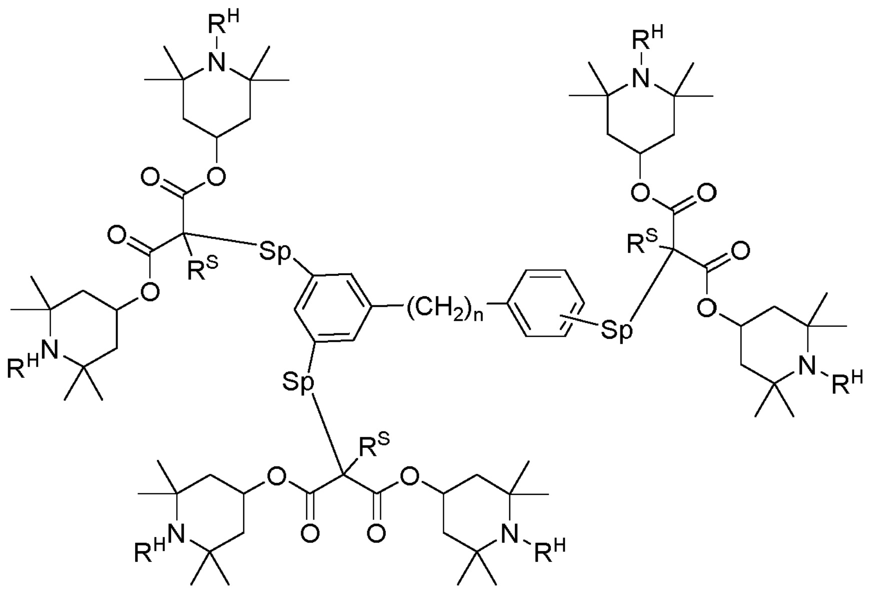

H-3

in which $R^H$ has the meanings given above and preferably denotes H or O·, and n is an integer from 0 to 12, preferably 5, 6, 7, 8 or 9, very preferably 7, and Sp denotes a spacer group, preferably alkylene having 1 to 12 C atoms in which one or more non-adjacent $-CH_2-$ groups may be replaced with -O-.

Preferred compounds of formula H-1 are those of formula H-1-1:

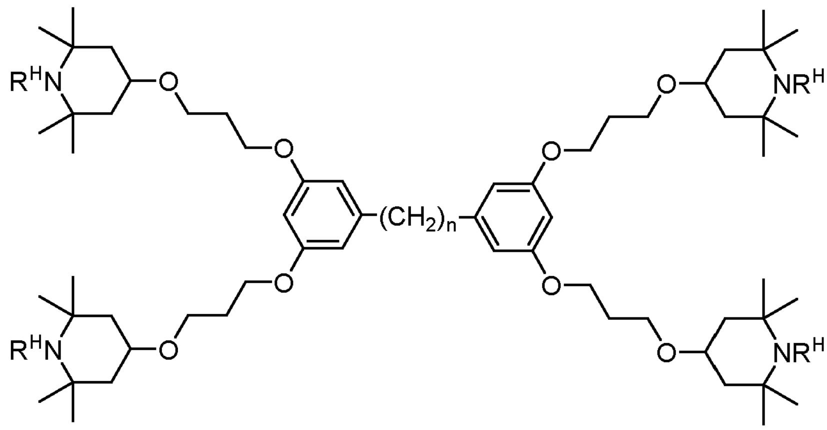

H-1-1

in which $R^H$ has the meanings given above and preferably denotes H or O·, and n is an integer from 0 to 12, preferably 5, 6, 7, 8 or 9, very preferably 7.

Very preferred compounds of formula H-1-1 are those of formula H-1-1-1:

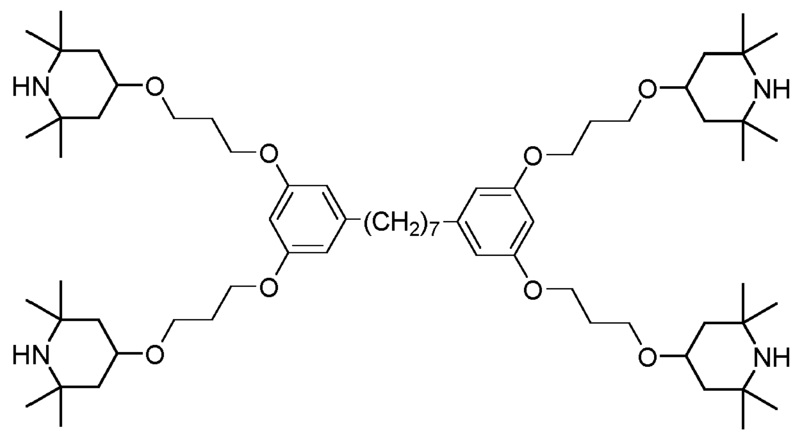

H-1-1-1

Preferred compounds of formula H-2 are those of formula H-2-1:

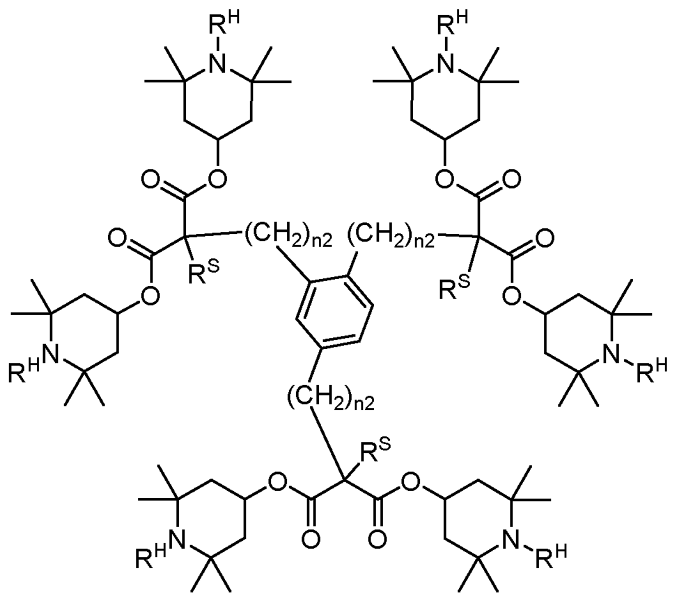

H-2-1

in which $R^H$ has the meanings given above and preferably denotes H or O·, and n2, on each occurrence identically or differently, preferably identically, is an integer from 1 to 12, preferably 2, 3, 4, 5, or 6, very preferably 3, and $R^S$ on each

occurrence identically or differently, preferably identically, denotes alkyl having 1 to 6 C atoms, preferably n-butyl.

Very preferred compounds of formula H-2-1 are those of formula H-2-1-1:

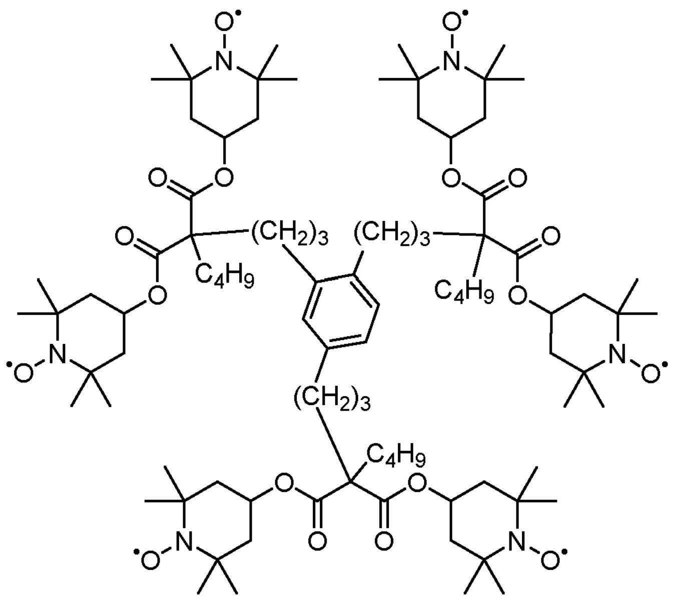

H-2-1-1

Preferred compounds of formula H-3 are selected from the formula H-3-1:

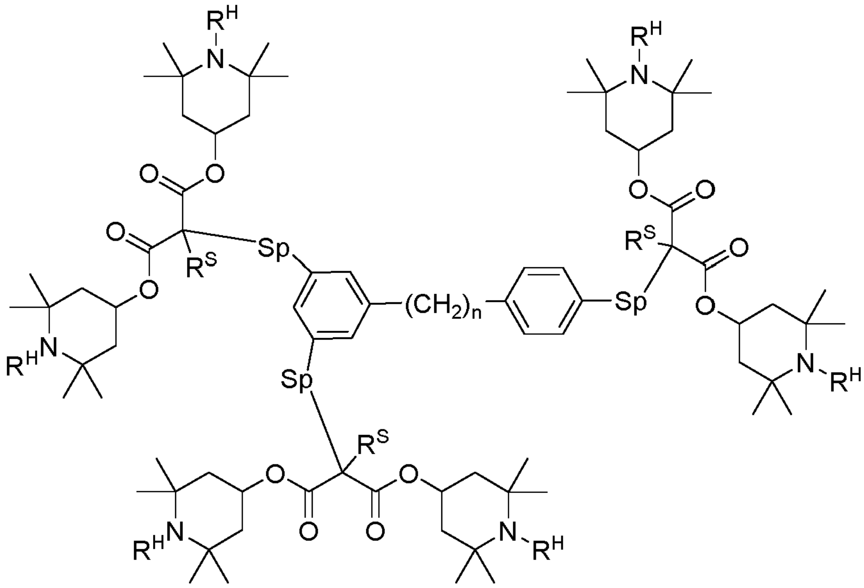

H-3-1

in which Sp and $R^H$ have the meanings given above and $R^H$ preferably denotes H or O·, and n is an integer from 0 to 12, preferably 5, 6, 7, 8 or 9, very preferably 7.

Further preferred stabilisers are selected from the group consisting of the formulae ST-1 to ST-18:

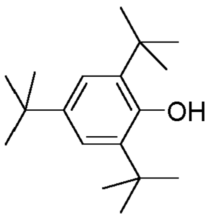

ST-1

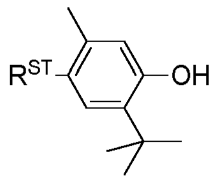

ST-2

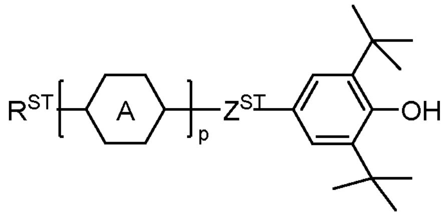

ST-3

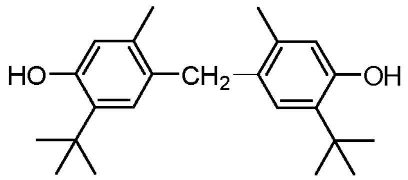

ST-4

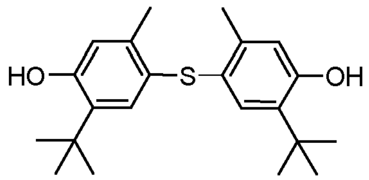

ST-5

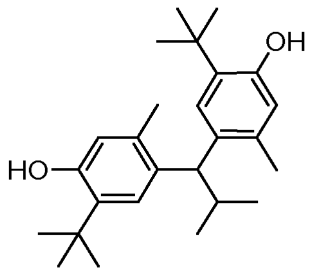

ST-6

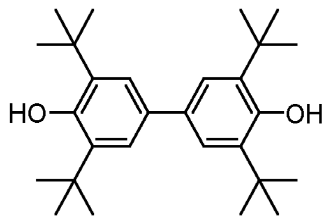

ST-7

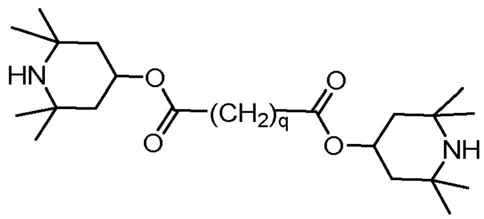

ST-8

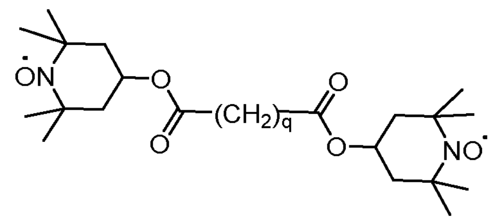

ST-9

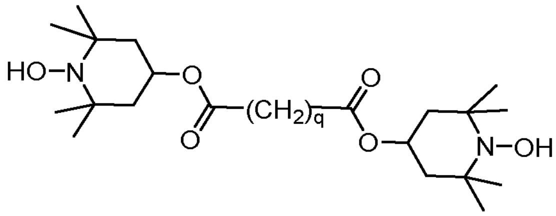

ST-10

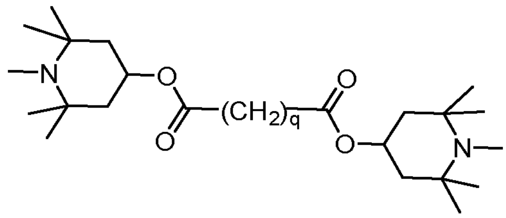

ST-11

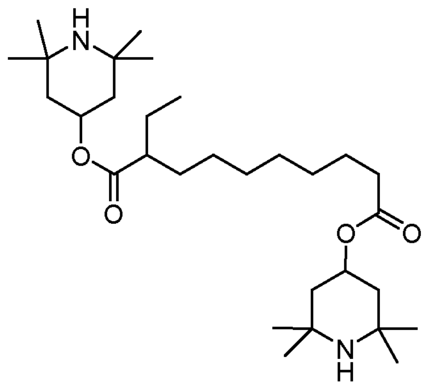

ST-12

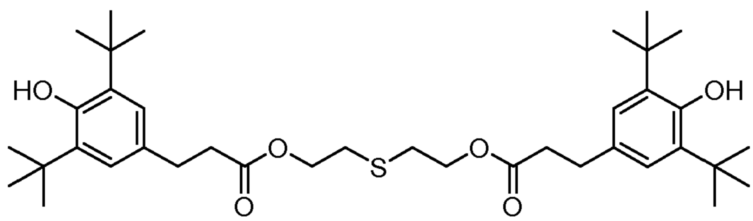

ST-13

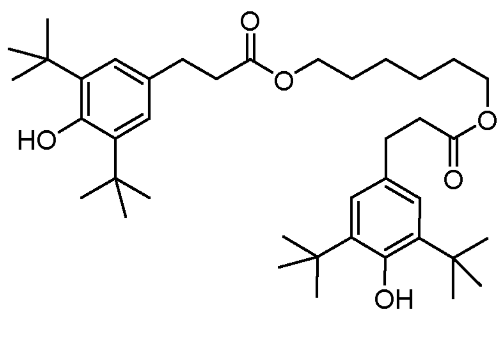

ST-14

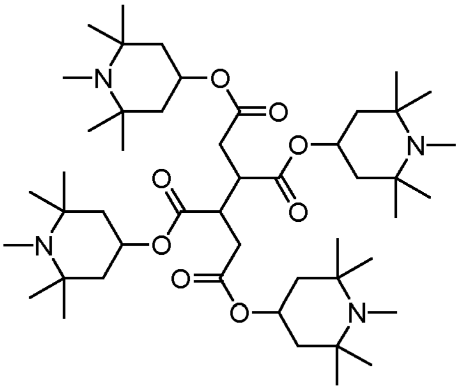

ST-15

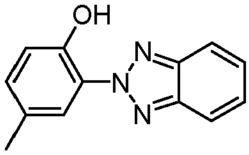

ST-16

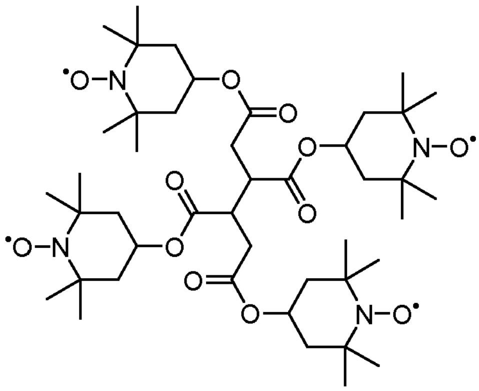

ST-17

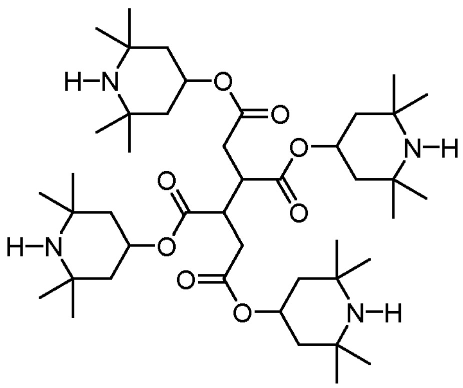

ST-18

in which

$R^{ST}$ denotes H, an alkyl or alkoxy radical having 1 to 15 C atoms, wherein, in addition, one or more $CH_2$ groups may each be replaced, independently of one another, by -C≡C-, $-CF_2O-$, $-OCF_2-$, -CH=CH-,

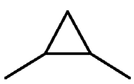, 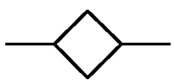 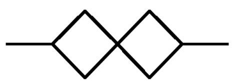, 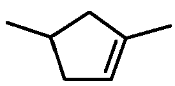, 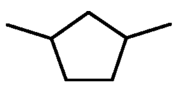,

,

-O-, -CO-O-, -O-CO- in such a way that O atoms are not linked directly to one another, and in which, in

addition, one or more H atoms may be replaced by halogen, , on each occurrence, identically or differently, denotes

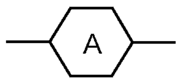

or

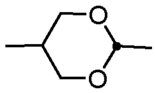

,

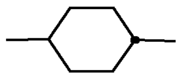

$Z^{ST}$ each, independently of one another, denote -CO-O-, -O-CO-, $-CF_2O-$, $-OCF_2-$, $-CH_2O-$, $-OCH_2-$, $-CH_2-$, $-CH_2CH_2-$, $-(CH_2)_4-$, -CH=CH-, $-CH_2O-$, $-C_2F_4-$, $-CH_2CF_2-$, $-CF_2CH_2-$, -CF=CF-, -CH=CF-, -CF=CH-, -CH=CH-, -C≡C- or a single bond,

$L^1$ and $L^2$ each, independently of one another, denote F, Cl, $CH_3$, $CF_3$ or $CHF_2$,

p denotes 0, 1 or 2,

q denotes 1, 2, 3, 4, 5, 6, 7, 8, 9 or 10.

Preferred compounds of formula ST are those selected from the formulae ST-3 and in particular:

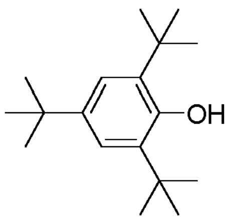

ST-1

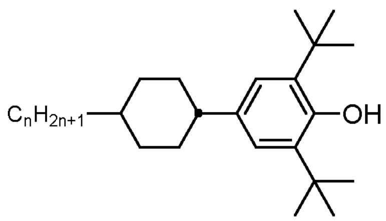

ST-3a

in which n = 1 2 3 4 5, 6 or 7 preferably n = 3

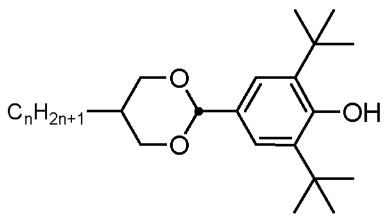

ST-3b

in which n = 1 2 3 4 5, 6 or 7 preferably n = 3

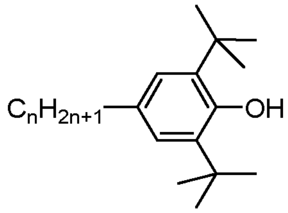

ST-3c

in which n = 1, 2, 3, 4, 5, 6 or 7, preferably n = 1 or 7

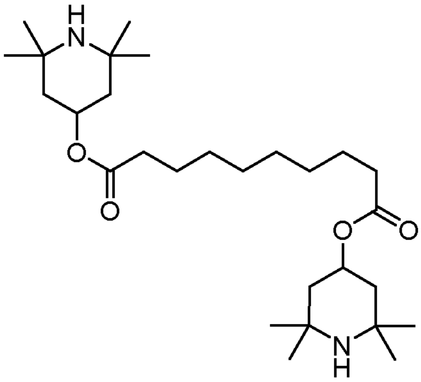

ST-8-1

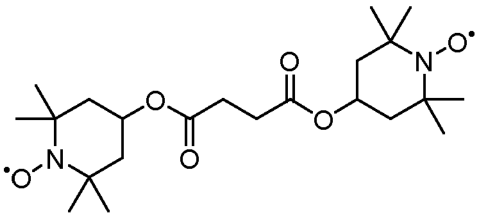

ST-9-1

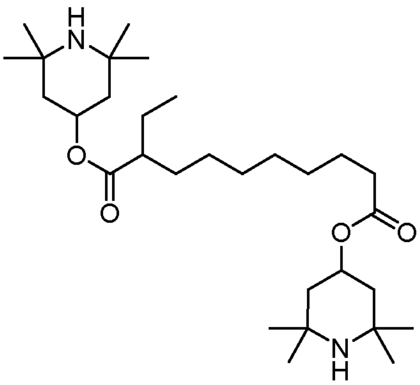

ST-12

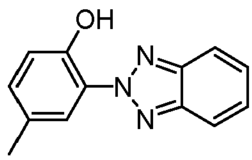

ST-16

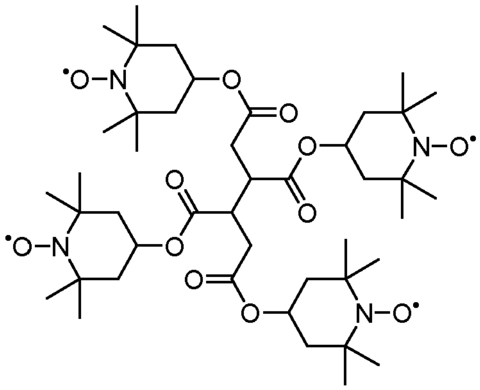

ST-17

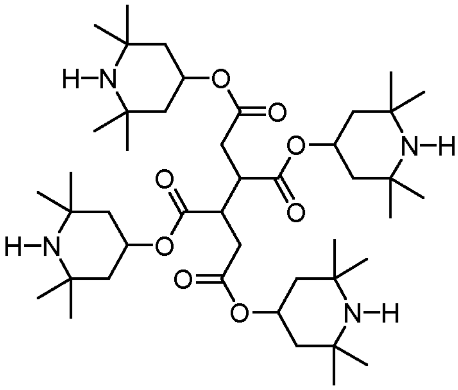

ST-18

In the compounds of the formulae ST-3a and ST-3b, n preferably denotes 3. In the compounds of the formula ST-2a, n preferably denotes 7.

Very preferred stabilisers are selected from the group of the compounds of the formulae ST-2a-1, ST-3a-1, ST-3b-1, ST-8-1, ST-9-1 and ST-12:

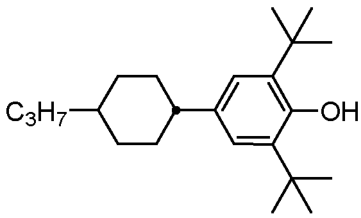

ST-3a-1

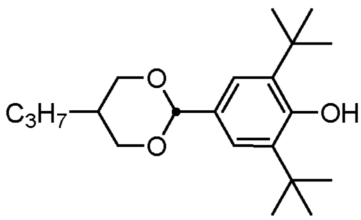

ST-3b-1

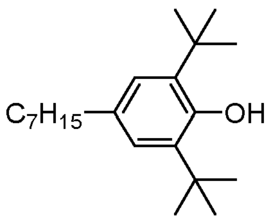

ST-3c-1

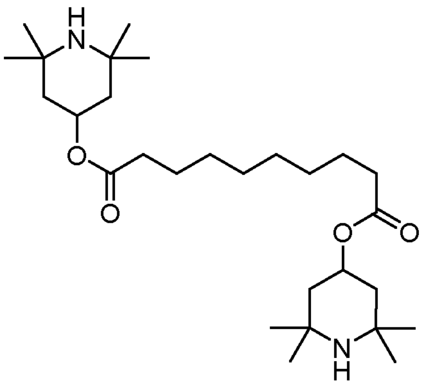

ST-8-1

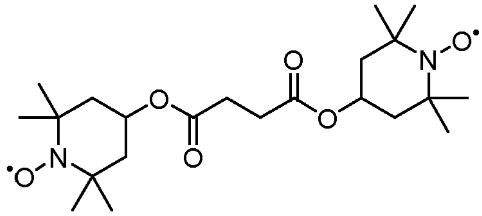

ST-9-1

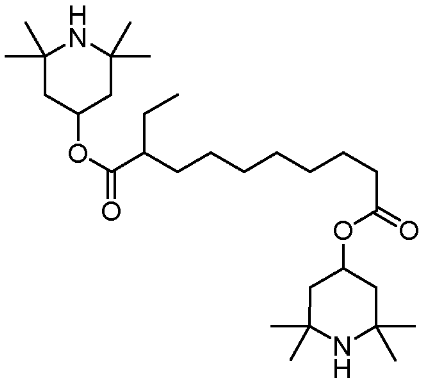

ST-12

In another preferred embodiment the LC medium comprises one or more stabilisers selected from Table D below.

Preferably the proportion of stabilisers in the LC medium is from 10 to 500 ppm, very preferably from 20 to 250 ppm.

In another preferred embodiment the LC medium comprises one or more polymerizable compounds, preferably selected from polymerizable mesogenic compounds, also known as "reactive mesogens" or RMs. These media are especially suitable for use in LC displays of the PS or PSA mode.

Preferred polymerizable compounds are selected from Table E below, especially selected from the group consisting of formulae RM-1, RM-4, RM-8, RM-17, RM-19, RM-35, RM-37, RM-39, RM-40, RM-41, RM-48, RM-52, RM-54, RM-57, RM-58, RM-64, RM-74, RM-76, RM-88, RM-91, RM-102, RM-103, RM-109, RM-116, RM-117, RM-120, RM-121, RM-122, RM-139, RM-140, RM-142, RM-143, RM-145, RM-146, RM-147, RM-149, RM-156 to RM-163, RM-169, RM-170 and RM-171 to RM-183.

The invention furthermore relates to an LC medium or LC display as described above, wherein the polymerizable compounds, like those of formula M and its subformulae, are present in polymerized form.

Optionally one or more polymerization initiators are added to the LC medium. Suitable conditions for the polymerization and suitable types and amounts of initiators are known to the person skilled in the art and are described in the literature. Suitable for free-radical polymerization are, for example, the commercially available photoinitiators Irgacure651®, Irgacure184®, Irgacure907®, Irgacure369® or Darocure1173® (Ciba AG). If a polymerization initiator is employed, its proportion is preferably 0.001 to 5% by weight, particularly preferably 0.001 to 1% by weight.

The invention furthermore relates to an LC display comprising an LC medium according to the invention comprising one or more polymerizable compounds as described above and below, preferably a display of the PS or PSA mode, very preferably a PS-IPS, PS-FFS, PS-HB-FFS or PS-TN mode display, and wherein the polymerizable compounds are preferably present in polymerized form.

For the production of PS or PSA displays, the polymerizable compounds contained in the LC medium are

polymerized by in-situ polymerization in the LC medium between the substrates of the LC display, preferably while a voltage is applied to the electrodes. This can be achieved by methods known to the skilled person and disclosed in prior art.

The LC medium according to the present invention may additionally comprise one or more further components or additives, preferably selected from the list including but not limited to stabilisers, surfactants, wetting agents, lubricating agents, dispersing agents, hydrophobing agents, adhesive agents, flow improvers, defoaming agents, deaerators, diluents, reactive diluents, auxiliaries, colourants, dyes, pigments and nanoparticles.

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

The individual components of the above-listed preferred embodiments of the LC media according to the invention are either known or methods for the preparation thereof can readily be derived from the prior art by the person skilled in the relevant art, since they are based on standard methods described in the literature. Corresponding compounds of the formula CY are described, for example, in EP-A-0 364 538. Corresponding compounds of the formula ZK are described, for example, in DE-A-26 36 684 and DE-A-33 21 373.

The LC media which can be used in accordance with the invention are prepared in a manner conventional per se, for example by mixing one or more of the above-mentioned compounds with one or more polymerizable compounds as defined above, and optionally with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing. The invention furthermore relates to the process for the preparation of the LC media according to the invention.

It goes without saying to the person skilled in the art that the LC media according to the invention may also comprise compounds in which, for example, H, **N,** O, Cl, F have been replaced by the corresponding isotopes like deuterium etc.

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

For the present invention and in the following examples, the structures of the LC compounds are indicated by means of acronyms. Unless stated otherwise, the transformation into chemical formulae is done in accordance with Tables A.1 to A.3 below. All radicals $C_nH_{2n+1}$, $C_mH_{2m+1}$ and $C_lH_{2l+1}$ or $C_nH_{2n}$, $C_mH_{2m}$ and $C_lH_{2l}$ are straight-chain alkyl radicals or alkylene radicals, in each case having n, m and l C atoms respectively. Preferably n, m and l are independently of each other 1, 2, 3, 4, 5, 6, or 7. Table A.1 shows the codes for the ring elements of the nuclei of the compound, Table A.2 lists the bridging units, and Table A.3 lists the meanings of the symbols for the left-and right-hand end groups of the molecules. The acronyms are composed of the codes for the ring elements with optional linking groups, followed by a first hyphen and the codes for the left-hand end group, and a second hyphen and the codes for the right-hand end group.

**Table A.1: Ring elements**

| | | | |
|---|---|---|---|
| **C** | 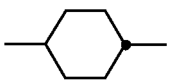 | | |
| **D** | 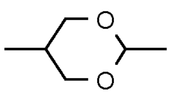 | **DI** | 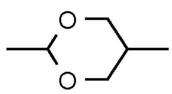 |
| **A** | 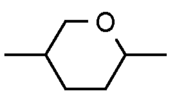 | **AI** | 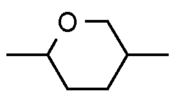 |
| **P** | 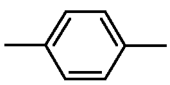 | | |
| **G** | 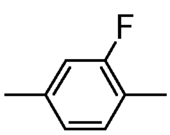 | **GI** | 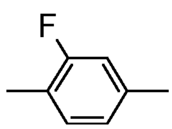 |

(continued)

| | | | |
|---|---|---|---|
| U | 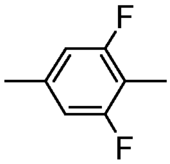 | Ul | 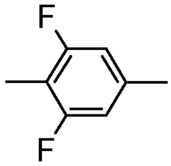 |
| Y | 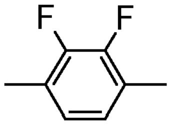 | | 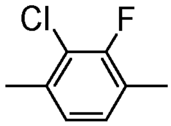 |
| P(F, Cl)Y | 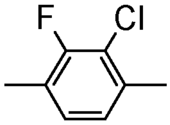 | P(Cl,F)Y | |
| np | 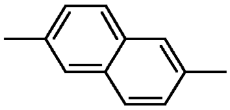 | | 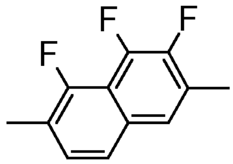 |
| n3f | 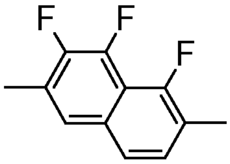 | nN3fl | |
| th | 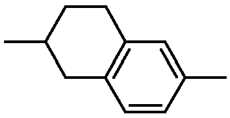 | thl | 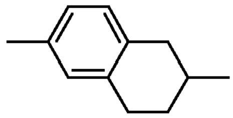 |
| tH2f | 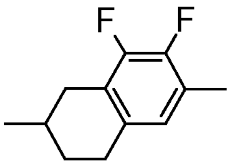 | tH2fl | 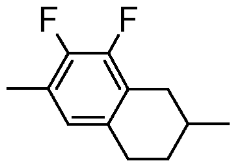 |
| o2f | 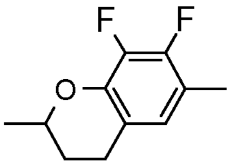 | o2fl | 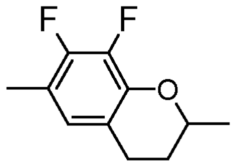 |
| dh | 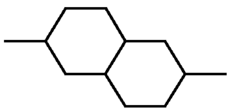 | nf | 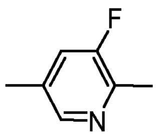 |
| B | 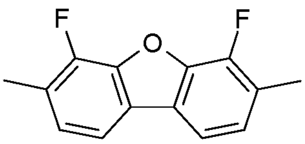 | B(S) | 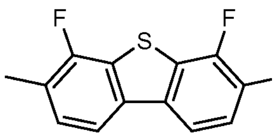 |
| O | 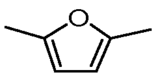 | S | 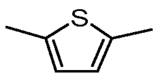 |

(continued)

| | | | |
|---|---|---|---|
| **K** | 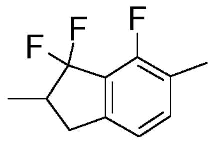 | **KI** | 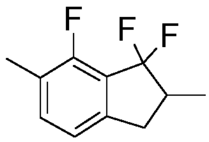 |
| **L** | 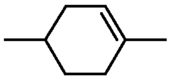 | **LI** | 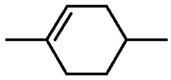 |
| **F** | 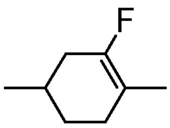 | **FI** | 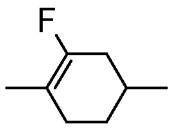 |
| **Bh** | 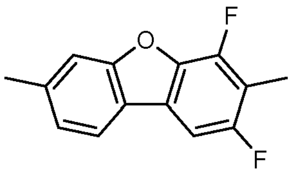 | **Bh(S)** | 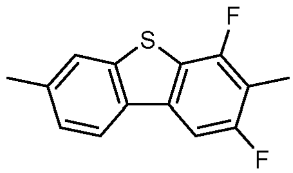 |
| **Bf** | 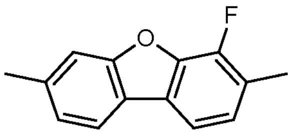 | **Bf(S)** | 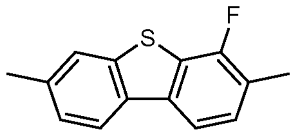 |
| **Bfi** | 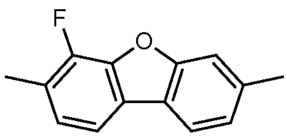 | **Bfi(S)** | 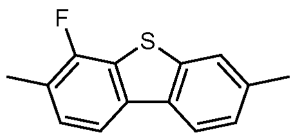 |

**Table A.2: Bridging units**

| | | | |
|---|---|---|---|
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Table A.3: End groups**

| On the left individually or in combination | | On the right individually or in combination | |
|---|---|---|---|
| **-n-** | $C_nH_{2n+1}-$ | **-n** | $-C_nH_{2n+1}$ |
| **-nO-** | $C_nH_{2n+1}-O-$ | **-On** | $-O-C_nH_{2n+1}$ |
| | | **-m** | $-C_mH_{2m+1}$ |
| | | **-Om** | $-O-C_mH_{2m+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH- C_nH_{2n}-$ | **-Vn** | $-CH=CH-C_nH_{2n+1}$ |
| **-nVm-** | $C_nH_{2n+1}-CH=CH-C_mH_{2m}-$ | **-nVm** | $- C_nH_{2n}-CH=CH-C_mH_{2m+1}$ |
| **-N-** | N≡C- | **-N** | -C≡N |
| **-S-** | S=C=N- | **-S** | -N=C=S |

(continued)

| On the left individually or in combination | | On the right individually or in combination | |
|---|---|---|---|
| **-F-** | F- | **-F** | -F |
| **-CL-** | Cl- | **-CL** | -Cl |
| **-M-** | $CFH_2$- | **-M** | -$CFH_2$ |
| **-D-** | $CF_2H$- | **-D** | -$CF_2H$ |
| **-T-** | $CF_3$- | **-T** | -$CF_3$ |
| **-MO-** | $CFH_2O$ - | **-OM** | -$OCFH_2$ |
| **-DO-** | $CF_2HO$ - | **-OD** | -$OCF_2H$ |
| **-TO-** | $CF_3O$ - | **-OT** | -$OCF_3$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | N≡C-C≡C- | **-AN** | -C≡C-C≡N |
| **-(cn)-** | 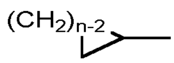 | **-(cn)** | 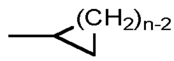 |
| **-(cn)m-** | 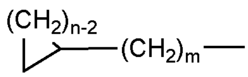 | **-m(cn)** | 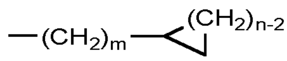 |
| **On the left only in combination** | | **On the right only in combination** | |
| **-...n...-** | -$C_nH_{2n}$- | **-...n...-** | -$C_nH_{2n}$- |
| | | **-...m...-** | -$C_mH_{2m}$- |
| **-...M...-** | -CFH- | **-...M...-** | -CFH- |
| **-...0...-** | -$CF_2$- | **-...D...-** | -$CF_2$- |
| **-...V...-** | -CH=CH- | **-...V...-** | -CH=CH- |
| **-...Z...-** | -CO-O- | **-...Z...-** | -CO-O- |
| **-...Zl...-** | -O-CO- | **-...Zl...-** | -O-CO- |
| **-...K...-** | -CO- | **-...K...-** | -CO- |
| **-...W...-** | -CF=CF- | **-...W...-** | -CF=CF- |
| **-...O...-** | -O- | **-...O...-** | -O- |

in which n and m are each integers, and the three dots "..." are placeholders for other abbreviations from this table.

Tables B and C show illustrative structures of compounds together with their respective abbreviations.

**Table B**

In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is preferably 1, 2, 3 or 4, more preferably 2 or 4. The combination "-nVm"preferably is "2V1". (O)$C_mH_{2m+1}$ means $C_mH_{2m+1}$ or $OC_mH_{2m+1}$.

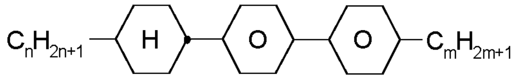

**BCH-nm**

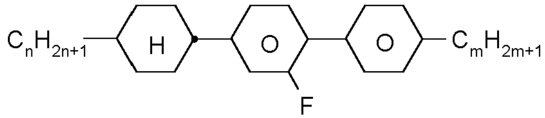

**BCH-nmF**

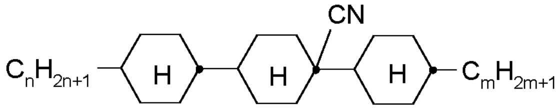

**BCN-nm**

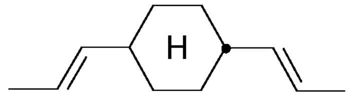

**C-1V-V1**

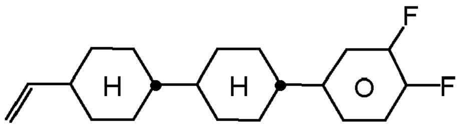

**CCG-V-F**

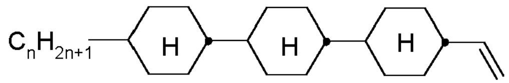

**CCC-n-V**

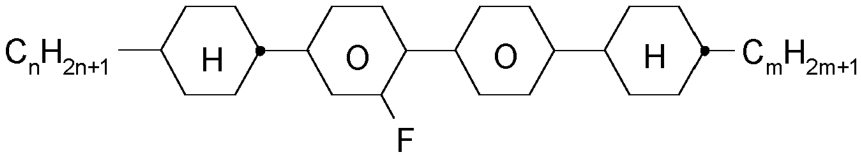

**CGPC-n-m, CBC-nmF**

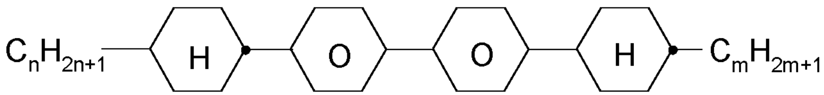

**CPPC-n-m, CBC-nm**

(continued)

In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is preferably 1, 2, 3 or 4, more preferably 2 or 4. The combination "-nVm"preferably is "2V1". $(O)C_mH_{2m+1}$ means $C_mH_{2m+1}$ or $OC_mH_{2m+1}$.

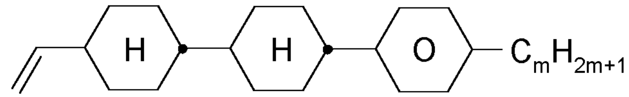

**CCP-V-m**

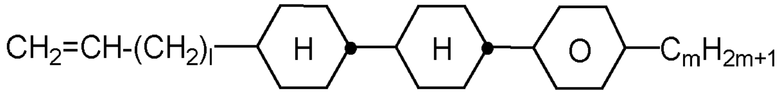

**CCP-VI-m**

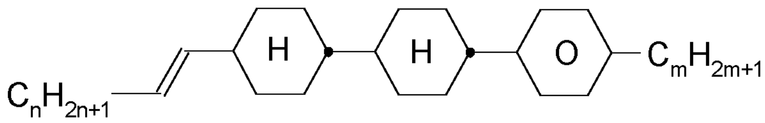

**CCP-nV-m**

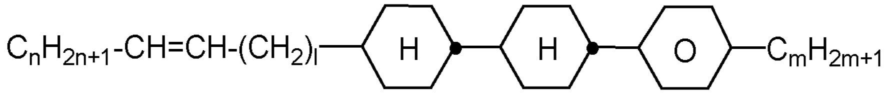

**CCP-nVI-m**

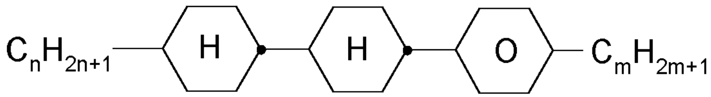

**CCP-n-m**

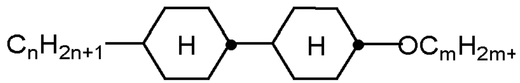

**CCH-nOm, CC-n-Om**

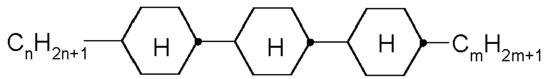

**CCC-n-m**

(continued)

In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is

preferably 1, 2, 3 or 4, more preferably 2 or 4. The combination "-nVm"preferably is "2V1". (O)$C_mH_{2m+1}$ means $C_mH_{2m+1}$ or $OC_mH_{2m+1}$.

| | |
|---|---|
| 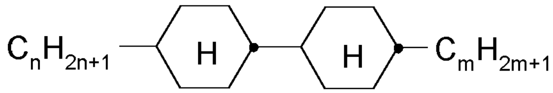 **CCH-nm, CC-n-m** | 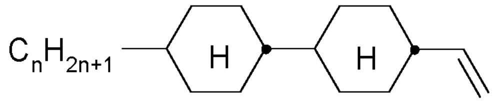 **CC-n-V** |
| 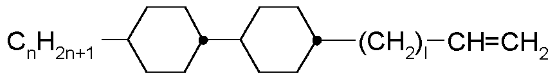 **CC-n-IV** | 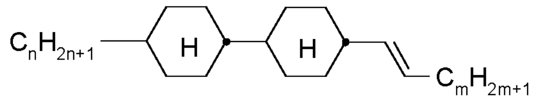 **CC-n-Vm** |
| 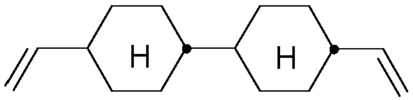 **CC-V-V** | 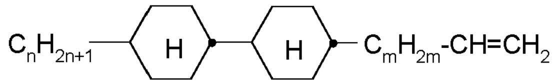 **CC-n-mV** |
| 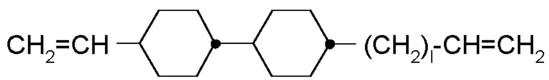 **CC-V-IV** | 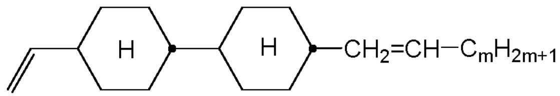 **CC-V-Vm** |
| 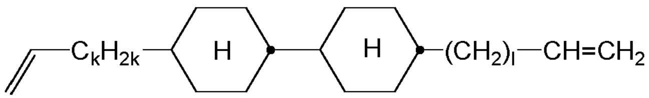 **CC-Vk-IV** | |
| 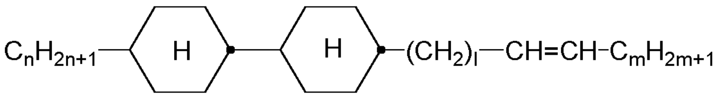 **CC-n-IVm** | |

(continued)

In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is preferably 1, 2, 3 or 4, more preferably 2 or 4. The combination "-nVm"preferably is "2V1". (O)$C_mH_{2m+1}$ means $C_mH_{2m+1}$ or $OC_mH_{2m+1}$.

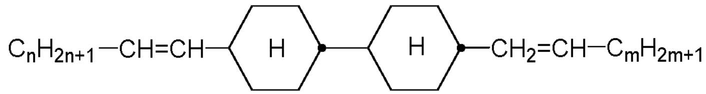

**CC-nV-Vm**

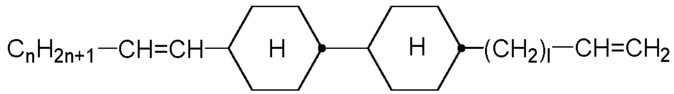

**CC-nV-IV**

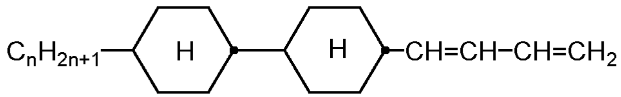

**CC-n-VV**

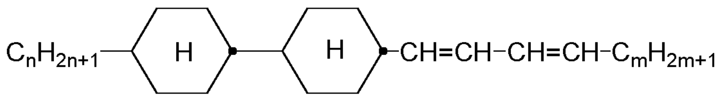

**CC-n-VVm**

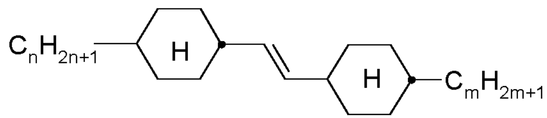

**CVC-n-m**

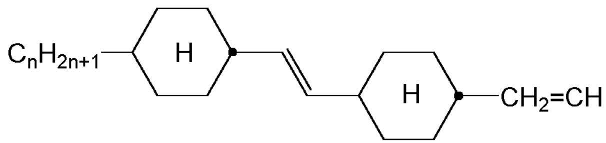

**CVC-n-V**

(continued)

In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is

preferably 1, 2, 3 or 4, more preferably 2 or 4. The combination "-nVm"preferably is "2V1". (O)$C_mH_{2m+1}$ means $C_mH_{2m+1}$ or $OC_mH_{2m+1}$.

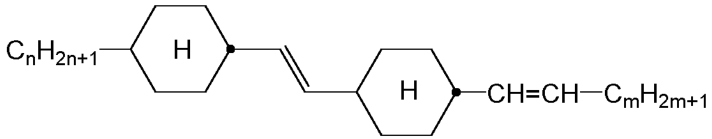

**CVC-n-Vm**

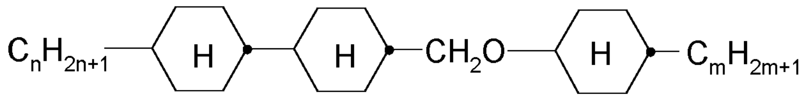

**CCOC-n-m**

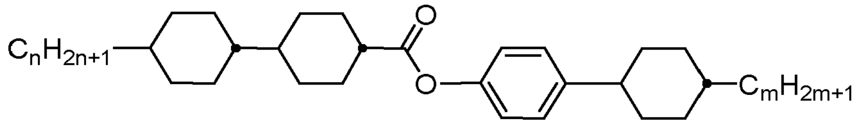

**CCZPC-n-m**

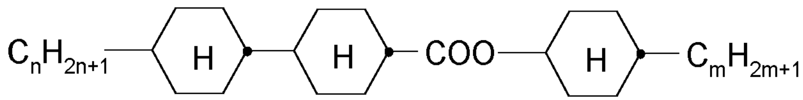

**CCZC-n-m, CH-nm**

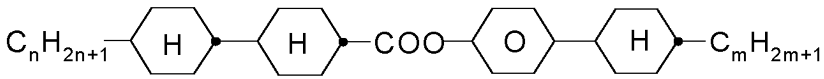

**CCPC-nm**

(continued)

In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is

preferably 1, 2, 3 or 4, more preferably 2 or 4. The combination "-nVm"preferably is "2V1". (O)$C_mH_{2m+1}$ means $C_mH_{2m+1}$ or $OC_mH_{2m+1}$.

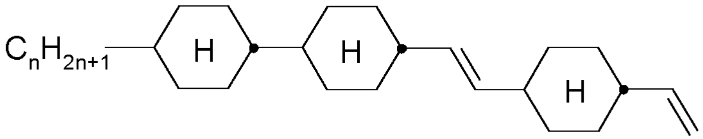

**CCVC-n-V**

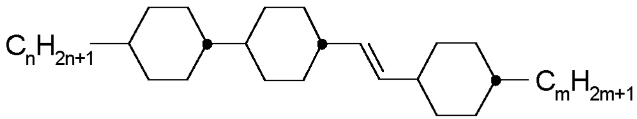

**CCVC-n-m**

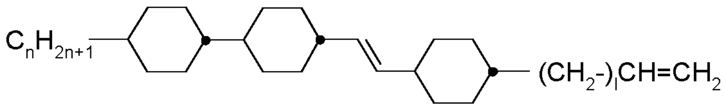

**CCVC-n-IV**

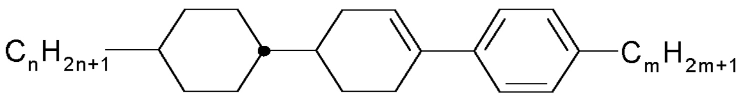

**CLP-n-m**

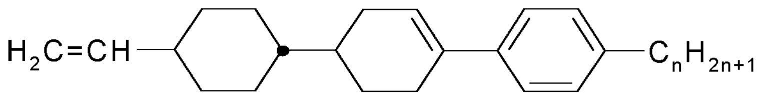

**CLP-V-n**

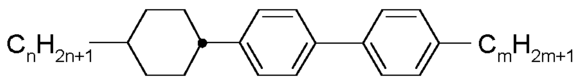

**CPP-n-m**

(continued)

In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is

preferably 1, 2, 3 or 4, more preferably 2 or 4. The combination "-nVm"preferably is "2V1". (O)$C_mH_{2m+1}$ means $C_mH_{2m+1}$ or $OC_mH_{2m+1}$.

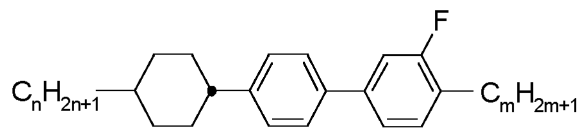

**CPG-n-m**

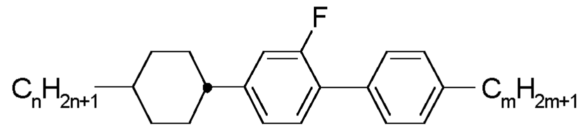

**CGP-n-m**

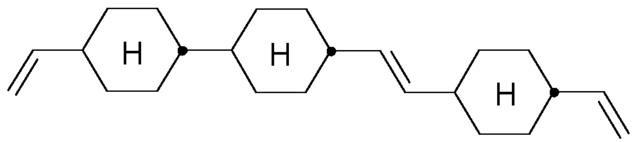

**CCVC-V-V**

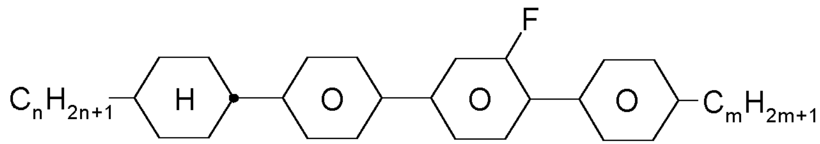

**CPGP-n-m**

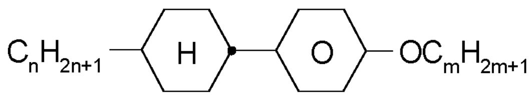

**PCH-nOm, CP-n-Om**

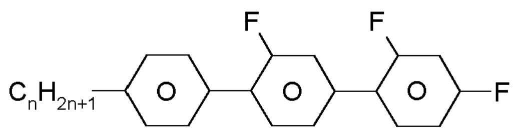

**PGIXI-n-F**

(continued)

In Table B, n, m, k and l are, independently of one another, each an integer, preferably 1 to 9 preferably 1 to 7, k and l may also be 0 and are preferably 0 to 4, more preferably 0 or 2 and most preferably 2, n is preferably 1, 2, 3, 4 or 5 or, in the combination "-nO-", n is preferably 1, 2, 3 or 4, very preferably 2 or 4, m is preferably 1, 2, 3, 4 or 5 or, in the combination "-Om", m is

preferably 1, 2, 3 or 4, more preferably 2 or 4. The combination "-nVm"preferably is "2V1". $(O)C_mH_{2m+1}$ means $C_mH_{2m+1}$ or $OC_mH_{2m+1}$.

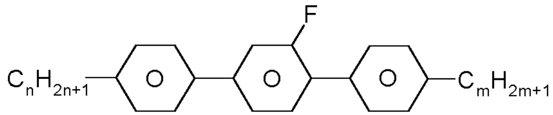

**PGP-n-m**

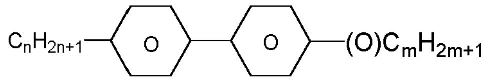

**PP-n-(O)m**

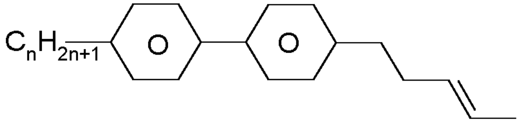

**PP-n-2V1**

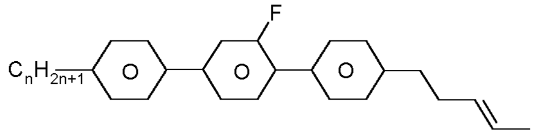

**PGP-n-2V1**

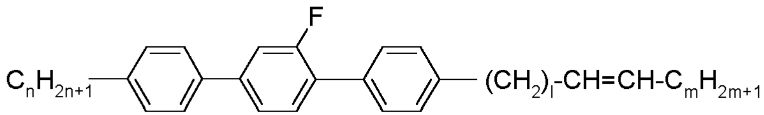

**PCP-n-lVm**

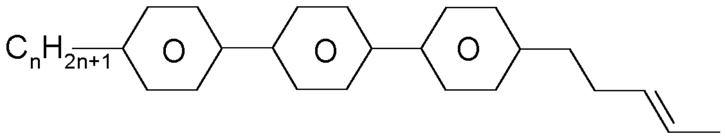

**PPP-n-2V1**

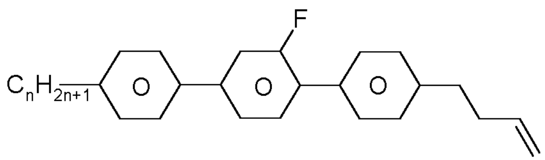

**PGP-n-2V**

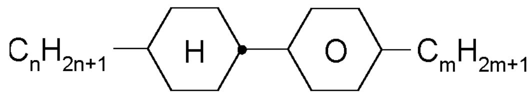

**PCH-nm, CP-n-m**

In a preferred embodiment of the present invention, the LC media according to the invention comprise one or more compounds selected from the group consisting of compounds from Table B.

**Table C**

In the following formulae, n and m each, independently of one another, denote 0, 1, 2, 3, 4, 5, 6, 7, 8, 9, 10, 11 or 12, in particular 2, 3, 5, furthermore 0, 4, 6.

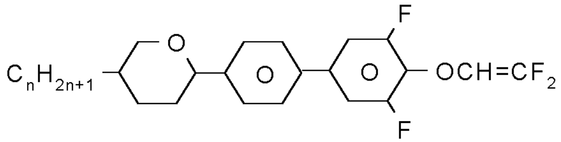

**APU-n-OXF**

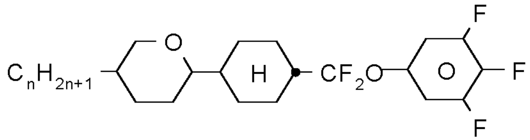

**ACQU-n-F**

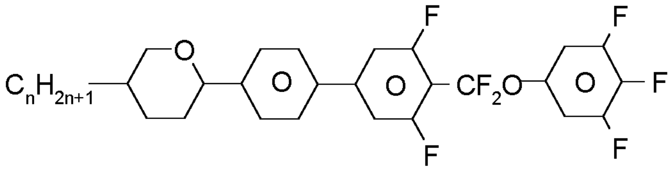

**APUQU-n-F**

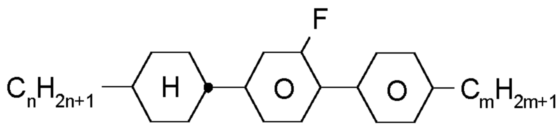

**BCH-n.Fm**

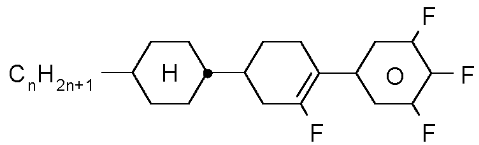

**CFU-n-F**

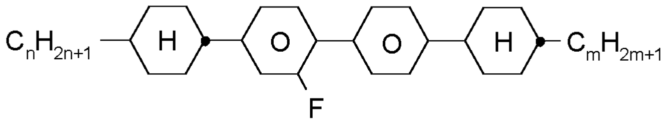

**CBC-nmF**

(continued)

In the following formulae, n and m each, independently of one another, denote 0, 1, 2, 3, 4, 5, 6, 7, 8, 9, 10, 11 or 12, in particular 2, 3, 5, furthermore 0, 4, 6.

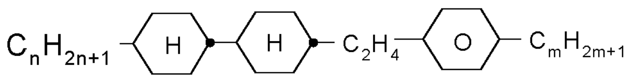

ECCP-nm

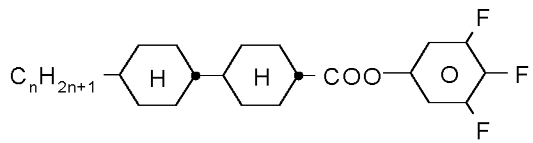

CCZU-n-F

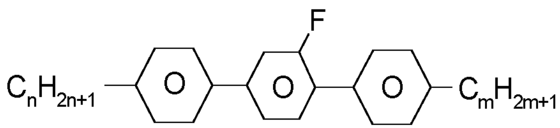

PGP-n-m

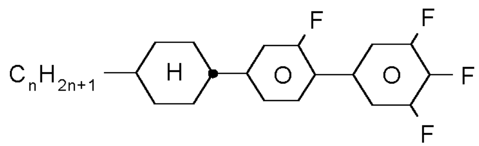

CGU-n-F

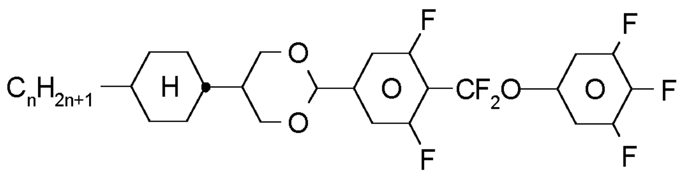

CDUQU-n-F

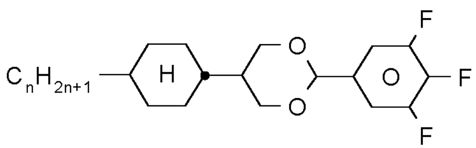

CDU-n-F

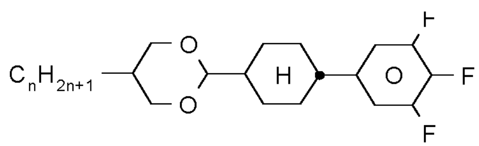

DCU-n-F

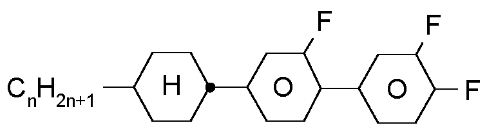

CGG-n-F

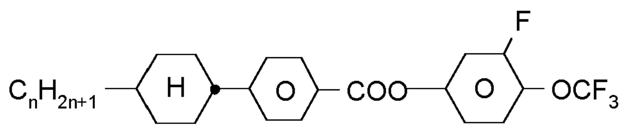

CPZG-n-OT

(continued)

In the following formulae, n and m each, independently of one another, denote 0, 1, 2, 3, 4, 5, 6, 7, 8, 9, 10, 11 or 12, in particular 2, 3, 5, furthermore 0, 4, 6.

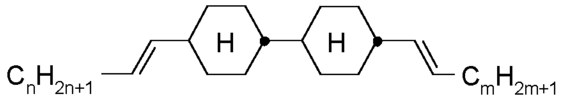

CC-nV-Vm

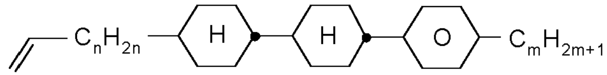

CCP-Vn-m

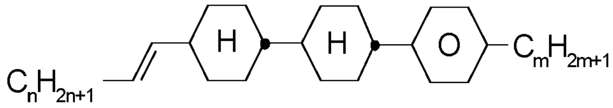

CCP-nV-m

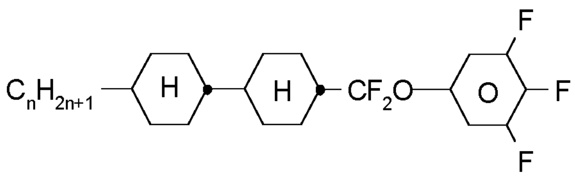

CCQU-n-F

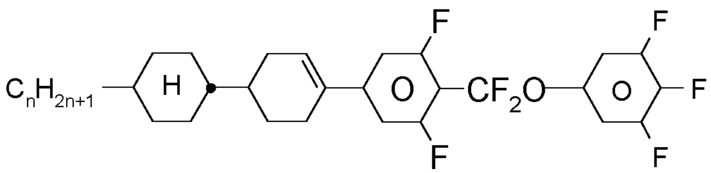

CLUQU-n-F

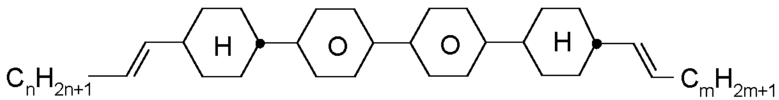

CPPC-nV-Vm

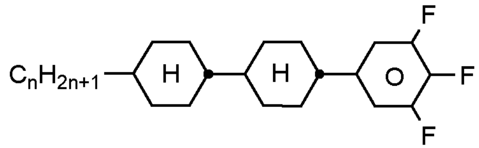

CCP-nF.F.F

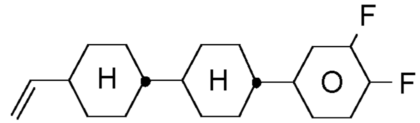

CCG-V-F

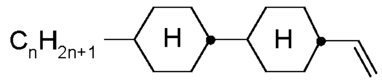

CC-n-V

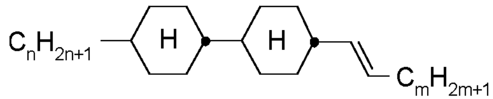

CC-n-Vm

(continued)

In the following formulae, n and m each, independently of one another, denote 0, 1, 2, 3, 4, 5, 6, 7, 8, 9, 10, 11 or 12, in particular 2, 3, 5, furthermore 0, 4, 6.

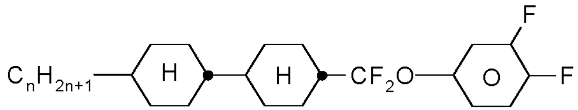

**CCQG-n-F**

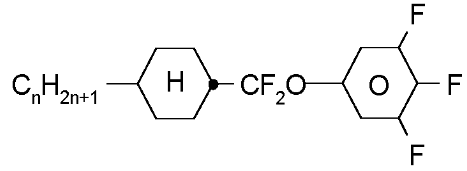

**CQU-n-F**

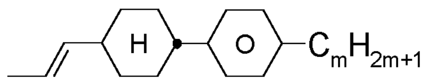

**CP-1V-m**

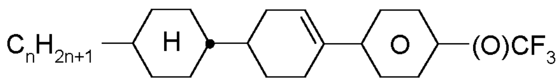

**CLP-n-(O)T**

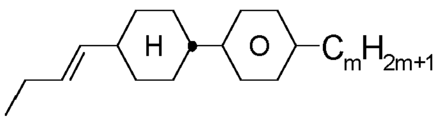

**CP-2V-m**

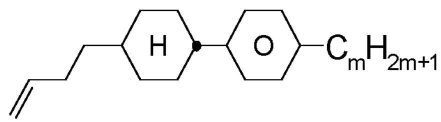

**CP-V2-m**

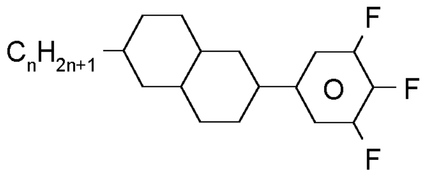

**Dec-U-n-F**

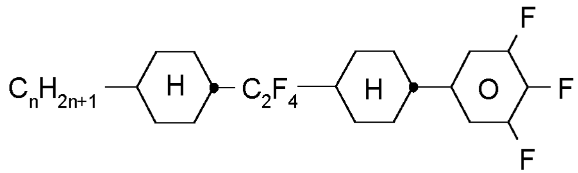

**CWCU-n-F**

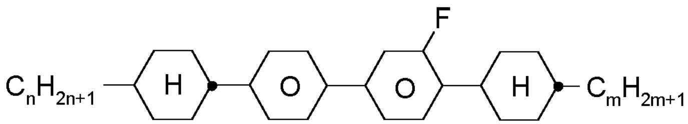

**CPGP-n-m**

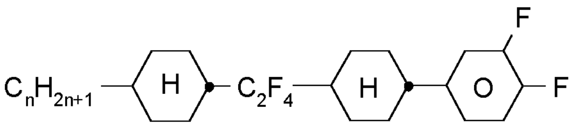

**CWCG-n-F**

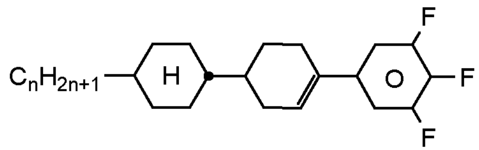

**CLU-n-F**

(continued)

In the following formulae, n and m each, independently of one another, denote 0, 1, 2, 3, 4, 5, 6, 7, 8, 9, 10, 11 or 12, in particular 2, 3, 5, furthermore 0, 4, 6.

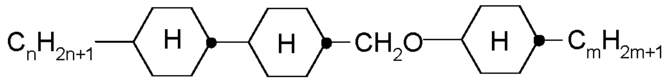

**CCOC-n-m**

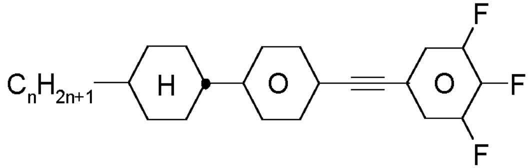

**CPTU-n-F**

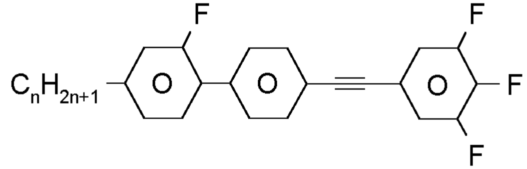

**GPTU-n-F**

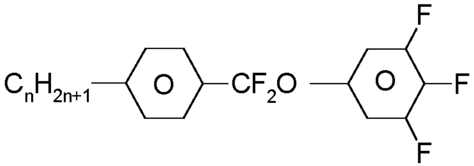

**PQU-n-F**

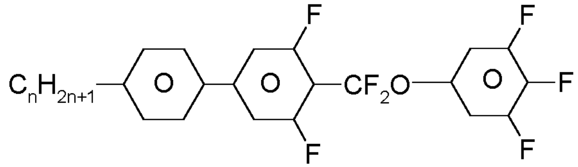

**PUQU-n-F**

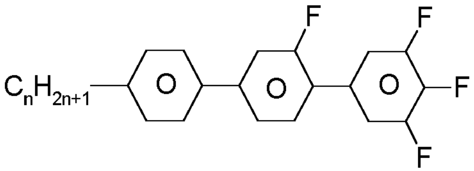

**PGU-n-F**

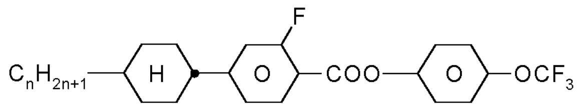

**CGZP-n-OT**

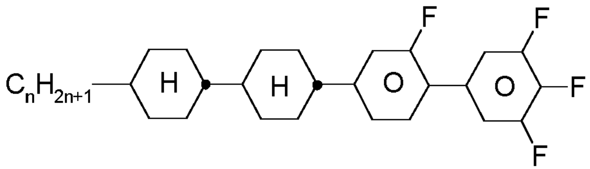

**CCGU-n-F**

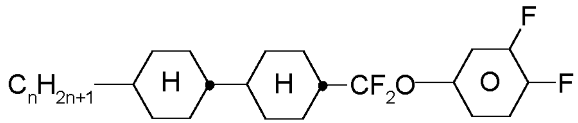

**CCQG-n-F**

(continued)

In the following formulae, n and m each, independently of one another, denote 0, 1, 2, 3, 4, 5, 6, 7, 8, 9, 10, 11 or 12, in particular 2, 3, 5, furthermore 0, 4, 6.

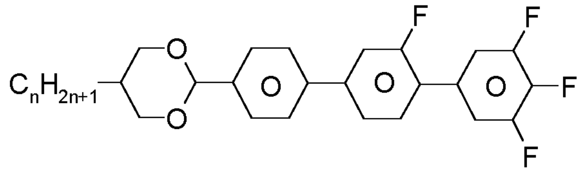

**DPGU-n-F**

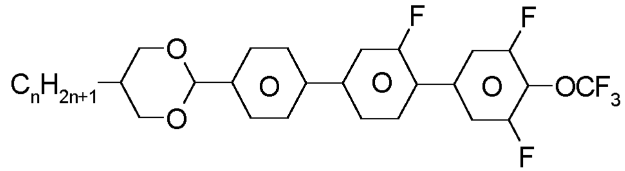

**DPGU-n-OT**

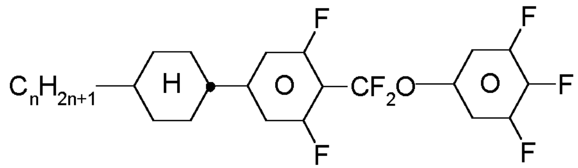

**CUQU-n-F**

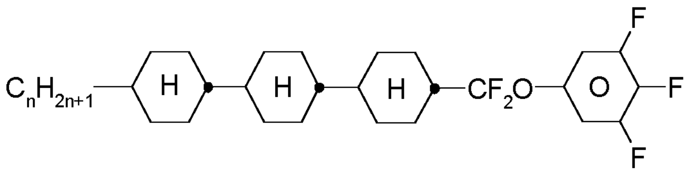

**CCCQU-n-F**

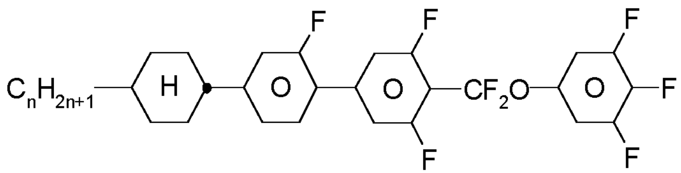

**CGUQU-n-F**

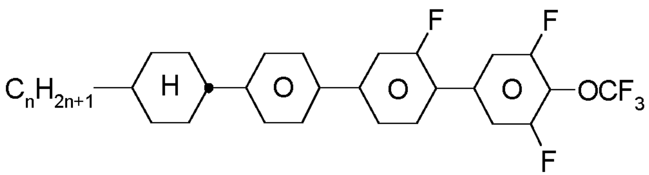

**CPGU-n-OT**

(continued)

In the following formulae, n and m each, independently of one another, denote 0, 1, 2, 3, 4, 5, 6, 7, 8, 9, 10, 11 or 12, in particular 2, 3, 5, furthermore 0, 4, 6.

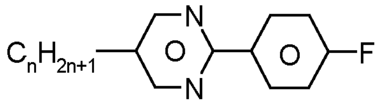

**PYP-nF**

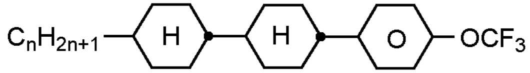

**CCP-n-OT**

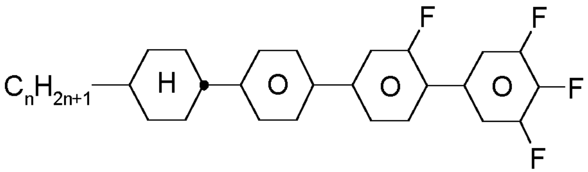

**CPGU-n-F**

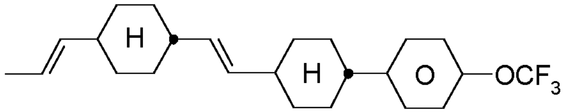

**CVCP-1V-OT**

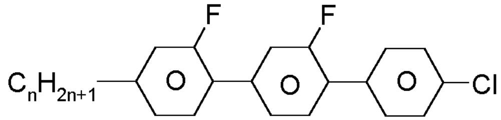

**GGP-n-Cl**

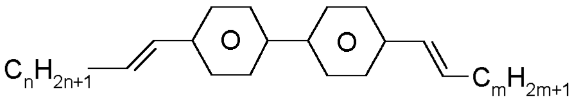

**PP-nV-Vm**

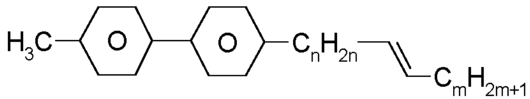

**PP-1-nVm**

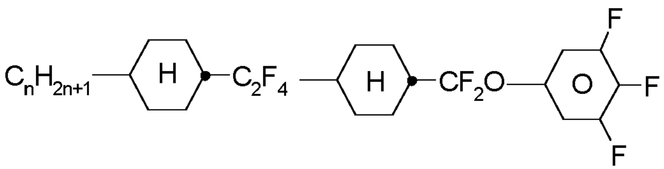

**CWCQU-n-F**

(continued)

In the following formulae, n and m each, independently of one another, denote 0, 1, 2, 3, 4, 5, 6, 7, 8, 9, 10, 11 or 12, in particular 2, 3, 5, furthermore 0, 4, 6.

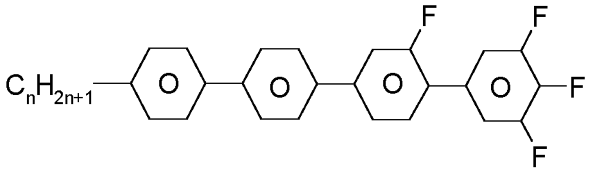

**PPGU-n-F**

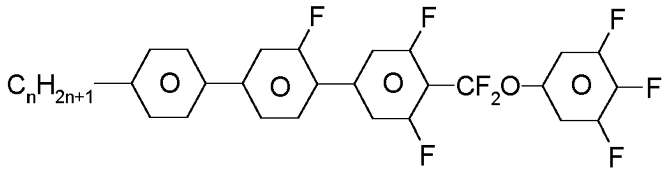

**PGUQU-n-F**

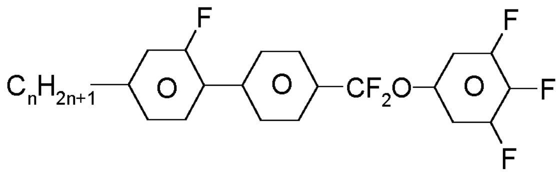

**GPQU-n-F**

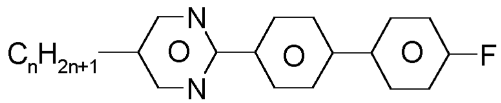

**MPP-n-F**

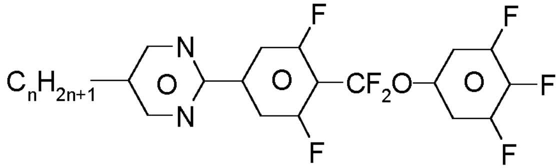

**MUQU-n-F**

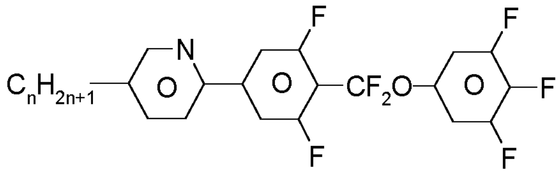

**NUQU-n-F**

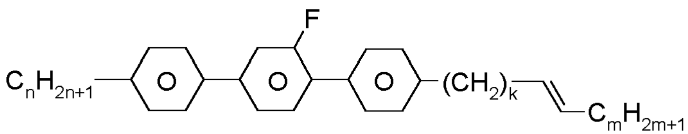

**PGP-n-kVm**

(continued)

In the following formulae, n and m each, independently of one another, denote 0, 1, 2, 3, 4, 5, 6, 7, 8, 9, 10, 11 or 12, in particular 2, 3, 5, furthermore 0, 4, 6.

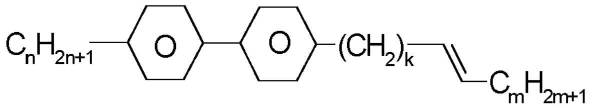

PP-n-kVm

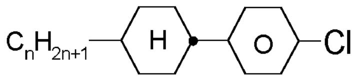

PCH-nCl

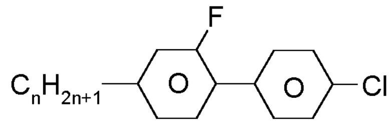

GP-n-Cl

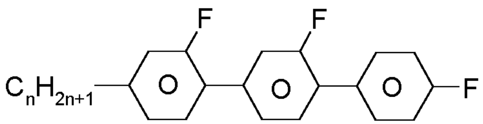

GGP-n-F

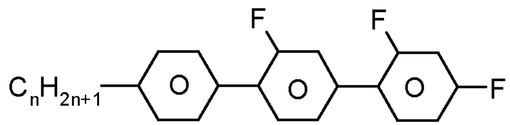

PGIXI-n-F

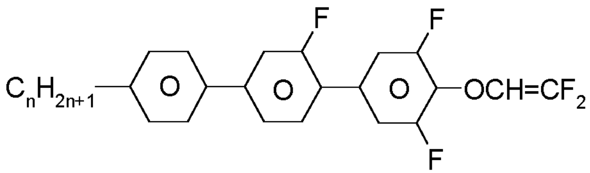

PGU-n-OXF

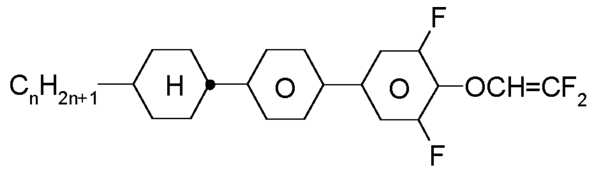

CPU-n-OXF

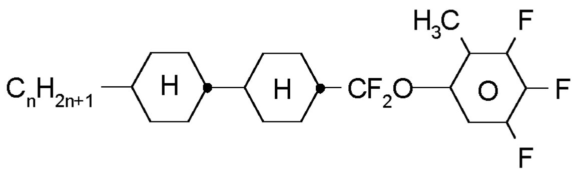

CCQU-n-F(1)

(continued)

In the following formulae, n and m each, independently of one another, denote 0, 1, 2, 3, 4, 5, 6, 7, 8, 9, 10, 11 or 12, in particular 2, 3, 5, furthermore 0, 4, 6.

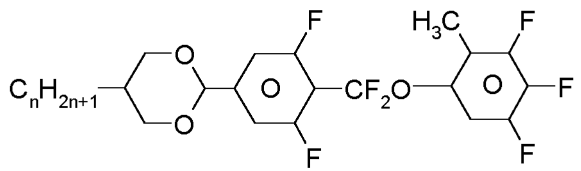

**DUQU-n-F(1)**

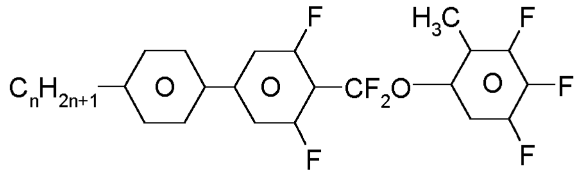

**PUQU-n-F(1)**

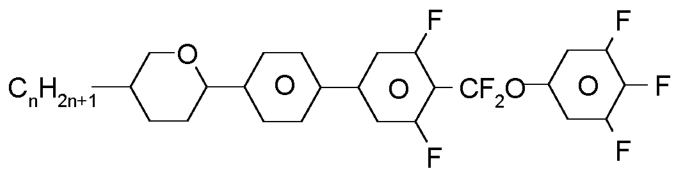

**APUQU-n-F(1)**

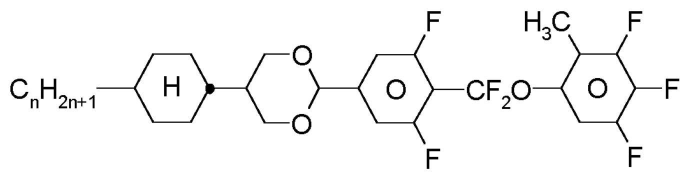

**CDUQU-n-F(1)**

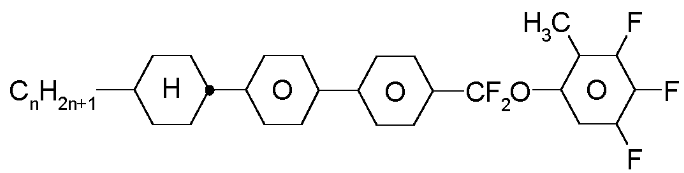

**CPPQU-n-F(1)**

(continued)

In the following formulae, n and m each, independently of one another, denote 0, 1, 2, 3, 4, 5, 6, 7, 8, 9, 10, 11 or 12, in particular 2, 3, 5, furthermore 0, 4, 6.

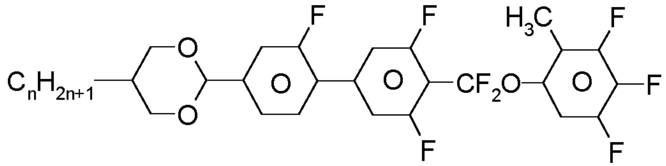

**DGUQU-n-F(1)**

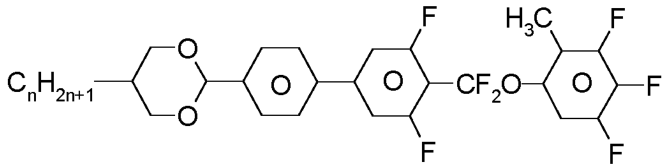

**DPUQU-n-F(1)**

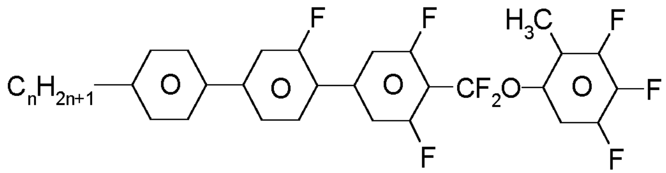

**PGUQU-n-F(1)**

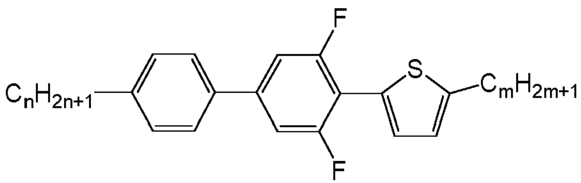

**PUS-n-m**

In a preferred embodiment of the present invention, the LC media according to the invention comprise one or more compounds selected from the group consisting of compounds from Table C.

**Table C**

Table C shows possible chiral dopants which can be added to the LC media according to the invention.

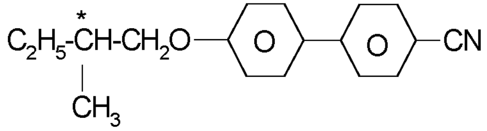

**C 15**

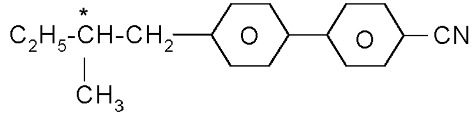

**CB 15**

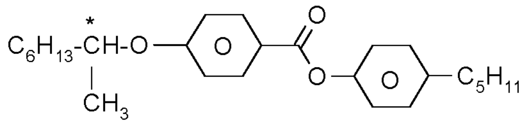

**CM 21**

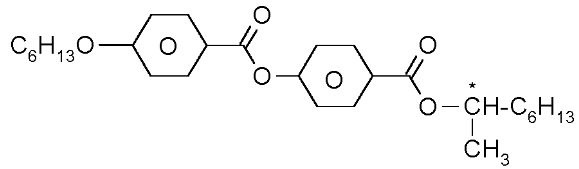

**R/S-811**

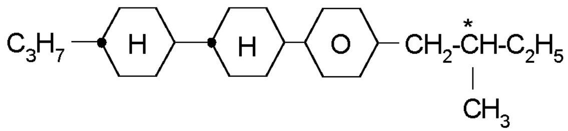

**CM 44**

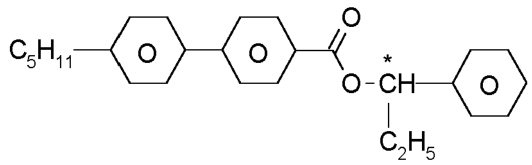

**CM 45**

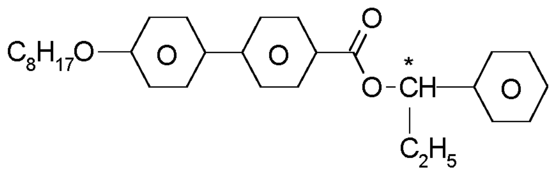

**CM 47**

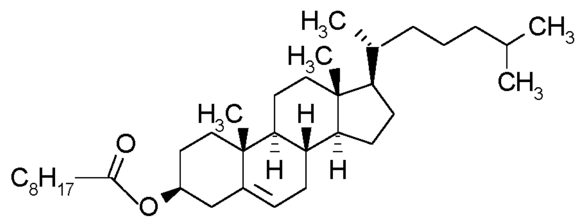

**CN**

(continued)

Table C shows possible chiral dopants which can be added to the LC media according to the invention.

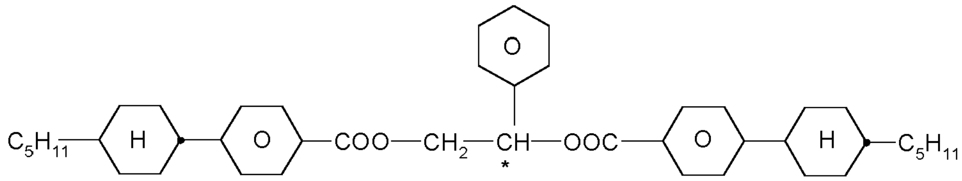

**R/S-1011**

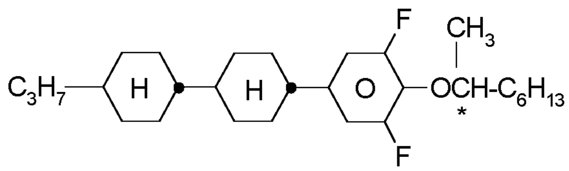

**R/S-2011**

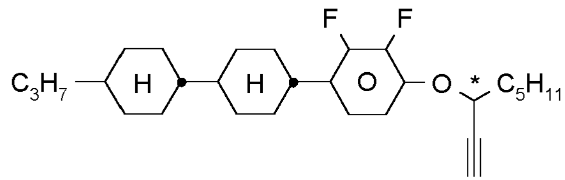

**R/S-3011**

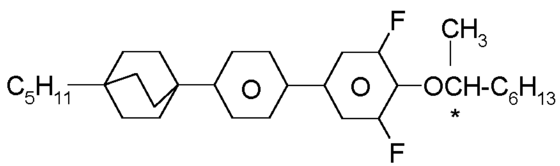

**R/S-4011**

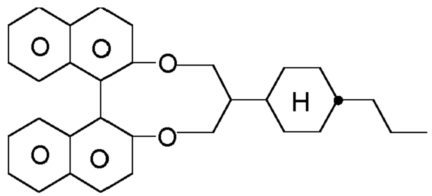

**R/S-5011**

The LC media preferably comprise 0 to 10% by weight, in particular 0.01 to 5% by weight, particularly preferably 0.1 to 3% by weight, of dopants. The LC media preferably comprise one or more dopants selected from the group consisting of compounds from Table C.

## Table D

Table D shows possible stabilisers which can be added to the LC media according to the invention. Therein n denotes an integer from 1 to 12, preferably 1, 2, 3, 4, 5, 6, 7 or 8, and terminal methyl groups are not shown.

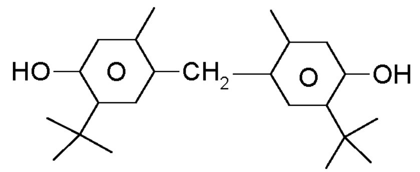

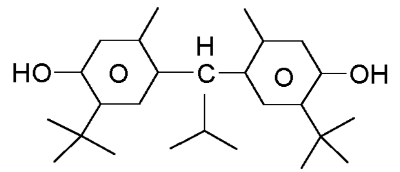

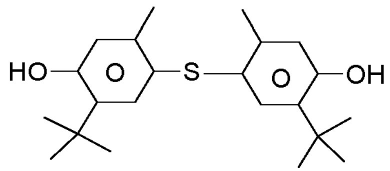

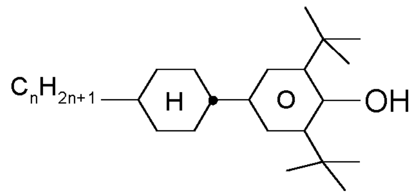

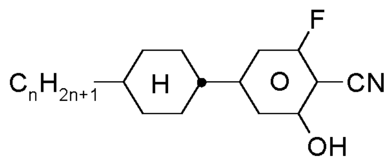

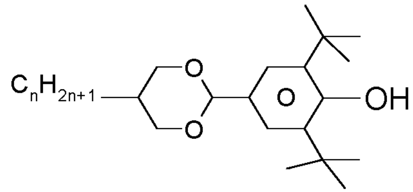

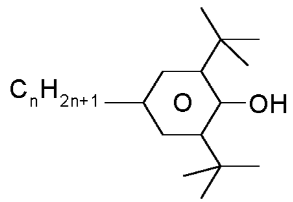

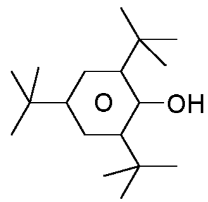

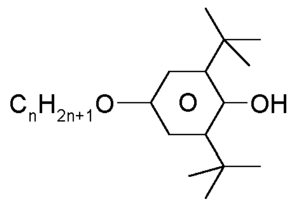

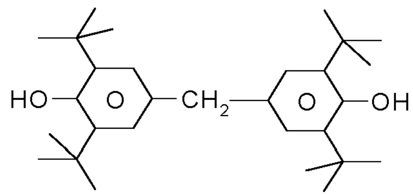

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

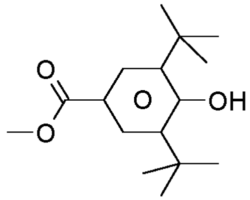

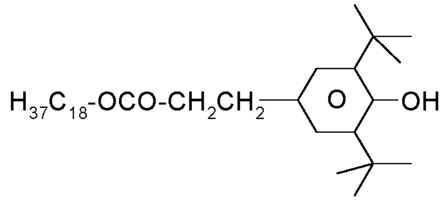

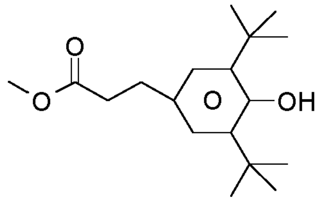

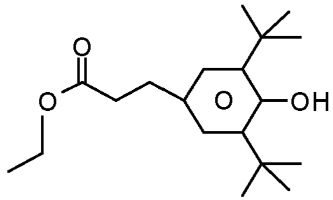

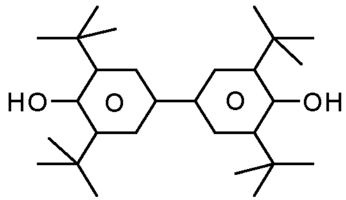

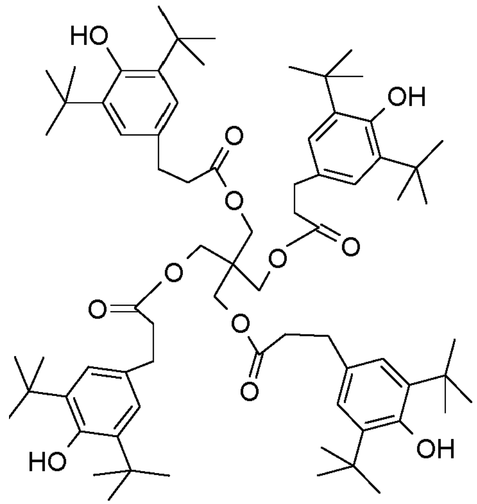

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

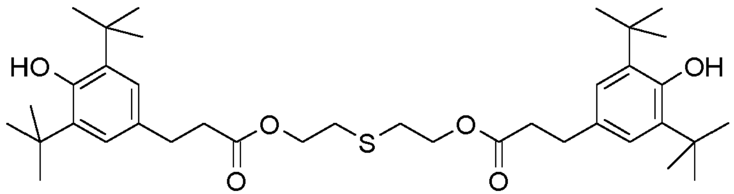

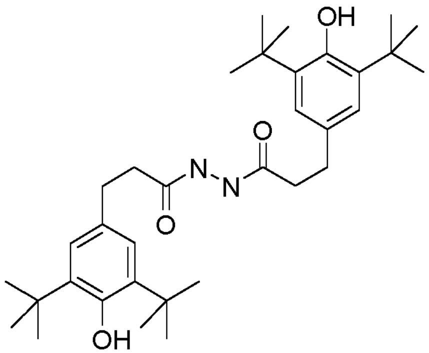

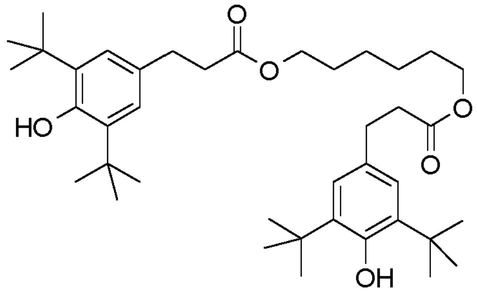

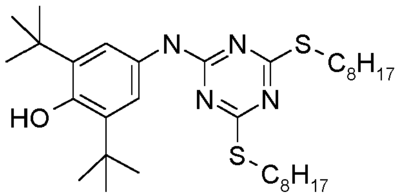

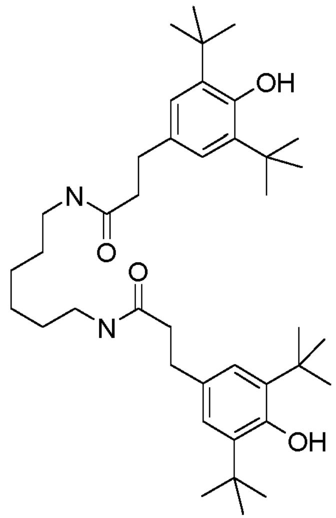

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

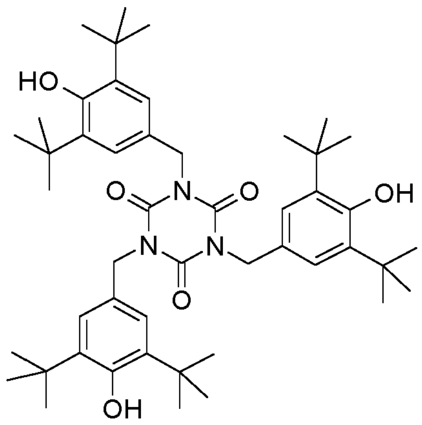

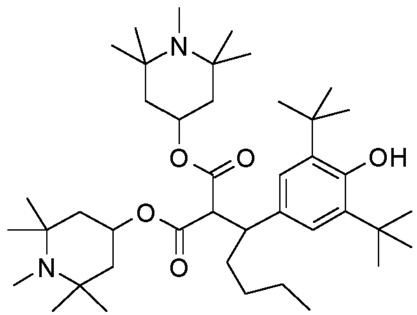

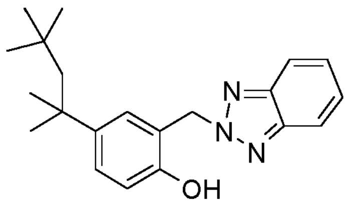

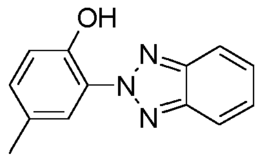

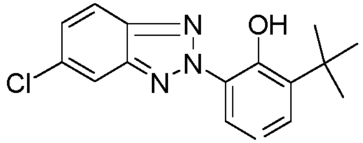

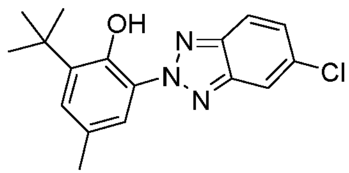

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

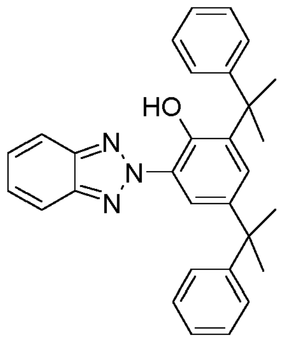

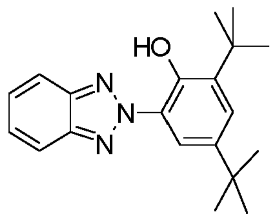

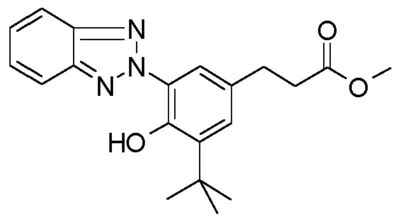

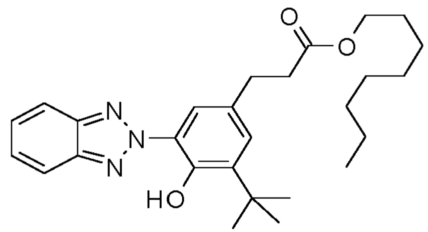

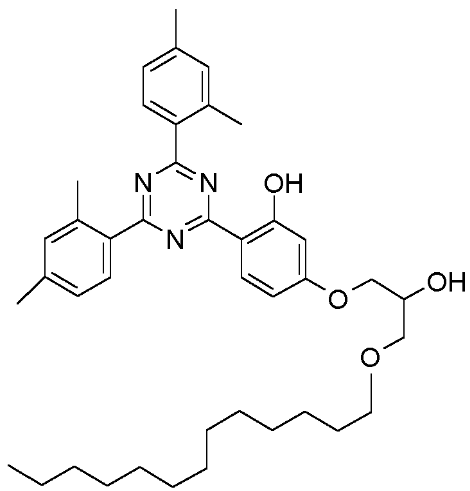

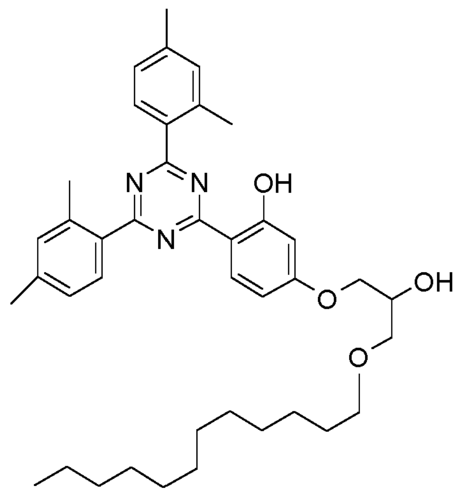

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

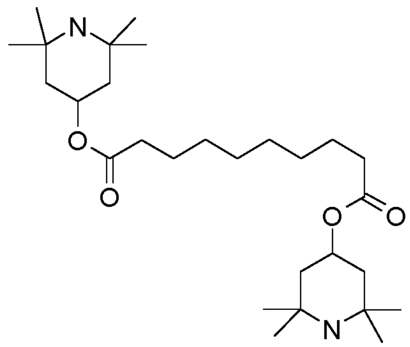

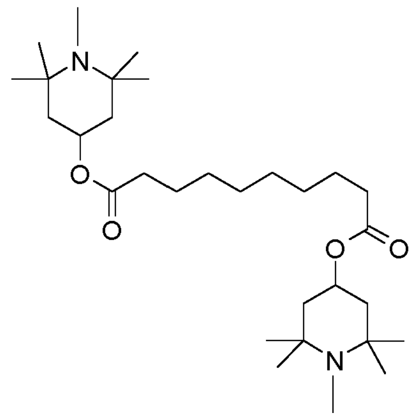

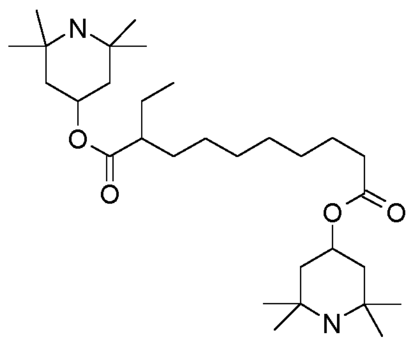

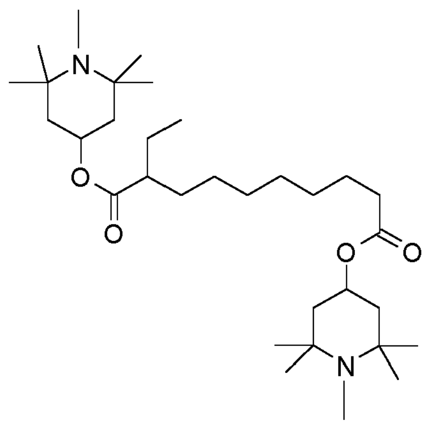

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

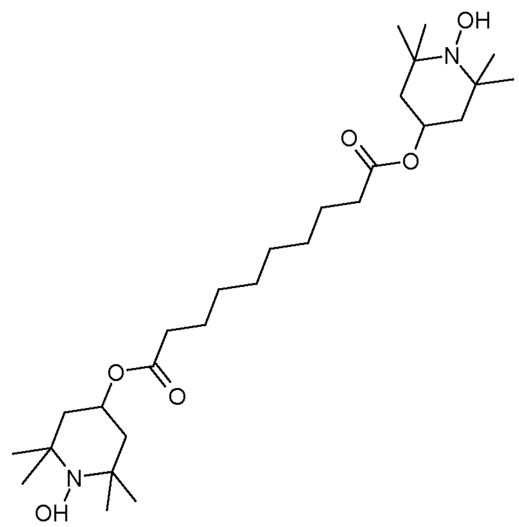

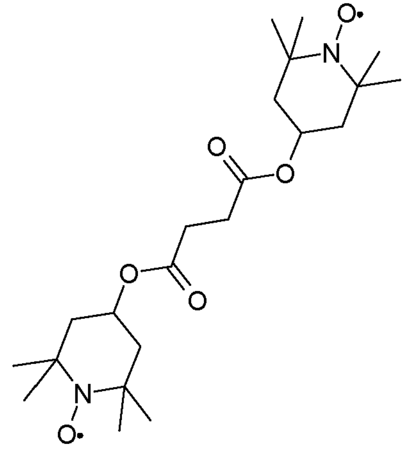

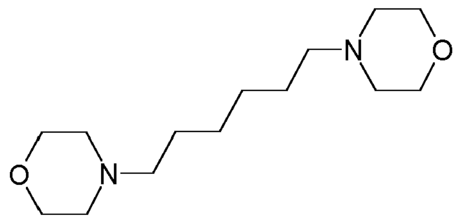

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

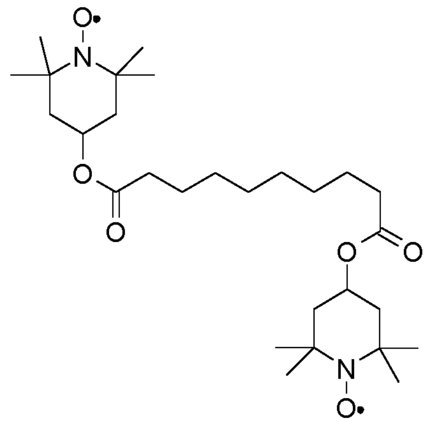

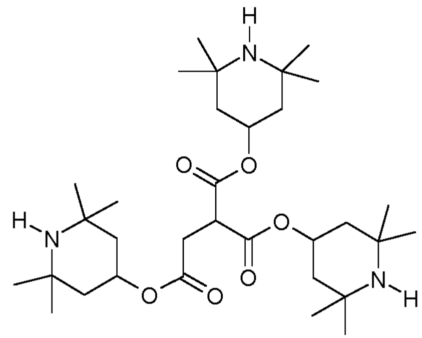

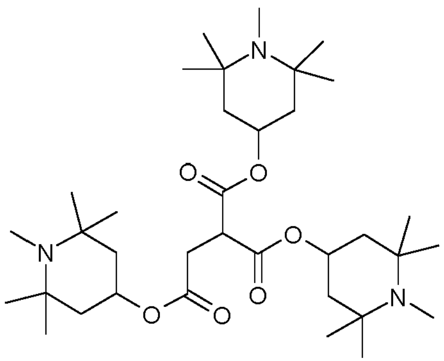

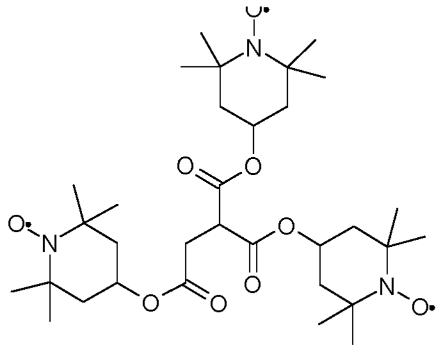

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

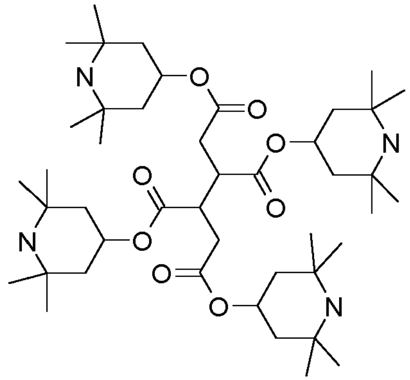

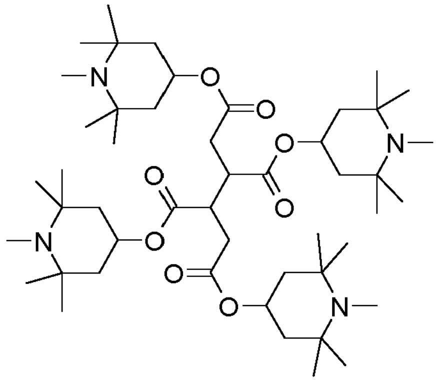

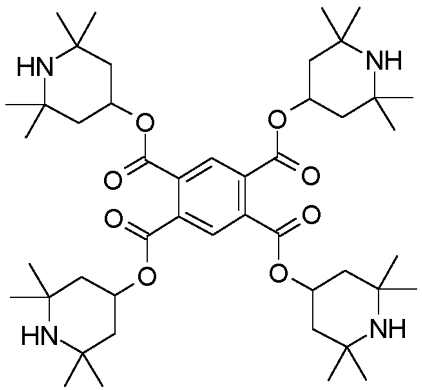

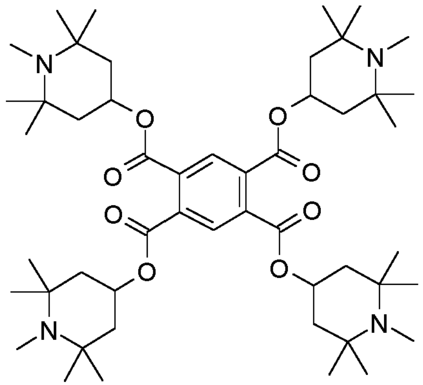

(continued)

Table D shows possible stabilisers which can be added to the LC media according to the invention. Therein n denotes an integer from 1 to 12, preferably 1, 2, 3, 4, 5, 6, 7 or 8, and terminal methyl groups are not shown.

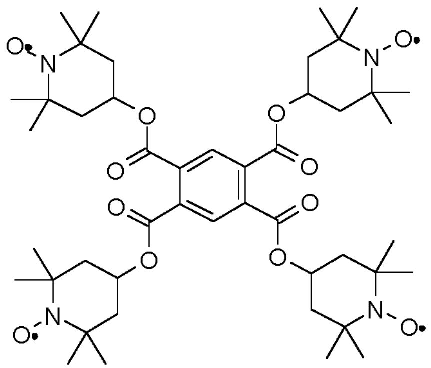

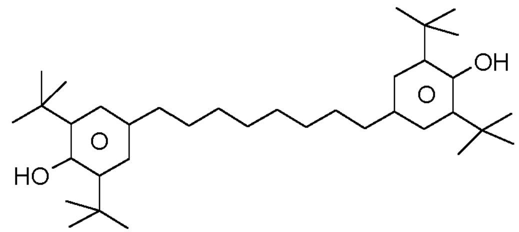

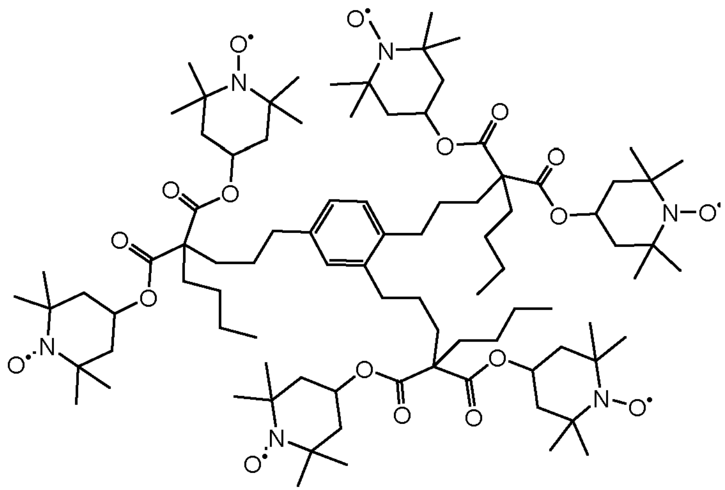

The LC media preferably comprise 0 to 10% by weight, in particular 1 ppm to 5% by weight, particularly preferably 1 ppm to 1% by weight, of stabilisers. The LC media preferably comprise one or more stabilisers selected from the group consisting of compounds from Table D.

**Table E**

Table E shows illustrative reactive mesogenic compounds which can be used in the LC media in accordance with the present invention.

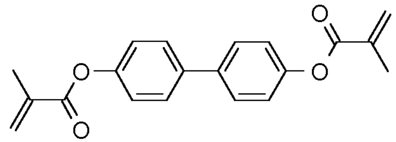

RM-1

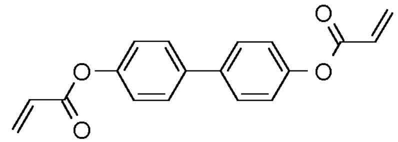

RM-2

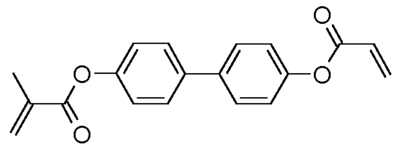

RM-3

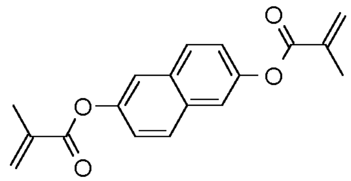

RM-4

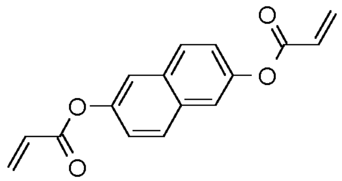

RM-5

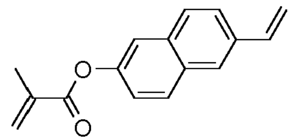

RM-6

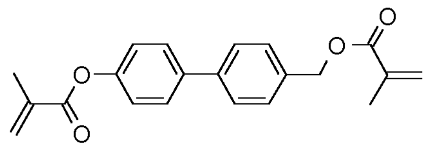

RM-7

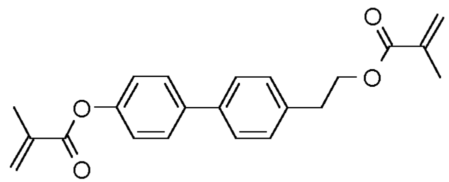

RM-8

(continued)

Table E shows illustrative reactive mesogenic compounds which can be used in the LC media in accordance with the present invention.

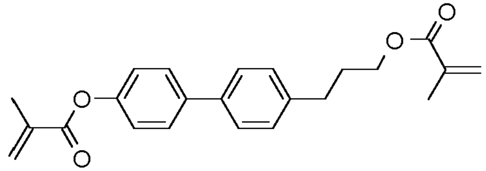

RM-9

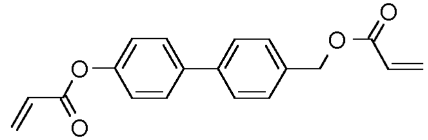

RM-10

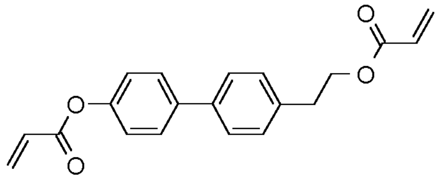

RM-11

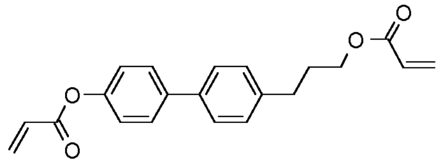

RM-12

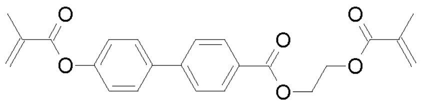

RM-13

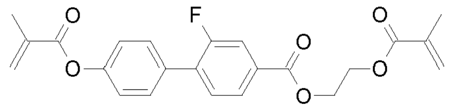

RM-14

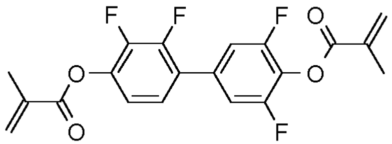

RM-15

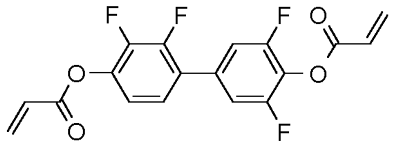

RM-16

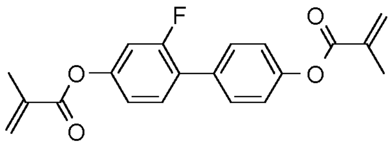

RM-17

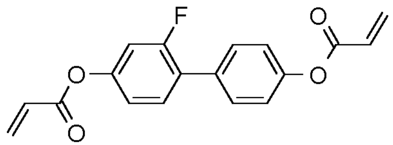

RM-18

(continued)

Table E shows illustrative reactive mesogenic compounds which can be used in the LC media in accordance with the present invention.

| | |
|---|---|
| 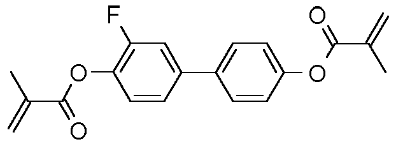 RM-19 | 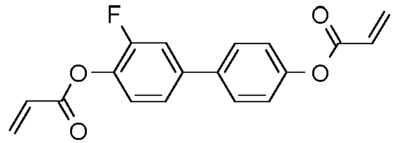 RM-20 |
| 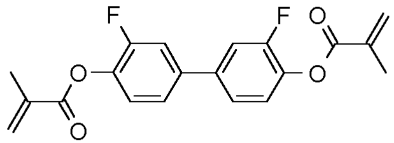 RM-21 | 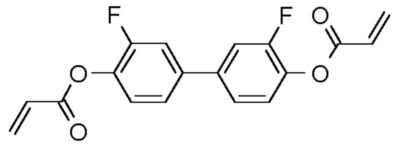 RM-22 |
| 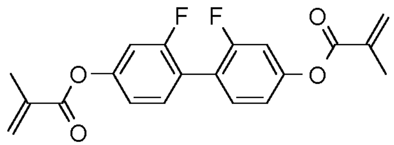 RM-23 | 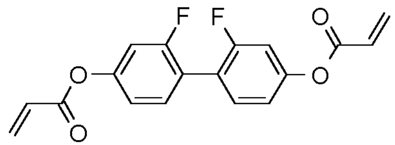 RM-24 |
| 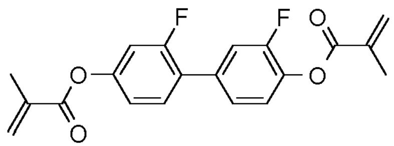 RM-25 | 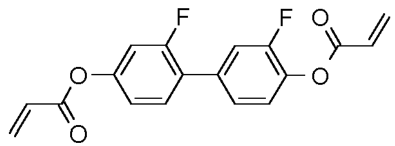 RM-26 |
| 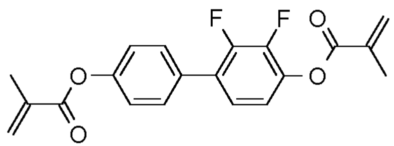 RM-27 | 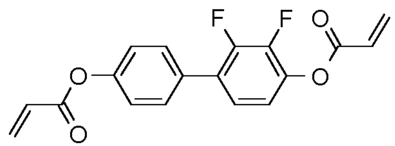 RM-28 |

(continued)

Table E shows illustrative reactive mesogenic compounds which can be used in the LC media in accordance with the present invention.

| | |
|---|---|
| 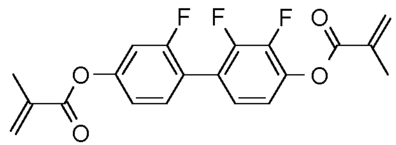 RM-29 | 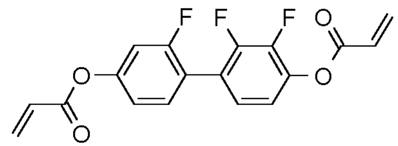 RM-30 |
| 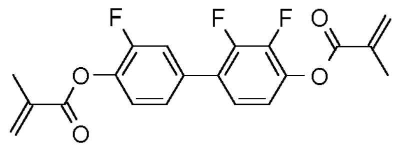 RM-31 | 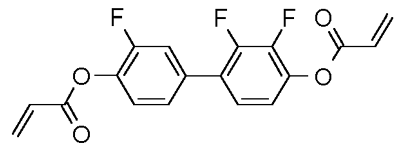 RM-32 |
| 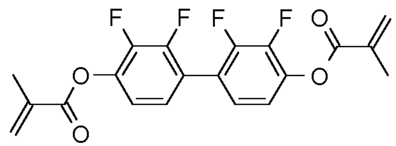 RM-33 | 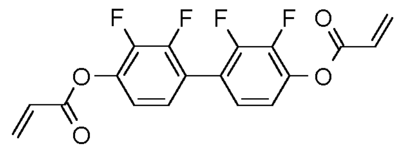 RM-34 |
| 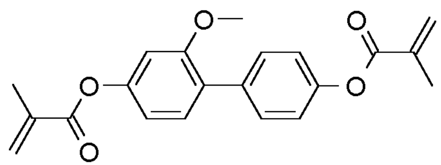 RM-35 | 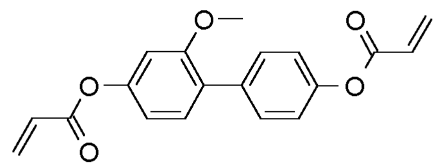 RM-36 |

(continued)

Table E shows illustrative reactive mesogenic compounds which can be used in the LC media in accordance with the present invention.

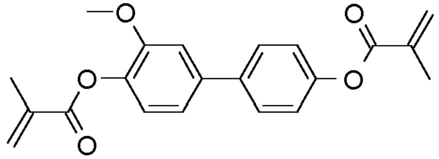

RM-37

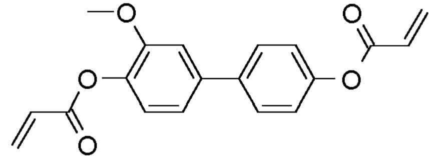

RM-38

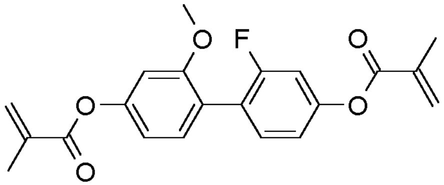

RM-39

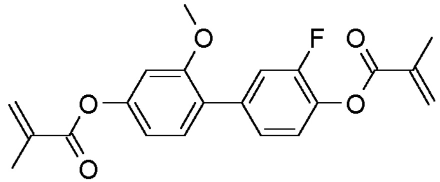

RM-40

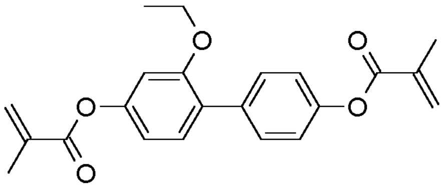

RM-41

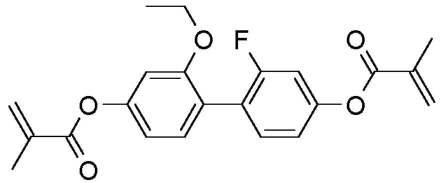

RM-42

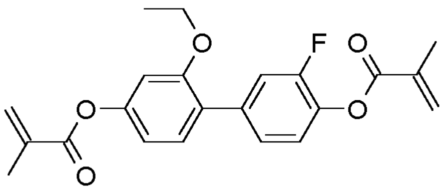

RM-43

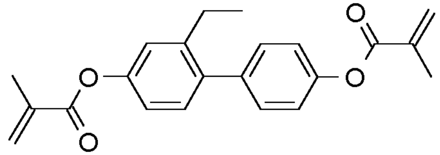

RM-44

(continued)

Table E shows illustrative reactive mesogenic compounds which can be used in the LC media in accordance with the present invention.

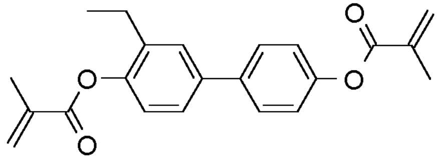

RM-45

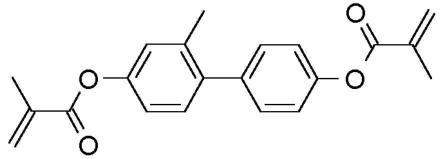

RM-46

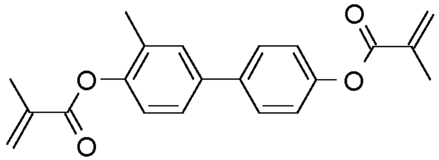

RM-47

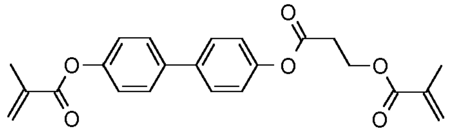

RM-48

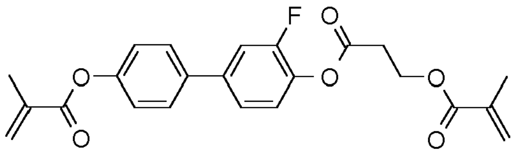

RM-49

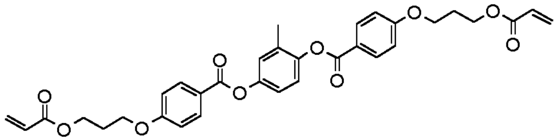

RM-50

(continued)

Table E shows illustrative reactive mesogenic compounds which can be used in the LC media in accordance with the present invention.

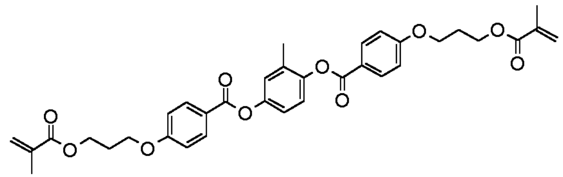

RM-51

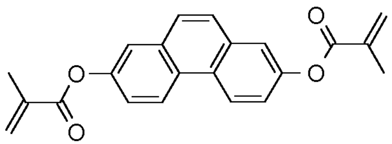

RM-52

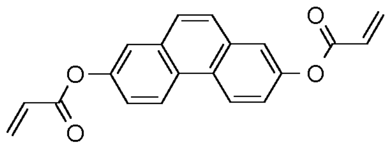

RM-53

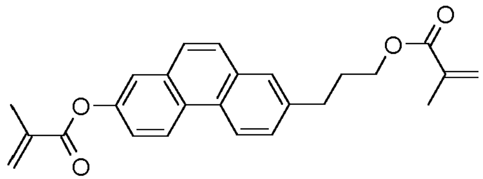

RM-54

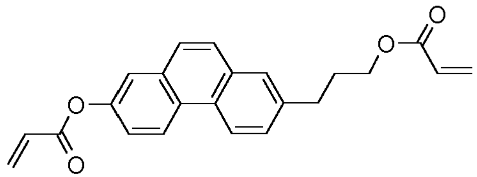

RM-55

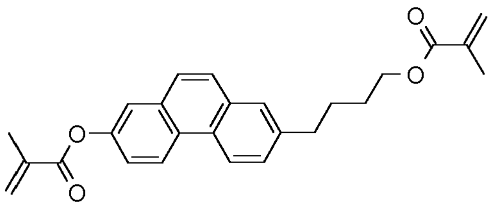

RM-56

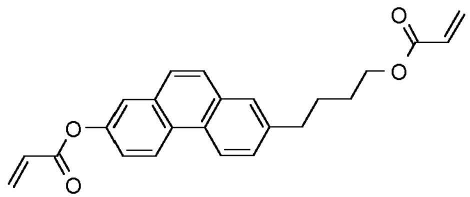

RM-57

(continued)

Table E shows illustrative reactive mesogenic compounds which can be used in the LC media in accordance with the present invention.

| | |
|---|---|
| 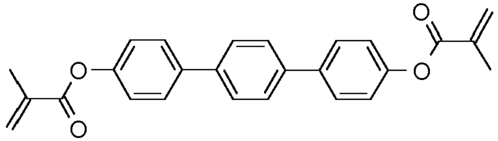<br>RM-58 | 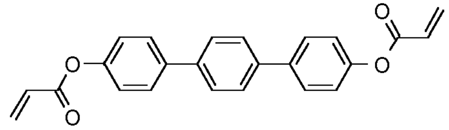<br>RM-59 |
| 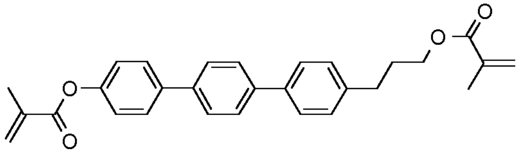<br>RM-60 | 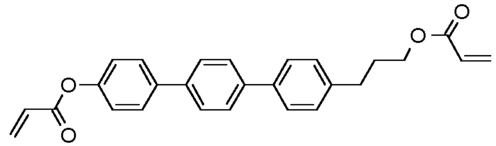<br>RM-61 |
| 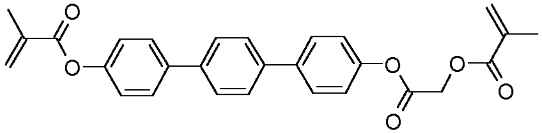<br>RM-62 | 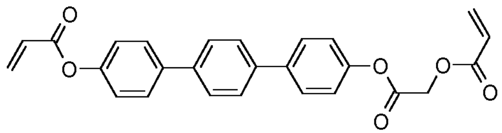<br>RM-63 |
| 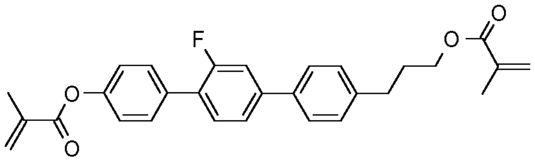<br>RM-64 | 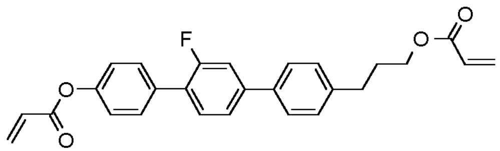<br>RM-65 |
| 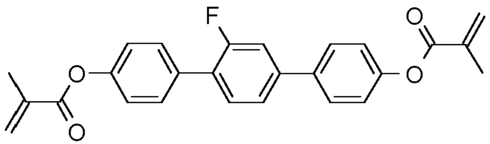<br>RM-66 | 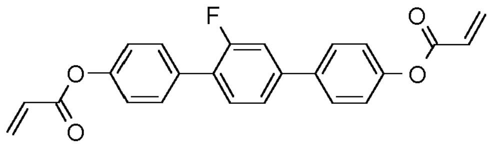<br>RM-67 |

(continued)

Table E shows illustrative reactive mesogenic compounds which can be used in the LC media in accordance with the present invention.

| | |
|---|---|
| 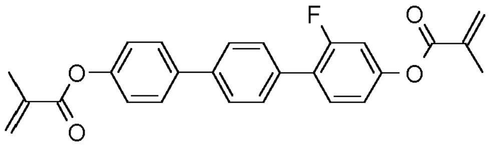 RM-68 | 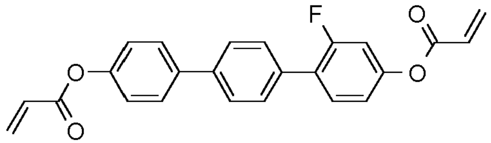 RM-69 |
| 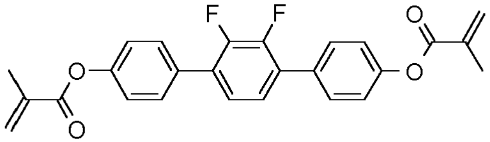 RM-70 | 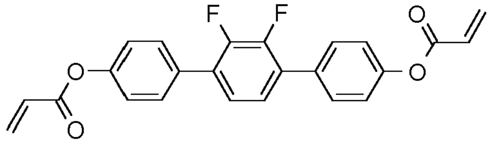 RM-71 |
| 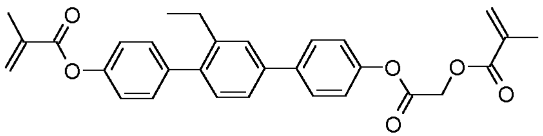 RM-72 | 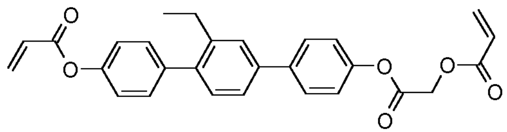 RM-73 |
| 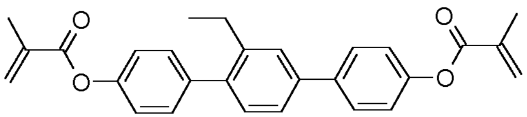 RM-74 | 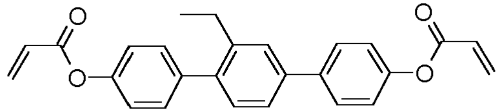 RM-75 |
| 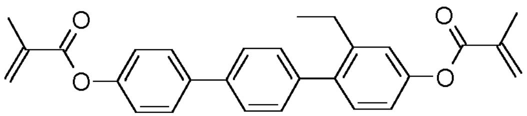 RM-76 | 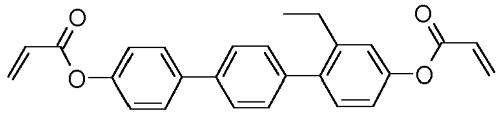 RM-77 |

(continued)

Table E shows illustrative reactive mesogenic compounds which can be used in the LC media in accordance with the present invention.

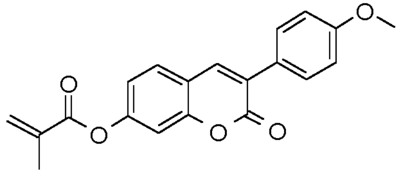

RM-78

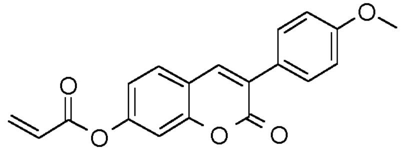

RM-79

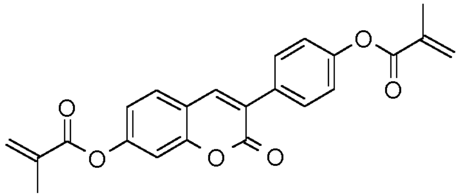

RM-80

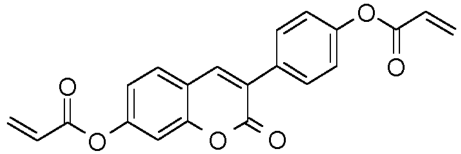

RM-81

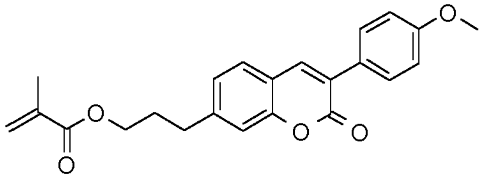

RM-82

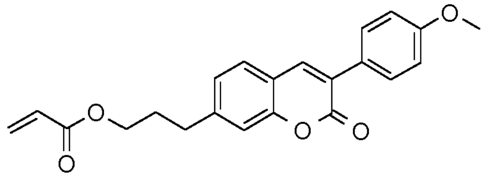

RM-83

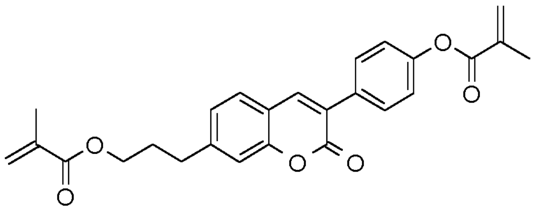

RM-84

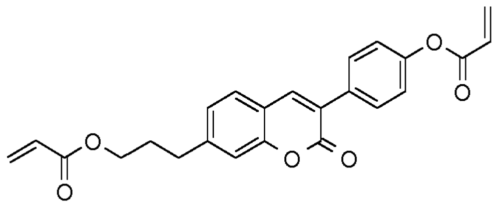

RM-85

(continued)

Table E shows illustrative reactive mesogenic compounds which can be used in the LC media in accordance with the present invention.

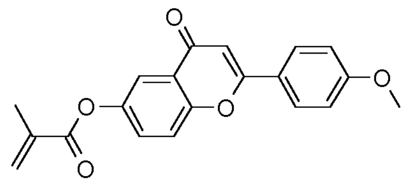

RM-86

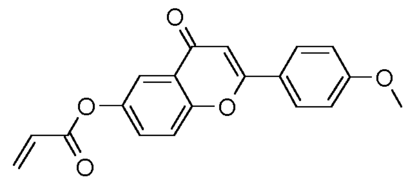

RM-87

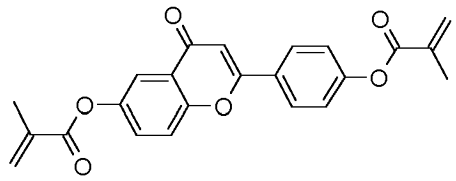

RM-88

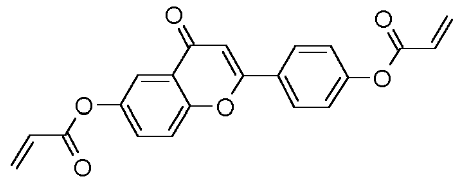

RM-89

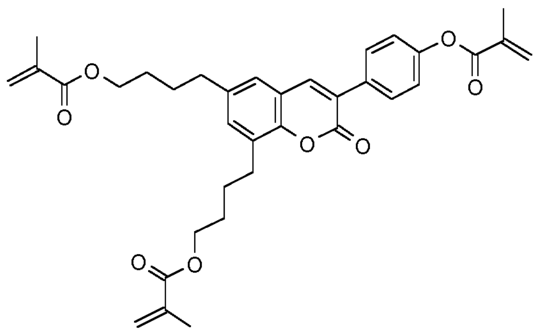

RM-90

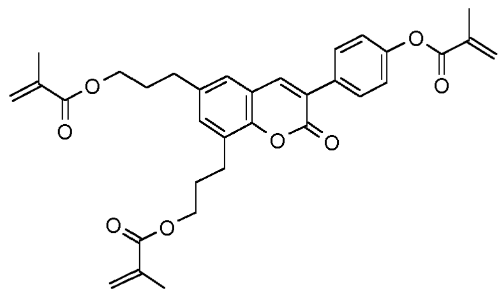

RM-91

(continued)

Table E shows illustrative reactive mesogenic compounds which can be used in the LC media in accordance with the present invention.

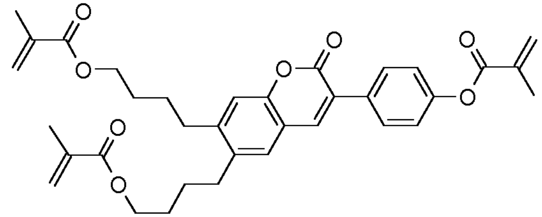

RM-92

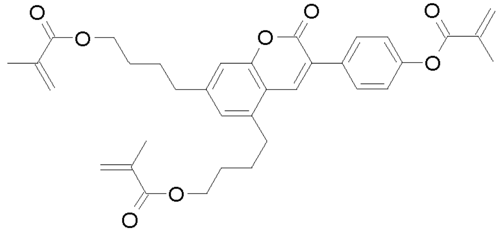

RM-93

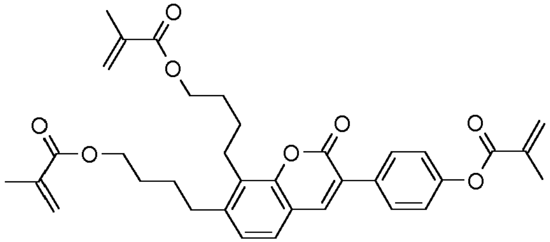

RM-94

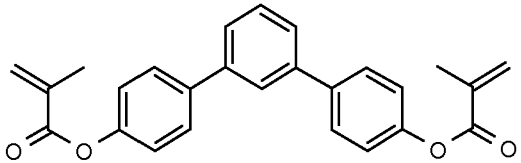

RM-95

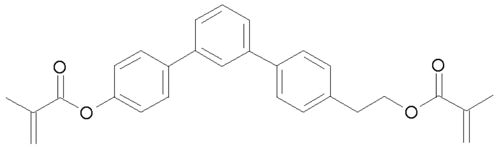

RM-96

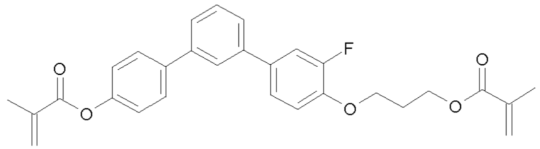

RM-97

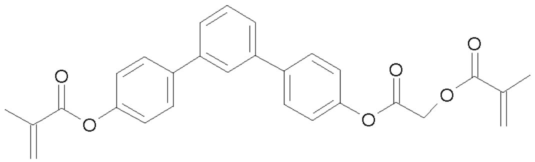

RM-98

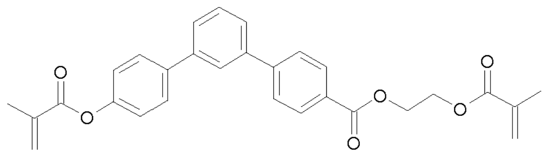

RM-99

(continued)

Table E shows illustrative reactive mesogenic compounds which can be used in the LC media in accordance with the present invention.

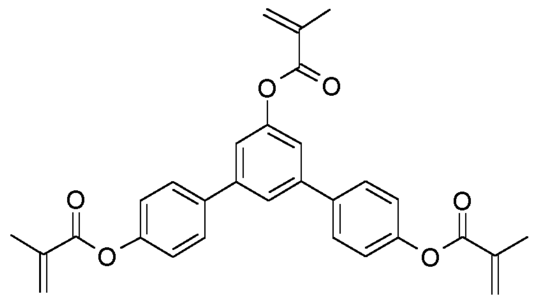

RM-100

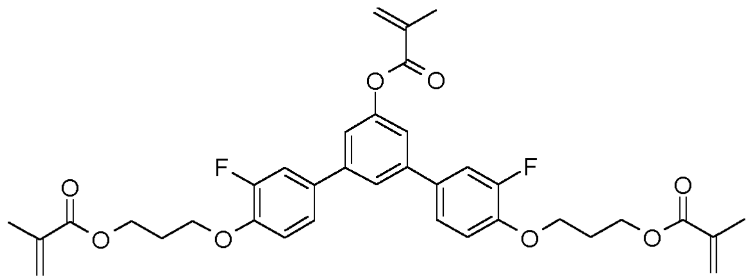

RM-101

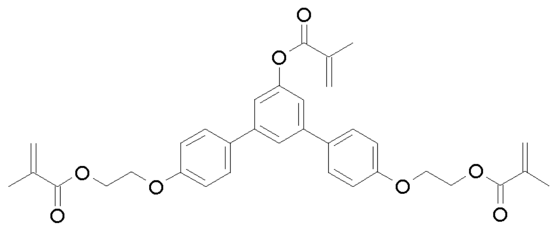

RM-102

(continued)

Table E shows illustrative reactive mesogenic compounds which can be used in the LC media in accordance with the present invention.

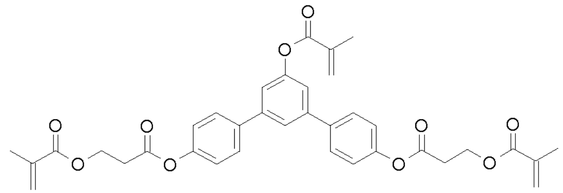

RM-103

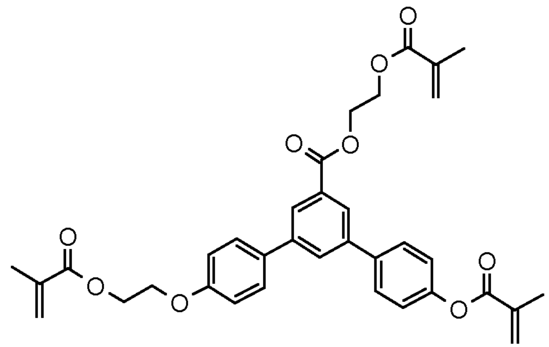

RM-104

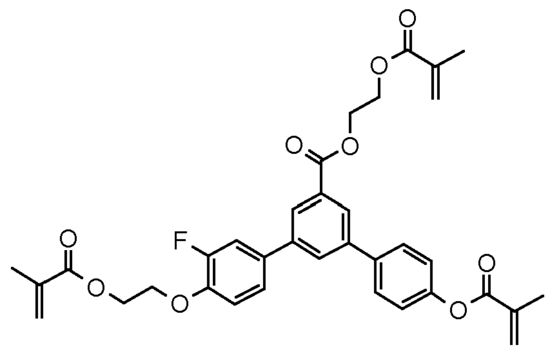

RM-105

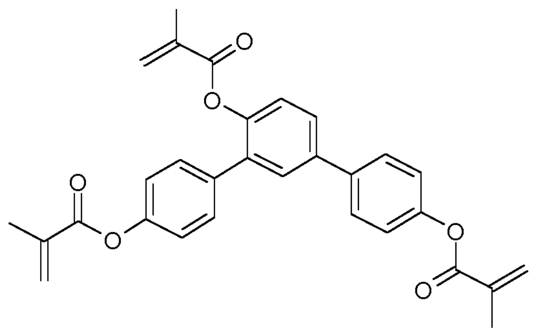

RM-106

(continued)

Table E shows illustrative reactive mesogenic compounds which can be used in the LC media in accordance with the present invention.

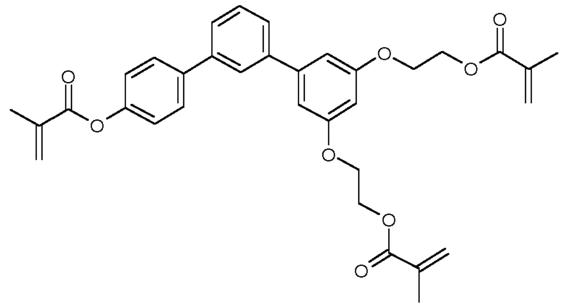

RM-107

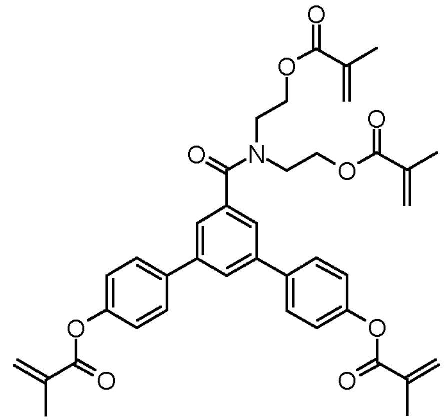

RM-108

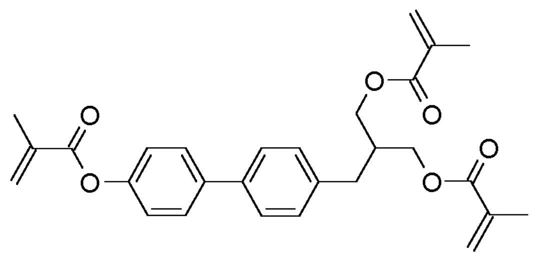

RM-109

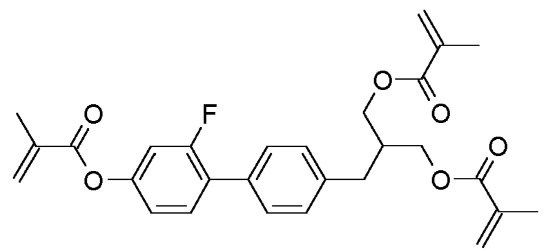

RM-110

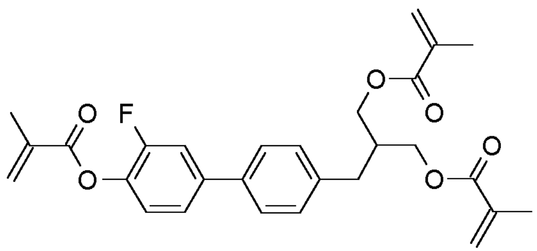

RM-111

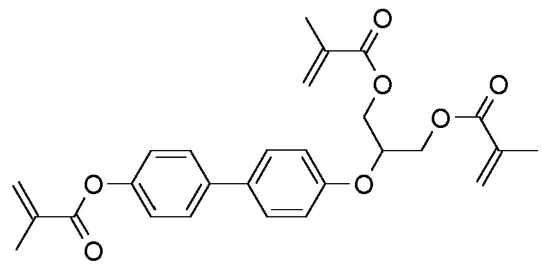

RM-112

(continued)

Table E shows illustrative reactive mesogenic compounds which can be used in the LC media in accordance with the present invention.

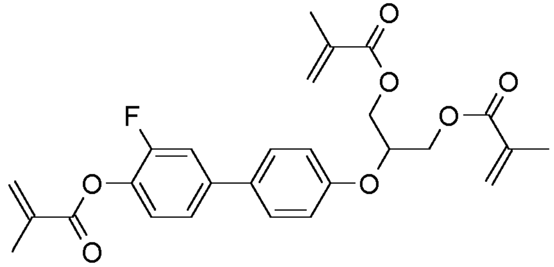

RM-113

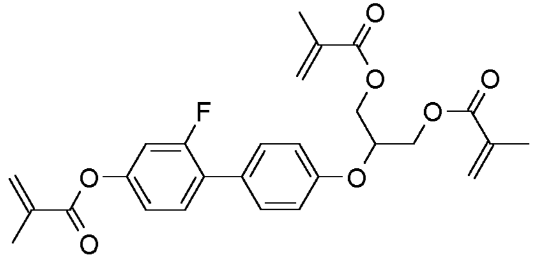

RM-114

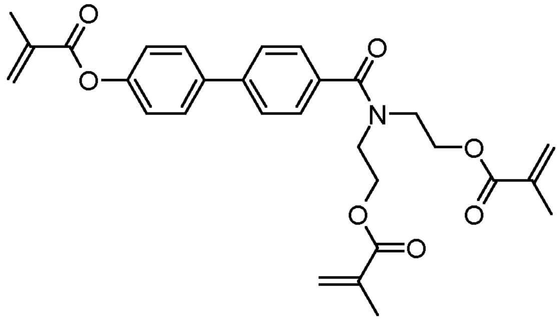

RM-115

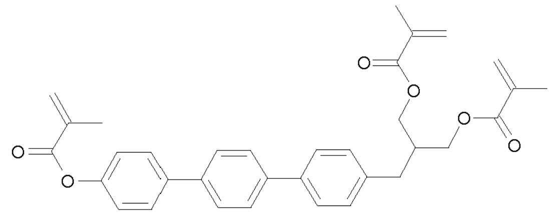

RM-116

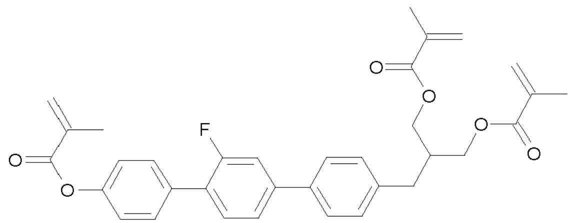

RM-117

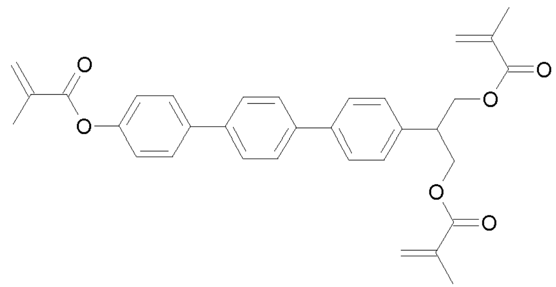

RM-118

(continued)

Table E shows illustrative reactive mesogenic compounds which can be used in the LC media in accordance with the present invention.

| | |
|---|---|
| 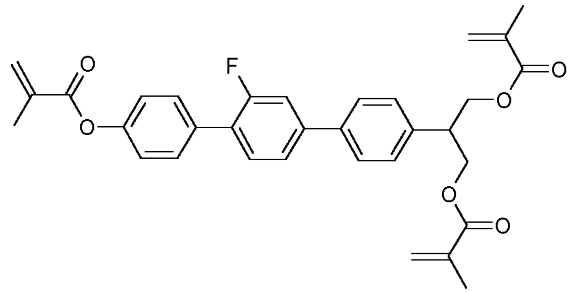<br>RM-119 | 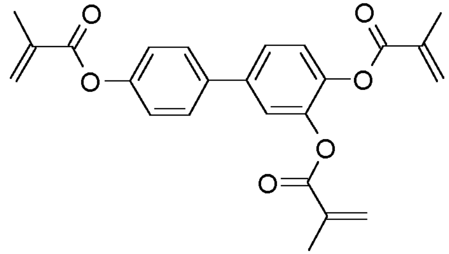<br>RM-120 |
| 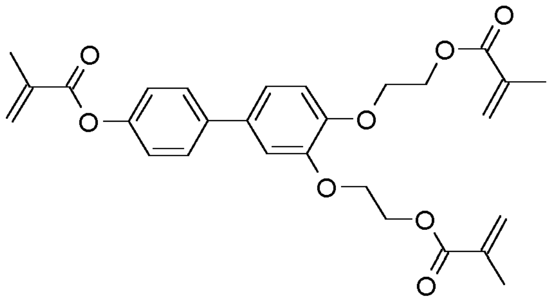<br>RM-121 | 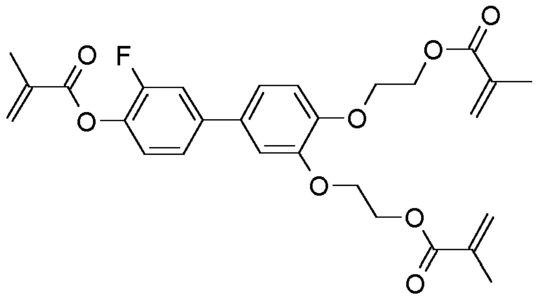<br>RM-122 |
| 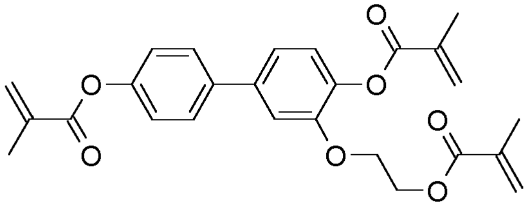<br>RM-123 | 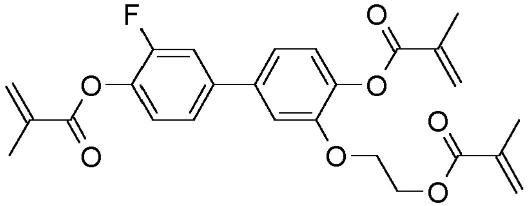<br>RM-124 |

(continued)

Table E shows illustrative reactive mesogenic compounds which can be used in the LC media in accordance with the present invention.

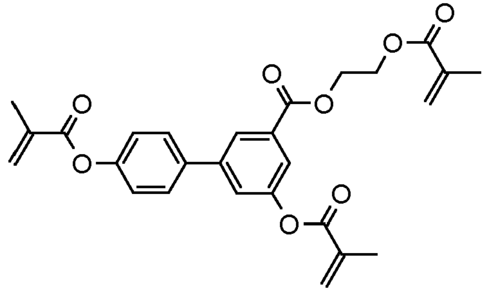

RM-125

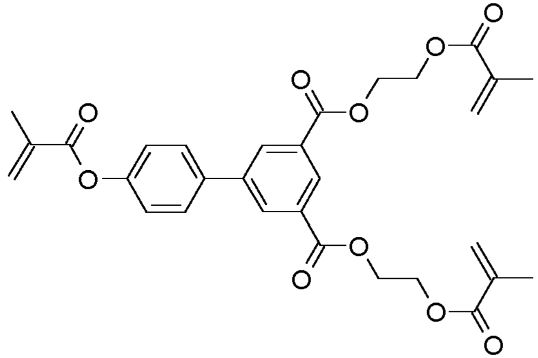

RM-126

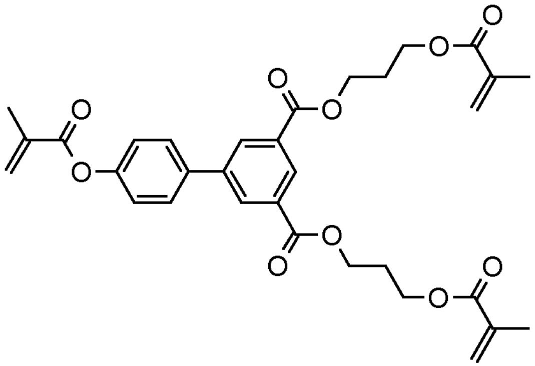

RM-127

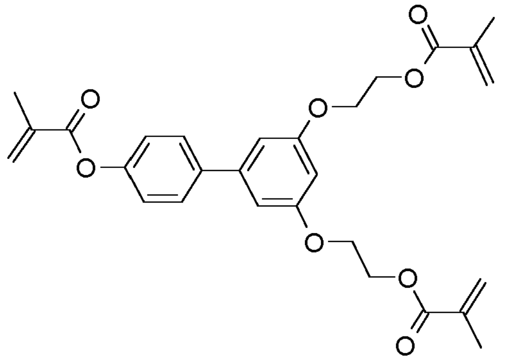

RM-128

(continued)

Table E shows illustrative reactive mesogenic compounds which can be used in the LC media in accordance with the present invention.

| | |
|---|---|
| 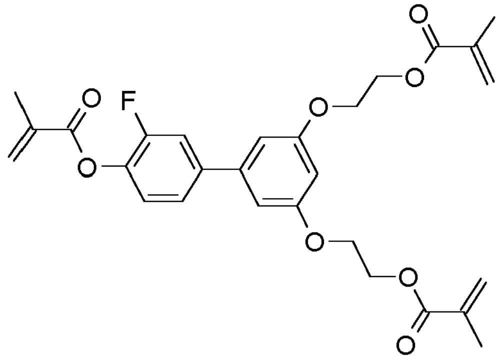 | 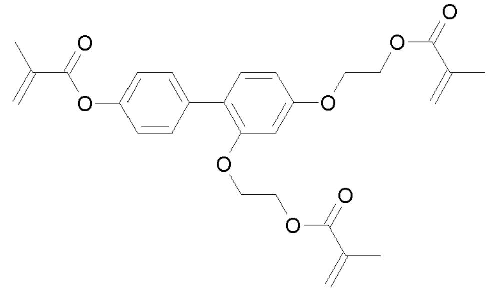 |
| RM-129 | RM-130 |
| 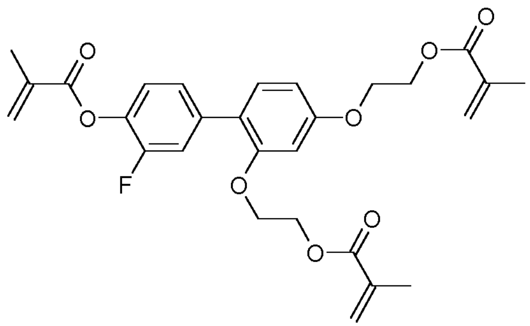 | 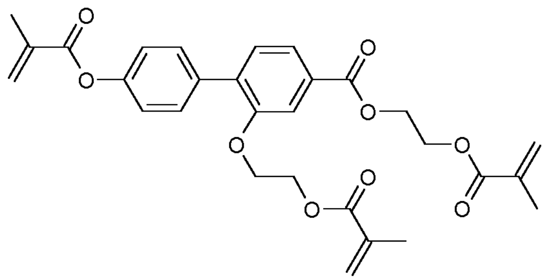 |
| RM-131 | RM-132 |
| 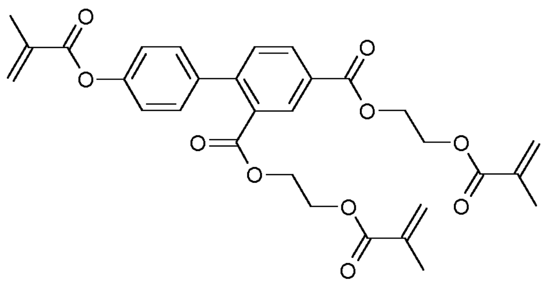 | 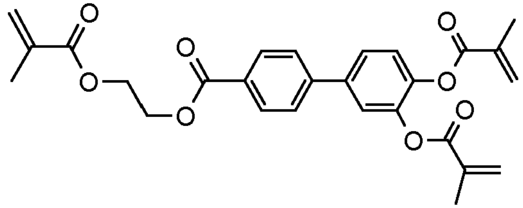 |
| RM-133 | RM-134 |

(continued)

Table E shows illustrative reactive mesogenic compounds which can be used in the LC media in accordance with the present invention.

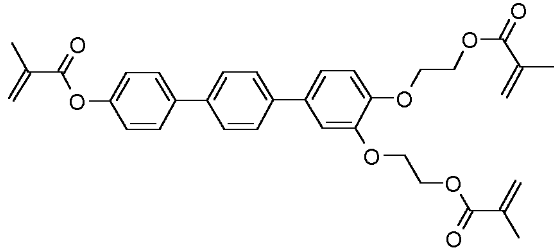

RM-135

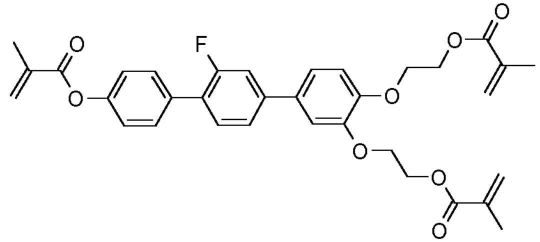

RM-136

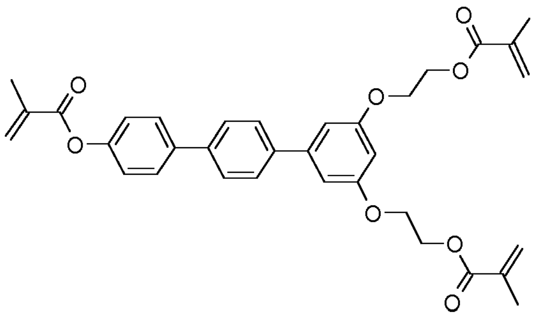

RM-137

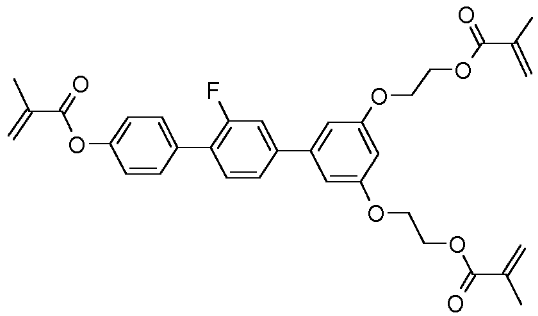

RM-138

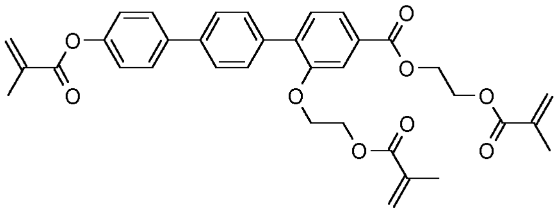

RM-139

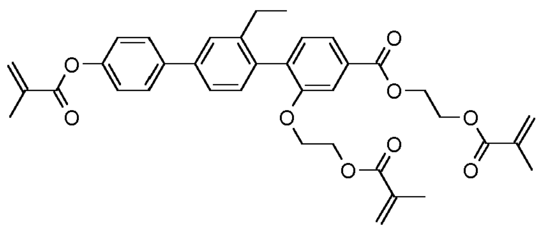

RM-140

(continued)

Table E shows illustrative reactive mesogenic compounds which can be used in the LC media in accordance with the present invention.

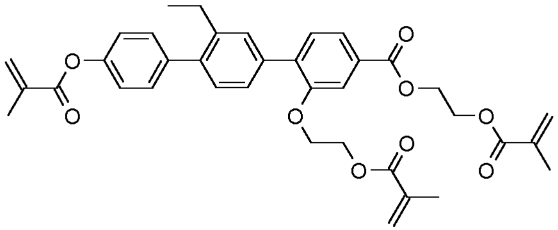

RM-141

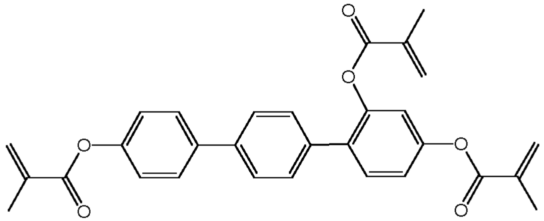

RM-142

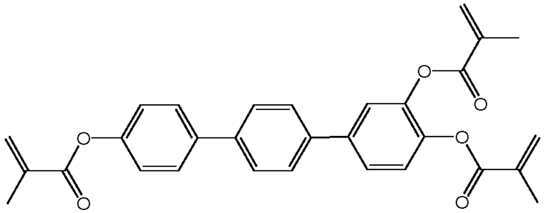

RM-143

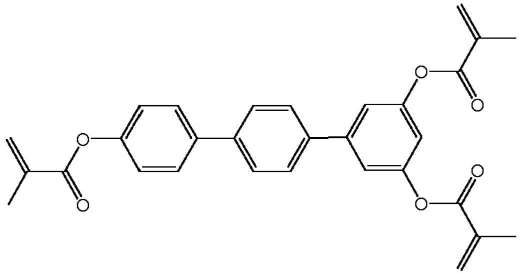

RM-144

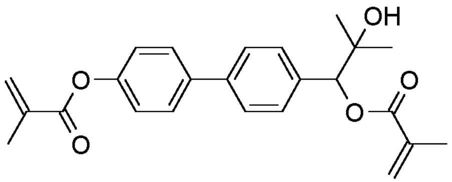

RM-145

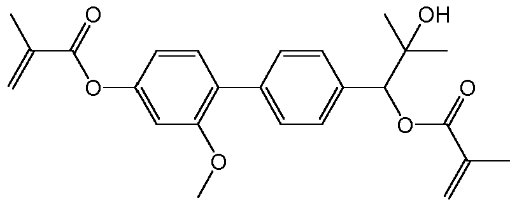

RM-146

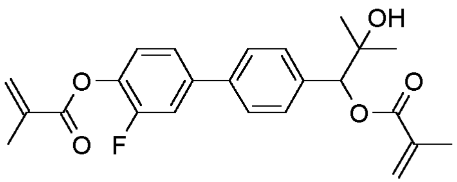

RM-147

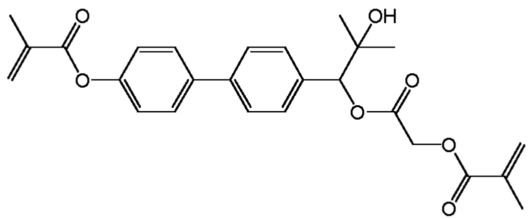

RM-148

(continued)

Table E shows illustrative reactive mesogenic compounds which can be used in the LC media in accordance with the present invention.

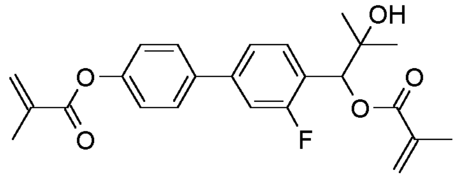

RM-149

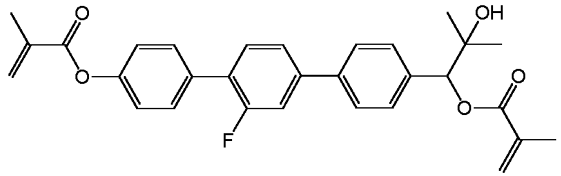

RM-150

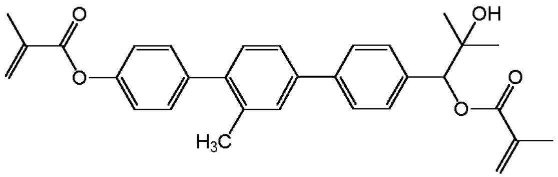

RM-151

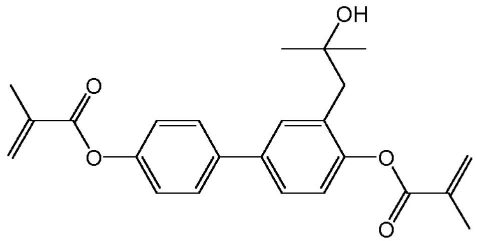

RM-152

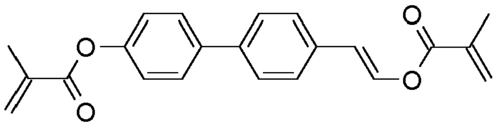

RM-153

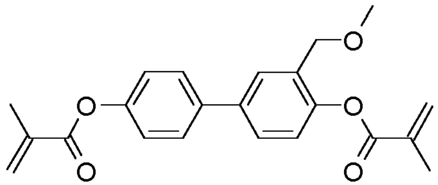

RM-154

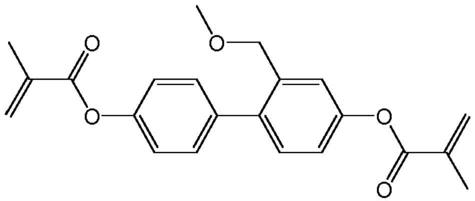

RM-155

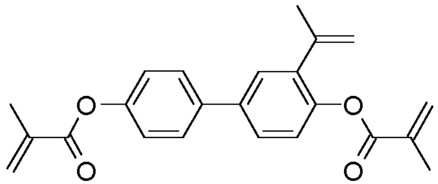

RM-156

(continued)

Table E shows illustrative reactive mesogenic compounds which can be used in the LC media in accordance with the present invention.

| | |
|---|---|
| 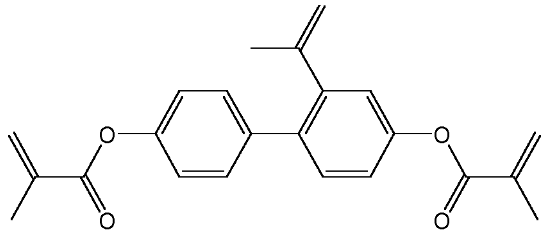 | 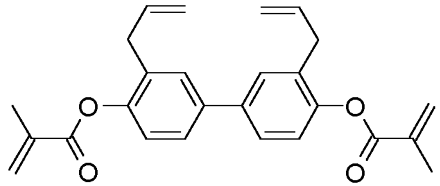 |
| RM-157 | RM-158 |
| 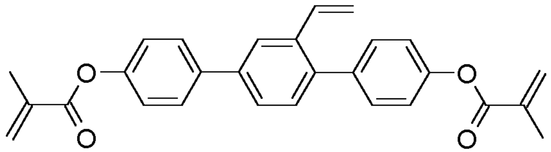 | 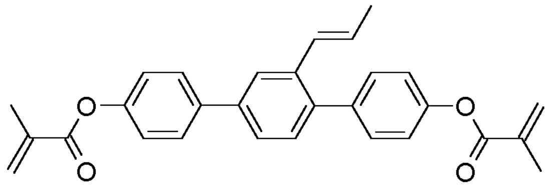 |
| RM-159 | RM-160 |
| 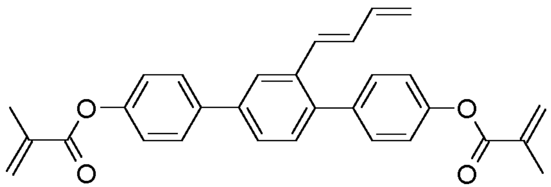 | 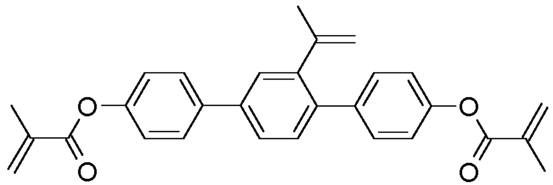 |
| RM-161 | RM-162 |
| 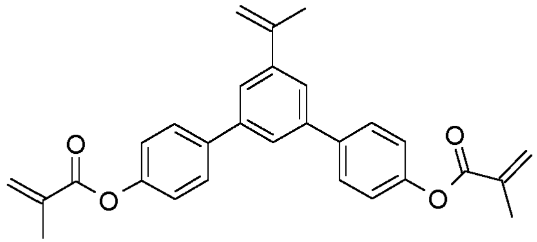 | 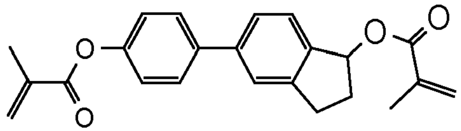 |
| RM-163 | RM-164 |

(continued)

Table E shows illustrative reactive mesogenic compounds which can be used in the LC media in accordance with the present invention.

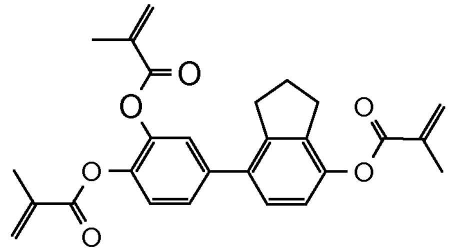

RM-165

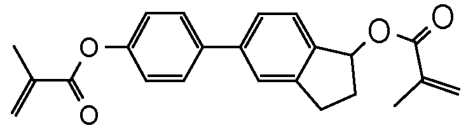

RM-166

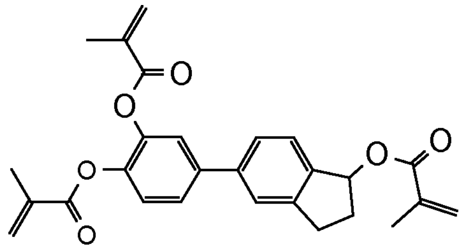

RM-167

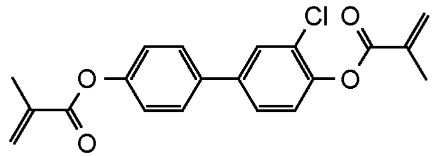

RM-168

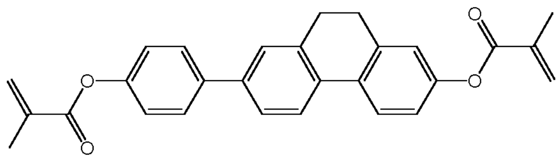

RM-169

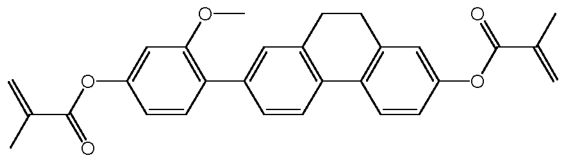

RM-170

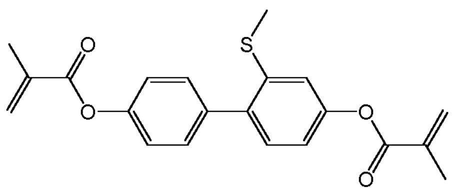

RM-171

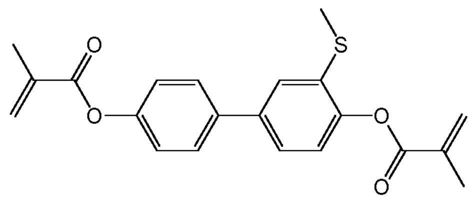

RM-172

(continued)

Table E shows illustrative reactive mesogenic compounds which can be used in the LC media in accordance with the present invention.

| | |
|---|---|
| 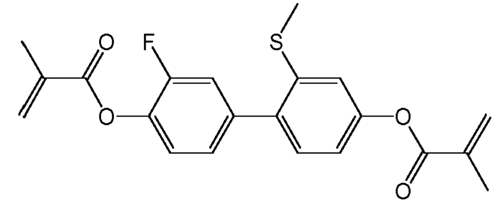<br>RM-173 | 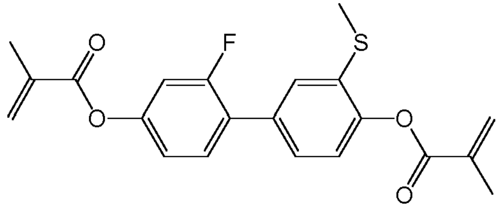<br>RM-174 |
| 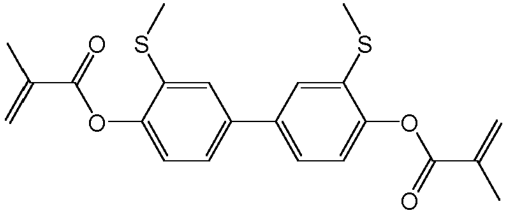<br>RM-175 | 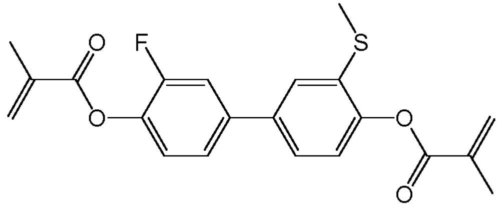<br>RM-176 |
| 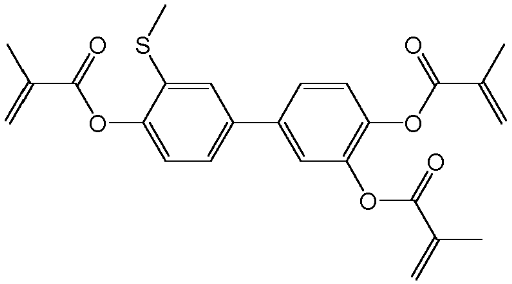<br>RM-177 | 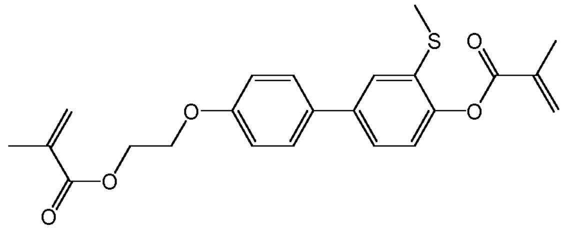<br>RM-178 |
| 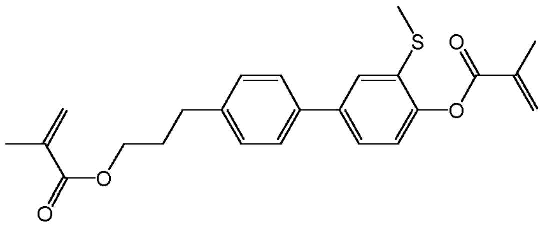<br>RM-179 | 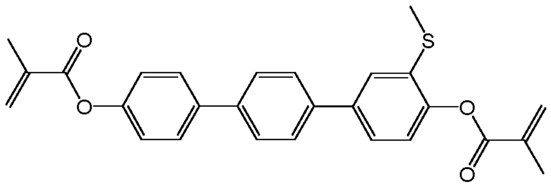<br>RM-180 |

(continued)

Table E shows illustrative reactive mesogenic compounds which can be used in the LC media in accordance with the present invention.

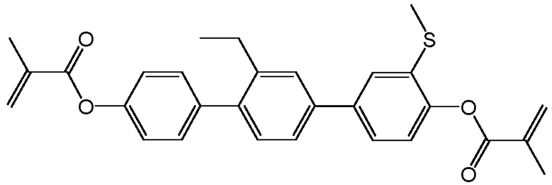

RM-181

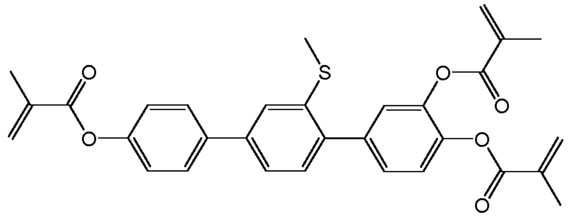

RM-182

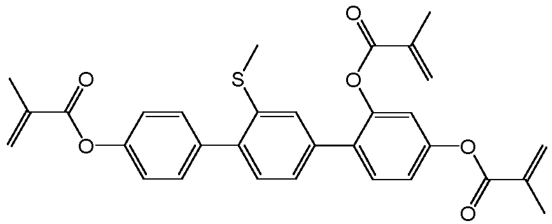

RM-183

In a preferred embodiment, the mixtures according to the invention comprise one or more polymerizable compounds, preferably selected from the polymerizable compounds of the formulae RM-1 to RM-182. Of these, compounds RM-1, RM-4, RM-8, RM-17, RM-19, RM-35, RM-37, RM-39, RM-40, RM-41, RM-48, RM-52, RM-54, RM-57, RM-58, RM-64, RM-74, RM-76, RM-88, RM-91, RM-102, RM-103, RM-109, RM-116, RM-117, RM-120, RM-121, RM-122, RM-139, RM-140, RM-142, RM-143, RM-145, RM-146, RM-147, RM-149, RM-156 to RM-163, RM-169, RM-170 and RM-171 to RM-183 are particularly preferred.

## Examples

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

In addition, the following abbreviations and symbols are used:

| | |
|---|---|
| $V_0$ | threshold voltage, capacitive [V] at 20°C, |
| $n_e$ | extraordinary refractive index at 20°C and 589 nm, |
| $n_o$ | ordinary refractive index at 20°C and 589 nm, |
| $\Delta n$ | optical anisotropy at 20°C and 589 nm, |
| $\varepsilon\perp$ | dielectric permittivity perpendicular to the director at 20°C and 1 kHz, |
| $\varepsilon_{\parallel}$ | dielectric permittivity parallel to the director at 20°C and 1 kHz, |
| $\Delta\varepsilon$ | dielectric anisotropy at 20°C and 1 kHz, |
| cl.p., T(N,I) | clearing point [°C], |
| $\gamma_1$ | rotational viscosity at 20°C [mPa·s], |
| $K_1$ | elastic constant, "splay" deformation at 20°C [pN], |
| $K_2$ | elastic constant, "twist" deformation at 20°C [pN], |
| $K_3$ | elastic constant, "bend" deformation at 20°C [pN] |
| $K_{av}$ | average eleastic constant at 20°C [pN] defined here as $$K_{av.} \equiv (^3/_2\, K_1 + K_3) / 3 \approx (K_1 + K_2 + K_3) / 3 \;,$$ |
| LTS | low-temperature stability of the phase, determined in test cells, |
| VHR | voltage holding ratio. |

Unless explicitly noted otherwise, all concentrations in the present application are quoted in per cent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and $\Delta n$ is determined at 589 nm and $\Delta\varepsilon$ at 1 kHz, unless explicitly indicated otherwise in each case.

The term "threshold voltage" for the present invention relates to the capacitive threshold ($V_0$), also known as the Freedericks threshold, unless explicitly indicated otherwise. In the examples, the optical threshold may also, as generally usual, be quoted for 10% relative contrast ($V_{10}$).

Unless stated otherwise, the process of polymerizing the polymerizable compounds in the PSA displays as described above and below is carried out at a temperature where the LC medium exhibits a liquid crystal phase, preferably a nematic phase, and most preferably is carried out at room temperature. The polymerizable compounds are polymerized in the display or a test cell by irradiation with UV light of defined intensity for a prespecified time, with a voltage simultaneously being applied to the display (usually 10 V to 30 V alternating current, 1 kHz).

Unless stated otherwise, methods of preparing test cells and measuring their electrooptical and other properties are carried out by the methods as described hereinafter or in analogy thereto.

Example 1

The nematic LC mixture N1 is formulated as follows.

| | | | |
|---|---|---|---|
| CC-3-V | 43.0 | cl. p. [°C]: | 82 |
| CC-3-V1 | 8.0 | $\Delta n$ [589 nm, 20°C]: | 0.1356 |
| CLP-(c5)-T | 8.5 | $\varepsilon_{\parallel}$ [1 kHz, 20°C]: | 5.7 |
| DLGU-3-F | 5.0 | $\varepsilon_{\perp}$ [1 kHz, 20°C]: | 2.7 |
| PGP-1-2V | 7.5 | $\Delta\varepsilon$ [1 kHz, 20°C]: | 3.0 |
| PGP-2-2V | 8.0 | $K_1$ [pN, 20°C]: | 19.0 |
| PGUQU-3-F | 1.5 | $K_3$ [pN, 20°C]: | 15.2 |
| PP-1-2V1 | 7.5 | $K_{avg}$ [pN, 20°C]: | 14.5 |
| PPGU-3-F | 1.0 | $V_0$ [V, 20°C]: | 2.65 |
| PUS-3-2 | 10.0 | $\gamma_1$ [mPa s, 20°C]: | 59 |
| Σ | 100.0 | | |

To the mixture N1 are added 150 ppm of the stabiliser ST-3a-1.

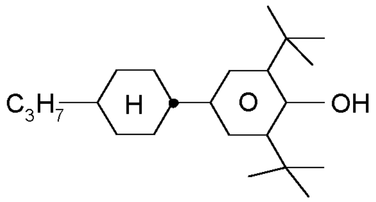

ST-3a-1

Example 2

The nematic LC mixture N2 is formulated as follows.

| | | | |
|---|---|---|---|
| CC-3-V | 43.0 | cl. p. [°C]: | 75 |
| LP-(c5)-T | 8.0 | $\Delta n$ [589 nm, 20°C]: | 0.1403 |
| CLP-3-T | 8.5 | $\varepsilon_{\parallel}$ [1 kHz, 20°C]: | 6.8 |
| DLGU-3-F | 5.0 | $\varepsilon_{\perp}$ [1 kHz, 20°C]: | 2.8 |
| PGP-1-2V | 7.5 | $\Delta\varepsilon$ [1 kHz, 20°C]: | 4.0 |
| PGP-2-2V | 8.0 | $K_1$ [pN, 20°C]: | 21.2 |
| PGUQU-3-F | 1.5 | $K_3$ [pN, 20°C]: | 16.4 |
| PP-1-2V1 | 7.5 | $K_{avg}$ [pN, 20°C]: | 16.1 |
| PPGU-3-F | 1.0 | $V_0$ [V, 20°C]: | 2.42 |
| PUS-3-2 | 10.0 | $\gamma_1$ [mPa s, 20°C]: | 61 |
| Σ | 100.0 | LTS bulk [h, -20°C]: | 72 |
| | | LTS bulk [h, -30°C]: | 0 |

To the mixture N2 are added 150 ppm of the stabiliser ST-3b-1.

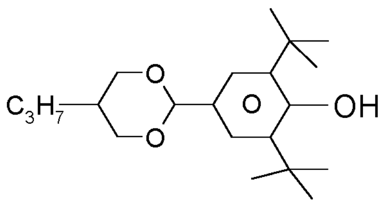

ST-3b-1

Example 3

The nematic LC mixture N3 is formulated as follows.

| | | | |
|---|---|---|---|
| CC-3-V | 43.0 | cl. p. [°C]: | 78 |
| CC-3-V1 | 4.0 | Δn [589 nm, 20°C]: | 0.1375 |
| CLP-3-T | 8.5 | $\varepsilon_{\parallel}$ [1 kHz, 20°C]: | 6.2 |
| DLGU-3-F | 5.0 | $\varepsilon_{\perp}$ [1 kHz, 20°C]: | 2.7 |
| PGP-1-2V | 7.5 | Δε [1 kHz, 20°C]: | 3.5 |
| PGP-2-2V | 8.0 | $K_1$ [pN, 20°C]: | 19.3 |
| PGUQU-3-F | 1.5 | $K_3$ [pN, 20°C]: | 15.0 |
| PP-1-2V1 | 7.5 | $K_{avg}$ [pN, 20°C]: | 14.7 |
| PPGU-3-F | 1.0 | $V_0$ [V, 20°C]: | 2.48 |
| PUS-3-2 | 10.0 | $\gamma_1$ [mPa s, 20°C]: | 57 |
| LP-(c5)-T | 4.0 | LTS bulk [h, -20°C]: | 72 |
| Σ | 100.0 | LTS bulk [h, -30°C]: | 0 |

To the mixture N3 are added 150 ppm of the stabiliser ST-8-1.

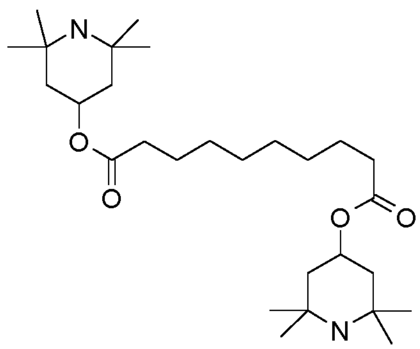

ST-8-1

Example 4

The nematic LC mixture N4 is formulated as follows.

| | | | |
|---|---|---|---|
| CC-3-V | 43.0 | cl. p. [°C]: | 78.5 |
| CC-3-V1 | 4.0 | Δn [589 nm, 20°C]: | 0.1378 |
| CLP-3-T | 4.5 | $\varepsilon_{\parallel}$ [1 kHz, 20°C]: | 6.2 |
| DLGU-3-F | 5.0 | $\varepsilon_{\perp}$ [1 kHz, 20°C]: | 2.7 |
| PGP-1-2V | 7.5 | Δε [1 kHz, 20°C]: | 3.5 |
| PGP-2-2V | 8.0 | $K_1$ [pN, 20°C]: | 19.8 |
| PGUQU-3-F | 1.5 | $K_3$ [pN, 20°C]: | 15.2 |
| PP-1-2V1 | 7.5 | $K_{avg}$ [pN, 20°C]: | 15.0 |
| PPGU-3-F | 1.0 | $V_0$ [V, 20°C]: | 2.51 |
| PUS-3-2 | 10.0 | $\gamma_1$ [mPa s, 20°C]: | 59 |
| LP-(c5)-T | 4.0 | LTS bulk [h, -20°C]: | 72 |
| CLP-(c5)-T | 4.0 | | |
| Σ | 100.0 | | |

To the mixture N4 are added 150 ppm of the stabiliser ST-9-1.

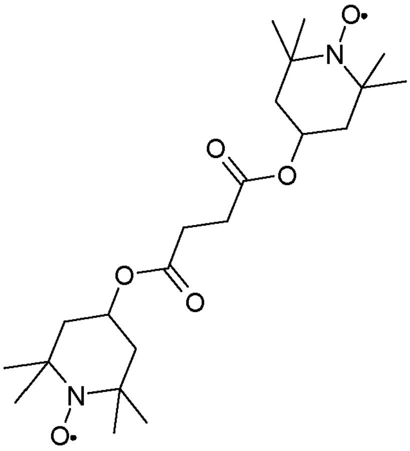

ST-9-1

Example 5

The nematic LC mixture N5 is formulated as follows.

| | | | |
|---|---|---|---|
| CC-3-V | 43.0 | cl. p. [°C]: | 76.5 |
| LP-(c5)-T | 8.0 | $\Delta n$ [589 nm, 20°C]: | 0.1416 |
| CLP-(c5)-T | 8.5 | $\varepsilon_{\parallel}$ [1 kHz, 20°C]: | 6.8 |
| DLGU-3-F | 5.0 | $\varepsilon_{\perp}$ [1 kHz, 20°C]: | 2.8 |
| PGP-1-2V | 7.5 | $\Delta\varepsilon$ [1 kHz, 20°C]: | 4.1 |
| PGP-2-2V | 8.0 | $K_1$ [pN, 20°C]: | 23.9 |
| PGUQU-3-F | 1.5 | $K_3$ [pN, 20°C]: | 18.6 |
| PP-1-2V1 | 7.5 | $K_{avg}$ [pN, 20°C]: | 18.2 |
| PPGU-3-F | 1.0 | $V_0$ [V, 20°C]: | 2.54 |
| PUS-(c5)-2 | 10.0 | $\gamma_1$ [mPa s, 20°C]: | 72 |
| Σ | 100.0 | | |

To the mixture N5 are added 150 ppm of the stabiliser ST-12.

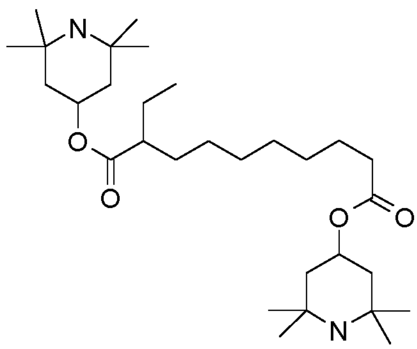

ST-12

Example 6

The nematic LC mixture N6 is formulated as follows.

| | | | |
|---|---|---|---|
| APUQU-2-F | 5.5 | cl.p. [°C]: | 83.3 |
| APUQU-3-F | 7.0 | $\Delta n$ [589 nm, 20°C]: | 0.0997 |
| CC-3-2V1 | 5.0 | $\varepsilon_{\parallel}$ [1 kHz, 20°C]: | 17.9 |
| CC-3-V | 33.5 | $\varepsilon_{\perp}$ [1 kHz, 20°C]: | 3.6 |
| CC-3-V1 | 6.0 | $\Delta\varepsilon$ [1 kHz, 20°C]: | 14.3 |

(continued)

| | | | |
|---|---|---|---|
| CCP-3-1 | 4.0 | $\gamma_1$ [mPa s, 20°C]: | 97 |
| CCQU-3-F | 9.5 | $K_1$ [pN, 20°C]: | 14.5 |
| CDUQU-3-F | 4.0 | $K_3$ [pN, 20°C]: | 15.3 |
| CLP-3-T | 2.0 | $V_0$ [V, 20°C]: | 1.06 |
| DGUQU-4-F | 6.0 | LTS bulk [h, -20°C]: | 768 |
| DPGU-4-F | 4.0 | | |
| LP-(c5)-T | 4.0 | | |
| PGUQU-3-F | 2.0 | | |
| PGUQU-4-F | 4.0 | | |
| PGUQU-5-F | 3.0 | | |
| PPGU-3-F | 0.5 | | |
| Σ | 100.0 | | |

To the mixture N6 are added 150 ppm of the stabiliser ST-3a-1.

Example 7

The nematic LC mixture N7 is formulated as follows.

| | | | |
|---|---|---|---|
| CC-3-2V1 | 4.0 | cl.p. [°C]: | 78.3 |
| CC-3-V | 33.5 | Δn [589 nm, 20°C]: | 0.1343 |
| CC-3-V1 | 6.0 | $\varepsilon_{\parallel}$ [1 kHz, 20°C]: | 6.1 |
| CCP-V-1 | 8.0 | $\varepsilon_{\perp}$ [1 kHz, 20°C]: | 2.6 |
| CLP-3-T | 7.0 | Δε [1 kHz, 20°C]: | 3.5 |
| LP-(c5)-T | 4.0 | $\gamma_1$ [mPa s, 20°C]: | 61 |
| PGP-1-2V | 8.0 | $K_1$ [pN, 20°C]: | 18.6 |
| PGUQU-3-F | 3.0 | $K_3$ [pN, 20°C]: | 16.0 |
| PGUQU-4-F | 2.0 | $V_0$ [V, 20°C]: | 2.43 |
| PGUQU-5-F | 3.0 | LTS bulk [h, -20°C] | 1000 |
| PP-1-2V1 | 9.5 | | |
| PUS-3-2 | 12.0 | | |
| Σ | 100.0 | | |

To the mixture N7 are added 150 ppm of the stabiliser ST-3a-1.

## Claims

1. An LC medium with positive dielectric anisotropy Δε comprising one or more compounds of formula I

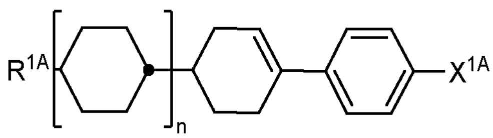

I

in which the individual radicals, on each occurrence identically or differently, and each, independently of one another, have the following meaning:

$R^{1A}$ an alkyl or alkoxy group having 1 to 12, preferably 1 to 6 C atoms, wherein one or more non-adjacent $CH_2$-groups are replaced by cyclopropyl or cyclopentyl,

$X^{1A}$ F, Cl, a halogenated alkyl radical, a halogenated alkenyl radical, a halogenated alkoxy radical or a halogenated alkenyloxy radical having up to 6 C atoms,

n 0 or 1.

2. The LC medium according to Claim 1, **characterized in that** it comprises one or more compounds of formula I selected from the following subformulae:

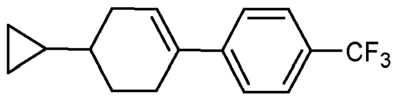

I1

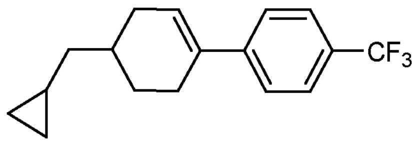

I2

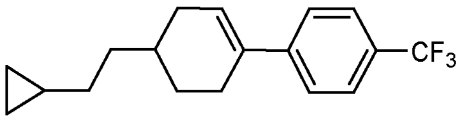

I3

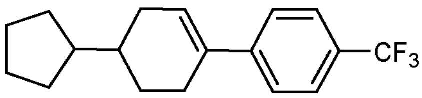

I5

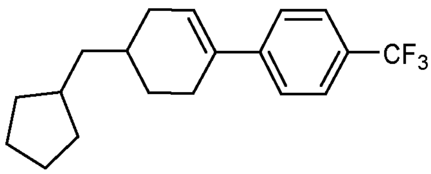

I6

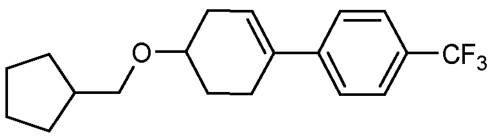

I7

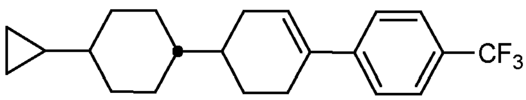

I8

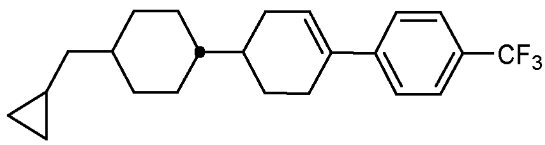

I9

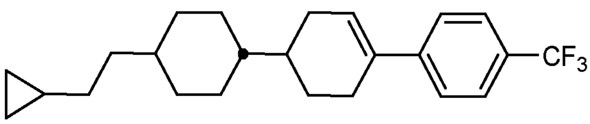

I10

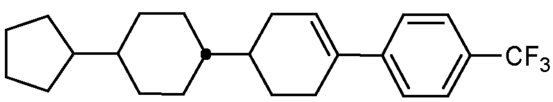

I12

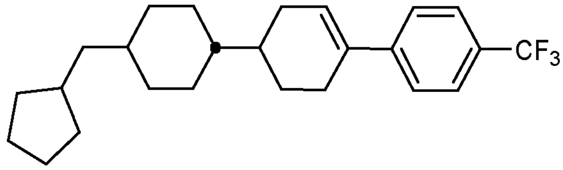

I13

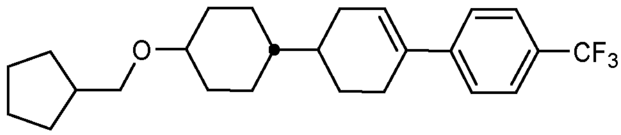

I14

3. The LC medium according to Claim 1 or 2, **characterized in that** it comprises one or more compounds selected from formulae II and III:

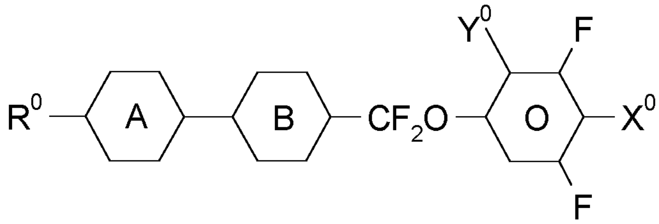

II

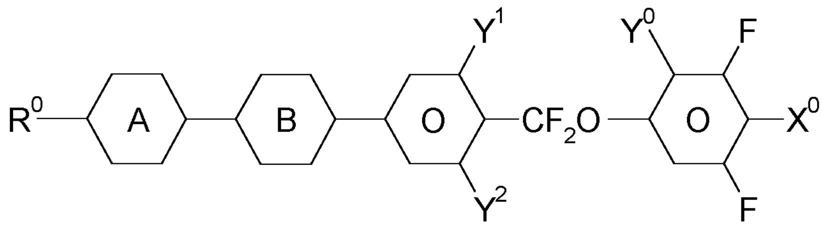

III

wherein the individual radicals, independently of each other and on each occurrence identically or differently, have the following meanings

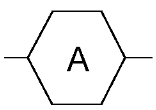

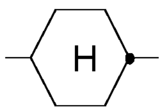 , 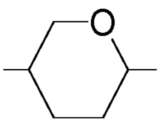 , 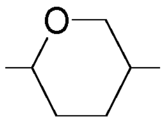 ,

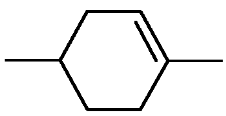 , 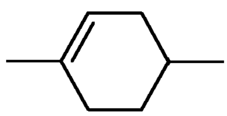 ,

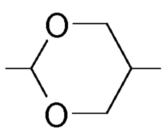 , 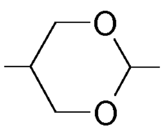 or 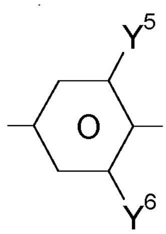 ,

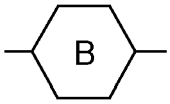 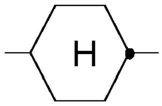 , 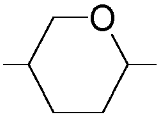 , 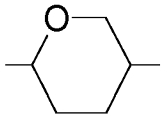 ,

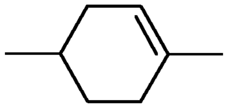 , 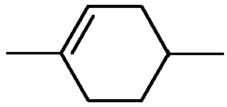 ,

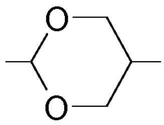 , 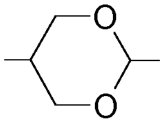 or 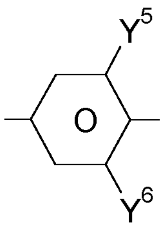 ,

$R^0$ H, an alkyl, alkoxy or alkenyl radical having up to 15 C atoms which is unsubstituted or monosubstituted by F, Cl, CN or $CF_3$ and where, in addition, one or more $CH_2$ groups in these radicals may be replaced by -O-, -S-,-C≡C-, $-CF_2O-$, $-OCF_2-$, -OC-O-, -O-CO-

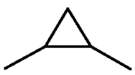 , 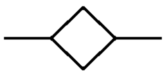 , 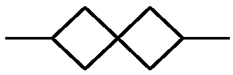 , 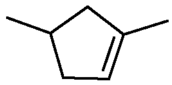 , 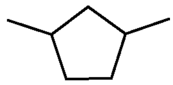

in such a way that O- and/or S-atoms are not linked directly to one another,
$X^0$ F, Cl, CN, $SF_5$, SCN, NCS, a halogenated alkyl radical, a halogenated alkenyl radical, a halogenated alkoxy radical or a halogenated alkenyloxy radical having up to 6 C atoms,
$Y^{1,2,5,6}$ H or F,
$Y^0$ H or $CH_3$.

4. The LC medium according to any one of Claims 1 to 3, **characterized in that** it comprises one or more compounds selected from the following formulae:

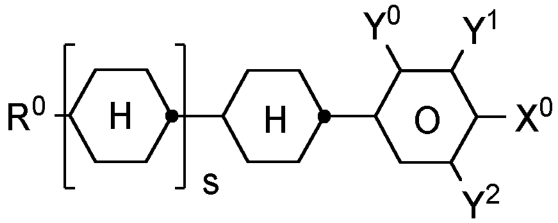

IV

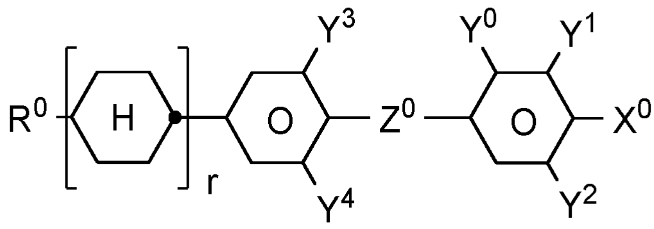

V

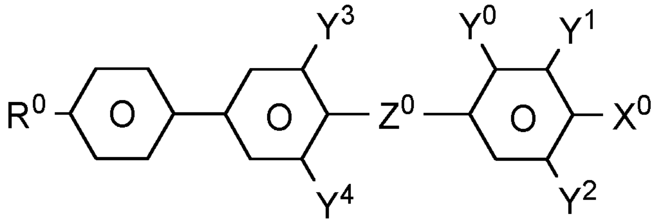

VI

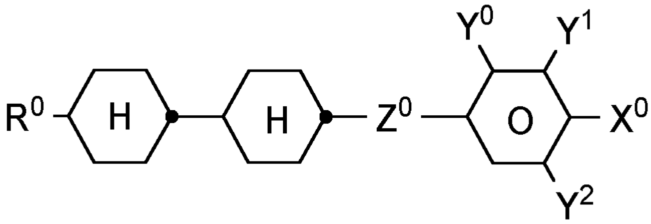

VII

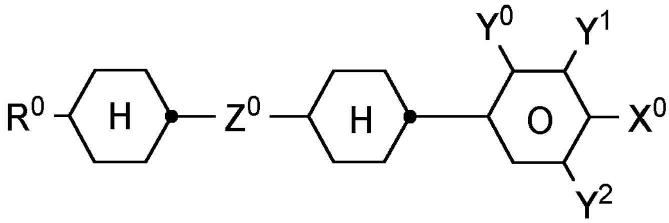

VIII

in which the individual radicals, on each occurrence identically or differently, and each, independently of one another, have the following meaning:

$R^0$, $X^0$, $Y^{1,2}$, $Y^0$ one of the meanings given in Claim 3,
$Z^0$ -CO-O-, -O-CO-, $-CF_2O-$ , $-OCF_2-$, $-CH_2O-$, $-OCH_2-$, $-CH_2-$, - $CH_2CH_2-$, $-(CH_2)_4-$, $-CH=CH-CH_2O-$, $-C_2F_4-$, $-CH_2CF_2-$, $-CF_2CH_2$ -, -CF=CF-, -CH=CF-, -CF=CH-, -CH=CH-, -C≡C- or a single bond,
$Y^{3,4}$ H or F,
r 0 or 1, and
s 0 or 1.

5. The LC medium according to any one of Claims 1 to 4, **characterized in that** it comprises one or more compounds of formula IX:

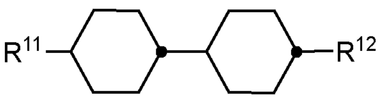

IX

in which the individual radicals, on each occurrence identically or differently, and each, independently of one another, have the following meaning

$R^{11}$ an unsubstituted alkyl radical having 1 to 7 C atoms where, in addition, one or more $CH_2$ groups may be replaced by

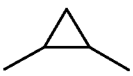 , 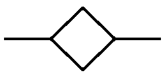 , 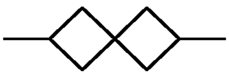 , 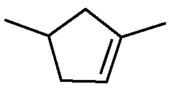 , 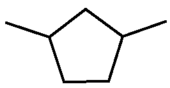

or an unsubstituted alkenyl radical having 2 to 7 C atoms,
$R^{12}$ an unsubstituted alkyl radical having 1 to 7 C atoms, an unsubstituted alkoxy radical having 1 to 6 C atoms or an unsubstituted alkenyl radical having 2 to 7 C atoms.

6. The LC medium according to any one of Claims 1 to 5, **characterized in that** it comprises one or more compounds

selected from the following formulae:

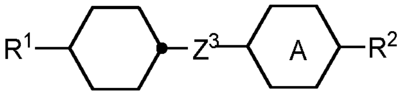

X

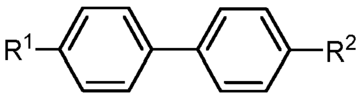

XI

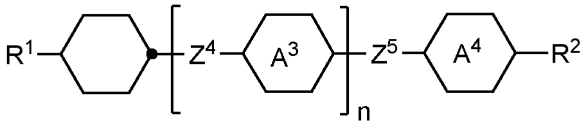

XII

in which the individual radicals, on each occurrence identically or differ- ently, and each, independently of one another, have the following meaning

$R^1$, $R^2$ H, an alkyl, alkoxy or alkenyl radical having up to 15 C atoms which is unsubstituted, monosubstituted by F, Cl, CN or $CF_3$ or at least monosubstituted by halogen, where, in addition, one or more $CH_2$ groups in these radicals may be replaced by -O-, -S-,-C≡C-, - $-CF_2O-$, $-OCF_2-$, -OC-O-, -O-CO-

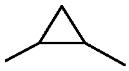,
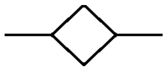,
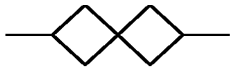,
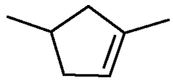,
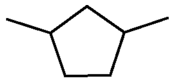

in such a way that O atoms are not linked directly to one another,

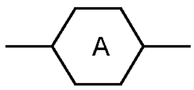

denotes

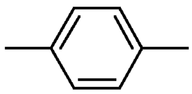,
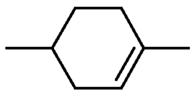,
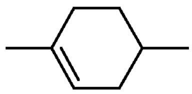,

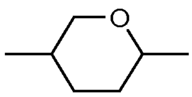 or 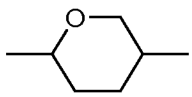,

$Z^4$, $Z^5$ a single bond, $-CH_2CH_2-$, -CH=CH-, $-CF_2O-$, $-OCF_2-$, $-CH_2O-$, $-OCH_2-$, -COO-, -OCO-, $-C_2F_4-$, $-C_4H_8-$ or -CF=CF-, , identically or differently, denote

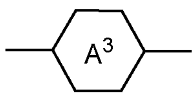, 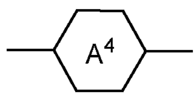

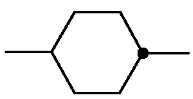,
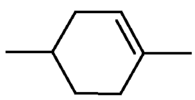,
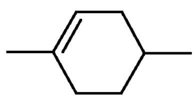,

, 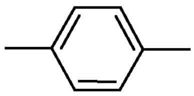 , 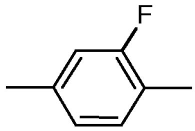 or 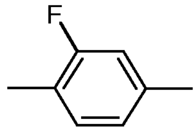

n 1 or 2.

**7.** The LC medium according to any one of Claims 1 to 6, **characterized in that** it comprises one or more compounds of formula XIII:

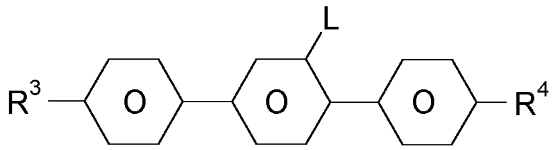

XIII

in which L is H or F, and $R^3$ and $R^4$ have independently of each other one of the meanings given for $R^1$ in Claim 6.

**8.** The LC medium according to any one of Claims 1 to 7, **characterized in that** it comprises one or more compounds selected from the following formulae:

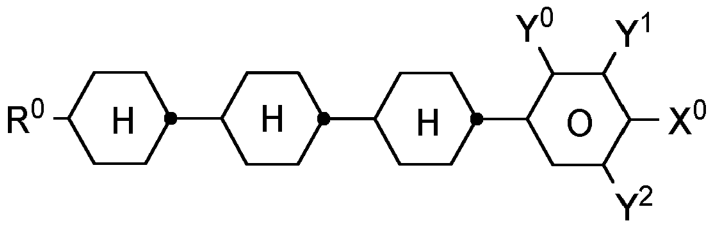

XVI

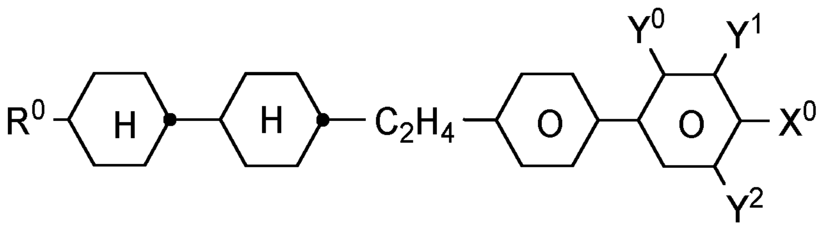

XVII

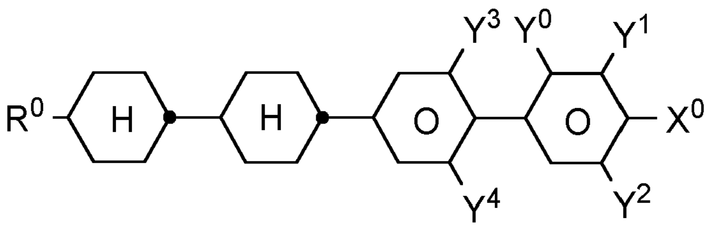

XVIII

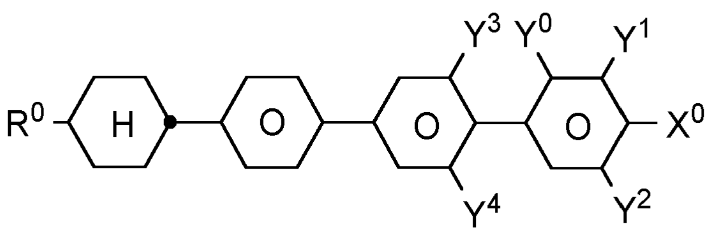

XIX

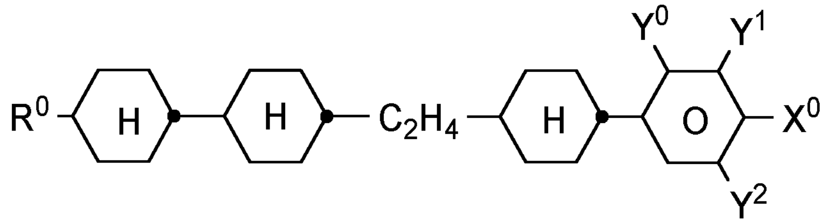

XX

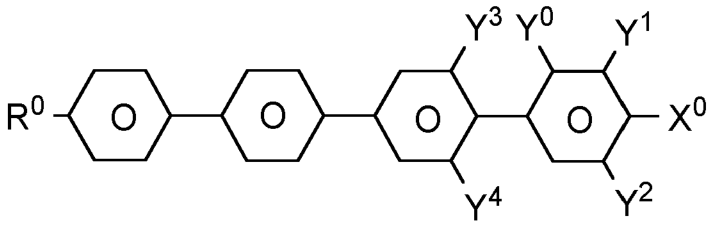

XXI

in which $R^0$, $X^0$, $Y^0$ and $Y^{1-4}$, each, independently of one another, have one of the meanings as given in Claim 4.

**9.** The LC medium according to any one of Claims 1 to 8, **characterized in that** it comprises one or more compounds selected from the following formulae:

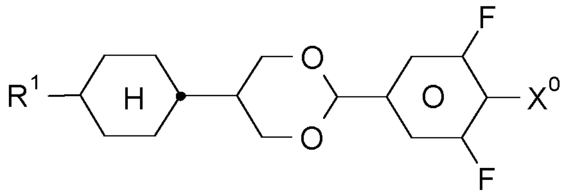

XXV

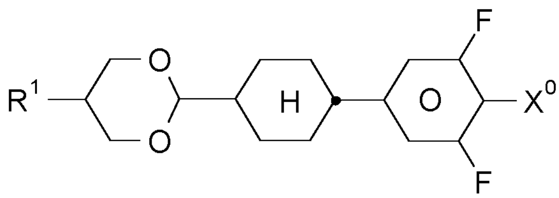

XXVI

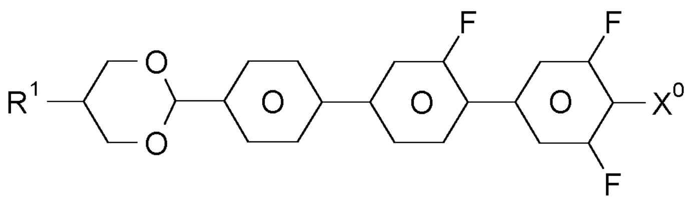

XXVII

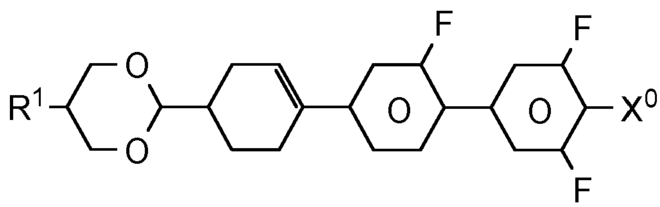

XXVIII

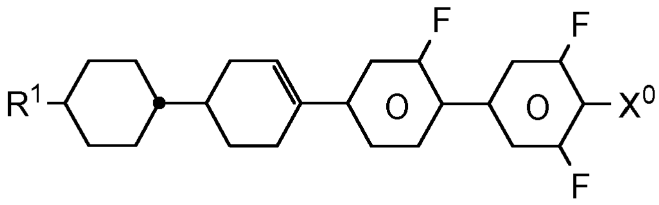

XXIX

in which $R^1$ has one of the meanings as given in Claim 6 and $X^0$ has one of the meanings as given in Claim 3.

**10.** The LC medium according to any one of Claims 1 to 9, **characterized in that** it comprises one or more compounds selected from the following formulae:

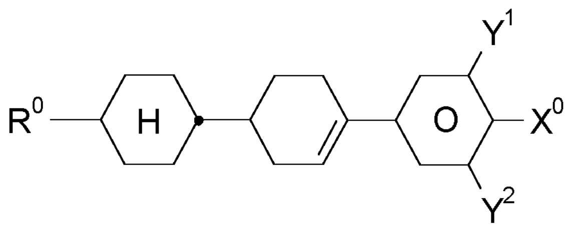

XXXIII

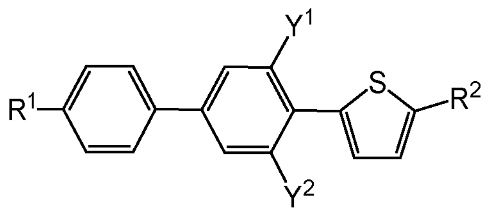

XXXIV

in which $R^0$, $R^1$, $R^2$, $X^0$, $Y^1$ and $Y^2$ have the meanings as given in Claim 3 and 6.

**11.** The LC medium according to one or more of Claims 1 to 10, **characterized in that** it additionally comprises one or more additives selected from the group consisting of polymerizable compounds, stabilisers, chiral dopants and polymerization initiators.

**12.** A process for preparing an LC medium according to one or more of Claims 1 to 11, comprising the steps of mixing one or more compounds of formula I as defined in Claim 1 or 2 with one or more further LC compounds and optionally with one or more additives.

**13.** Use of the LC medium according to one or more of Claims 1 to 11 for optical or electrooptical purposes, including but not limited to LC displays shutter glasses and 3D applications.

**14.** An LC display comprising an LC medium as defined in one or more of Claims 1 to 11.

**15.** The LC display of Claim 14, **characterized in that** it is of the IPS, FFS, HB-FFS, U-IPS, TN, STN, TN-TFT, PS-IPS, PS-FFS, PS-HB-FFS or PS-TN mode.

**16.** Use of an LC medium according to one or more of Claims 1 to 11 or of an LC display according to Claim 14 or 15 for an energy-saving LC display.

**Patentansprüche**

**1.** FK-Medium mit positiver dielektrischer Anisotropie $\Delta\varepsilon$ enthaltend eine oder mehrere Verbindungen der Formel I

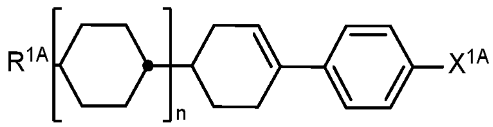

I

worin die einzelnen Reste, bei jedem Auftreten gleich oder verschieden und jeweils unabhängig voneinander, die folgende Bedeutung besitzen:

$R^{1A}$ eine Alkyl- oder Alkoxygruppe mit 1 bis 12, vorzugsweise 1 bis 6, C-Atomen, worin eine oder mehrere nicht benachbarte $CH_2$-Gruppen durch Cyclopropyl oder Cyclopentyl ersetzt sind,
$X^{1A}$ F, Cl, ein halogenierter Alkylrest, ein halogenierter Alkenylrest, ein halogenierter Alkoxyrest oder ein halogenierter Alkenyloxyrest mit bis zu 6 C-Atomen,
n 0 oder 1.

2. FK-Medium nach Anspruch 1, **dadurch gekennzeichnet, dass** es eine oder mehrere Verbindungen der Formel I enthält, die ausgewählt sind aus den folgenden Unterformeln:

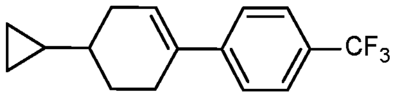

I1

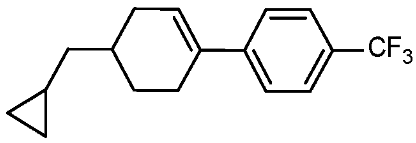

I2

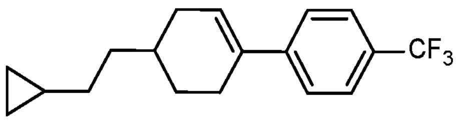

I3

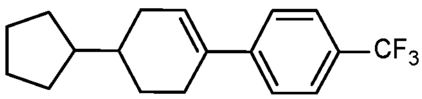

I5

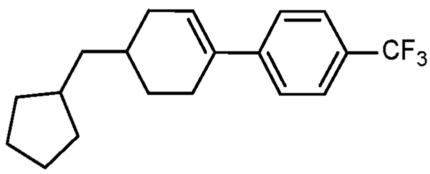

I6

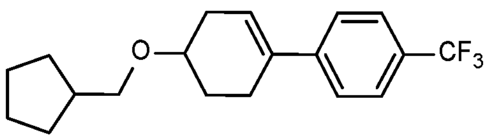

I7

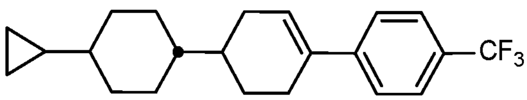

I8

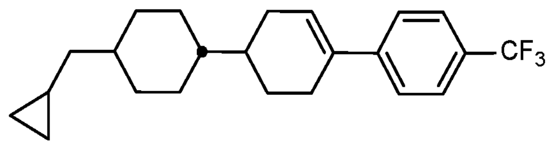

I9

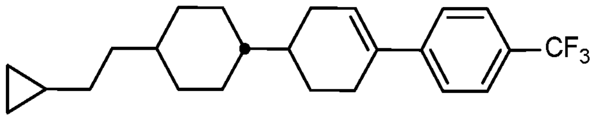

I10

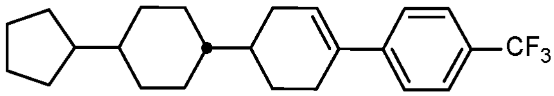

I12

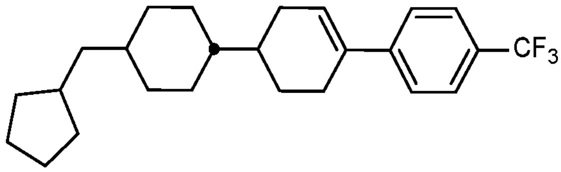

I13

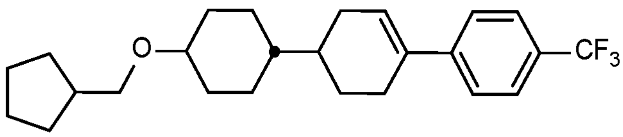

I14

**3.** FK-Medium nach Anspruch 1 oder 2, **dadurch gekennzeichnet, dass** es eine oder mehrere Verbindungen enthält, die aus den Formeln II und III ausgewählt sind:

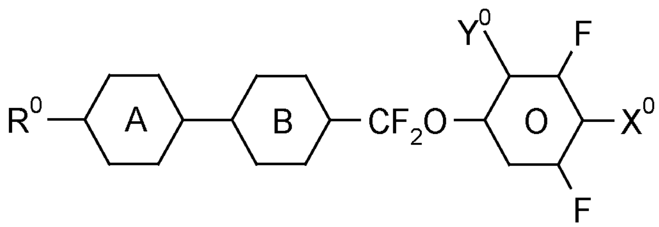

II

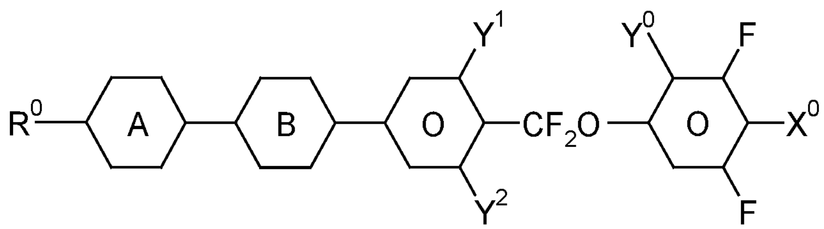

III

bei denen die einzelnen Reste, unabhängig voneinander und bei jedem Auftreten gleich oder verschieden, die folgenden Bedeutungen besitzen

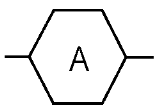 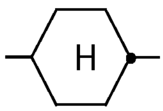 , 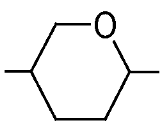 , 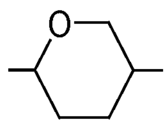 ,

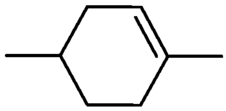 , 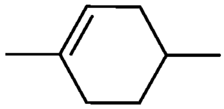 ,

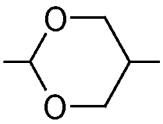 , 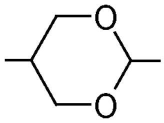 oder 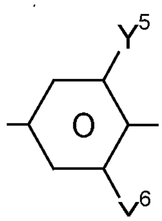 ,

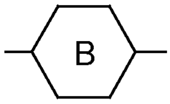 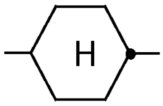 , 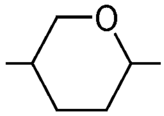 , 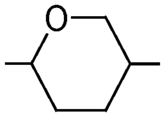 ,

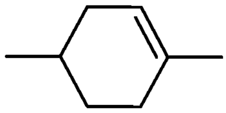 , 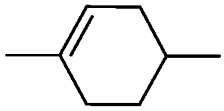 ,

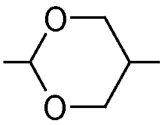 , 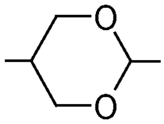 oder 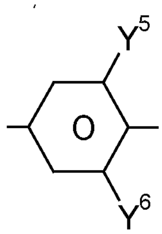 ,

$R^0$ H, ein Alkyl-, Alkoxy- oder Alkenylrest mit bis zu 15 C-Atomen, der unsubstituiert oder einfach durch F, Cl, CN oder $CF_3$ substituiert ist und wobei in diesen Resten zusätzlich eine oder mehrere $CH_2$-Gruppen so durch -O-, -S-, -C≡C-, $-CF_2O-$, $-OCF_2-$, -OC-O-, -O-CO-,

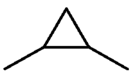 , 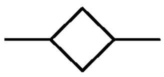 , 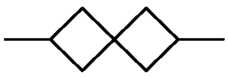 , 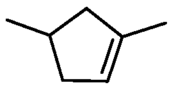 , 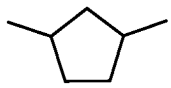

ersetzt sein können, dass O- und/oder S-Atome nicht direkt miteinander verknüpft sind,
$X^0$ F, Cl, CN, $SF_5$, SCN, NCS, ein halogenierter Alkylrest, ein halogenierter Alkenylrest, ein halogenierter Alkoxyrest oder ein halogenierter Alkenyloxyrest mit bis zu 6 C-Atomen,
$Y^{1,2,5,6}$ H oder F,
$Y^0$ H H oder $CH_3$.

4. FK-Medium nach irgendeinem der Ansprüche 1 bis 3, **dadurch gekennzeichnet, dass** es eine oder mehrere Verbindungen enthält, die ausgewählt sind aus den folgenden Formeln:

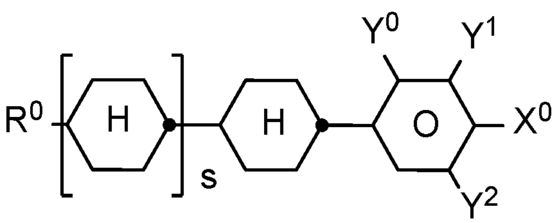 IV

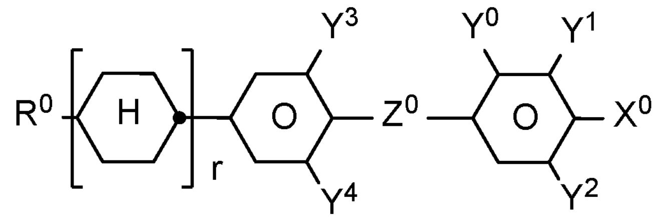

V

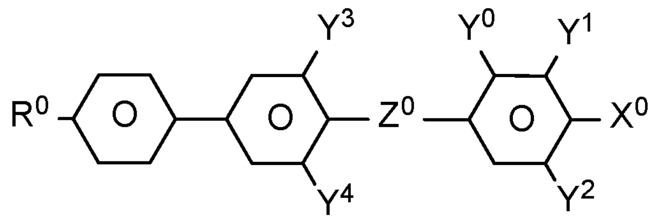

VI

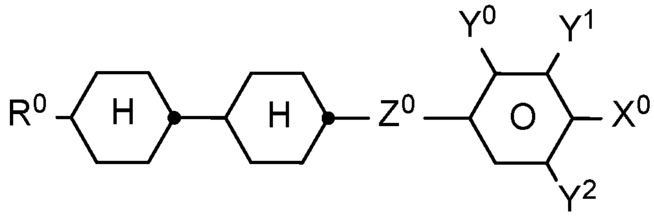

VII

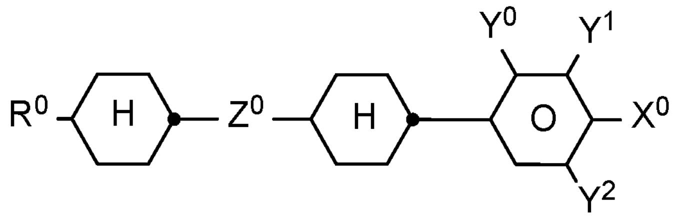

VIII

worin die einzelnen Reste, bei jedem Auftreten gleich oder verschieden und jeweils unabhängig voneinander, die folgende Bedeutung besitzen:

$R^0$, $X^0$, $Y^{1,2}$, $Y^0$ eine der in Anspruch 3 genannten Bedeutungen,

$Z^0$ -CO-O-, -O-CO-, $-CF_2O-$ , $-OCF_2-$, $-CH_2O-$, $-OCH_2-$, $-CH_2-$, $-CH_2CH_2-$, $-(CH_2)_4-$, $-CH=CH-CH_2O-$, $-C_2F_4-$, $-CH_2CF_2-$, $-CF_2CH_2$ -, -CF=CF-, -CH=CF-, -CF=CH-, -CH=CH-, -C≡C- oder eine Einfachbindung,
$Y^{3,4}$ H oder F,
r 0 oder 1, und
s 0 oder 1.

**5.** FK-Medium nach irgendeinem der Ansprüche 1 bis 4, **dadurch gekennzeichnet, dass** es eine oder mehrere Verbindungen der Formel IX enthält:

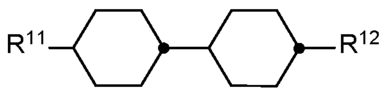

IX

worin die einzelnen Reste, bei jedem Auftreten gleich oder verschieden und jeweils unabhängig voneinander, die folgende Bedeutung besitzen

$R^{11}$ ein unsubstituierter Alkylrest mit 1 bis 7 C-Atomen, wobei zusätzlich eine oder mehrere $CH_2$-Gruppen durch

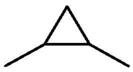, 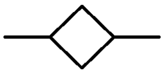, 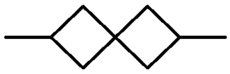, 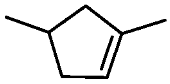, 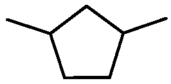

ersetzt sein können, oder ein unsubstituierter Alkenylrest mit 2 bis 7 C-Atomen,
$R^{12}$ ein unsubstituierter Alkylrest mit 1 bis 7 C-Atomen, ein unsubstituierter Alkoxyrest mit 1 bis 6 C-Atomen oder ein unsubstituierter Alkenylrest mit 2 bis 7 C-Atomen.

**6.** FK-Medium nach irgendeinem der Ansprüche 1 bis 5, **dadurch gekennzeichnet, dass** es eine oder mehrere Verbindungen enthält, die ausgewählt sind aus den folgenden Formeln:

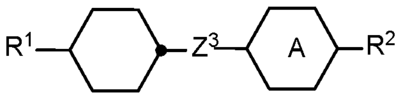

X

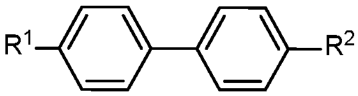

XI

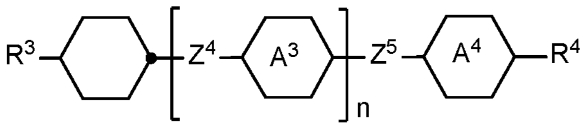

XII

worin die einzelnen Reste, bei jedem Auftreten gleich oder verschieden und jeweils unabhängig voneinander, die folgende Bedeutung besitzen

$R^1$, $R^2$ H, ein Alkyl-, Alkoxy- oder Alkenylrest mit bis zu 15 C-Atomen, der unsubstituiert, einfach durch F, Cl, CN oder $CF_3$ substituiert oder mindestens einfach durch Halogen substituiert ist, wobei in diesen Resten zusätzlich eine oder mehrere $CH_2$-Gruppen so durch -O-, -S-, -C≡C-, $-CF_2O-$, $-OCF_2-$, -OC-O-, -O-CO-,

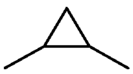, 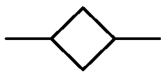, 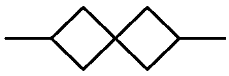, 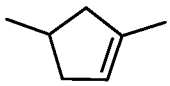, 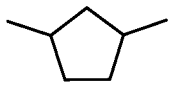

ersetzt sein können, dass O-Atome nicht direkt miteinander verknüpft sind,

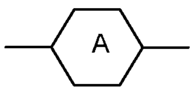

bedeutet

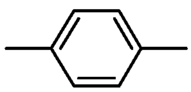, 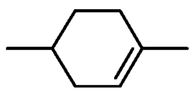, 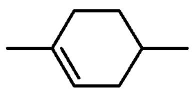,

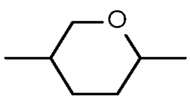 oder 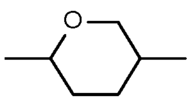,

$Z^4$, $Z^5$ eine Einfachbindung, $-CH_2CH_2-$, -CH=CH-, $-CF_2O-$, $-OCF_2-$, $-CH_2O-$, $-OCH_2-$, -COO-, -OCO-, $-C_2F_4-$, $-C_4H_8-$ oder -CF=CF-, bedeuten gleich oder verschieden

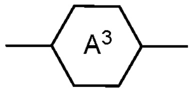, 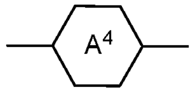

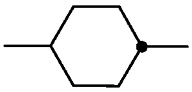, 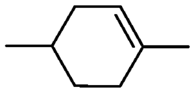, 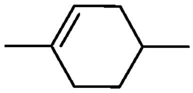,

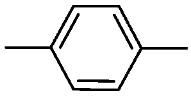, 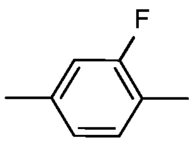 oder 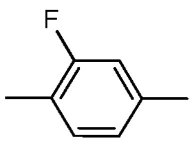,

n 1 oder 2.

7. FK-Medium nach irgendeinem der Ansprüche 1 bis 6, **dadurch gekennzeichnet, dass** es eine oder mehrere Verbindungen der Formel XIII enthält:

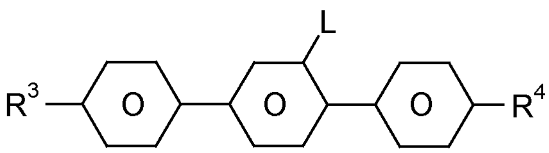 XIII

worin L H oder F ist und $R^3$ und $R^4$ unabhängig voneinander eine der in Anspruch 6 für $R^1$ genannten Bedeutungen besitzen.

8. FK-Medium nach irgendeinem der Ansprüche 1 bis 7, **dadurch gekennzeichnet, dass** es eine oder mehrere Verbindungen enthält, die ausgewählt sind aus den folgenden Formeln:

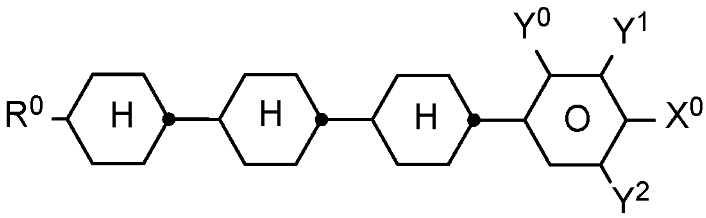 XVI

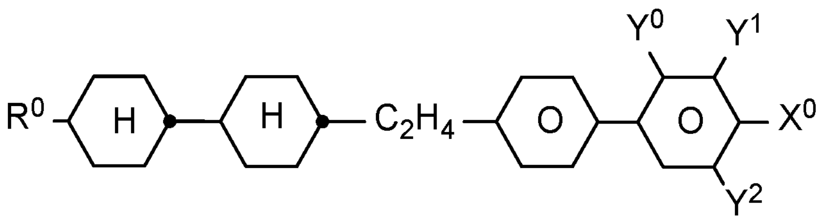 XVII

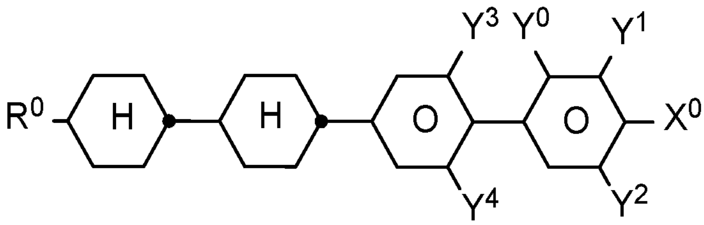 XVIII

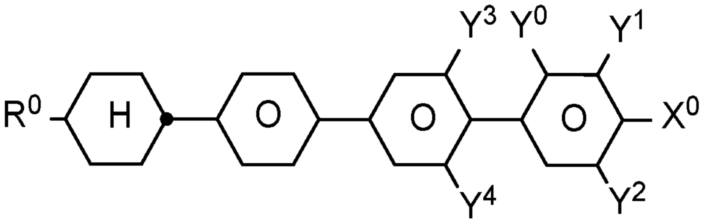
XIX

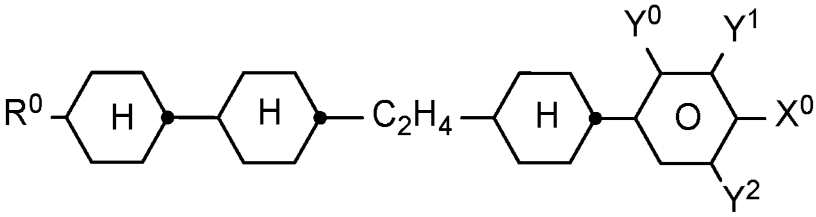
XX

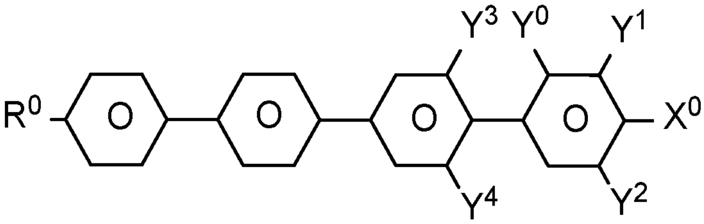
XXI

worin $R^0$, $X^0$, $Y^0$ und $Y^{1-4}$ jeweils unabhängig voneinander eine der Bedeutungen wie in Anspruch 4 genannt besitzen.

9. FK-Medium nach irgendeinem der Ansprüche 1 bis 8, **dadurch gekennzeichnet, dass** es eine oder mehrere Verbindungen enthält, die ausgewählt sind aus den folgenden Formeln:

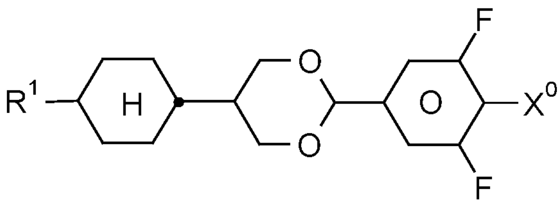
XXV

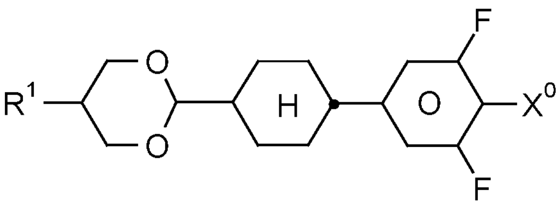
XXVI

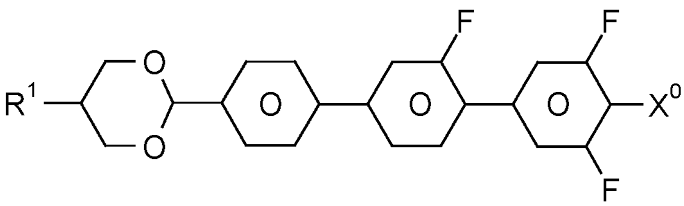
XXVII

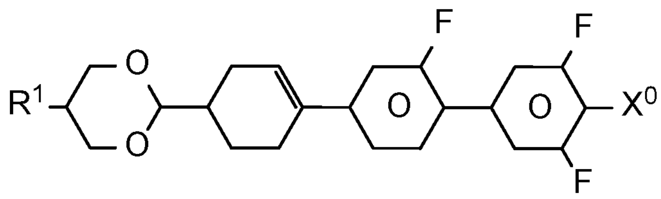

XXVIII

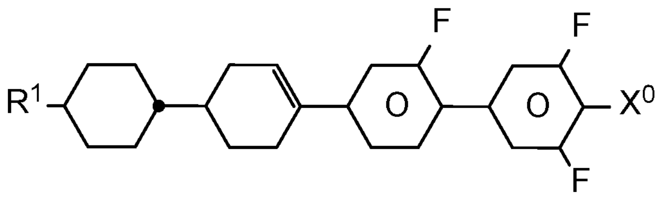

XXIX

worin $R^1$ eine der Bedeutungen wie in Anspruch 6 genannt besitzt und $X^0$ eine der Bedeutungen wie in Anspruch 3 genannt besitzt.

**10.** FK-Medium nach irgendeinem der Ansprüche 1 bis 9, **dadurch gekennzeichnet, dass** es eine oder mehrere Verbindungen enthält, die ausgewählt sind aus den folgenden Formeln:

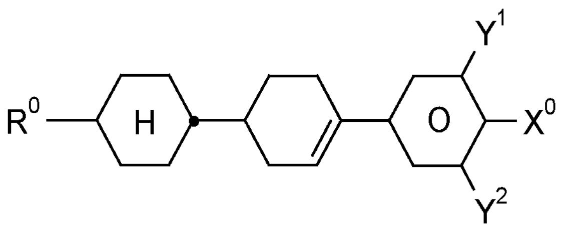

XXXIII

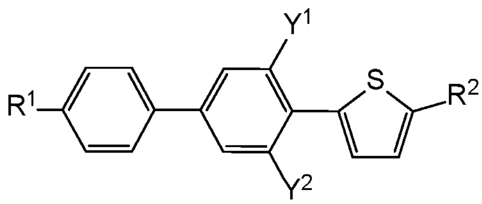

XXXIV

worin $R^0$, $R^1$, $R^2$, $X^0$, $Y^1$ und $Y^2$ die Bedeutungen wie in Anspruch 3 und 6 genannt besitzen.

**11.** FK-Medium nach einem oder mehreren der Ansprüche 1 bis 10, **dadurch gekennzeichnet, dass** es zusätzlich einen oder mehrere Zusatzstoffe enthält, die aus der Gruppe bestehend aus polymerisierbaren Verbindungen, Stabilisatoren, chiralen Dotierstoffen und Polymerisationsinitiatoren ausgewählt sind.

**12.** Verfahren zur Herstellung eines FK-Mediums nach einem oder mehreren der Ansprüche 1 bis 11, umfassend die Schritte Mischen von einer oder mehreren Verbindungen der Formel I wie in Anspruch 1 oder 2 definiert mit einer oder mehreren weiteren FK-Verbindungen und gegebenenfalls mit einem oder mehreren Zusatzstoffen.

**13.** Verwendung des FK-Mediums nach einem oder mehreren der Ansprüche 1 bis 11 für optische oder elektrooptische Zwecke, darunter, aber nicht beschränkt auf, FK-Anzeigen, Shutter-Brillen und 3D-Anwendungen.

**14.** FK-Anzeige enthaltend ein FK-Medium wie in einem oder mehreren der Ansprüche 1 bis 11 definiert.

**15.** FK-Anzeige des Anspruchs 14, **dadurch gekennzeichnet, dass** sie den IPS-, FFS-, HB-FFS-, U-IPS-, TN-, STN-, TN-TFT-, PS-IPS-, PS-FFS-, PS-HB-FFS- oder PS-TN-Modus besitzt.

**16.** Verwendung eines FK-Mediums nach einem oder mehreren der Ansprüche 1 bis 11 oder einer FK-Anzeige nach Anspruch 14 oder 15 für eine energiesparende FK-Anzeige.

**Revendications**

1. Milieu LC présentant une anisotropie diélectrique positive $\Delta\varepsilon$ et comprenant un ou plusieurs composés de formule I

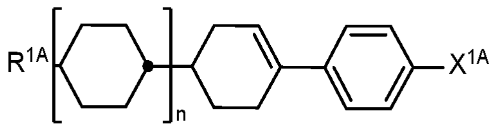

I

dans laquelle les radicaux individuels, à chaque occurrence de manière identique ou différente, et chacun, indépendamment les uns des autres, revêtent la signification suivante :

$R^{1A}$ un groupement alkyle ou alcoxy ayant de 1 à 12, préférablement de 1 à 6 atomes de C, où un ou plusieurs groupements $CH_2$ non adjacents sont remplacés par cyclopropyle ou cyclopentyle,
$X^{1A}$ F, Cl, un radical alkyle halogéné, un radical alcényle halogéné, un radical alcoxy halogéné ou un radical alcényloxy halogéné ayant jusqu'à 6 atomes de C,
n 0 ou 1.

2. Milieu LC selon la revendication 1, **caractérisé en ce qu'**il comprend un ou plusieurs composés de formule I choisis parmi les sous-formules suivantes :

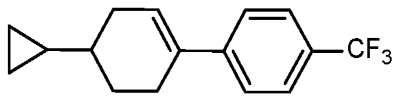

I1

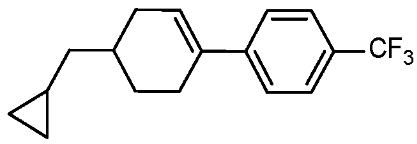

I2

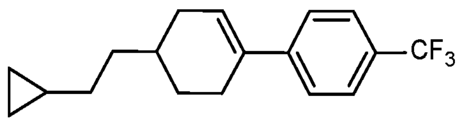

I3

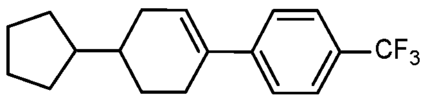

I5

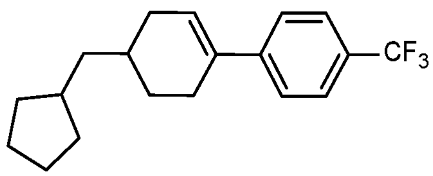

I6

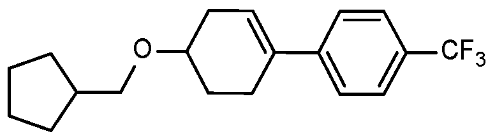

I7

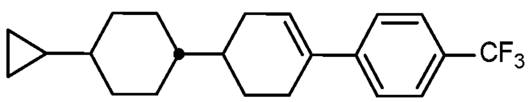

I8

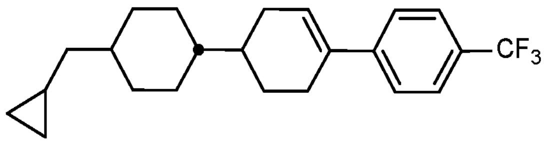
I9

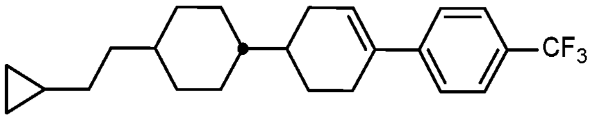
I10

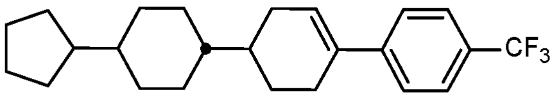
I12

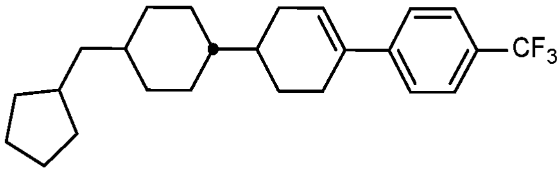
I13

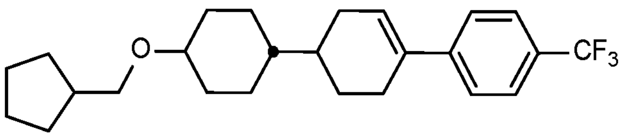
I14

**3.** Milieu LC selon la revendication 1 ou 2, **caractérisé en ce qu'**il comprend un ou plusieurs composés choisis parmi les formules II et III :

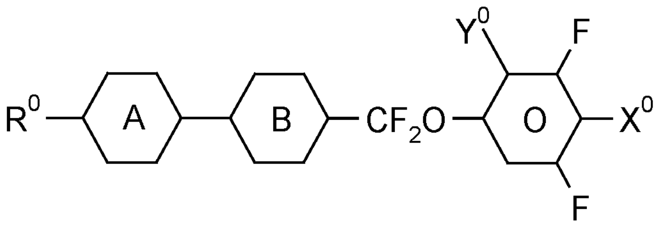
II

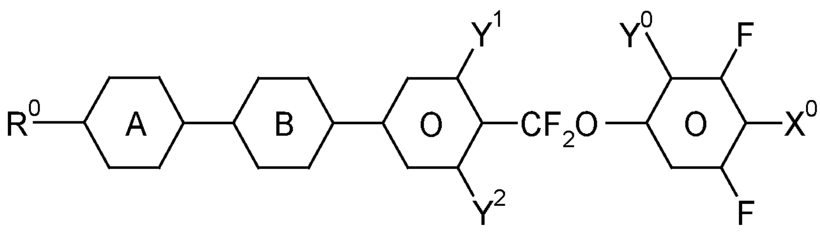
III

dans lesquelles les radicaux individuels, indépendamment les uns des autres et à chaque occurrence de manière identique ou différente, revêtent les significations suivantes

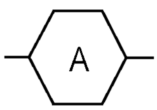

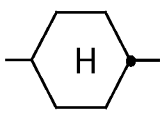 , 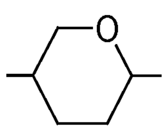 , 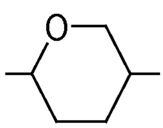 ,

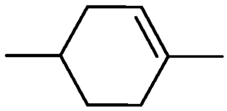, 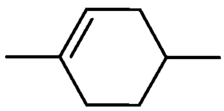,

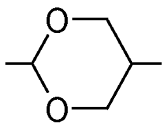, 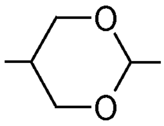 ou 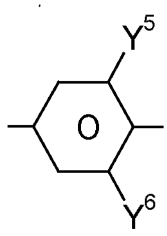,

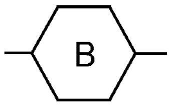 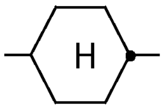, 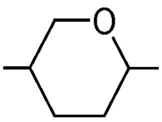, 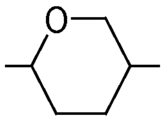,

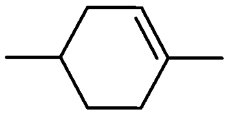, 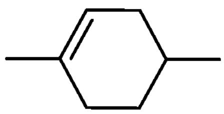,

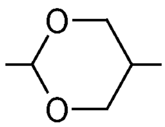, 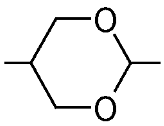 ou 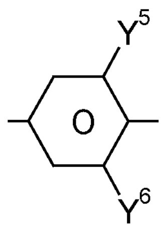,

$R^0$ H, un radical alkyle, alcoxy ou alcényle ayant jusqu'à 15 atomes de C qui est non substitué ou monosubstitué par F, Cl, CN ou $CF_3$ et où, de plus, un ou plusieurs groupements $CH_2$ dans ces radicaux peuvent être remplacés par -O-, -S-, -C≡C-, $-CF_2O-$, $-OCF_2-$, -OC-O-, -O-CO-,

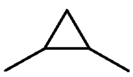, 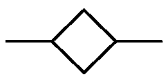, 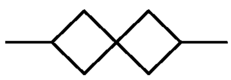, 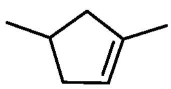, 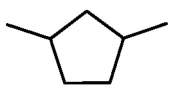

de telle sorte que les atomes de O et/ou S ne soient pas liés directement les uns aux autres,
$X^0$ F, Cl, CN, $SF_5$, SCN, NCS, un radical alkyle halogéné, un radical alcényle halogéné, un radical alcoxy halogéné ou un radical alcényloxy halogéné ayant jusqu'à 6 atomes de C,
$Y^{1,2,5,6}$ H ou F,
$Y^0$ H ou $CH_3$.

**4.** Milieu LC selon l'une quelconque des revendications 1 à 3, **caractérisé en ce qu'**il comprend un ou plusieurs composés choisis parmi les formules suivantes :

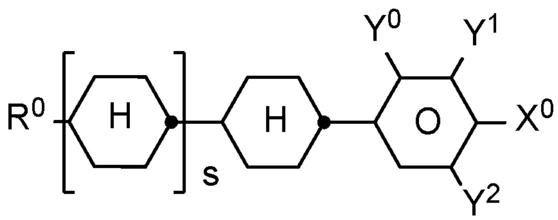 IV

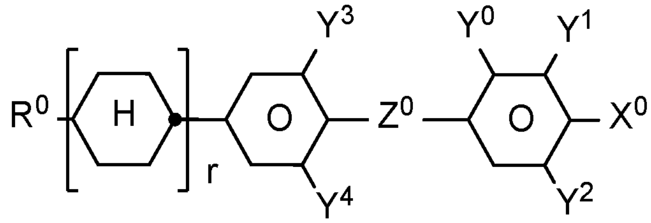

V

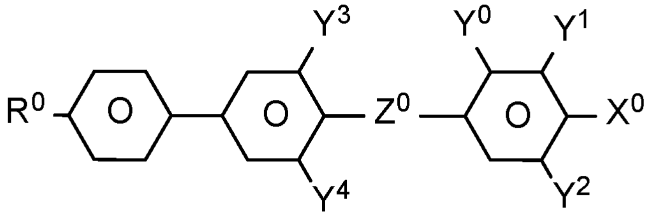

VI

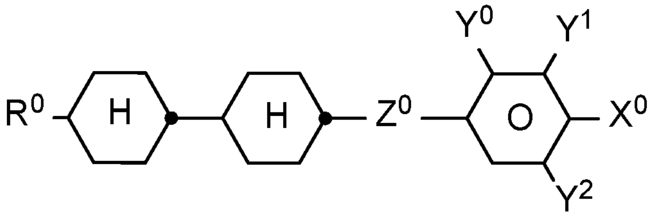

VII

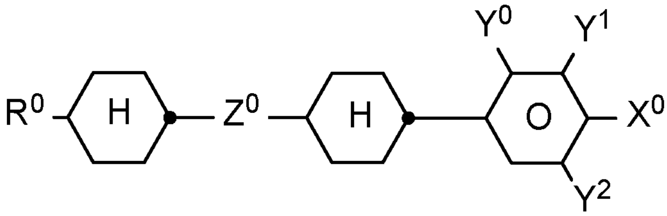

VIII

dans lesquelles les radicaux individuels, à chaque occurrence de manière identique ou différente, et chacun, indépendamment les uns des autres, revêtent la signification suivante :

$R^0$, $X^0$, $Y^{1,2}$, $Y^0$ l'une des significations données selon la revendication 3,
$Z^0$ -CO-O-, -O-CO-, $-CF_2O-$ , $-OCF_2-$, $-CH_2O-$, $-OCH_2-$, $-CH_2-$, $-CH_2CH_2-$, $-(CH_2)_4-$, $-CH=CH-CH_2O-$, $-C_2F_4-$, $-CH_2CF_2-$, $-CF_2CH_2$ -, -CF=CF-, -CH=CF-, -CF=CH-, -CH=CH-, -C≡C- ou une liaison simple,
$Y^{3,4}$ H ou F,
r 0 ou 1, et
s 0 ou 1.

**5.** Milieu LC selon l'une quelconque des revendications 1 à 4, **caractérisé en ce qu'**il comprend un ou plusieurs composés de formule IX :

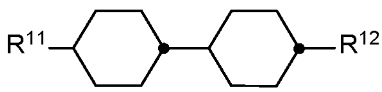

IX

dans laquelle les radicaux individuels, à chaque occurrence de manière identique ou différente, et chacun, indépendamment les uns des autres, revêtent la signification suivante

$R^{11}$ un radical alkyle non substitué ayant de 1 à 7 atomes de C où, de plus, un ou plusieurs groupements $CH_2$ peuvent être remplacés par

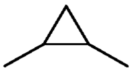, 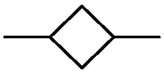, 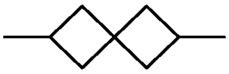, 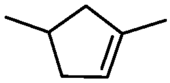, 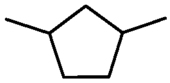

ou un radical alcényle non substitué ayant de 2 à 7 atomes de C,

$R^{12}$ un radical alkyle non substitué ayant de 1 à 7 atomes de C, un radical alcoxy non substitué ayant de 1 à 6 atomes de C ou un radical alcényle non substitué ayant de 2 à 7 atomes de C.

6. Milieu LC selon l'une quelconque des revendications 1 à 5, **caractérisé en ce qu'**il comprend un ou plusieurs composés choisis parmi les formules suivantes :

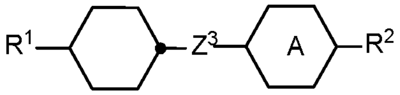 X

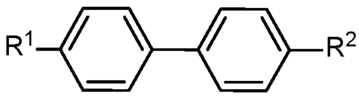 XI

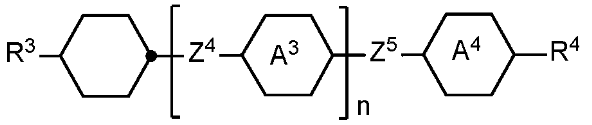 XII

dans lesquelles les radicaux individuels, à chaque occurrence de manière identique ou différente, et chacun, indépendamment les uns des autres, revêtent la signification suivante

$R^1$, $R^2$ H, un radical alkyle, alcoxy ou alcényle ayant jusqu'à 15 atomes de C qui est non substitué, monosubstitué par F, Cl, CN ou $CF_3$ ou au moins monosubstitué par halogène, où, de plus, un ou plusieurs groupements $CH_2$ dans ces radicaux peuvent être remplacés par -O-, -S-, -C≡C-, $-CF_2O-$, $-OCF_2-$, -OC-O-, -O-CO-,

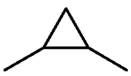, 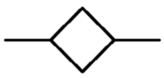, 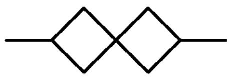, 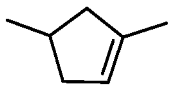, 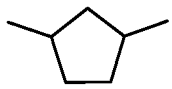

de telle sorte que les atomes de O ne soient pas liés directement les uns aux autres,

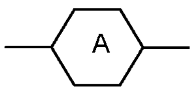

désigne

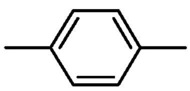 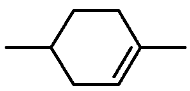 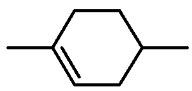

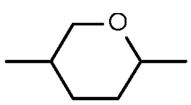 ou 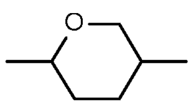,

$Z^4$, $Z^5$ une liaison simple, $-CH_2CH_2-$, -CH=CH-, $-CF_2O-$, $-OCF_2-$, $-CH_2O-$, $-OCH_2-$, -COO-, -OCO-, $-C_2F_4-$, $-C_4H_8-$ ou -CF=CF-, de manière identique ou différente,

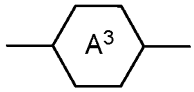 , 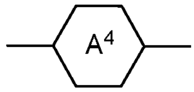 ,

désignent

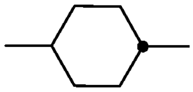 , 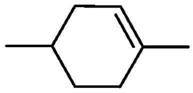 , 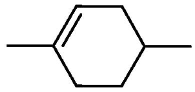 ,

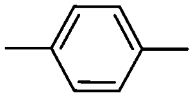 , 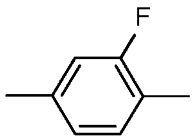 ou 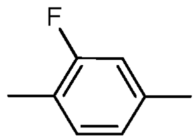

n 1 ou 2.

**7.** Milieu LC selon l'une quelconque des revendications 1 à 6, **caractérisé en ce qu'**il comprend un ou plusieurs composés de formule XIII :

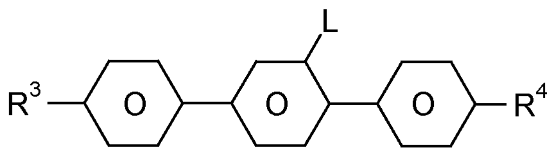

XIII

dans laquelle L est H ou F, et $R^3$ et $R^4$ revêtent indépendamment l'un de l'autre l'une des significations données pour $R^1$ selon la revendication 6.

**8.** Milieu LC selon l'une quelconque des revendications 1 à 7, **caractérisé en ce qu'**il comprend un ou plusieurs composés choisis parmi les formules suivantes :

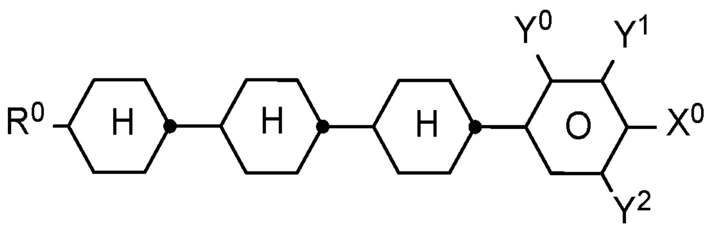

XVI

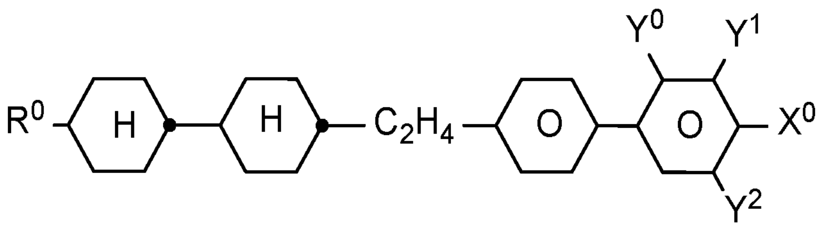

XVII

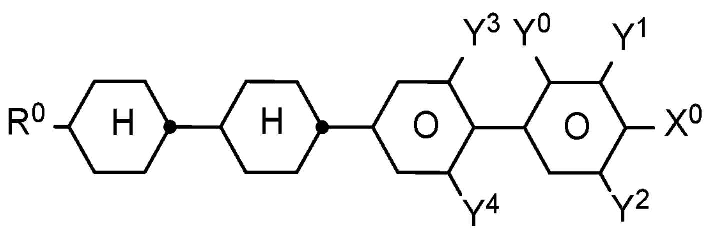

XVIII

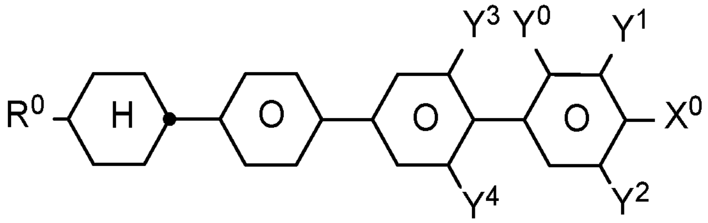

XIX

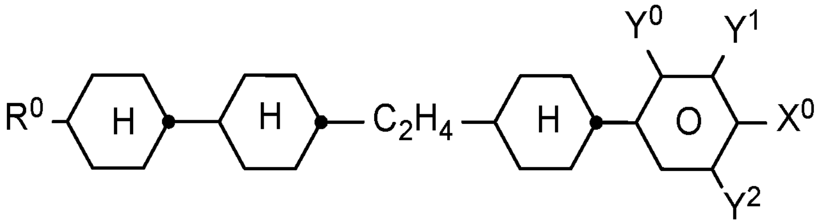

XX

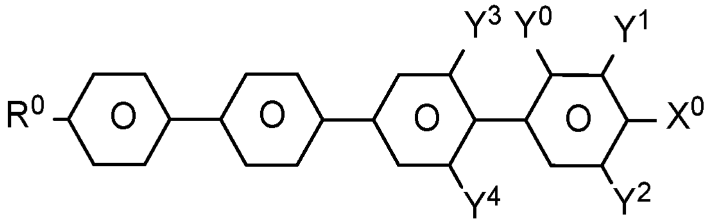

XXI

dans lesquelles $R^0$, $X^0$, $Y^0$ et $Y^{1-4}$, chacun, indépendamment les uns des autres, revêtent l'une des significations telles que données selon la revendication 4.

**9.** Milieu LC selon l'une quelconque des revendications 1 à 8, **caractérisé en ce qu'**il comprend un ou plusieurs composés choisis parmi les formules suivantes :

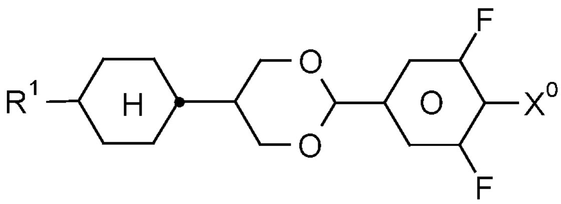

XXV

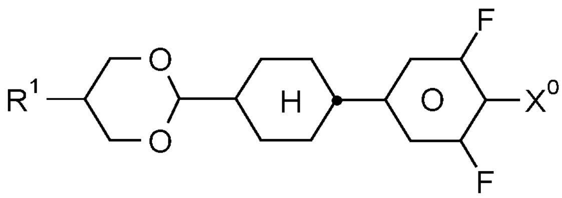

XXVI

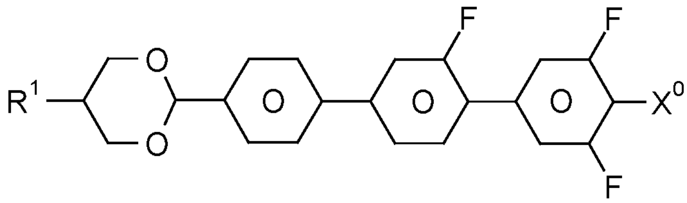

XXVII

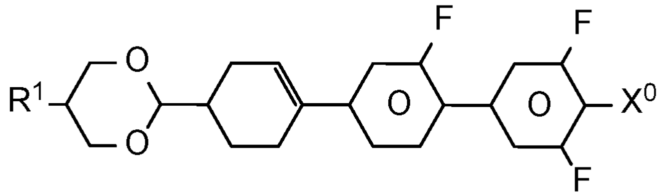

XXVIII

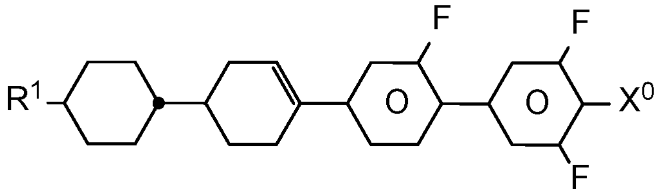

XXIX

dans lesquelles $R^1$ revêt l'une des significations telles que données selon la revendication 6 et $X^0$ revêt l'une des significations telles que données selon la revendication 3.

**10.** Milieu LC selon l'une quelconque des revendications 1 à 9, **caractérisé en ce qu'**il comprend un ou plusieurs composés choisis parmi les formules suivantes :

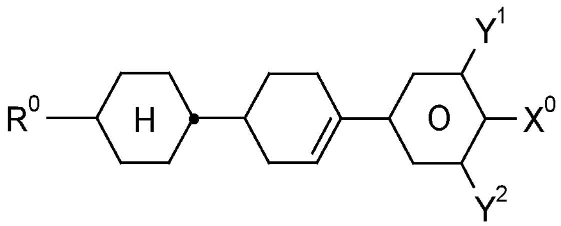

XXXIII

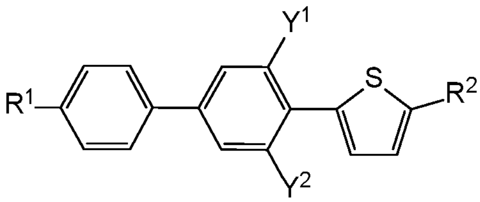

XXXIV

dans lesquelles $R^0$, $R^1$, $R^2$, $X^0$, $Y^1$ et $Y^2$ revêtent les significations telles que données selon les revendications 3 et 6.

**11.** Milieu LC selon l'une ou plusieurs parmi les revendications 1 à 10, **caractérisé en ce qu'**il comprend de plus un ou plusieurs additifs choisis dans le groupe constitué par les composés polymérisables, les stabilisants, les dopants chiraux et les initiateurs de polymérisation.

**12.** Procédé de préparation d'un milieu LC selon l'une ou plusieurs parmi les revendications 1 à 11, comprenant les étapes de mélange d'un ou plusieurs composés de formule I tels que définis selon la revendication 1 ou 2 avec un ou plusieurs autres LC composés et éventuellement avec un ou plusieurs additifs.

**13.** Utilisation du milieu LC selon l'une ou plusieurs parmi les revendications 1 à 11 à des fins optiques ou électro-optiques, y compris, mais sans s'y limiter, des affichages LC, des verres à obturateur et des applications 3D.

**14.** Affichage LC comprenant un milieu LC tel que défini selon l'une ou plusieurs parmi les revendications 1 à 11.

**15.** Affichage LC selon la revendication 14, **caractérisé en ce qu'**il est en mode IPS, FFS, HB-FFS, U-IPS, TN, STN, TN-TFT, PS-IPS, PS-FFS, PS-HB-FFS ou PS-TN.

**16.** Utilisation d'un milieu LC selon l'une ou plusieurs parmi les revendications 1 à 11 ou d'un affichage LC selon la revendication 14 ou 15, pour un affichage LC à économie d'énergie.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- DE 4000451
- EP 0588568 A
- DE 102016009412 A1
- EP 3892706 A2
- JP 7181439 A
- EP 0667555 A
- EP 0673986 A
- DE 19509410
- DE 19528106
- DE 19528107
- WO 9623851 A
- WO 9628521 A
- EP 3354710 A1
- EP 3354709 A1
- DE 2209127 A
- DE 2240864 A
- DE 2321632 A
- DE 2338281 A
- DE 2450088 A
- DE 2637430 A
- DE 2853728 A
- EP 0364538 A
- DE 2636684 A
- DE 3321373 A

### Non-patent literature cited in the description

- *Pure Appl. Chem.*, 2001, vol. 73 (5), 888
- **C. TSCHIERSKE, G. PELZL, S. DIELE**. *Angew. Chem.*, 2004, vol. 116, 6340-6368
- **C. TSCHIERSKE** ; **G. PELZL** ; **S. DIELE**. *Angew. Chem.*, 2004, vol. 116, 6340-6368
- **HALLER et al.** *Mol. Cryst. Liq. Cryst.*, 1973, vol. 24, 249-258
- Merck Liquid Crystals, Physical Properties of Liquid Crystals. Merck KGaA, November 1997